# EUROPEAN PATENT SPECIFICATION

(11) **EP 3 676 352 B1**
(45) Date of publication and mention of the grant of the patent: **14.02.2024**
(21) Application number: 18849599.8
(22) Date of filing: 29.08.2018
(51) Int. Cl.: C10G 1/00

(54) **VACUUM FILTRATION SYSTEM**
VAKUUM-FILTERSYSTEM
SYSTÈME DE FILTRATION SOUS VIDE

(30) Priority: 30.08.2017 US 201762552250 P
(43) Date of publication of application: 08.07.2020
(73) Proprietor: Nanotech Energy, Inc., Los Angeles, California 90025 (US)
(72) Inventor: LAINE, Scott, Los Angeles, California 90025 (US)
(74) Representative: HGF
(86) International application number: PCT/US2018/048602
(87) International publication number: WO 2019/046462

(56) References cited:
- WO-A1-2016/191564
- WO-A1-2017/147468
- US-A- 3 765 051
- US-A- 4 443 421
- US-A- 4 564 450
- US-A- 4 707 260
- US-A- 4 909 181
- US-A- 5 000 850
- US-A1- 2003 170 156
- US-A1- 2004 112 806
- US-A1- 2004 171 321
- US-A1- 2004 238 439
- US-A1- 2009 071 123
- US-A1- 2009 200 248
- US-A1- 2012 055 887
- US-A1- 2012 055 887
- US-A1- 2013 315 815
- US-A1- 2014 272 172
- US-A1- 2015 008 194
- US-E- R E23 788

## Description

### SUMMARY OF INVENTION

The present application deals with a vacuum filtration system for carbonaceous composition. Filtration systems are known from US 4 443 421 A, US 2012/055887 A1, US 2015/008194 A1, US 5 000 850 A, US 4 707 260 A, US 2012/055887 A1, US 2009/071123 A1, US R E23 788 E, US 3 765 051 A, US 4 909 181 A, WO 2016/191564 A1, US 2003/170156 A1, US 2014/272172 A1, US 2004/171321 A1, US 2004/238439 A1, US 2009/200248 A1, US 2004/112806 A1, US 2013/315815 A1 and US 4 564 450 A.

The present invention is described by the subject-matter of claims 1-14 which define a vacuum filtration system for carbonaceous composition. The different aspects and embodiments of the application only describe the context in which the vacuum filtration system of claims 1-14 is used. The aspects and embodiments are not part of the claimed invention except the subject-matter of claims 1-14.

Provided herein are methods, devices, and systems for processing of carbonaceous compositions. In certain embodiments, the processing includes the manufacture (or synthesis) of oxidized forms of carbonaceous compositions and/or the manufacture (or synthesis) of reduced forms of oxidized carbonaceous compositions. Some embodiments provide methods, devices, and systems for the manufacture (or synthesis) of graphite oxide from graphite and/or for the manufacture (or synthesis) of reduced graphite oxide from graphite oxide. Also provided are methods, devices, and systems for using carbonaceous compositions to produce energy storage devices such as batteries and/or capacitors.

In one aspect, disclosed herein is an apparatus, the apparatus comprising: a tank, the tank comprising a carbonaceous composition; a mixer mounted to the tank, the mixer in fluid communication with the tank; and a tank agitator mechanically coupled to the mixer. The tank agitator is configured to agitate the carbonaceous composition in the tank, thereby forming an oxidized form of the carbonaceous composition at a rate of greater than about 1 tonne per year (tpy).

Other goals and advantages of the methods, devices, and systems disclosed herein will be further appreciated and understood when considered in conjunction with the following description and accompanying drawings. While the following description contains specific details describing particular embodiments, this should not be construed as limitations but rather as an exemplification of preferable embodiments. For each aspect of the invention, many variations are possible as suggested herein that are known to those of ordinary skill in the art. In some embodiments, the methods, devices, and systems disclosed herein are capable of a variety of changes and modifications not explicitly recited.

In some aspects, disclosed herein are vacuum filtration systems comprising: a) a filter support comprising a surface configured to allow drainage; b) a filtering material disposed on the surface, the filtering material comprising pores for filtering a carbonaceous composition; c) at least one spray bar assembly positioned to dispense at least one of a carbonaceous composition and a wash liquid onto the filtering material; and d) a vacuum source configured to apply negative pressure to the filter support to enhance filtration of the carbonaceous composition. In some embodiments, the surface comprises a hex spacer material. In some embodiments, the filter support comprises a hex spacer material providing support for the filtering material. In some embodiments, the filtering material comprises pores having a median pore size of no more than about 0.1, 0.2, 0.3, 0.4, 0.5, 0.6, 0.7, 0.8, 0.9, 1, 2, 3, 4, or 5 microns. In some embodiments, the filtering material comprises at least one mesh filter layer. In some embodiments, the at least one mesh filter layer is metal. In some embodiments, the filtering material is configured to retain at least 70%, 75%, 80%, 85%, 90%, 95%, 96%, 97%, 98%, 99%, 99.5%, or 99.9% w/w of the carbonaceous composition or graphene oxide after filtration. In some embodiments, the filtering material comprises at least 1, 2, 3, 4, 5, 6, 7, 8, 9, or 10 filter layers. In some embodiments, the filtering material comprises 4 filter layers. In some embodiments, the at least one spray bar assembly comprises a first set of one or more openings for dispensing the carbonaceous composition and a second set of one or more openings for dispensing the wash liquid. In some embodiments, the wash liquid is deionized water. In some embodiments, the at least one spray bar assembly comprises a set of one or more openings for dispensing the carbonaceous composition and the wash liquid. In some embodiments, the one or more openings comprise one or more nozzles for dispensing the carbonaceous composition or wash liquid. In some embodiments, the at least one spray bar assembly is adjustable between at least two positions. In some embodiments, the at least two positions comprise a raised position and a lowered position. In some embodiments, the at least one spray bar assembly is movable horizontally for dispensing the carbonaceous composition over the surface. In some embodiments, the at least one spray bar assembly is movable horizontally on a rail system. In some embodiments, each spray bar assembly is movable horizontally along a length of a vacuum table tray. In some embodiments, the filter support comprises at least one vacuum table tray providing the surface configured to allow drainage. In some embodiments, the at least one vacuum table tray comprises a vertical barrier defining an area of the surface. In some embodiments, the at least one vacuum table tray comprises a filtering material. In some embodiments, the filter support is movable horizontally for dispensing the carbonaceous composition evenly onto the surface. In some embodiments, the filter support is movable horizontally on a conveyor system. In some embodiments, the at least one spray bar assembly comprises a first spray bar for dispensing the carbonaceous composition and a second spray bar for dispensing the wash liquid. In some embodiments, the at least one spray bar assembly comprises a first tube inside a second tube. In some embodiments, the first tube comprises one or more openings facing up for dispensing the wash liquid into the second tube to enable the second tube to evenly dispense the wash liquid onto the filtering material. In some embodiments, the at least one spray bar assembly comprises at least 1, 2, 3, 4, 5, 6, 7, 8, 9, or 10 spray bars. In some embodiments, the at least one spray bar assembly is fluidly coupled to a source of the carbonaceous composition. In some embodiments, the at least one spray bar assembly is fluidly coupled to a source of the wash fluid. In some embodiments, the source of the wash fluid comprises a pump for allowing the spray bar assembly to dispense the wash liquid. In some embodiments, the carbonaceous composition comprises reaction products generated using a reaction system for making graphene oxide. In some embodiments, the reaction products comprise graphene oxide and sulfuric acid. In some embodiments, the spray bar assembly dispenses the carbonaceous composition onto the filtering material at low pressure. In some embodiments, the spray bar assembly dispenses the carbonaceous composition onto the filtering material at high pressure. In some embodiments, the spray bar assembly dispenses the carbonaceous composition using gravity. In some embodiments, the spray bar assembly dispenses the wash liquid at low pressure. In some embodiments, the vacuum filtration system further comprises a control unit for controlling operation of the vacuum filtration system. In some embodiments, the control unit is configured for autonomous operation of the vacuum filtration system in filtering the carbonaceous composition. In some embodiments, the control unit is configured to carry out filtration of the carbonaceous composition until a threshold condition is met. In some embodiments, the control unit is configured to carry out a cleaning protocol. In some embodiments, the vacuum filtration system is configured to carry out batch purification of the carbonaceous composition. In some embodiments, the vacuum filtration system is configured to carry out continuous purification of the carbonaceous composition. In some embodiments, the vacuum filtration system further comprises a drainpan disposed below the filter support for receiving liquid flow-through from the filter support. In some embodiments, the drainpan is fluidly coupled to a vacuum tank, wherein the vacuum source is coupled to the vacuum tank and applies negative pressure to the filter support through the vacuum tank and the drainpan. In some embodiments, the vacuum source applies negative pressure to the filter support through the drainpan. In some embodiments, the drainpan comprises a release valve for releasing liquid flow-through. In some embodiments, the vacuum filtration system further comprises a vacuum tank for collecting liquid flow-through. In some embodiments, the vacuum filtration system further comprises a pH sensor for measuring pH of the carbonaceous composition. In some embodiments, the at least one spray bar assembly is detachable. In some embodiments, the filter support is detachable.

In another aspect, disclosed herein are vacuum filtration systems comprising: a) a vacuum table tray comprising a spacer material having holes that allow drainage; b) a filtering material disposed on the spacer material, the filtering material comprising pores having an average pore size suitable for retaining a carbonaceous composition; and c) at least one spray bar assembly configured to dispense the carbonaceous composition onto the filtering material and configured to dispense a wash liquid onto the carbonaceous composition, wherein at least 80% w/w of the carbonaceous composition is retained after filtration.

In another aspect, disclosed herein are methods of filtering a carbonaceous composition comprising graphene oxide using a vacuum filtration system, comprising: a) providing the vacuum filtration system comprising filtering material disposed on a surface of a filter support and at least one spray bar assembly; b) dispensing, by the at least one spray bar assembly, the carbonaceous composition comprising graphene oxide onto the filtering material; c) dispensing, by the at least one spray bar assembly, a wash liquid onto the carbonaceous composition; and d) applying suction to the filtering material to enhance filtration of the carbonaceous composition, wherein the filtering material retains the graphene oxide while allowing filtrate to drain. In some embodiments, the vacuum filtration system comprises a hex spacer material. In some embodiments, the filter support comprises a hex spacer material providing support for the filtering material. In some embodiments, the filtering material comprises pores having a median pore size of no more than about 0.1, 0.2, 0.3, 0.4, 0.5, 0.6, 0.7, 0.8 0.9, 1, 2, 3, 4, or 5 microns. In some embodiments, the filtering material comprises at least one mesh filter layer. In some embodiments, the at least one mesh filter layer is metal. In some embodiments, the filtering material is configured to retain at least 70%, 75%, 80%, 85%, 90%, 95%, 96%, 97%, 98%, 99%, 99.5%, or 99.9% w/w of the carbonaceous composition or graphene oxide after filtration. In some embodiments, the filtering material comprises at least 1, 2, 3, 4, 5, 6, 7, 8, 9, or 10 filter layers. In some embodiments, the filtering material comprises 4 filter layers. In some embodiments, the at least one spray bar assembly comprises a first set of one or more openings for dispensing the carbonaceous composition and a second set of one or more openings for dispensing the wash liquid. In some embodiments, the wash liquid is deionized water. In some embodiments, the at least one spray bar assembly comprises a set of one or more openings for dispensing the carbonaceous composition and the wash liquid. In some embodiments, the one or more openings comprise one or more nozzles for dispensing the carbonaceous composition or wash liquid. In some embodiments, the at least one spray bar assembly is adjustable between at least two positions. In some embodiments, the at least two positions comprise a raised position and a lowered position. In some embodiments, the at least one spray bar assembly is movable horizontally for dispensing the carbonaceous composition over the surface. In some embodiments, the at least one spray bar assembly is movable horizontally on a rail system. In some embodiments, each spray bar assembly is movable horizontally along a length of a vacuum table tray. In some embodiments, the filter support comprises at least one vacuum table tray providing the surface configured to allow drainage. In some embodiments, the at least one vacuum table tray comprises a vertical barrier defining an area of the surface. In some embodiments, the at least one vacuum table tray comprises a filtering material. In some embodiments, the filter support is movable horizontally for dispensing the carbonaceous composition evenly onto the surface. In some embodiments, the filter support is movable horizontally on a conveyor system. In some embodiments, the at least one spray bar assembly comprises a first spray bar for dispensing the carbonaceous composition and a second spray bar for dispensing the wash liquid. In some embodiments, the at least one spray bar assembly comprises a first tube inside a second tube. In some embodiments, the first tube comprises one or more openings facing up for dispensing the wash liquid into the second tube to enable the second tube to evenly dispense the wash liquid onto the filtering material. In some embodiments, the at least one spray bar assembly comprises at least 1, 2, 3, 4, 5, 6, 7, 8, 9, or 10 spray bars. In some embodiments, the at least one spray bar assembly is fluidly coupled to a source of the carbonaceous composition. In some embodiments, the at least one spray bar assembly is fluidly coupled to a source of the wash fluid. In some embodiments, the source of the wash fluid comprises a pump for allowing the spray bar assembly to dispense the wash liquid. In some embodiments, the carbonaceous composition comprises reaction products generated using a reaction system for making graphene oxide. In some embodiments, the reaction products comprise graphene oxide and sulfuric acid. In some embodiments, the spray bar assembly dispenses the carbonaceous composition onto the filtering material at low pressure. In some embodiments, the spray bar assembly dispenses the carbonaceous composition onto the filtering material at high pressure. In some embodiments, the spray bar assembly dispenses the carbonaceous composition using gravity. In some embodiments, the spray bar assembly dispenses the wash liquid at low pressure. In some embodiments, the vacuum filtration system further comprises a control unit for controlling operation of the vacuum filtration system. In some embodiments, the control unit is configured for autonomous operation of the vacuum filtration system in filtering the carbonaceous composition. In some embodiments, the control unit is configured to carry out filtration of the carbonaceous composition until a threshold condition is met. In some embodiments, the control unit is configured to carry out a cleaning protocol. In some embodiments, the vacuum filtration system is configured to carry out batch purification of the carbonaceous composition. In some embodiments, the vacuum filtration system is configured to carry out continuous purification of the carbonaceous composition. In some embodiments, the vacuum filtration system further comprises a drainpan disposed below the filter support for receiving liquid flow-through from the filter support. In some embodiments, the drainpan is fluidly coupled to a vacuum tank, wherein the vacuum source is coupled to the vacuum tank and applies negative pressure to the filter support through the vacuum tank and the drainpan. In some embodiments, the vacuum source applies negative pressure to the filter support through the drainpan. In some embodiments, the drainpan comprises a release valve for releasing liquid flow-through. In some embodiments, the vacuum filtration system further comprises a vacuum tank for collecting liquid flow-through. In some embodiments, the vacuum filtration system further comprises a pH sensor for measuring pH of the carbonaceous composition. In some embodiments, the at least one spray bar assembly is detachable. In some embodiments, the filter support is detachable.

In another aspect, disclosed herein are systems for dispensing a carbonaceous composition comprising graphene onto a solid substrate to produce carbon-based electrode sheets, comprising: a) a first roller having surface for engaging a solid substrate, wherein rotation of the roller advances the solid substrate along a path; b) a print assembly positioned along the path to dispense the carbonaceous composition onto the solid substrate as the roller advances the solid substrate along the path; and c) a second roller comprising a series of cutters positioned along the path to cut the solid substrate and the carbonaceous composition into horizontal strips of carbon-based electrode sheets. In some embodiments, the system further comprises a heating source providing heat to the solid substrate after receiving the carbonaceous composition to dry the carbonaceous composition. In some embodiments, the carbonaceous composition is a slurry comprising graphene and a lithiated metal compound. In some embodiments, the carbonaceous composition further comprises at least one of a binder and a solvent. In some embodiments, the print assembly dispenses the carbonaceous composition onto the solid substrate as a continuous swath.

In one aspect, described herein is a reaction system comprising: (a) a reaction vessel comprising a carbonaceous composition, the vessel comprising (i) a reaction mixer mounted to the vessel, the reaction mixer in fluid communication with the vessel, and (ii) a reaction agitator mechanically coupled to the reaction mixer, wherein the reaction agitator is configured to agitate the carbonaceous composition in the vessel; (b) a tank comprising (i) a tank mixer mounted to the tank, the tank mixer in fluid communication with the tank, and (ii) a tank agitator mechanically coupled to the tank mixer, wherein the agitator is configured to agitate the carbonaceous composition in the tank after the composition has been transferred to the tank; wherein the reaction system is configured to transfer the carbonaceous composition from the reaction vessel to the tank. In some embodiments, the system comprises a sensor disposed within the reaction vessel. In further embodiments, the sensor measures temperature, pH, or salt concentration. In some embodiments, the system comprises a sensor disposed within the tank. In further embodiments, the sensor measures temperature, pH, or salt concentration. In some embodiments, the system modulates a rate of addition of one or more reactants into the reaction vessel to maintain a reaction temperature no greater than 15°C. In some embodiments, the system allows a temperature inside the reaction vessel (e.g. reaction temperature) to rise to an ambient temperature after the reaction is over. In some embodiments, the system adjusts a temperature inside the reaction vessel (e.g. raise or lower the temperature). In some embodiments, the system comprises one or more cooling coils configured to reduce a reaction temperature inside the reaction vessel. In some embodiments, the system comprises a control unit for regulating a reaction carried out by the system. In further embodiments, the control unit regulates a reaction temperature. In further embodiments, the control unit regulates a temperature of the carbonaceous composition inside the reaction vessel. In further embodiments, the control unit regulates a temperature of the carbonaceous composition after it has been transferred to the tank. In further embodiments, the control unit regulates temperature by controlling a rate of addition of one or more materials into the reaction vessel. In yet further embodiments, the one or more materials are selected from the list consisting of: carbonaceous composition, potassium permanganate, sulfuric acid, water, hydrogen peroxide, and ice. In some embodiments, the reaction vessel comprises an intake for receiving the carbonaceous composition. In some embodiments, the reaction vessel comprises an intake for receiving potassium permanganate. In some embodiments, the reaction vessel comprises an intake for receiving sulfuric acid. In some embodiments, the reaction vessel comprises a port for receiving ventilation into the vessel. In some embodiments, the reaction vessel comprises a port for releasing ventilation from the vessel. In some embodiments, the system is configured to move the reaction mixer and reaction vessel towards and away from each other. In some embodiments, the system is configured to lower the reaction mixer into the reaction vessel. In some embodiments, the system is configured to raise the reaction mixer away from the reaction vessel. In some embodiments, the system is configured to lower the reaction vessel away from the reaction mixer. In some embodiments, the system is configured to raise the reaction vessel towards the reaction mixer. In some embodiments, the reaction mixer is configured on a slide such that it can move with respect to the reaction vessel. In some embodiments, the reaction mixer is configured to slide away from the reaction vessel for ease of cleaning of the reaction vessel. In some embodiments, the reaction mixer comprises a cover for sealing the reaction vessel when the reaction mixer is lowered into the reaction vessel. In some embodiments, the reaction mixer is a reaction mixer blade, the reaction mixer blade having an edge that is within 5 inches of a side of the reaction vessel. In some embodiments, the reaction mixer comprises a scraper engaged with an inside surface of the reaction vessel, the scraper configured to scrape off materials stuck on the inside surface. In certain embodiments, the scraper is a scraper blade. In further embodiments, the scraper is attached to the reaction mixer. In further embodiments, the scraper is engaged with the inside surface of the reaction vessel at an angle, wherein a top portion of the scraper is ahead of a bottom portion of the scraper in a direction of rotation of a reaction mixer blade of the agitator. In some embodiments, the reaction mixer comprises a scraper blade configured to dislodge material that sticks to the reaction vessel. In some embodiments, the reaction vessel has a volume of at least about 20 gallons. In some embodiments, the reaction vessel has a volume of at least about 60 gallons. In some embodiments, the tank has a volume of at least about 500 gallons. In some embodiments, the tank has a volume of at least about 1,600 gallons. In some embodiments, the reaction vessel comprises a valve, wherein the reaction vessel is in fluid communication with the tank via the valve. In further embodiments, wherein the system is configured to open the valve to allow the carbonaceous composition to transfer from the reaction vessel to the tank for quenching a reaction carried out in the reaction vessel. In further embodiments, the reaction vessel is positioned higher than the tank, wherein opening the valve allows the carbonaceous composition in the reaction vessel to drain into the tank. In some embodiments, the reaction agitator is driven at a rate of up to about 60 revolutions per minute. In some embodiments, the tank has a volume of at least about 200 gallons. In some embodiments, the tank holds or contains (i) at least about 200 gallons of a liquid, (ii) at least about 300 pounds of ice, or (iii) a liquid and at least about 300 pounds of ice. In some embodiments, the tank comprises an intake for receiving hydrogen peroxide. In some embodiments, the tank is configured to dispense hydrogen peroxide into an interior space of the tank. In some embodiments, the tank comprises an intake for receiving crushed ice. In some embodiments, the tank is configured to dispense crushed ice into an interior space of the tank. In some embodiments, the tank mixer is mounted to a top of the tank. In some embodiments, the tank mixer comprises a shaft that mechanically couples the tank agitator to the tank mixer. In some embodiments, the tank mixer is configured on a slide such that it can move with respect to the tank. In some embodiments, the tank mixer slides away from the tank for ease of cleaning of the tank. In some embodiments, the system comprises a plurality of tank agitators. In some embodiments, the tank agitator is driven at a rate of up to about 60 revolutions per minute. In some embodiments, the tank agitator comprises agitator blades. In further embodiments, the agitator blades comprise 2 rows of 4 blades with at least about ½ inch clearance from all sides and bottom of the tank. In some embodiments, the system comprises (i) a transmission between the tank mixer and the tank agitator, the transmission configured to actuate the tank agitator, or (ii) a motor configured to actuate the tank agitator, wherein the motor is separate from the tank mixer. In some embodiments, the system forms an oxidized form of the carbonaceous composition at a rate of greater than about 10kg per batch. In some embodiments, the system forms an oxidized form of the carbonaceous composition at a rate of greater than about 50kg per batch. In some embodiments, the system comprises one or more additional reaction vessels. In further embodiments, the system comprises at least two reaction vessels. In further embodiments, the system comprises at least three reaction vessels. In further embodiments, the system comprises at least four reaction vessels. In yet further embodiments, the tank has a volume of at least a combined volume of the at least four reaction vessels. In yet further embodiments, the tank has a volume of at least double a combined volume of the at least four reaction vessels. In further embodiments, the system comprises at least eight reaction vessels. In yet further embodiments, the tank has a volume of at least a combined volume of the at least four reaction vessels. In yet further embodiments, the tank has a volume of at least double a combined volume of the at least eight reaction vessels. In some embodiments, the carbonaceous composition comprises graphite. In some embodiments, the carbonaceous composition comprises a graphite feedstock. In some embodiments, the system is configured to process the carbonaceous composition into graphene oxide. In some embodiments, the system is configured to process the carbonaceous composition, wherein the processed carbonaceous composition is suitable for downstream use in making a capacitor comprising electrodes having a peak capacitance of at least about 100 mF/cm² at a scan rate of about 10 mV/s. In some embodiments, the system is configured to process the carbonaceous composition, wherein the processed carbonaceous composition is suitable for downstream use in making a capacitor comprising electrodes having a peak capacitance of at least about 150 mF/cm² at a scan rate of about 10 mV/s. In some embodiments, the system is configured to process the carbonaceous composition, wherein the processed carbonaceous composition is suitable for downstream use in making a capacitor comprising electrodes having a peak capacitance of at least about 200 mF/cm² at a scan rate of about 10 mV/s. In some embodiments, the system is configured to carry out a first reaction involving the carbonaceous composition in the reaction vessel and quench the first reaction in the tank. In further embodiments, the system is configured to carry out the first reaction by adding one or more of the carbonaceous composition, sulfuric acid, and potassium permanganate. In further embodiments, the system is configured to quench the first reaction by adding one or more of hydrogen peroxide and ice. In some embodiments, the system comprises a water cooling unit. In some embodiments, the water cooling unit comprises an internal space for storing water. In some embodiments, the water cooling unit is fluidly coupled to the reaction vessel and/or the tank. In some embodiments, the water cooling unit is insulated to reduce heat gain and/or heat loss from the interior of the water cooling unit. In some embodiments, the water cooling unit comprises chilled water, ice and/or ice water. In some embodiments, the water cooling unit is configured to store water and maintain the water at or below a target temperature. In some embodiments, the water cooling unit is refrigerated or coupled to a refrigeration unit. In some embodiments, the water cooling unit is configured to dispense water into the reaction mixer and/or tank to reduce the temperature of the carbonaceous composition. Disclosed herein are methods of processing a carbonaceous composition using the system of any of the preceding embodiments.

In one aspect, disclosed herein is a reaction system comprising: (a) a reaction vessel comprising graphite, the vessel comprising: (i) a reaction mixer mounted to the vessel, the reaction mixer in fluid communication with the vessel; and (ii) a reaction agitator mechanically coupled to the reaction mixer, wherein the reaction agitator is configured to agitate the graphite in the vessel and configured to facilitate the conversion of graphite into graphene oxide; (b) a tank comprising: (i) a tank mixer mounted to the tank, the tank mixer in fluid communication with the tank; and (ii) a tank agitator mechanically coupled to the tank mixer, wherein the agitator is configured to agitate the graphene oxide in the tank after the composition has been transferred to the tank; wherein the reaction system is configured to transfer the graphene oxide from the reaction vessel to the tank. In some embodiments, the system comprises a water cooling unit. In some embodiments, the water cooling unit comprises an internal space for storing water. In some embodiments, the water cooling unit is fluidly coupled to the reaction vessel and/or the tank. In some embodiments, the water cooling unit is insulated to reduce heat gain and/or heat loss from the interior of the water cooling unit. In some embodiments, the water cooling unit comprises chilled water, ice and/or ice water. In some embodiments, the water cooling unit is configured to store water and maintain the water at or below a target temperature. In some embodiments, the water cooling unit is refrigerated or coupled to a refrigeration unit. In some embodiments, the water cooling unit is configured to dispense water into the reaction mixer and/or tank to reduce the temperature of the carbonaceous composition.

In one aspect, disclosed herein is a reaction filter, the reaction filter comprising: (a) a drum assembly; (b) a spray bar assembly disposed within the interior of the drum assembly, the spray bar assembly comprising: (i) a first set of one or more openings for dispensing a wash liquid; and (ii) a second set of one or more openings for dispensing a carbonaceous composition; wherein the drum assembly is configured to rotate. In some embodiments, the spray bar assembly dispenses the carbonaceous composition at low pressure. In some embodiments, the spray bar assembly is coupled to a source of the carbonaceous composition. In some embodiments, the spray bar assembly dispenses the carbonaceous composition using gravity (e.g. carbonaceous composition flows through spray bar assembly and out the one or more openings via gravity and is not actively pumped). In some embodiments, the spray bar assembly dispenses the wash liquid at high pressure. In some embodiments, the spray bar assembly is coupled to a source of the wash liquid, wherein the source comprises a pump for pressurizing the wash liquid to enable the spray bar assembly to dispense the wash liquid. In some embodiments, the wash liquid is deionized water. In some embodiments, the reaction filter further comprises a control unit for controlling operation of the reaction filter. In further embodiments, the control unit is configured for autonomous operation of the reaction filter in carrying out one or more wash cycles. In further embodiments, the control unit is configured to carry out one or more wash cycles until a threshold condition is met. In further embodiments, the control unit is configured to carry out a cleaning protocol. In some embodiments, the drum assembly comprises a drum mesh. In further embodiments, the drum mesh is configured to provide structural support to a drum micron filter. In further embodiments, the drum mesh comprises a pore size of no more than about 2 inches. In further embodiments, the drum mesh comprises a pore size of about 0.5 inches. In some embodiments, the drum assembly comprises a drum micron filter. In further embodiments, the drum micron filter comprises a plurality of layers. In further embodiments, the drum micron filter comprises between about two layers and about 10 layers. In further embodiments, the drum micron filter comprises between about two layers and about 6 layers. In further embodiments, the drum micron filter comprises about four layers. In further embodiments, the drum micron filter comprises pores having a pore size suitable for retaining at least 95% w/w of the carbonaceous composition after filtration. In further embodiments, the drum micron filter comprises pores having a diameter of about 1 micron. In further embodiments, the drum micron filter comprises pores having a diameter of no more than about 1 micron. In further embodiments, the drum micron filter comprises pores having a diameter of no more than about 2 microns. In further embodiments, the drum micron filter comprises pores having a diameter of no more than about 3 microns. In further embodiments, the drum micron filter comprises pores having a diameter of no more than about 5 microns. In further embodiments, the drum micron filter comprises pores having a diameter of no more than about 10 microns. In some embodiments, the drum assembly comprises a drum mesh and a drum micron filter, the drum mesh and drum micron filter each having an overlapping seam, wherein the overlapping seams are positioned to avoid overlapping with each other. In some embodiments, the drum assembly comprises one or more drum stiffener rings. In some embodiments, the drum assembly comprises one or more drum stiffeners. In some embodiments, the drum assembly is configured to minimize weight, wherein the drum assembly maintains sufficient durability for providing filtration for a carbonaceous composition. In some embodiments, the drum assembly comprises one or more drum bearing plates. In further embodiments, the one or more drum bearing plates are configured to rotate without forcing the spray bar assembly to rotate. In some embodiments, the drum assembly comprises one or more drum frames. In further embodiments, the one or more drum frames are configured to receive rotational force for rotating the drum assembly. In further embodiments, the reaction filter comprises a drive shaft configured to provide rotational force to the drum assembly. In some embodiments, the spray bar assembly comprises a first intake for receiving the wash liquid from a source of the wash liquid. In further embodiments, the wash liquid is pumped from the source of the wash liquid into the first intake of the spray bar assembly. In further embodiments, the first intake is configured to couple with a conduit in fluid communication with the source of the wash liquid for receiving the wash liquid. In yet further embodiments, the first intake is configured to efficiently couple and uncouple with the conduit. In yet further embodiments, the first intake is configured to couple with a quick disconnect fitting, wherein the quick disconnect fitting seals off the first intake. In further embodiments, the spray bar assembly comprises a second intake for receiving the carbonaceous composition from a source of the carbonaceous composition. In yet further embodiments, the carbonaceous composition is pumped from the source into the second intake of the spray bar assembly. In yet further embodiments, the second intake is configured to couple with a conduit in fluid communication with the source of the carbonaceous composition for receiving the carbonaceous composition. In yet further embodiments, the second intake is configured to efficiently couple and uncouple with the conduit. In some embodiments, the spray bar assembly comprises one or more spray bars, wherein the first set and second set of one or more openings are positioned on the one or more spray bars. In further embodiments, the spray bar assembly comprises a spray bar comprising the first set of one or more openings and the second set of one or more openings. In further embodiments, the spray bar assembly comprises a first spray bar comprising the first set of one or more openings and a second spray bar comprising the second set of one or more openings. In yet further embodiments, the first set and second set of one or more openings comprise spray tips. In still yet further embodiments, each spray tip is configured to spray the wash liquid at an angle spray of at least 30 degrees. In still yet further embodiments, each spray tip is configured to spray the wash liquid at an angle spray of at least 50 degrees. In some embodiments, the spray bar assembly is configured to spray the wash liquid into an interior of the drum assembly at a pressure sufficient to purify the carbonaceous composition. In further embodiments, the spray bar assembly is configured to spray the wash liquid into the interior of the drum assembly at a pressure of at least 50 PSI. In further embodiments, the spray bar assembly is configured to spray the wash liquid into the interior of the drum assembly at a pressure of at least 100 PSI. In further embodiments, the spray bar assembly is configured to spray the wash liquid into the interior of the drum assembly at a pressure of at least 150 PSI. In further embodiments, the spray bar assembly is configured to spray the wash liquid into the interior of the drum assembly at a pressure of at least 200 PSI. In further embodiments, the spray bar assembly is configured to spray the wash liquid into the interior of the drum assembly at a pressure of at least 150 PSI. In some embodiments, the drum assembly comprises a rolling position for washing the carbonaceous composition and an unloading position for unloading the carbonaceous composition. In further embodiments, the drum assembly comprises a drum cradle weldment configured to receive the drum assembly during unloading, wherein the drum assembly is rolled onto the drum cradle weldment. In yet further embodiments, the drum cradle weldment comprises one or more attachment mechanisms for securing the drum assembly. In yet further embodiments, the drum cradle weldment comprises a shaft extending from the drum cradle weldment and coupled to the apparatus, wherein the drum cradle weldment is configured to rotate about the axis of the shaft relative to the apparatus. In yet further embodiments, the drum cradle weldment comprises a locking mechanism for preventing rotation of the drum cradle weldment, wherein the locking mechanism is releasable to allow rotation of the drum cradle weldment. In some embodiments, the drum assembly comprises drum stiffeners. In some embodiments, the drum assembly comprises drum stiffener rings. In some embodiments, the drum assembly is configured to rotate at different speeds during one or more wash cycles. In some embodiments, the drum assembly is configured to rotate at a speed of at least 300 rpms. In some embodiments, the drum assembly is configured to rotate at a speed of at least 500 rpms. In some embodiments, the reaction filter comprises a drive shaft, wherein the drive shaft is engaged with the drum assembly to transmit rotational force to the drum assembly. In further embodiments, the drive shaft is mechanically linked to a motor that actuates the drive shaft. In further embodiments, the drive shaft comprises one or more drive wheels that are in direct contact with the drum assembly, wherein the one or more drive wheels are configured to deliver rotational force to the drum assembly. In yet further embodiments, the drum assembly comprises one or more drum frames, each drum frame comprising a groove along an outside surface configured to receive a drive wheel. In some embodiments, the spray bar assembly is fluidly coupled to a tank holding a reduced form of a carbonaceous composition, wherein the carbonaceous composition is pumped through the spray bar assembly to be dispensed into the drum assembly. In some embodiments, the reaction filter comprises a drainpan positioned beneath the drum assembly for collecting waste liquid from the drum assembly. In some embodiments, the reaction filter comprises a sensor configured to measure a property of a waste liquid from the drum assembly. In further embodiments, the property is selected from pH, temperature, conductivity, and salt concentration. In some embodiments, the reaction filter is configured to filter the carbonaceous composition in the drum assembly at a rate of greater than about 100kg per year. In some embodiments, the reaction filter is configured to filter the carbonaceous composition to obtain a purity of at least 95% w/w for a batch of at least 1kg of the carbonaceous composition after drying. In some embodiments, the reaction filter is configured to filter the carbonaceous composition to obtain a conductivity of at least 200 mS/cm for a batch of at least 1kg of the carbonaceous composition. In some embodiments, the spray bar assembly is configured for rapid detachment and reattachment. In some embodiments, the reaction filter is configured to carry out one or more wash cycles per batch of the carbonaceous composition. In further embodiments, the reaction filter is automated to carry out the one or more wash cycles without requiring manual input. In further embodiments, the reaction filter carries out the one or more wash cycles according to a predefined wash protocol. In further embodiments, the reaction filter carries out the one or more wash cycles until a threshold condition is met. In yet further embodiments, the threshold condition is selected from pH, temperature, conductivity, and salt concentration. In some embodiments, a wash cycle comprises dispensing a carbonaceous composition into the interior of the drum assembly, dispensing a wash liquid into an interior of the drum assembly, and rotating the drum assembly. In some embodiments, wherein the reaction filter is configured to carry out a wash cycle until one or more threshold conditions are met. In some embodiments, the carbonaceous composition comprises a reduced form of graphene oxide. In some embodiments, the carbonaceous composition comprises rGO. In some embodiments, the carbonaceous composition comprises graphene. In some embodiments, the reaction filter is configured to filter the carbonaceous composition, wherein the filtered carbonaceous composition is suitable for downstream use in making a capacitor comprising electrodes having a peak capacitance of at least about 100 mF/cm² at a scan rate of about 10 mV/s. In some embodiments, the reaction filter is configured to filter the carbonaceous composition, wherein the filtered carbonaceous composition is suitable for downstream use in making a capacitor comprising electrodes having a peak capacitance of at least about 150 mF/cm² at a scan rate of about 10 mV/s. In some embodiments, the reaction filter is configured to filter the carbonaceous composition, wherein the filtered carbonaceous composition is suitable for downstream use in making a capacitor comprising electrodes having a peak capacitance of at least about 200 mF/cm² at a scan rate of about 10 mV/s. In some embodiments, the reaction filter is substantially enclosed to prevent the wash liquid and the carbonaceous composition from escaping during one or more wash cycles. In some embodiments, the reaction filter comprises a cradle pivot assembly. In some embodiments, the reaction filter comprises a drum cradle assembly. In some embodiments, the reaction filter comprises an idler shaft. In some embodiments, the reaction filter comprises a drive shroud. In some embodiments, the reaction filter comprises a drum shaft support. In some embodiments, the reaction filter comprises a motor mount plate. In some embodiments, the reaction filter comprises a frame weldment. In some embodiments, the reaction filter comprises a lid weldment. In some embodiments, the reaction filter comprises a drainpan weldment. In some embodiments, the reaction filter comprises a cradle pivot weldment. In some embodiments, the reaction filter comprises a drum roll guide. In some embodiments, the reaction filter a drum brace. In some embodiments, the reaction filter a drum cradle weldment. In some embodiments, the reaction filter comprises a drum end cap assembly. In some embodiments, the reaction filter comprises a spray bar bearing hub. In some embodiments, the reaction filter comprises a drum bearing plate. In some embodiments, the reaction filter comprises a drum shaft mount. In another aspect, disclosed herein are methods of filtering a carbonaceous composition using the reaction filter of any of the preceding embodiments.

In another aspect, disclosed herein is an apparatus, the apparatus comprising: a tank, the tank comprising a carbonaceous composition; a mixer mounted to the tank, the mixer in fluid communication with the tank; and a tank agitator mechanically coupled to the mixer, wherein the tank agitator is configured to agitate the carbonaceous composition in the tank, thereby forming an oxidized form of the carbonaceous composition at a rate of greater than about 1 tonne per year (tpy). In some embodiments, the tank has a volume of at least about 100 gallons. In some embodiments, the tank holds or contains a fluid. In some embodiments, the fluid comprises the carbonaceous composition. In some embodiments, the tank holds or contains (i) at least about 100 gallons of a liquid, (ii) at least about 150 pounds of ice, or (iii) a liquid and at least about 150 pounds of ice. In some embodiments, the tank comprises (i) at least one inlet, (ii) at least one outlet, or (iii) at least one inlet and at least one outlet. In further embodiments, the tank comprises a first inlet at a top of the tank and a second inlet at a bottom left edge of a back of the tank. In further embodiments, the tank comprises a first outlet at a top and a second outlet at a bottom in a center end of the tank. In some embodiments, the mixer comprises a mixer bowl. In further embodiments, the mixer bowl comprises a butterfly valve mounted substantially flush with the mixer bowl, wherein the mixer is in fluid communication with the tank via the butterfly valve. In some embodiments, the mixer is mounted to a top of the tank. In some embodiments, the mixer comprises a shaft that mechanically couples the tank agitator to the mixer. In further embodiments, the shaft comprises a drive shaft. In some embodiments, the mixer is configured on a slide such that it can move with respect to the tank. In further embodiments, the mixer slides away from the tank for ease of cleaning of the tank. In some embodiments, the apparatus comprises a plurality of tank agitators. In some embodiments, the tank agitator is driven with a drive shaft off a front attachment of the mixer. In some embodiments, the tank agitator is driven at a power/frequency of at least about 60 revolutions per minute. In some embodiments, the tank agitator comprises agitator blades. In further embodiments, the agitator blades comprise 2 rows of 4 blades with at least about ½ inch clearance from all sides and bottom of the tank. In some embodiments, one or more top-most blades among the agitator blades are at least about 6 inches from a top of the tank and at least about ½ inch from each side of the tank. In some embodiments, the apparatus further comprises (i) a transmission between the mixer and the tank agitator, the transmission configured to actuate the tank agitator, or (ii) a motor configured to actuate the tank agitator, the motor separate from the mixer. In further embodiments, the apparatus comprises a gearbox. In some embodiments, the apparatus comprises a power source in electrical communication with the mixer. In some embodiments, the oxidized form of the carbonaceous composition is formed at a rate of greater than about 2 tpy. In some embodiments, the oxidized form of the carbonaceous composition is formed at a rate of greater than about 5 tpy. In another aspect, disclosed herein are methods of processing a carbonaceous composition using the apparatus of any of the preceding embodiments. In some embodiments, the system comprises a water cooling unit. In some embodiments, the water cooling unit comprises an internal space for storing water. In some embodiments, the water cooling unit is fluidly coupled to the reaction vessel and/or the tank. In some embodiments, the water cooling unit is insulated to reduce heat gain and/or heat loss from the interior of the water cooling unit. In some embodiments, the water cooling unit comprises chilled water, ice and/or ice water. In some embodiments, the water cooling unit is configured to store water and maintain the water at or below a target temperature. In some embodiments, the water cooling unit is refrigerated or coupled to a refrigeration unit. In some embodiments, the water cooling unit is configured to dispense water into the reaction mixer and/or tank to reduce the temperature of the carbonaceous composition.

### BRIEF DESCRIPTION OF DRAWINGS

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings or figures (also **"FIG."** and **"FIGS."** herein), of which:
**FIG. 1** is a schematic of a system comprising two vessels;
**FIG. 2** is a schematic of another system comprising two vessels;
**FIG. 3A** and **FIG. 3B** show schematics of a tank agitator and related components;
**FIG. 4** shows schematics of a mixer bowl and related components;
**FIG. 5A** and **FIG. 5B** show schematics a tank and related components;
**FIG. 6** schematically shows a method for manufacturing (or synthesizing) graphite oxide from graphite;
**FIG. 7** shows an example of a measurement of capacitance versus reaction time;
**FIG. 8** shows another example of a measurement of capacitance versus reaction time;
**FIG. 9** shows yet another example of a measurement of capacitance versus reaction time;
**FIG. 10** shows cyclic voltammetry (CV) scans of a double layer device constructed from the sample in **FIG. 9****;**
**FIG. 11A** and **FIG. 11B** provide a comparison of cyclic voltammetry (CV) scans;
**FIG. 12** shows capacitance as a function of number of hydrochloric acid (HCl) washes;
**FIG. 13A****,** **FIG. 13B****,** and **FIG. 13C** show an embodiment of a frame assembly (e.g., GSRF-0100);
**FIG. 14A** and **FIG. 14B** show an embodiment of an cradle pivot assembly (e.g., GSRF-0104);
**FIG. 15** shows an embodiment of a drum cradle assembly (e.g., GSRF-0106);
**FIG. 16A** and **FIG. 16B** show an embodiment of a drum assembly (e.g., GSRF-0108);
**FIG. 16C** and **FIG. 16D** show another embodiment of a drum assembly;
**FIG. 17** shows an embodiment of an idler shaft and a drive shaft (e.g., GSRF-0011);
**FIG. 18** shows an embodiment of a drive shroud (e.g., GSRF-0012);
**FIG. 19A** and **FIG. 19B** show an embodiment of a drum shaft support (e.g., GSRF-0013);
**FIG. 20** shows an embodiment of a motor mount plate (e.g., GSRF-0014);
**FIG. 21A****,** **FIG. 21B****,** and **FIG. 21C** show an embodiment of a frame weldment (e.g., GSRF-0101);
**FIG. 22** shows an embodiment of a lid weldment (e.g., GSRF-0102);
**FIG. 23** shows an embodiment of a drainpan weldment (e.g., GSRF-0103);
**FIG. 24** shows an embodiment of a lid stop (e.g., GSRF-0015);
**FIG. 25A** and **FIG. 25B** show an embodiment of a cradle pivot weldment (e.g., GSRF-0105);
**FIG. 26A** and **FIG. 26B** show an embodiment of a drum roll guide and a drum brace (e.g., GSRF-0010);
**FIG. 27** shows an embodiment of a drum cradle weldment (e.g., GSRF-0107);
**FIG. 28A****,** **FIG. 28B****,** and **FIG. 28C** show embodiments of a spray bar assembly (e.g., GSRF-0109);
**FIG. 29A** and **FIG. 29B** show an embodiment of a drum end cap assembly (e.g., GSRF-0110);
**FIG. 30A, FIG. 30B****,** **FIG. 30C****,** and **FIG. 30D** show embodiments of a drum frame (e.g., GSRF-0001);
**FIG. 31** shows an embodiment of a drum stiffener (e.g., GSRF-0002);
**FIG. 32** shows an embodiment of a drum stiffener ring (e.g., GSRF-0003);
**FIG. 33** shows an embodiment of a drum mesh (e.g., GSRF-0004);
**FIG. 34** shows an embodiment of a drum micron filter (e.g., GSRF-0009);
**FIG. 35** shows an embodiment of a spray bar (e.g., GSRF-0005);
**FIG. 36** shows an embodiment of a drum bearing plate (e.g., GSRF-0006);
**FIG. 37** shows an embodiment of a spray bar bearing hub on a fluid side (e.g., GSRF-0007);
**FIG. 38** shows an embodiment of a drum shaft mount on a fluid side (e.g., GSRF-0008);
**FIG. 39** shows an embodiment of a spray bar bearing hub on an idler side (e.g., GSRF-0007);
**FIG. 40** shows an embodiment of a drum shaft mount on an idler side (e.g., GSRF-0008);
**FIG. 41A** and **FIG. 41B** show an embodiment of an rGO/graphene second reaction filter;
**FIG. 42** shows an unloading procedure using the rGO/graphene second reaction filter in **FIGS. 41A-41B** and **FIGS. 43A-43F****;**
**FIG. 43A****,** **FIG. 43B****,** **FIG. 43C****,** **FIG. 43D****,** **FIG. 43E****,** and **FIG. 43F** show examples of an rGO/graphene second reaction filter (e.g., GSRF-1000);
**FIG. 44** shows an embodiment of a scalable reactor and an embodiment of procedures using the scalable reactor;
**FIG. 45** shows an embodiment of a cover assembly with front and rear hood weldments (e.g. GSRF-0111, GSRF-0112); and
**FIG. 46A** shows an embodiment of a bowl lift lock of a first reaction system;
**FIG. 46B** and **FIG. 46C** show embodiments of a first reaction mixer assembly;
**FIG. 46D** shows an embodiment of a lid or cover of a first reaction system mixer assembly;
**FIG. 46E** shows another embodiment of a first reaction system mixer assembly;
**FIG. 46F** shows an embodiment of a first reaction system comprising a first reaction mixer assembly and a first reaction tank;
**FIG. 46G** shows another embodiment of a first reaction system;
**FIG. 46H** shows an embodiment of a lid or cover and mixer of the first reaction system mixer assembly;
**FIG. 46I** shows additional views of an embodiment of the lid or cover and mixer of the first reaction system mixer assembly;
**FIG. 46J** shows an embodiment of a first reaction system;
**FIG. 47** shows an embodiment of a first reaction system, a de-ionized water holding tank, an acid holding tank, a second reaction system, and a second reaction filter;
**FIG. 48** shows an embodiment of a lift carriage skid plate (e.g. GFRC-0001);
**FIG. 49** shows an embodiment of a bowl lift lock spacer (e.g. GFRC-0002);
**FIG. 50** shows an embodiment of a lift motor mount plate (e.g. GFRC-0004);
**FIG. 51** shows an embodiment of a lift elbow spacer plate (e.g. GFRC-0005);
**FIG. 52** shows an embodiment of a mixer sensor bracket (e.g. GFRC-0006);
**FIG. 53** shows an embodiment of a tank motor mount (e.g. GFRC-0008);
**FIG. 54** shows an embodiment of a mixer torque bracket (e.g. GFRC-0009);
**FIG. 55** shows an embodiment of a mixer spray bar (e.g. GFRC-0010);
**FIG. 56** shows an embodiment of a tank mixer shaft (e.g. GFRC-0011);
**FIG. 57** shows an embodiment of a tank mixer blade (e.g. GFRC-0012);
**FIG. 58** shows an embodiment of a bowl mount plate (e.g. GFRC-0013);
**FIG. 59** shows an embodiment of a carriage switch mount plate (e.g. GFRC-0014);
**FIG. 60** shows an embodiment of a first reaction mixer blade (e.g. GFRC-0016);
**FIG. 61** shows an embodiment of a first reaction scraper blade mount (e.g. GFRC-0017);
**FIG. 62** shows an embodiment of a first reaction scraper blade shaft (e.g. GFRC-0018);
**FIG. 63** shows an embodiment of a first reaction scraper blade holder (e.g. GFRC-0019);
**FIG. 64** shows an embodiment of a first reaction paddle shaft (e.g. GFRC-0020);
**FIG. 65** shows an embodiment of a first reaction paddle cap (e.g. GFRC-0021);
**FIG. 66** shows an embodiment of a first reaction mixer drive shaft (e.g. GFRC-0022);
**FIG. 67** shows an embodiment of a first reaction paddle stop (e.g. GFRC-0024);
**FIG. 68A** and **FIG. 68B** show an embodiment of a first reaction frame weldment (e.g. GFRC-0101);
**FIG. 69A** and **FIG. 69B** shows an embodiment of a lift carriage weldment (e.g. GFRC-0102);
**FIG. 70** shows an embodiment of a lift carriage brace (e.g. GFRC-0103);
**FIG. 71** shows an embodiment of a lift carriage (e.g. GFRC-0104);
**FIG. 72** shows an embodiment of a first reaction top plate (e.g. GFRC-0105);
**FIG. 73** shows an embodiment of a mixer motor mount (e.g. GFRC-0108);
**FIG. 74** shows an embodiment of a 1000 gallon tank mixer paddle (e.g. GFRC-0109);
**FIG. 75** shows an embodiment of a 150 gallon tank mixer paddle (e.g. GFRC-0110);
**FIG. 76A** and **FIG. 76B** show an embodiment of a first reaction frame shelf (e.g. GFRC-0111);
**FIG. 76C** shows an embodiment of a first reaction frame shelf with an ice auger feed **(4703)** and a potassium permanganate auger feed **(4705);**
**FIG. 77A** and **FIG. 77B** show an embodiment of a first reaction paddle assembly (e.g. GFRC-0112);
**FIG. 78** shows a drain pan used in a vacuum filtration apparatus (e.g., VAC-0010);
**FIG. 79** shows a vacuum table tray mesh used in a vacuum filtration apparatus (e.g., VAC-0011);
**FIG. 80** shows a tray side used in a vacuum filtration apparatus (e.g., VAC-0012);
**FIG. 81** shows a tray baseplate used in a vacuum filtration apparatus (e.g., VAC-0013);
**FIG. 82** shows a bearing plate used in a vacuum filtration apparatus (e.g., VAC-0014);
**FIG. 83** shows a motor mount plate used in a vacuum filtration apparatus (e.g., VAC-0015);
**FIG. 84** shows a rail gusset used in a vacuum filtration apparatus (e.g., VAC-0016);
**FIG. 85** shows a foot plate used in a vacuum filtration apparatus (e.g., VAC-0017);
**FIG. 86A** and **FIG. 86B** show a vacuum table frame and electrical system used in a vacuum filtration apparatus (e.g., VAC-0105);
**FIG. 86C** shows an adjustable actuator and a proximity sensor of the vacuum filtration apparatus;
**FIG. 86D** shows an adjustable mechanism for clamping a vacuum table tray in place;
**FIG. 87A** shows a vacuum table tray used in a vacuum filtration apparatus (e.g., VAC-0102);
**FIG. 87B** shows a spray bar stiffener used in a vacuum filtration apparatus;
**FIG. 87C** shows a spray bar used in a spray bar assembly;
**FIG. 87D** shows a spray bar assembly used in a vacuum filtration apparatus;
**FIG. 88A** and **FIG. 88B** show a vacuum filtration apparatus (e.g., VAC-1000);
**FIG. 88C** shows a vacuum tank used in a vacuum filtration apparatus;
**FIG. 88D** shows a mesh support used in a vacuum table tray;
**FIG. 89** shows a method for coating a substrate or film;
**FIG. 90** shows an apparatus for cutting and/or splitting a substrate;
**FIG. 91** shows an apparatus for mixing a slurry;
**FIG. 92** shows a viscosity measurement of a slurry;
**FIG. 93** shows an apparatus for mixing a slurry and a vacuum filter;
**FIG. 94** shows an apparatus for coating a film substrate;
**FIG. 95** shows an apparatus for rolling film substrate;
**FIG. 96** shows an apparatus for rolling film substrate;
**FIG. 97** shows a film substrate;
**FIG. 98** shows a film substrate;
**FIG. 99** shows an apparatus for coating a film substrate with a slurry;
**FIG. 100** shows an apparatus for cutting strips of the slurry coated film;
**FIG. 101** shows exemplary strips of the slurry coated film;
**FIG. 102** shows exemplary strips of the slurry coated film with the slurry layer separating from the film substrate;
**FIG. 103** shows an apparatus for making battery jelly rolls (e.g., a winding machine);
**FIG. 104** shows a cell;
**FIG. 105** shows an apparatus for attaching an anode to a battery can (e.g., a spot welder);
**FIG. 106** shows exemplary cell jackets;
**FIG. 107** shows a cell jacket and tab;
**FIG. 108** shows exemplary energy storage devices; and
**FIG. 109** shows a test rig for energy storage devices.

### DETAILED DESCRIPTION OF INVENTION

Provided herein are methods, devices, and systems for processing of carbonaceous compositions. In certain embodiments, the processing includes the manufacture (or synthesis) of oxidized forms of carbonaceous compositions and/or the manufacture (or synthesis) of reduced forms of oxidized carbonaceous compositions. Some embodiments provide methods, devices, and systems for the manufacture (or synthesis) of graphite oxide from graphite and/or for the manufacture (or synthesis) of reduced graphite oxide from graphite oxide. Various aspects of the disclosure described herein are applicable to any of the particular applications set forth below or in any other type of manufacturing, synthesis, or processing setting. In certain embodiments, other manufacturing, synthesis, or processing of materials equally benefit from features described herein. In certain embodiments, the methods, devices, and systems herein are advantageously applied to manufacture (or synthesis) of various forms of non-carbonaceous compositions. In certain embodiments, the subject matter described herein are applied as a standalone method, device, or system, or as part of an integrated manufacturing or materials (e.g., chemicals) processing system. It shall be understood that different aspects of the subject matter described herein can be appreciated individually, collectively, or in combination with each other.

An aspect of the subject matter disclosed herein relates to a system (comprising one or more devices) for the manufacture (or synthesis) or processing of materials. In certain embodiments, the system is used to manufacture oxidized forms of carbonaceous compositions.

Another aspect of the subject matter disclosed herein relates to a reaction system comprising: (a) a reaction vessel comprising a carbonaceous composition, the vessel comprising (i) a reaction mixer mounted to the vessel, the reaction mixer in fluid communication with the vessel; and (ii) a reaction agitator mechanically coupled to the reaction mixer, wherein the reaction agitator is configured to agitate the carbonaceous composition in the vessel; (b) a tank comprising (i) a tank mixer mounted to the tank, the tank mixer in fluid communication with the vessel; and (ii) a tank agitator mechanically coupled to the tank mixer, wherein the agitator is configured to agitate the carbonaceous composition in the tank after the composition has been transferred to the tank; wherein the reaction system is configured to transfer the carbonaceous composition from the reaction vessel to the tank.

Another aspect of the subject matter disclosed herein relates to a reaction filter, the reaction filter comprising: (a) a drum assembly; (b) a spray bar assembly disposed within the interior of the drum assembly, the spray bar assembly comprising: (i) a first set of one or more openings for dispensing a wash liquid; and (ii) a second set of one or more openings for dispensing a carbonaceous composition; wherein the drum assembly is configured to rotate.

Another aspect of the subject matter disclosed herein relates to a reaction filter, the reaction filter comprising: (a) a drum assembly; (b) a spray bar assembly disposed within the interior of the drum assembly, the spray bar assembly configured to dispense a wash liquid and a carbonaceous composition; wherein the drum assembly is configured to rotate.

Another aspect of the subject matter disclosed herein relates to an apparatus, the apparatus comprising: a tank, the tank comprising a carbonaceous composition; a mixer mounted to the tank, the mixer in fluid communication with the tank; and a tank agitator mechanically coupled to the mixer, wherein the tank agitator is configured to agitate the carbonaceous composition in the tank, thereby forming an oxidized form of the carbonaceous composition at a rate of greater than about 1 tonne per year (tpy).

Another aspect of the subject matter disclosed herein relates to a vacuum filtration system comprising: a) a filter support comprising a surface configured to allow drainage; b) a filtering material disposed on the surface, the filtering material comprising pores for filtering a carbonaceous composition; c) at least one spray bar assembly positioned to dispense at least one of a carbonaceous composition and a wash liquid onto the filtering material; and d) a vacuum source configured to apply negative pressure to the filter support to enhance filtration of the carbonaceous composition.

Another aspect of the subject matter disclosed herein relates to a vacuum filtration system comprising: a) a vacuum table tray comprising a spacer material having holes that allow drainage; b) a filtering material disposed on the spacer material, the filtering material comprising pores having an average pore size suitable for retaining a carbonaceous composition; and c) at least one spray bar assembly configured to dispense the carbonaceous composition onto the filtering material and configured to dispense a wash liquid onto the carbonaceous composition, wherein at least 80% w/w of the carbonaceous composition is retained after filtration.

Another aspect of the subject matter disclosed herein relates to a method of filtering a carbonaceous composition comprising graphene oxide using a vacuum filtration system, comprising: a) providing the vacuum filtration system comprising filtering material disposed on a filter support and at least one spray bar assembly; b) dispensing, by the at least one spray bar assembly, the carbonaceous composition comprising graphene oxide onto the filtering material; c) dispensing, by the at least one spray bar assembly, a wash liquid onto the carbonaceous composition; and d) applying suction to the filtering material to enhance filtration of the carbonaceous composition, wherein the filtering material retains the graphene oxide while allowing filtrate to drain.

Another aspect of the subject matter disclosed herein relates to a system for dispensing a carbonaceous composition comprising graphene onto a solid substrate to produce carbon-based electrode sheets, comprising: a) a first roller having surface for engaging a solid substrate, wherein rotation of the roller advances the solid substrate along a path; b) a print assembly positioned along the path to dispense the carbonaceous composition onto the solid substrate as the roller advances the solid substrate along the path; and c) a second roller comprising a series of cutters positioned along the path to cut the solid substrate and the carbonaceous composition into horizontal strips of carbon-based electrode sheets.

As used herein, "about" a number refers to a range including that number and spanning that number plus or minus 10% of that number. "About" a range refers to the range extended to 10% less than the lower limit and 10% greater than the upper limit of the range.

Reference will now be made to the figures. It will be appreciated that the figures and features therein are not necessarily drawn to scale.

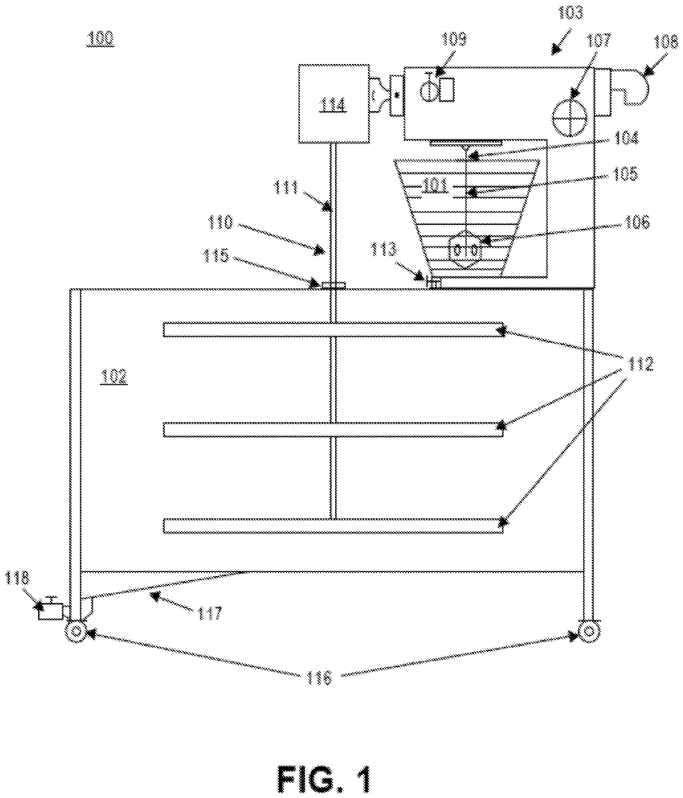

**FIG. 1** is a schematic of a system **100** comprising two vessels. In certain embodiments, the system **100** is used to carry out a first reaction (e.g., oxidizing a carbonaceous composition). In certain embodiments, the system is used to carry out a second reaction (e.g. reducing a carbonaceous composition). In certain embodiments, the system includes a first vessel (e.g., a reaction chamber or reaction vessel where a reaction takes place) **101** and a second vessel (e.g. a tank or mixer tank where a reaction is quenched) **102.** In certain embodiments, the first vessel **101** is open or closed (e.g., sealed). In certain embodiments, the first vessel comprises a reaction chamber (e.g. reaction vessel or reaction bowl). In certain embodiments, the first vessel comprises a mixer bowl. In certain embodiments, the first vessel contains a substance or composition that is mixing and/or reacting. Any description herein of the first vessel (e.g. first reaction vessel, reaction bowl, etc) is applicable to a mixer bowl (or a mixer), and vice versa. In certain embodiments, a mixer or mixer system **103** stirs or mixes the contents of the first vessel (e.g., the contents of the mixer bowl). In an example, the mixer is a 20 quart mixer. In certain embodiments, the mixer **103** comprises one or more mixer agitators **104** that stirs or mixes the contents of the first vessel (e.g., the contents of the mixer bowl). In certain embodiments, the mixer **103** comprises a motor (not shown). In certain embodiments, the motor drives the mixer agitator **104.** In certain embodiments, the mixer agitator comprises a shaft **105** and a paddle, blade or other stirrer **106.** In certain embodiments, the motor is further coupled to other components of the system **100** as described elsewhere herein. In certain embodiments, the mixer **103** comprises a fan **107,** an optional fresh air intake **108** and/or one or more controls **109.** In certain embodiments, a power source (shown) is in electrical communication with the mixer **103.** In certain embodiments, the mixer **103** comprises the first vessel (e.g., mixer bowl) **101** (i.e., the mixer bowl is part of the mixer system). In certain embodiments, the optional fresh air intake **108** takes in air, for example, to protect the motor from corrosive gases (e.g., corrosive gases within the mixer **103** or any other elements of the system **100).** In certain embodiments, the fresh air intake **108** is not provided in certain embodiments (e.g., fresh air may in some cases not be used when the motor is a hydraulic motor). In certain embodiments, the motor is any suitable motor that can properly drive the mixer agitator **104** and/or other components of the system **100.** In certain embodiments, the motor is a hydraulic motor, an electrical motor, or other motor.

In certain embodiments, the mixer comprises (e.g., holds or contains) a fluid (e.g., solid, liquid, or gas). In certain embodiments, the mixer comprises a liquid (e.g., sulfuric acid), a solid (e.g., graphite) or a mixture thereof. In certain embodiments, the contents of the mixer is maintained at a suitable temperature, such as, for example, less than or equal to about 0°C, 1°C, 2°C, 3°C, 4°C, 6°C, 8°C, 10°C, 15°C, 20°C, 25°C, 30°C, 35°C, 40°C, 45°C, 50°C, 55°C, 60°C, 65°C, 70°C, 75°C, 80°C, 85°C, 90°C, 95°C, or 100°C. In an example, the contents of the mixer are maintained at about 0°C. In another example, the contents of the mixer are maintained at less than about 15°C. In certain embodiments, the reaction temperature and/or reaction time of the mixture in the mixer are controlled. In certain embodiments, the reaction time and/or reaction temperature are maintained below a suitable value (e.g., such that contents of the mixer are maintained at a temperature of about 0°C or at a temperature of less than about 15 °C). In certain embodiments, the reaction temperature is decreased, for example, by cooling tubes or coils around the mixer bowl, by immersing the mixer bowl in a temperature-controlled bath (e.g., a thermostat-controlled bath or an ice bath), by other cooling methods, or any combination thereof. In certain embodiments, the cooling coils/tubes circulate chilled water. In certain embodiments, the flow rate of the chilled water is increased in order to decrease the temperature. In certain embodiments, the temperature of the chilled water is decreased in order to decrease the temperature. In certain embodiments, the reaction temperature and/or reaction time is varied by changing a rate of addition of one or more reactants to the contents of the mixer bowl (e.g., the temperature is decreased by decreasing a rate at which a reactant that leads to an exothermic reaction is added). In certain embodiments, the contents of the mixer bowl are at a pH of less than or equal to about 7, 6, 5, 4, or 3.5. In certain embodiments, the contents of the mixer bowl are at a pH of less than or equal to about 7.0, 6.9, 6.8, 6.7, 6.6, 6.5, 6.4, 6.3, 6.2, 6.1, 6.0, 5.9, 5.8, 5.7, 5.6, 5.5, 5.4, 5.3, 5.2, 5.1, 5.0, 4.9, 4.8, 4.7, 4.6, 4.5, 4.4, 4.3, 4.2, 4.1, 4.0, 3.9, 3.8, 3.7, 3.6, 3.5, 3.4, 3.3, 3.2, 3.1, 3.0, 2.9, 2.8, 2.7, 2.6, 2.5, 2.4, 2.3, 2.2, 2.1, 2.0, 1.9, 1.8, 1.7, 1.6, 1.5, 1.4, 1.3, 1.2, 1.1, 1.0, 0.9, 0.8, 0.7, 0.6, 0.5, 0.4, 0.3, 0.2, or about 0.1. In certain embodiments, the contents of the mixer bowl have a pH from about 3 to about 7. In certain embodiments, the contents of the mixer bowl have a pH of at least about 3. In certain embodiments, the contents of the mixer bowl have a pH of no more than about 7. In certain embodiments, the contents of the mixer bowl have a pH from about 3 to about 3.5, about 3 to about 4, about 3 to about 4.5, about 3 to about 5, about 3 to about 5.5, about 3 to about 6, about 3 to about 6.5, about 3 to about 7, about 3.5 to about 4, about 3.5 to about 4.5, about 3.5 to about 5, about 3.5 to about 5.5, about 3.5 to about 6, about 3.5 to about 6.5, about 3.5 to about 7, about 4 to about 4.5, about 4 to about 5, about 4 to about 5.5, about 4 to about 6, about 4 to about 6.5, about 4 to about 7, about 4.5 to about 5, about 4.5 to about 5.5, about 4.5 to about 6, about 4.5 to about 6.5, about 4.5 to about 7, about 5 to about 5.5, about 5 to about 6, about 5 to about 6.5, about 5 to about 7, about 5.5 to about 6, about 5.5 to about 6.5, about 5.5 to about 7, about 6 to about 6.5, about 6 to about 7, or about 6.5 to about 7. In certain embodiments, the mixer bowl has a volume of at least about 0.1 gallon, 0.2 gallon, 0.5 gallon, 1 gallon, 2 gallons, 3 gallons, 4 gallons, 5 gallons, 6 gallons, 7 gallons, 8 gallons, 9 gallons, 10 gallons, 15 gallons, 25 gallons, 50 gallons, 75 gallons, 80 gallons, 85 gallons, 90 gallons, 100 gallons, 250 gallons, 500 gallons, 750 gallons, 1,000 gallons, 5,000 gallons, 10,000 gallons, 15,000 gallons, 25,000 gallons, 50,000 gallons, 100,000 gallons, 150,000 gallons, 200,000 gallons, 1,000 cubic meters, 5,000 cubic meters, 10,000 cubic meters, 50,000 cubic meters, 100,000 cubic meters, or 500,000 cubic meters.

In certain embodiments, the mixer agitator is driven at a power/frequency of greater than or equal to about 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, 200, 205, 210, 215, 220, 225, 230, 235, 240, 245, or 250 revolutions per minute (rpm). In certain embodiments, the mixer agitator is driven at a power/frequency of up to about 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, 200, 205, 210, 215, 220, 225, 230, 235, 240, 245, or 250 revolutions per minute (rpm). In certain embodiments, the mixer agitator is driven at a power/frequency from about 20 rpm to about 300 rpm. In certain embodiments, the mixer agitator is driven at a power/frequency from at least about 20 rpm. In certain embodiments, the mixer agitator is driven at a power/frequency from at most about 300 rpm. In certain embodiments, the mixer agitator is driven at a power/frequency from about 20 rpm to about 60 rpm, about 20 rpm to about 100 rpm, about 20 rpm to about 150 rpm, about 20 rpm to about 200 rpm, about 20 rpm to about 250 rpm, about 20 rpm to about 300 rpm, about 60 rpm to about 100 rpm, about 60 rpm to about 150 rpm, about 60 rpm to about 200 rpm, about 60 rpm to about 250 rpm, about 60 rpm to about 300 rpm, about 100 rpm to about 150 rpm, about 100 rpm to about 200 rpm, about 100 rpm to about 250 rpm, about 100 rpm to about 300 rpm, about 150 rpm to about 200 rpm, about 150 rpm to about 250 rpm, about 150 rpm to about 300 rpm, about 200 rpm to about 250 rpm, about 200 rpm to about 300 rpm, or about 250 rpm to about 300 rpm. In an example, the mixer agitator is driven at a power/frequency of at least about 60, 100, or 200 revolutions per minute.

In certain embodiments, a mixer system comprises one or more types of mixers selected a ribbon blender, V blender, continuous processor, cone screw blender, screw blender, double cone blender, high viscosity mixer, counter-rotating mixer, double or triple shaft mixer, vacuum mixer, dispersion mixer, paddle mixer, jet mixer, drum blender, auger mixers, vertical mixers, rotary mixers, turbine mixer, close-clearance mixer, and high shear mixer.

In certain embodiments, the second vessel **102** is open or closed (e.g., sealed). In certain embodiments, the second vessel comprises a tank. In certain embodiments, the description herein of the second vessel is applicable to a tank, and vice versa. In certain embodiments, the tank comprises a substance or composition that is agitated by a tank agitator **110.** For example, in certain embodiments, the tank comprises a carbonaceous composition that is agitated by the tank agitator. In an example, the tank comprises a 100 gallon ice bath and is agitated by an ice bath agitator. In certain embodiments, the tank agitator comprises a shaft **111** and one or more agitator blades **112.** In certain embodiments, the shaft is driven such that the agitator keeps the contents of the tank in motion and/or to enhance (e.g., maximize) cooling. For example, in certain embodiments, the shaft is driven to keep graphite oxide flowing through the ice in the tank. In certain embodiments, the shaft **111** is coupled to the second vessel via a bearing **115.** In certain embodiments, the system comprises a plurality of tank agitators. In certain embodiments, the system comprises at least one, two, three, four, five, six, seven, eight, nine, or ten tank agitators.

In certain embodiments, the tank comprises (e.g., holds or contains) a fluid (e.g., solid, liquid, or gas). In certain embodiments, the mixer comprises a liquid (e.g., water, a liquid reaction mixture, etc.), a solid (e.g., ice) or a mixture thereof. In certain embodiments, the contents of the tank are maintained at a suitable temperature, such as, for example, less than or equal to about 0°C, 1°C, 2°C, 3°C, 4°C, 6°C, 8°C, 10°C, 15°C, 20°C, 25°C, 30°C, 35°C, 40°C, 45°C, 50°C, 55°C, 60°C, 65°C, 70°C, 75°C, 80°C, 85°C, 90°C, 95°C, or 100°C. In an example, the contents of the tank are maintained at about 0°C. In certain embodiments, the contents of the tank are at a pH of greater than or equal to about 3, 4, 5, 6, 7, 8, 9, or 10. In certain embodiments, the contents of the tank are at a pH of greater than or equal to about 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, or 10.0. In certain embodiments, the contents of the mixer bowl have a pH from about 3 to about 7. In certain embodiments, the contents of the mixer bowl have a pH of at least about 3. In certain embodiments, the contents of the mixer bowl have a pH of no more than about 7. In certain embodiments, the contents of the mixer bowl have a pH from about 3 to about 3.5, about 3 to about 4, about 3 to about 4.5, about 3 to about 5, about 3 to about 5.5, about 3 to about 6, about 3 to about 6.5, about 3 to about 7, about 3.5 to about 4, about 3.5 to about 4.5, about 3.5 to about 5, about 3.5 to about 5.5, about 3.5 to about 6, about 3.5 to about 6.5, about 3.5 to about 7, about 4 to about 4.5, about 4 to about 5, about 4 to about 5.5, about 4 to about 6, about 4 to about 6.5, about 4 to about 7, about 4.5 to about 5, about 4.5 to about 5.5, about 4.5 to about 6, about 4.5 to about 6.5, about 4.5 to about 7, about 5 to about 5.5, about 5 to about 6, about 5 to about 6.5, about 5 to about 7, about 5.5 to about 6, about 5.5 to about 6.5, about 5.5 to about 7, about 6 to about 6.5, about 6 to about 7, or about 6.5 to about 7. In certain embodiments, the tank has a volume of at least about 1 gallon, 2 gallons, 5 gallons, 10 gallons, 25 gallons, 50 gallons, 75 gallons, 100 gallons, 250 gallons, 500 gallons, 750 gallons, 1,000 gallons, 2,000 gallons, 3,000 gallons, 4,000 gallons, 5,000 gallons, 5,500 gallons, 6,000 gallons, 7,000 gallons, 8,000 gallons, 9,000 gallons, 10,000 gallons, 15,000 gallons, 25,000 gallons, 50,000 gallons, 100,000 gallons, 150,000 gallons, 200,000 gallons, 1,000 cubic meters, 5,000 cubic meters, 10,000 cubic meters, 50,000 cubic meters, 100,000 cubic meters, 500,000 cubic meters, 1 million cubic meters, 1.5 million cubic meters, 2 million cubic meters, 2.5 million cubic meters, or 3 million cubic meters. In certain embodiments, the tank has a volume of at least about 1 gallon to about 200,000 gallons. In certain embodiments, the tank has a volume of at least at least about 1 gallon. In certain embodiments, the tank has a volume of at least at most about 200,000 gallons. In certain embodiments, the tank has a volume of at least about 1 gallon to about 5 gallons, about 1 gallon to about 10 gallons, about 1 gallon to about 25 gallons, about 1 gallon to about 50 gallons, about 1 gallon to about 100 gallons, about 1 gallon to about 250 gallons, about 1 gallon to about 500 gallons, about 1 gallon to about 1,000 gallons, about 1 gallon to about 10,000 gallons, about 1 gallon to about 100,000 gallons, about 1 gallon to about 200,000 gallons, about 5 gallons to about 10 gallons, about 5 gallons to about 25 gallons, about 5 gallons to about 50 gallons, about 5 gallons to about 100 gallons, about 5 gallons to about 250 gallons, about 5 gallons to about 500 gallons, about 5 gallons to about 1,000 gallons, about 5 gallons to about 10,000 gallons, about 5 gallons to about 100,000 gallons, about 5 gallons to about 200,000 gallons, about 10 gallons to about 25 gallons, about 10 gallons to about 50 gallons, about 10 gallons to about 100 gallons, about 10 gallons to about 250 gallons, about 10 gallons to about 500 gallons, about 10 gallons to about 1,000 gallons, about 10 gallons to about 10,000 gallons, about 10 gallons to about 100,000 gallons, about 10 gallons to about 200,000 gallons, about 25 gallons to about 50 gallons, about 25 gallons to about 100 gallons, about 25 gallons to about 250 gallons, about 25 gallons to about 500 gallons, about 25 gallons to about 1,000 gallons, about 25 gallons to about 10,000 gallons, about 25 gallons to about 100,000 gallons, about 25 gallons to about 200,000 gallons, about 50 gallons to about 100 gallons, about 50 gallons to about 250 gallons, about 50 gallons to about 500 gallons, about 50 gallons to about 1,000 gallons, about 50 gallons to about 10,000 gallons, about 50 gallons to about 100,000 gallons, about 50 gallons to about 200,000 gallons, about 100 gallons to about 250 gallons, about 100 gallons to about 500 gallons, about 100 gallons to about 1,000 gallons, about 100 gallons to about 10,000 gallons, about 100 gallons to about 100,000 gallons, about 100 gallons to about 200,000 gallons, about 250 gallons to about 500 gallons, about 250 gallons to about 1,000 gallons, about 250 gallons to about 10,000 gallons, about 250 gallons to about 100,000 gallons, about 250 gallons to about 200,000 gallons, about 500 gallons to about 1,000 gallons, about 500 gallons to about 10,000 gallons, about 500 gallons to about 100,000 gallons, about 500 gallons to about 200,000 gallons, about 1,000 gallons to about 10,000 gallons, about 1,000 gallons to about 100,000 gallons, about 1,000 gallons to about 200,000 gallons, about 10,000 gallons to about 100,000 gallons, about 10,000 gallons to about 200,000 gallons, or about 100,000 gallons to about 200,000 gallons. In certain embodiments, the tank holds or contains a liquid, a solid (e.g., ice), or a combination thereof. In certain embodiments, the tank contains at least about 1 pound (lb), 25 lb, 50 lb, 75 lb, 100 lb, 150 lb, 200 lb, 100 kilograms (kg), 250 kg, 500 kg, 750 kg, 1 tonne (t), 5 t, 10 t, 25 t, 50 t, 100 t, 250 t, 500 t, 750 t, 1 kilo-tonne (kt), 2 kt, 5 kt, 10 kt, 20 kt, 50 kt, 100 kt, 200 kt, 500 kt, 1 megatonne (Mt), 1.5 Mt, 2 Mt, 2.5 Mt, or 3 Mt of solid (e.g., ice) or of a solid-liquid mixture. In an example, the tank has a volume of at least about 100 gallons. In certain embodiments, a 100 gallon tank is less than about 22 inches wide (including a frame) and about 2 feet deep. In certain embodiments, the tank comprises a fluid. In certain embodiments, the fluid comprises a carbonaceous composition. In certain embodiments, the tank holds or contains at least about 100 gallons of a liquid, at least about 150 pounds of ice, or a liquid and/with at least about 150 pounds of ice. In certain embodiments, the liquid comprises water. In certain embodiments, the tank comprises at least one inlet and/or at least one outlet. In certain embodiments, the inlet(s) and outlet(s) comprise male iron pipe size (IPS) threads.

In certain embodiments, the first vessel **101** is in fluid communication with the second vessel **102.** In certain embodiments, the first vessel comprises a valve (e.g., a butterfly valve) **113** that can be opened, closed or adjustably regulated to allow fluid to pass from the first vessel to the second vessel. For example, in certain embodiments, the mixer bowl comprises a butterfly valve mounted substantially flush with the mixer bowl, wherein the mixer (e.g., mixer bowl) is in fluid communication with the tank via the butterfly valve. In certain embodiments, the butterfly valve (or another type of valve with similar functionality) has a protective coating (e.g., a polytetrafluoroethylene (PTFE)-based coating, or a copolymer of ethylene and chlorotrifluoroethylene such as, for example, an ECTFE coating capable of withstanding temperatures up to about 800°F).

In certain embodiments, the second vessel comprises one or more valves (e.g., inlet valve(s) and/or outlet valve(s)). For example, in certain embodiments, the second vessel comprises an outlet used for draining product (e.g., graphite oxide) into another tank for further refinement. In the example in **FIG. 1****,** the second vessel comprises a drain system (or drain area) **117.** The drain system comprises a drain valve **118.**

In certain embodiments, the mixer **103** is mounted to the top of the tank. In certain embodiments, the system (e.g., the mixer) comprises a shaft that mechanically couples the tank agitator **110** to the mixer **103.** In certain embodiments, the shaft comprises a drive shaft. In certain embodiments, the tank agitator is driven with the drive shaft off a front attachment of the mixer. In certain embodiments, the mixer is powered by a power source (e.g., **110** VAC). In certain embodiments, the power source coupled to the mixer powers all components of the system. In certain embodiments, the system comprises a transmission between the mixer and the tank agitator. In certain embodiments, the transmission is configured to stop, start, and/or regulate the tank agitator. In certain embodiments, the mixer and the tank agitator are coupled via one or more gears (e.g., a right angle gear) **114.** In certain embodiments, the mixer and the tank agitator are coupled by a gearbox. Alternatively, in certain embodiments, the system comprises a separate motor configured to stop, start, and/or regulate the tank agitator. In certain embodiments, the separate motor is powered from the same power source as the mixer. In certain embodiments, the separate motor is not powered from the same power source as the mixer (e.g., additional power sources are provided).

In certain embodiments, the tank agitator is driven at a power/frequency of greater than or equal to about 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, 200, 205, 210, 215, 220, 225, 230, 235, 240, 245, or 250 revolutions per minute (rpm). In certain embodiments, the tank agitator is driven at a power/frequency from about 20 rpm to about 300 rpm. In certain embodiments, the tank agitator is driven at a power/frequency from at least about 20 rpm. In certain embodiments, the tank agitator is driven at a power/frequency from at most about 300 rpm. In certain embodiments, the tank agitator is driven at a power/frequency from about 20 rpm to about 60 rpm, about 20 rpm to about 100 rpm, about 20 rpm to about 150 rpm, about 20 rpm to about 200 rpm, about 20 rpm to about 250 rpm, about 20 rpm to about 300 rpm, about 60 rpm to about 100 rpm, about 60 rpm to about 150 rpm, about 60 rpm to about 200 rpm, about 60 rpm to about 250 rpm, about 60 rpm to about 300 rpm, about 100 rpm to about 150 rpm, about 100 rpm to about 200 rpm, about 100 rpm to about 250 rpm, about 100 rpm to about 300 rpm, about 150 rpm to about 200 rpm, about 150 rpm to about 250 rpm, about 150 rpm to about 300 rpm, about 200 rpm to about 250 rpm, about 200 rpm to about 300 rpm, or about 250 rpm to about 300 rpm. In an example, the tank agitator is driven at a power/frequency of at least about 60, 100, or 200 revolutions per minute.

In certain embodiments, mixing (e.g., in the mixer and/or in the tank) is achieved through non-mechanical means (e.g., with gas injection, rotary drums, magnetic stirring rods, or other means). In some embodiments, the system **100** comprises a filter (not shown). For example, in certain embodiments, the tank is coupled (e.g., via a diaphragm pump in fluid communication with the drain valve **118)** to a filter configured to separate or purify one or more components of the tank mixture. In certain embodiments, the filter allows, for example, end product (e.g., an oxidized form of the carbonaceous composition), sediment(s), and/or other components (e.g., water runoff) to be separated. For example, in certain embodiments, leftovers are neutralized in a separate vessel, wherein the filter is configured to hold or contain sediments and/or water runoff. In certain embodiments, the filter removes one or more acids and/or salts to bring the tank mixture (e.g., a tank mixture comprising an oxidized form of a carbonaceous composition such as, for example, an oxidized form of graphite such as GO) to a neutral state and/or reduce the tank mixture. In certain embodiments, the filter includes one or more types of filters (e.g., for removal of acids, removal of salts, reduction, and/or other filtration or treatment purposes). For example, in certain embodiments, the filter (e.g., a filter for the first reaction described in greater detail elsewhere herein) takes out acid(s) and salt(s) to bring the tank mixture to a neutral state and/or reduce the tank mixture using a single filter, or 2 or more different types of filters (e.g., filtering/removal is performed by a first filter, and reduction is performed by a second filter, or both filters perform filtering/removal and reduction to same or different extents).

In certain embodiments, at least a portion of the system **100** is mobile. In certain embodiments, the mixer **103** is coupled to the tank **102,** wherein the tank **102** is configured with casters **116.** In certain embodiments, the mixer is configured on a slide such that it can move with respect to the tank. For example, in certain embodiments, the mixer slides and/or otherwise moves back for ease of cleaning of the tank. In certain embodiments, the mixer bowl is configured to be movable (e.g., slide) together or separately from the rest of the mixer.

In certain embodiments, the mixer bowl, the tank, or both contains a composition of interest (e.g., a carbonaceous composition to be converted to an oxidized form). In certain embodiments, the composition is contained in the mixer bowl, the tank, or both. In some embodiments, the composition is first contained in the mixer bowl and later transferred to the tank. In certain embodiments, the tank contains a reactant, a dilutant, and/or a temperature-regulated bath (e.g., a mixture undergoing phase change at a fixed temperature). In some embodiments, the contents of the mixer bowl and the tank interact (e.g., through heat transfer) but are not combined or mixed. In certain embodiments, the contents of the mixer bowl and the tank, when combined or mixed, react with each other. In certain embodiments, the contents of the mixer bowl and the tank, when combined or mixed, do not react with each other (e.g., the contents mix but do not react). In certain embodiments, the reaction includes, but is not limited to, redox reactions. In certain embodiments, other fluids are introduced in the mixer bowl and/or the tank (e.g., a gaseous reactant is added to the mixer bowl and/or to the tank). In certain embodiments, the system **100** is configured to enable gas-solid, gas-liquid, solid-liquid, gas-gas, liquid-liquid, and/or solid-solid mixing and/or reaction. In certain embodiments, such mixing and/or reaction takes place in the mixer bowl, the tank, the mixer bowl and the tank, and/or by combining the contents of the mixer bowl and the contents of the tank.

In an example, the carbonaceous composition comprises graphite and the oxidized form of the carbonaceous composition comprises graphite oxide or graphene oxide. The contents of the tank are maintained at a temperature of about 0°C and the contents of the mixer bowl are maintained at a temperature of less than about 15 °C. In certain embodiments, the contents of the mixer bowl mix and/or react (e.g., as described elsewhere herein). In certain embodiments, the contents of the tank mix and/or react (e.g., as described elsewhere herein). In certain embodiments, the contents of the mixer bowl and tank mix and/or react with each other (e.g., as described elsewhere herein).

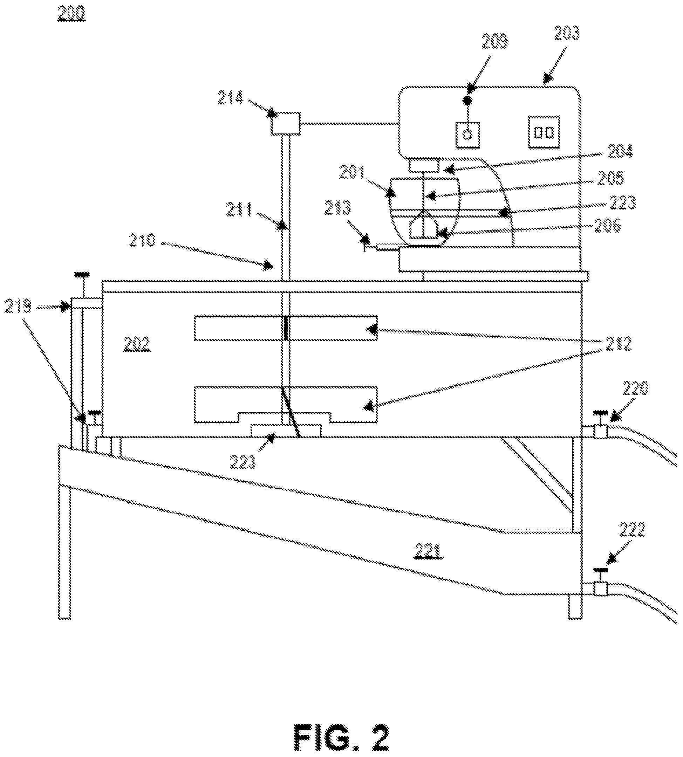

**FIG. 2** is a schematic of another system **200** comprising two vessels. In certain embodiments, the system **200** is used to carry out a first reaction (e.g. oxidizing a carbonaceous composition). In certain embodiments, the system is used to carry out a second reaction (e.g. reducing a carbonaceous composition). In certain embodiments, the system includes a first vessel (e.g., a reaction chamber and/or a mixer bowl) **201** and a second vessel (e.g., a tank) **202.** In certain embodiments, a mixer **203,** operated using controls **209** and comprising a mixer agitator **204** with a shaft **205** and a paddle, blade, or other stirrer **206,** agitates or mixes the contents of the first vessel **201.** In certain embodiments, the mixer is mounted to the tank (e.g., to the top of the tank). In certain embodiments, the mixer bowl **201** is in fluid communication with the tank **202** via a butterfly valve **213** (e.g., in a system with a 100 gallon tank, the mixer bowl includes a 3 inch butterfly valve mounted flush with the bowl). In certain embodiments, the mixer bowl is held in place by a holder, brace, or bracket **223.** In certain embodiments, the mixer comprises a shaft that is coupled to one or more tank agitators (e.g., to 100 gallon tank agitators). In certain embodiments, the mixer is mechanically coupled to a tank agitator **210** via a transmission (e.g., gear or gearbox) **214.** In certain embodiments, the transmission is in line to stop, start, and/or regulate the tank agitator. In certain embodiments, the tank agitator comprises a shaft **211** and one or more agitator blades **212.** In some embodiments, the mixer comprises at least a portion of the shaft **211.** In certain embodiments, the tank agitator is driven off the mixer. In certain embodiments, the tank agitator is driven off the mixer (e.g., off a front attachment of the mixer) with the drive shaft. In certain embodiments, the tank agitator (e.g., a tank agitator of a 100 gallon tank) comprises, for example, 2 rows of 4 blades with at least about ½ inch clearance from all sides and bottom of the tank **202.** In certain embodiments, the top blades of the tank agitator are at least about 6 inches from the top of the tank and at least about ½ inch from the sides of the tank. In certain embodiments, a stabilizer bracket **223** installed in the bottom of the tank is configured to mechanically support or stabilize the tank agitator.

In certain embodiments, the tank **202** comprises one or more outlets (e.g., water outlets) **219.** In certain embodiments, an outlet (e.g., drain) **219** (e.g., a single outlet in some embodiments) drains the tank (e.g., drain the tank mixture and/or water from the tank). In certain embodiments, the outlet **219** drains into a filter or filter system **221.** In some embodiments, the tank comprises two outlets (e.g., a 100 gallon tank may comprise two 1.5 inch outlets): a first outlet at the top and a second outlet at the bottom in a center end of the tank. In certain embodiments, the first (top) outlet is within about 1 inch of the top of the tank, wherein the second (bottom) outlet is substantially flush with the bottom of the tank. In certain embodiments, the tank **202** comprises one or more inlets (e.g., water inlets) **220.** In certain embodiments, an inlet **220** fills or adds contents to the tank. In some embodiments, the tank comprises two inlets (e.g., a 100 gallon tank comprising two 1 inch inlets): a first inlet at the top of the tank (not shown) and a second inlet at the bottom left edge of the back of the tank. In certain embodiments, such inlet(s) and/or outlet(s) comprise valve(s). For example, in certain embodiments, an outlet **219** comprises a drain valve. In some embodiments, one or more inlets and/or outlets are not used or included (e.g., see **FIG. 1****).** For example, in certain embodiments, a top drain hole is not needed, and only a bottom drain hole is provided, and/or an inlet is not provided.

In certain embodiments, the tank comprises (or is coupled to) a filter or filter system **221.** In certain embodiments, the filter system (e.g., a filter system of/coupled to a 100 gallon tank) is (or comprises a filter body having dimensions of) about 16 inches wide by about 8 inches tall on the short side and about 14 inches tall on the tall side. In certain embodiments, the filter system comprises a filter tank. In certain embodiments, the filter system comprises an outlet. In certain embodiments, the outlet of the filter comprises a valve **222.** In certain embodiments, the outlet (e.g., in a filter system of/coupled to a 100 gallon tank, a 2 inch outlet) is at least partially or substantially flush (e.g., as flush as possible) with the bottom of the filter tank. In certain embodiments, the filter system is configured to hold or contain a given amount of sediments and/or runoff (e.g., at least about 13 gallons, 20 gallons, 30 gallons, 35 gallons, 50 gallons, 100 gallons, 150 gallons, 200 gallons, 250 gallons, 300 gallons, 350 gallons, 400 gallons, 450 gallons, 500 gallons, 550 gallons, 600 gallons, 700 gallons, 800 gallons, 900 gallons, 1,000 gallons, 2,000 gallons, 3,000 gallons, 4,000 gallons, 5,000 gallons, 10,000 gallons, 50,000 gallons, 100,000 gallons, 250,000 gallons, 500,000 gallons, 750,000 gallons, 1 million gallons, or 1.5 million gallons of sediments and/or runoff depending on system size). For example, in certain embodiments, a filter system of/coupled to a 100 gallon tank is configured to hold or contain at least about 13 gallons of sediments, at least about 13 gallons of sediments and water runoff, at least about 20 gallons of sediments and water runoff, at least about 20 gallons total, at least about 25 gallons of sediments and water runoff, at least about 25 gallons total, at least about 30 gallons of sediments and water runoff, at least about 30 gallons total, at least about 35 gallons of sediments and water runoff, at least about 35 gallons total, between about 25 gallons and 30 gallons of sediments and water runoff (e.g., for single-layer GO), between about 25 gallons and 30 gallons total (e.g., for single-layer GO), from about 30 gallons to 35 gallons of sediments and water runoff (e.g., for multi-layer GO), from about 30 gallons to 35 gallons total (e.g., for multi-layer GO), from about 20 gallons to 35 gallons of sediments and water runoff, and/or from about 20 gallons to 35 gallons total. In some embodiments, the filter comprises baffles (not shown) distributed below the top of the sides of the filter tank (e.g., in a filter system of/coupled to a 100 gallon tank, by about 1 inch). In certain embodiments, the baffles are distributed in, across, and/or along the filter tank or filter system (e.g., in a filter system of/coupled to a 100 gallon tank, baffles may be provided at least every 10 inches). In certain embodiments, the baffles comprises at least 1, 2, 3, 4, 6, 8, 10, or more (e.g., at least 3) channels to slide filters into. In certain embodiments, the baffles (e.g., 1 micron screen baffles) comprises vanes or panels configured to direct and/or obstruct flow of fluid (e.g., a solid-liquid mixture) in the filter. In certain embodiments, the baffles have a given orientation with respect to the filter (e.g., the baffles having a perpendicular or other orientation with respect to one or more sides or surfaces of the filter body). In certain embodiments, the filter system is configured to accept individual filter(s) having a rectangle frame with filter material media wrapped around the rectangle frame. In certain embodiments, an individual filter is inserted in a frame channel wide enough to fit the frame and the filter (e.g., frame channels are wide enough to fit frames and filters). In certain embodiments, the individual filter(s) and/or the filter system (e.g., dimensions of filter body) are configured to increase or maximize surface area. In some embodiments, the filter does not contain any baffles (e.g., see **FIG. 1****).**

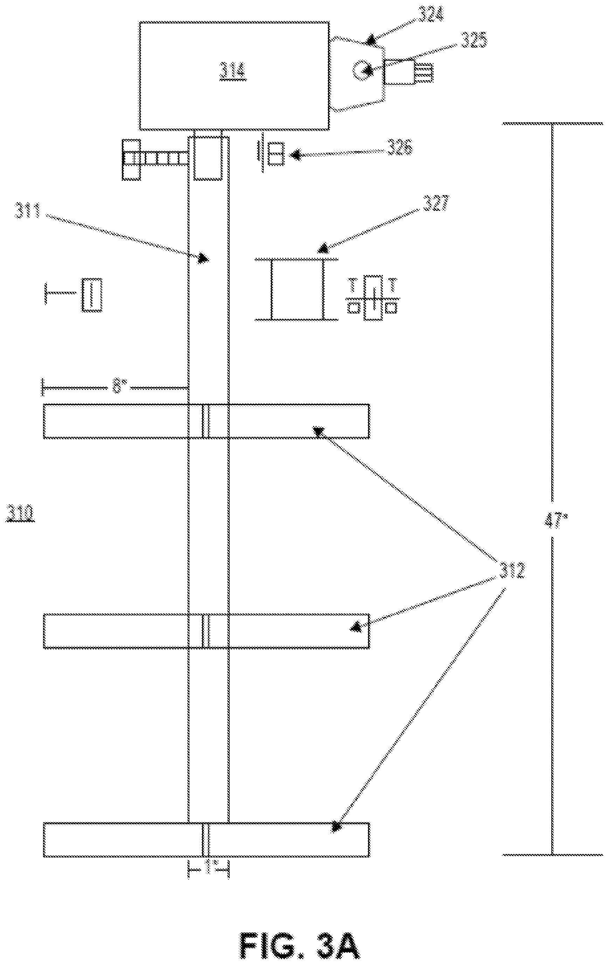

**FIGS. 3A-3B** show schematics of a tank agitator **310** (e.g., the tank agitator **112** in **FIG. 1****)** and related components. In certain embodiments, the tank agitator **310** in **FIG. 3A** comprises a right angle gear box **314.** In certain embodiments, the gear box is epoxy-coated (or comprises another type of protective coating). In certain embodiments, the gear box **314** further comprises (or is coupled to) an angle cone **324** with an alignment hole **325.** A connecting bolt (e.g., a stainless steel (SS) connecting bolt) **326** couples the gear box to a shaft **311** of the tank agitator. In certain embodiments, the agitator **310** comprises agitator blades **312.** In certain embodiments, the shaft **311,** blades **312** and/or other portions of the tank agitator **310** have a protective coating). In an example, in certain embodiments, in a tank that comprises a 100 gallon ice bath (comprising, for example, at least about 150 pounds of ice), the tank agitator extends about 47 inches from the gear box **314** and have a shaft diameter of about 1 inch. In certain embodiments, the agitator blades **312** are coupled (e.g., welded) to the shaft. In certain embodiments, one or more bushings (e.g., nylon bushings) **327** hold the shaft to at least a portion of the tank (e.g., to the lower tank). In certain embodiments, the shaft from the mixer is held stable inside the tank with the aid of the one or more bushings (e.g., the bushings support the shaft to a side of the tank).

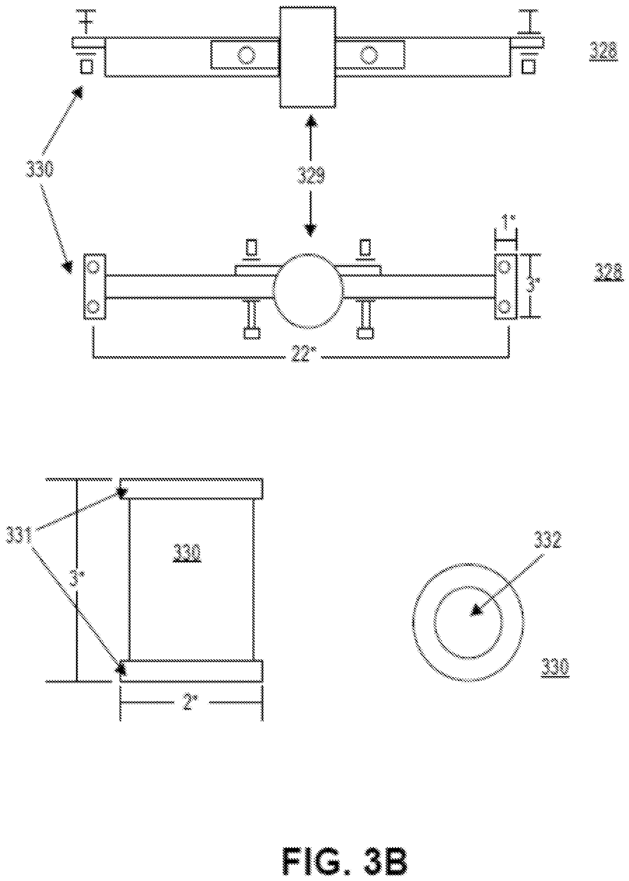

In certain embodiments, the tank agitator **310** is coupled to the tank (e.g., the tank **102** in **FIG. 1****)** using one or more fastening members **328.** In certain embodiments, a fastening member **328** comprises a bushing bracket **329** and one or more tank mounts **330.** A side view of the fastening member **328** (top) and a top view of the fastening member **328** (middle) are shown in **FIG. 3B****.** In certain embodiments, a bushing **330** is coupled to the bushing bracket **329.** In certain embodiments, the bushing comprises top and bottom flanges **331.** A side view of the bushing **330** (bottom left) and a top view of the bushing **330** (bottom right) are shown in **FIG. 3B****.** In an example, in certain embodiments, in a tank that comprises a 100 gallon ice bath (comprising, for example, at least about 150 pounds of ice), the fastening member has a length of about 22 inches and the tank mounts are 3 inches wide. In certain embodiments, the bushing **330** is about 3 inches tall and has a diameter of about 2 inches. In certain embodiments, the bushing comprises a shaft hole **332** with a diameter of about 2.5 inches. In certain embodiments, the bushing bracket **329** and/or other components of the fastening member **328** comprise a protective coating (e.g. ECTFE, a copolymer of ethylene and chlorotrifluoroethylene).

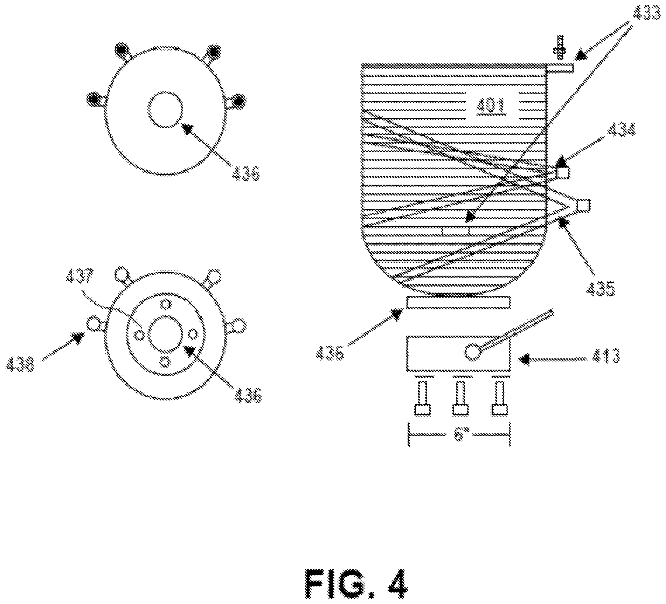

**FIG. 4** shows schematics of a mixer bowl **401** (e.g., the mixer bowl **101** in **FIG. 1****)** and related components. The mixer bowl comprises a reaction chamber. In certain embodiments, one or more components (e.g., all parts) in **FIG. 4** comprise a protective coating). In certain embodiments, the coating protects the components from sulfuric acid fumes present in and around the mixing bowl. An exploded side view of the mixer bowl **401** and a valve (e.g., a butterfly valve) **413** coupled to the mixer bowl are shown on the right in **FIG. 4****.** In certain embodiments, the mixer bowl is coupled to a flange **436.** In certain embodiments, the flange **436** is coupled to the butterfly valve **413.** In certain embodiments, the mixer bowl is mounted to a mixer or another fixture using mixer bowl mounting brackets **433.** In certain embodiments, the mixer bowl is temperature-regulated. For example, in certain embodiments, the mixer bowl is cooled or otherwise regulated by one or more cooling tubes or coils, such as, for example, a first cooling tube **434** and a second cooling tube **435.** In certain embodiments, the cooling tubes or coils are copper cooling tubes or coils, or are made of another material suitable for transferring heat. In certain embodiments, a heat transfer or cooling fluid is circulated in the cooling tubes. In some embodiments, different parts of the mixer bowl are cooled by different cooling tubes. For example, in certain embodiments, the top and bottom of the mixer bowl are cooled independently. In certain embodiments, the cooling tubes are provided, for example, on the outside of the mixer bowl. In certain embodiments, other forms of temperature regulation, including, for example, convection heating or cooling are implemented in addition to or instead of cooling tubes.

With continued reference to **FIG. 4****,** top and bottom views of the flange **436** are shown on the top left and bottom left, respectively. In certain embodiments, chamber mounts **438** are used to fasten the mixer bowl to the flange (and/or to a fixture such as the mixer). In certain embodiments, bolt holes **437** are used to fasten the flange to the mixer and/or to another fixture.

In an example, the mixer bowl **401** comprises a 20 quart (5 gallon) reaction chamber. The mixer bowl is in fluid communication with a 2½ inch butterfly valve **413** having a diameter (or width) of about 6 inches. At least about 95 feet of 3/8 inch copper cooling tube is wound around the mixing bowl (e.g., split into two or more sections **434, 435).** The flange **436** is affixed by bolts through ½ inch bolt holes **437.** In certain embodiments, such a mixer bowl and reaction chamber is used in a system comprising a tank that comprises a 100 gallon ice bath (comprising, for example, at least about 150 pounds of ice).

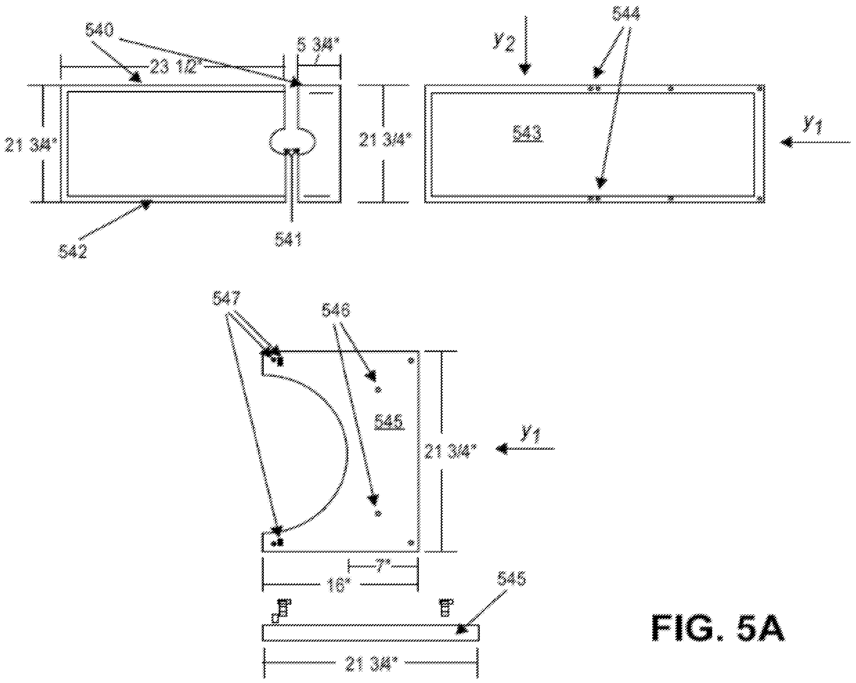

**FIGS. 5A-5B** show schematics of a tank **502** (e.g., the tank **102** in **FIG. 1****)** and related components. In certain embodiments, the tank comprises a top (e.g., a Plexiglas top) **540** (top left in **FIG. 5A****).** In certain embodiments, the Plexiglas top comprises one or more parts. In certain embodiments, ice auger shaft holes **541** are provided (e.g., between two separate parts). In certain embodiments, magnetic strips **542** are coupled to the Plexiglas top (e.g., for easy closure of the tank). In certain embodiments, the tank further comprises a bottom **543** (top right in **FIG. 5A****).** In certain embodiments, the bottom is formed, for example, of metal or another suitable material. In certain embodiments, the bottom comprises ice auger bracket mounts **544.** In certain embodiments, the tank further comprises a mixer mounting plate **545** (top and side views shown at bottom in **FIG. 5A****).** In certain embodiments, the mixer mounting plate is placed at the top of the tank. In certain embodiments, the mixer mounting plate comprises mixer bolt holes **546** to which a mixer is affixed. In certain embodiments, mixer cleats **547** are used to keep the mixer from moving along with the bolts.

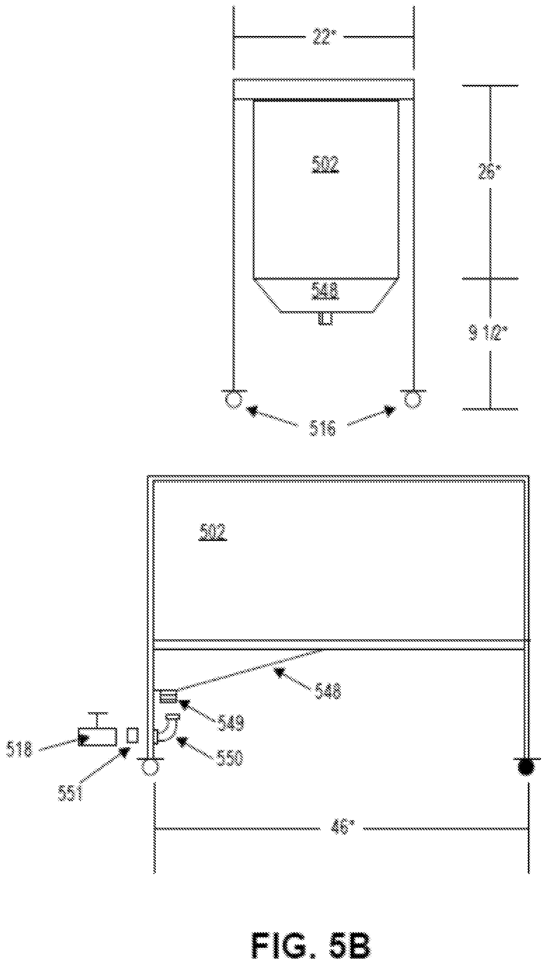

**FIG. 5B** shows side views of the tank **502** along direction ***y₁*** (top) and ***y₂*** (bottom). In certain embodiments, the tank is positioned on casters **516.** In certain embodiments, the tank comprises a drain area **548.** In certain embodiments, the tank drains via a fitting **549** connected to a 90° fip **550.** In certain embodiments, the 90° fip **550** connects to a drain valve (e.g., an acid-proof ball valve) **518** via a nipple **551.**

In an example, a 100 gallon tank **502** (e.g., a 100 gallon ice tank containing a 100 gallon ice bath comprising, for example, at least about 150 pounds of ice) comprises a Plexiglas top **540.** In certain embodiments, the Plexiglas top **540** comprises a first portion with a width of about 21¾ inches and a length of about 23½ inches, and a second portion with a width of about 21¾ inches and a length of about 5¾ inches (top left in **FIG. 5A****).** In certain embodiments, the tank further comprises a bottom **543** having a width of about 21¾ inches and a length of about 46 inches (top right in **FIG. 5A****).** In certain embodiments, the mixer mounting plate **545** has a width of about 21¾ inches and a length of about 16 inches with a cutout extending about 9 inches into the plate (bottom in **FIG. 5A****).** In certain embodiments, the tank is about 22 inches wide (top in **FIG. 5B****)** and about 46 inches long (bottom in **FIG. 5B****).** In certain embodiments, the tank is about 26 inches deep. In certain embodiments, the bottom of the tank is about 9½ inches above ground. In certain embodiments, the tank is drained via a 1½ inch mip fitting **549** connected to a 1½ inch 90° fip **550,** a 1½x close nipple **551,** and a drain valve **518.**

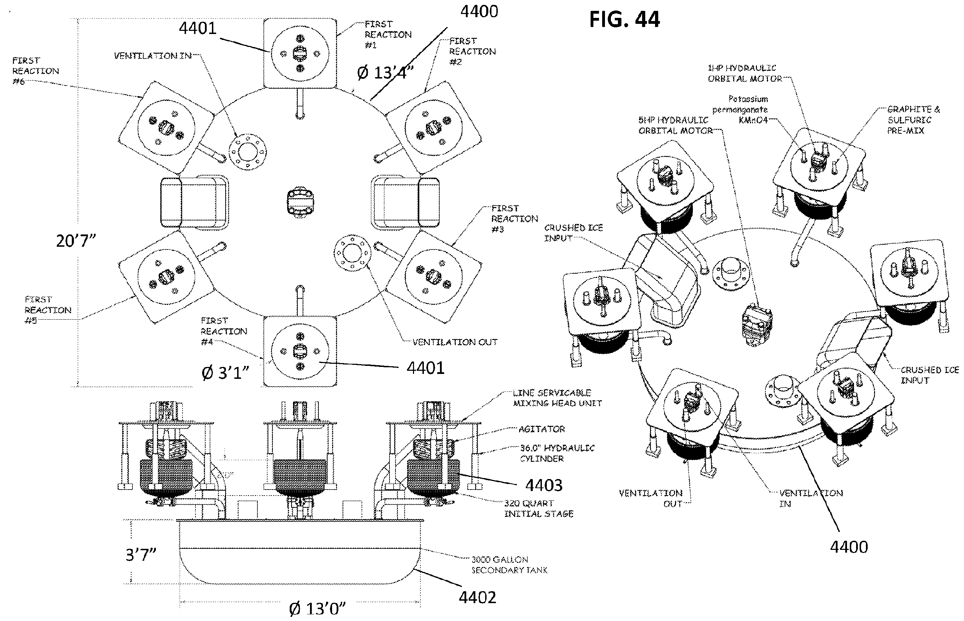

In certain embodiments, a system for carrying out a reaction (e.g., a first reaction system or apparatus) comprises one or more subsystems or portions. In some embodiments, a first reaction system (e.g., a system for oxidizing a carbonaceous composition such as, for example, a graphite feedstock) comprises a scalable reactor as shown in **FIG. 44****.** In certain embodiments, each such subsystem or portion comprises one or more components such as mixers, agitators, vessels, cooling systems, or other components (e.g., as described in **FIGS. 1-3****).** In certain embodiments, a first reaction system comprises any component(s) of such subsystems or portions. In certain embodiments, such component(s) are organized in the aforementioned subsystems or portions. In certain embodiments, such component(s) are not organized in the aforementioned subsystems or portions. Further, in certain embodiments, any components of a given subsystem or portion are provided as part of a different subsystem or portion (e.g., the components of the aforementioned subsystems or portions are reorganized in different subsystems or portions), substituted, or omitted. Examples of subsystems/portions, components, and quantities of components are provided in TABLE 1. In certain embodiments, such component(s) are organized in the aforementioned subsystems or portions. Aspects of the disclosure described in relation to a first reaction system equally apply to a second reaction system or other system(s) herein at least in some configurations. In view of the present disclosure, a person of skill in the art will appreciate that certain materials useful for construction and fabrication for the devices and systems described herein can be obtained from commercial sources.

**TABLE 1**

| EXAMPLE QTY | PART NUMBER | DESCRIPTION |
|---|---|---|
| FIRST REACTION SYSTEM OR APPARATUS (e.g., see **FIG. 44****)** | | |
| 8 | GFRC-0001 | Lift carriage skid plate (see, e.g., **FIG. 48****)** |
| 1 | GFRC-0002 | Bowl lift lock spacer (see, e.g., **FIG. 49****)** |
| 1 | GFRC-0004 | Lift motor mount plate (see, e.g., **FIG. 50****)** |
| 1 | GFRC-0005 | Lift elbow spacer plate (see, e.g., **FIG. 51****)** |
| 1 | GFRC-0006 | Mixer sensor bracket (see, e.g., **FIG. 52****)** |
| 1 | GFRC-0008 | Tank motor mount (see, e.g., **FIG. 53****)** |
| 1 | GFRC-0009 | Mixer torque bracket (see, e.g., **FIG. 54****)** |
| 1 | GFRC-0010 | Mixer spray bar (see, e.g., **FIG. 55****)** |
| 1 | GFRC-0011 | Tank mixer shaft (see, e.g., **FIG. 56****)** |
| 1 | GFRC-0012 | Tank mixer blade (see, e.g., **FIG. 57****)** |
| 1 | GFRC-0013 | Bowl mount plate (see, e.g., **FIG. 58****)** |
| 1 | GFRC-0014 | Carriage switch mount plate (see, e.g., **FIG. 59****)** |
| 1 | GFRC-0016 | First reaction mixer blade (see, e.g., **FIG. 60****)** |
| 1 | GFRC-0017 | First reaction scraper blade mount (see, e.g., **FIG. 61****)** |
| 1 | GFRC-0018 | First reaction scraper blade shaft (see, e.g., **FIG. 62****)** |
| 1 | GFRC-0019 | First reaction scraper blade holder (see, e.g., **FIG. 63****)** |
| 1 | GFRC-0020 | First reaction paddle shaft (see, e.g., **FIG. 64****)** |
| 1 | GFRC-0021 | First reaction paddle cap (see, e.g., **FIG. 65****)** |
| 1 | GFRC-0022 | First reaction mixer drive shaft (see, e.g., **FIG. 66****)** |
| 1 | GFRC-0024 | First reaction paddle stop (see, e.g., **FIG. 67****)** |
| 1 | GFRC-0101 | First reaction frame weldment (see, e.g., **FIGS. 68A-68B****)** |
| 2 | GFRC-0102 | Lift carriage weldment (see, e.g., **FIGS. 69A-69B****)** |
| 2 | GFRC-0103 | Lift carriage brace (see, e.g., **FIG. 70****)** |
| 1 | GFRC-0104 | Lift carriage (see, e.g., FIG. **71****)** |
| 1 | GFRC-0105 | First reaction top plate (see, e.g., **FIG. 72****)** |
| 1 | GFRC-0108 | Mixer motor mount (see, e.g., **FIG. 73****)** |
| 1 | GFRC-0109 | 1000 gallon tank mixer paddle (see, e.g., **FIG. 74****)** |
| 1 | GFRC-0110 | 150 gallon tank mixer paddle (see, e.g., **FIG. 75****)** |
| 1 | GFRC-0111 | First reaction frame shelf (see, e.g., **FIGS. 76A, 76B****,** and **76C****)** |
| 1 | GFRC-0112 | First reaction paddle assembly (see, e.g., **FIGS. 77A-77B****)** |

| GFRC-0101 First reaction frame weldment | | |
|---|---|---|
| 1 | N412161606SSC | Enclosure, stainless steel 6811 |
| 1 | 32.00 inches | 304 stainless steel tube 4.00 x 4.00 x 0.13 **6810** |
| 4 | | 304 stainless steel sheet **6809** |
| 2 | | 304 stainless steel sheet **6808** |
| 2 | 28.00 inches | 304 stainless steel tube 2.00 x 2.00 x 0.13 **6807** |
| 3 | 32.00 inches | 304 stainless steel tube 4.00 x 2.00 x 0.13 **6806** |
| 2 | 39.00 inches | 304 stainless steel tube 2.00 x 2.00 x 0.13 **6805** |
| 2 | 36.00 inches | 304 stainless steel tube 2.00 x 2.00 x 0.13 **6804** |
| 2 | 38.00 inches | 304 stainless steel tube 2.00 x 2.00 x 0.13 **6803** |
| 2 | 31.00 inches | 304 stainless steel tube 2.00 x 4.00 x 0.13 **6802** |
| 4 | 108.00 inches | 304 stainless steel tube 2.00 x 4.00 x 0.13 **6801** |

| GFRC-0104 Lift carriage | | |
|---|---|---|
| 8 | 93190A624 | Hex head cap screw **7114** |
| 24 | 90107A029 | Flat washer **7113** |
| 24 | 90107A033 | Flat washer ½" **7112** |
| 8 | 90107A127 | Flat washer **7111** |
| 24 | 90715A125 | Locknut **7110** |
| 12 | 90715A126 | Locknut **7109** |

| EXAMPLE QTY | PART NUMBER | DESCRIPTION |
|---|---|---|
| 24 | 91771A543 | Phillips machine screw **7108** |
| 12 | 92198A729 | Hex head cap screw **7107** |
| 8 | 60885K980 | Neoprene roller **7106** |
| 16 | 92320A275 | Unthreaded spacer **7105** |
| 8 | GFRC-0001 | Lift carriage skid plate **7104** |
| 4 | GFRC-0002-2 | Spacer **7103** |
| 2 | GFRC-0102 | Lift carriage weldment **7102** |
| 2 | GFRC-0103 | Lift carriage brace **7101** |

| GFRC-0105 First reaction top plate | | |
|---|---|---|
| 2 | 93190A540 | ¼"-20 thread, ¾" long, fully threaded **7207** |
| 2 | 51205K321 | ½ female x ½ male pipe size, adapter **7206** |
| 1 | 51205K311 | ¼ female x ¼ male pipe size, adapter **7205** |
| 2 | 93190A718 | ½"-13 thread, 1-3/4" long, fully threaded **7204** |
| 2 | 4464K363 | SS coupling, 4" NPT **7203** |
| 4 | 4464K358 | SS coupling, 1-1/2" NPT **7202** |

| GFRC-0108 Mixer motor mount | | |
|---|---|---|
| 8 | 10.0 x 10.0 right triangle gusset | Mild steel plate 0.25 **7308** |
| 1 | CNC Cut | GFRC-0008-1 **7307** |
| 1 | CNC Cut | GFRC-0008-1 **7306** |
| 4 | Angle (3.00 inch length) | Mild steel angle 3.00 x 3.00 x 0.25 inches **7305** |
| 4 | 45 degree cut one end (18.00 inch length) | Mild steel tube 2.00 x 2.00 x 0.13 inches **7304** |
| 4 | 45 degree cut one end (20.00 inch length) | Mild steel tube 2.00 x 2.00 x 0.13 inches **7303** |
| 4 | 45 degree cut one end (24.00 inch length) | Mild steel tube 2.00 x 2.00 x 0.13 inches **7302** |
| 4 | 45 degree cut one end (43.13 inch length) | Mild steel tube 2.00 x 2.00 x 0.13 inches **7301** |

| GFRC-0109 tank mixer paddle | | |
|---|---|---|
| 2 | GFRC-0012-2 | 1000 gallon tank mixer blade **7403** |
| 1 | GFRC-0012-1 | 1000 gallon tank mixer stiffener **7402** |
| 1 | GFRC-0011 | 1000 gallon tank mixer shaft **7401** |

| GFRC-0111 First reaction frame shelf | | |
|---|---|---|
| 2 | 3.81 x 1.81 inches | 304 SS plate, ¼" thick **7608** (not shown) |
| 1 | 71.38 x 38.5 inches | 304 SS plate, 1/8" thick **7607** |
| 2 | 108.31 inches | 304 stainless steel tube 2.00 x 4.00 x 0.13 **7606** |
| 6 | 16.00 inches | 304 stainless steel tube 2.00 x 2.00 x 0.13 **7605** |
| 1 | 68.00 inches | 304 stainless steel tube 2.00 x 2.00 x 0.13 **7604** |
| 2 | 26.00 inches | 304 stainless steel tube 2.00 x 2.00 x 0.13 **7603** |
| 2 | 39.00 inches | 304 stainless steel tube 2.00 x 2.00 x 0.13 **7602** |
| 2 | 72.00 inches | 304 stainless steel tube 2.00 x 2.00 x 0.13 **7601** |

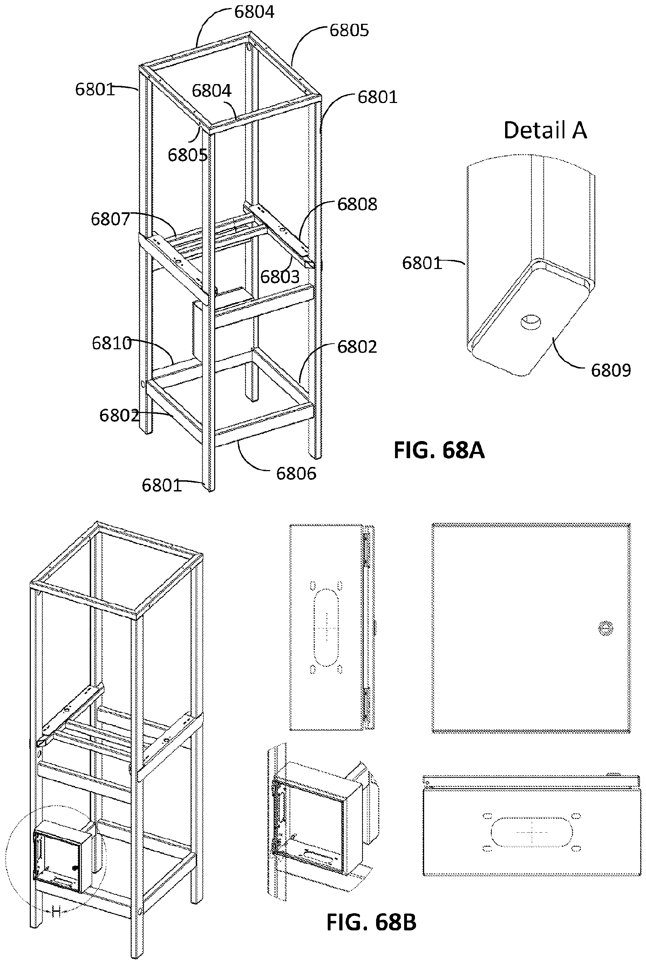

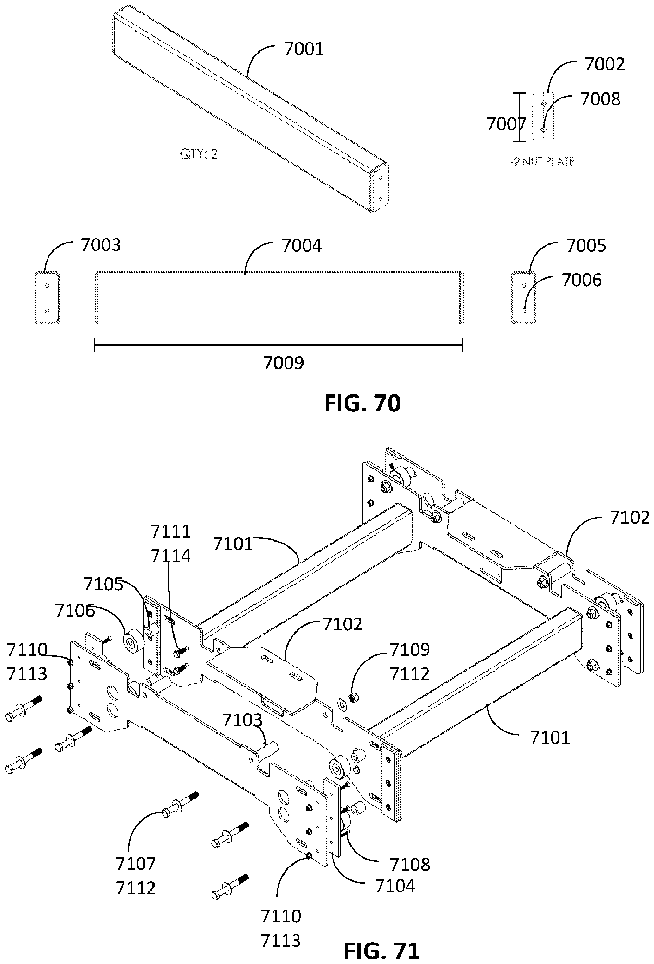

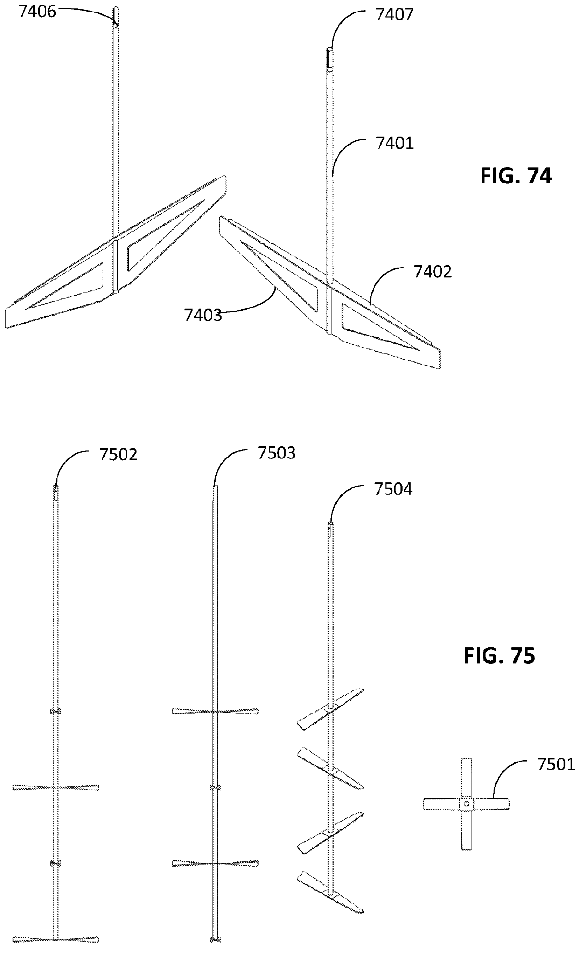

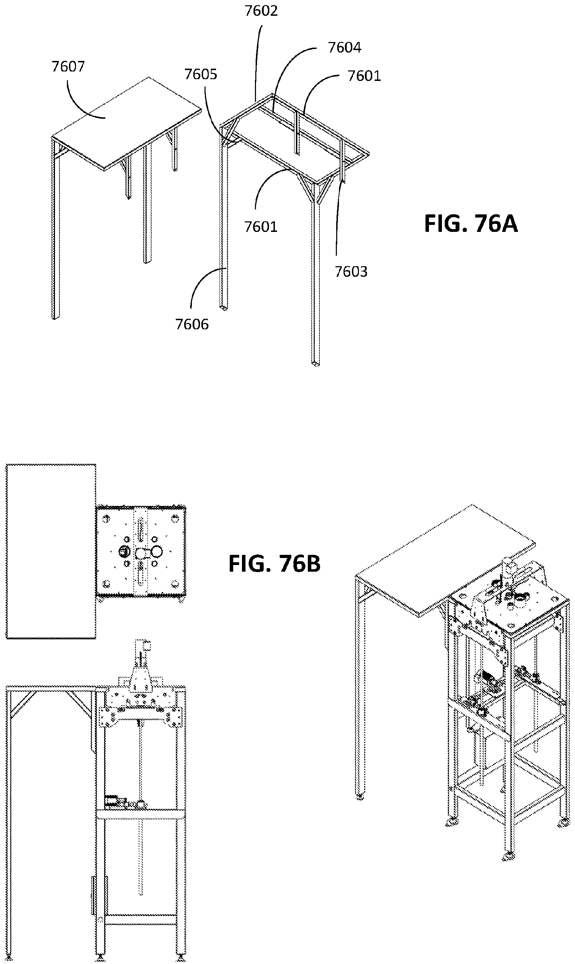

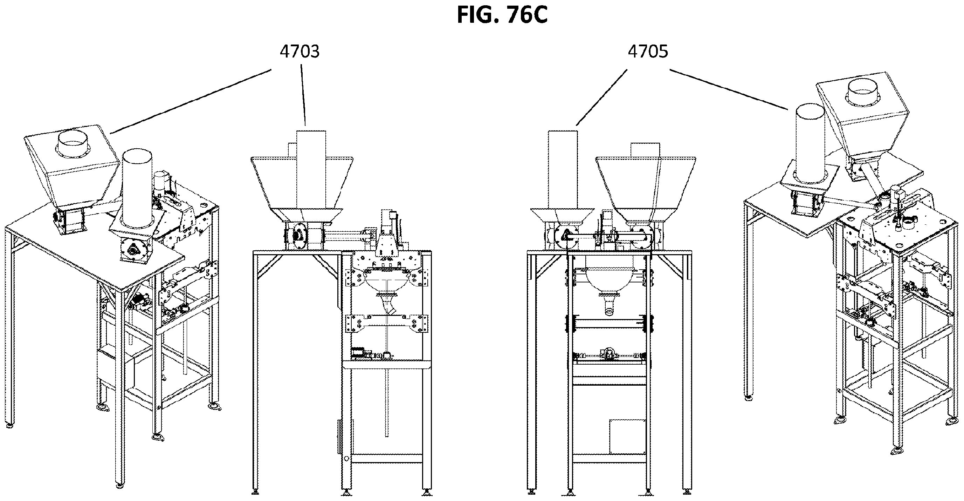

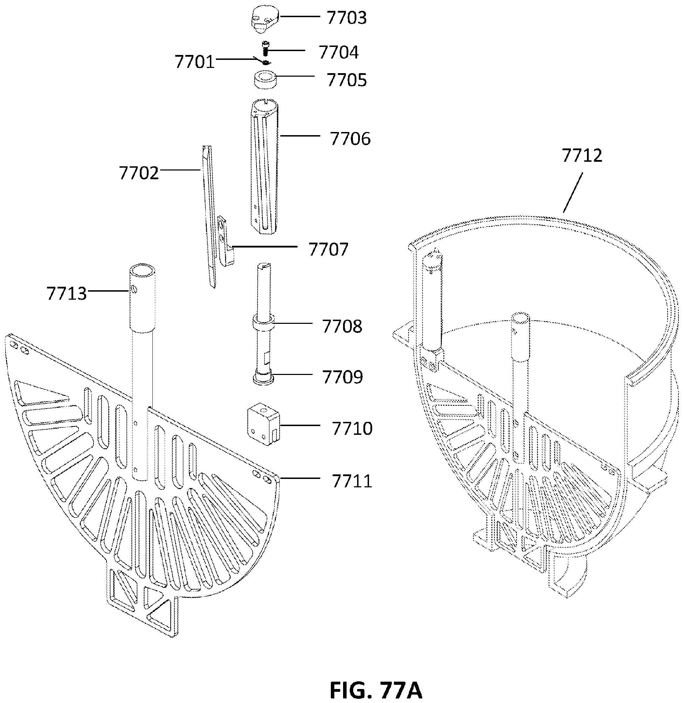

In certain embodiments, a reaction system (e.g., a first reaction system such as, for example, the scalable reactor shown in **FIG. 44****)** comprises one or more elements of a lift carriage **(****FIG. 71****),** a first reaction frame weldment **(****FIGS. 68A-68B****),** a tank mixer paddle **(****FIG. 74****),** a first reaction frame shelf **(****FIGS. 76A-76B****),** an ice auger feed and potassium permanganate auger feed **(****FIG. 76C****),** and a first reaction paddle assembly **(****FIGS. 77A-77B****).**

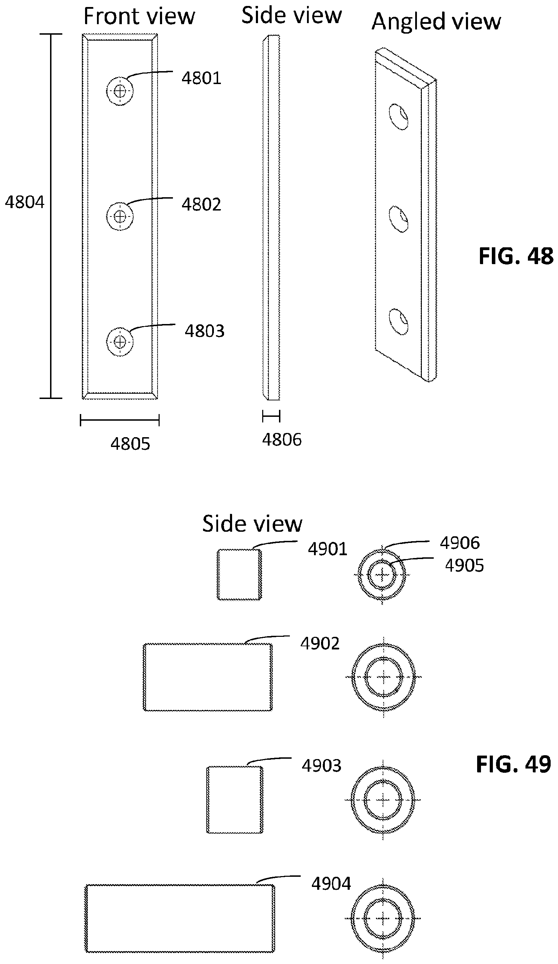

In certain embodiments, a lift carriage comprises one or more of elements of a lift carriage brace **7101,** a lift carriage weldment **7102,** a spacer **7103,** a lift carriage skid plate **7104,** an unthreaded spacer **7105,** a neoprene roller **7106,** hex head cap screws **7107** and **7114,** a Phillips machine screw **7108,** locknuts **7109** and **7110,** and flat washers **7111, 7112,** and **7113.** A lift carriage skid plate **7104** is shown in **FIG. 48****.** In certain embodiments, the lift carriage skid plate has a height **4804,** a width **4805,** and a depth **4806.** In one embodiment, the lift carriage skid plate has a height **4804** of about 8.00 inches, a width **4805** of about 1.75 inches, and a depth **4806** is about 0.375 inches. In certain embodiments, lift carriage skid plate comprises one or more apertures. For example, in certain embodiments, the lift carriage skid plate comprises a first aperture **4801,** a second aperture **4802,** and a third aperture **4803.** In certain embodiments, an aperture has a circular shape. Examples of sizes, dimensions and/or installation of such elements of the lift carriage skid plate are shown in **FIG. 48****.** In certain embodiments, other suitable elements and/or materials of different sizes and/or dimensions are used.

In certain embodiments, a first reaction frame weldment comprises a stainless steel enclosure **6811,** stainless steel sheets **6808** and **6809,** and stainless steel tubes **6801, 6802, 6803, 6804, 6805, 6806, 6807,** and **6810.** Examples of sizes, dimensions and/or installation of such elements of the first reaction frame weldment are shown in **FIGS. 68A-68B****.** In certain embodiments, other suitable elements and/or materials of different sizes and/or dimensions are used.

In certain embodiments, a tank mixer paddle comprises one or more elements of a mixer shaft **7401,** a tank mixer stiffener **7402,** and a tank mixer blade **7403.** In certain embodiments, tank mixer paddle is part of a mixer or mixer system. In certain embodiments, tank mixer paddle comprises elements made of stainless steel. Examples of sizes, dimensions and/or installation of such elements of the tank mixer paddle are shown in **FIG. 74****.** In certain embodiments, other suitable elements and/or materials of different sizes and/or dimensions are used.

In certain embodiments, a first reaction frame shelf comprises stainless steel plates **7607** and **7608** (not shown), and stainless steel tubes **7601, 7602, 7603, 7604, 7605,** and **7606.** In certain embodiments, first reaction frame shelf comprises elements made of stainless steel. Examples of sizes, dimensions and/or installation of such elements of the first reaction frame shelf are shown in **FIGS. 76A-76B** and TABLE 1. In some embodiments, the first reaction frame shelf is used in combination with an ice auger feed and/or a potassium permanganate auger feed **(****FIG. 76C****).** In certain embodiments, other suitable elements and/or materials of different sizes and/or dimensions are used.

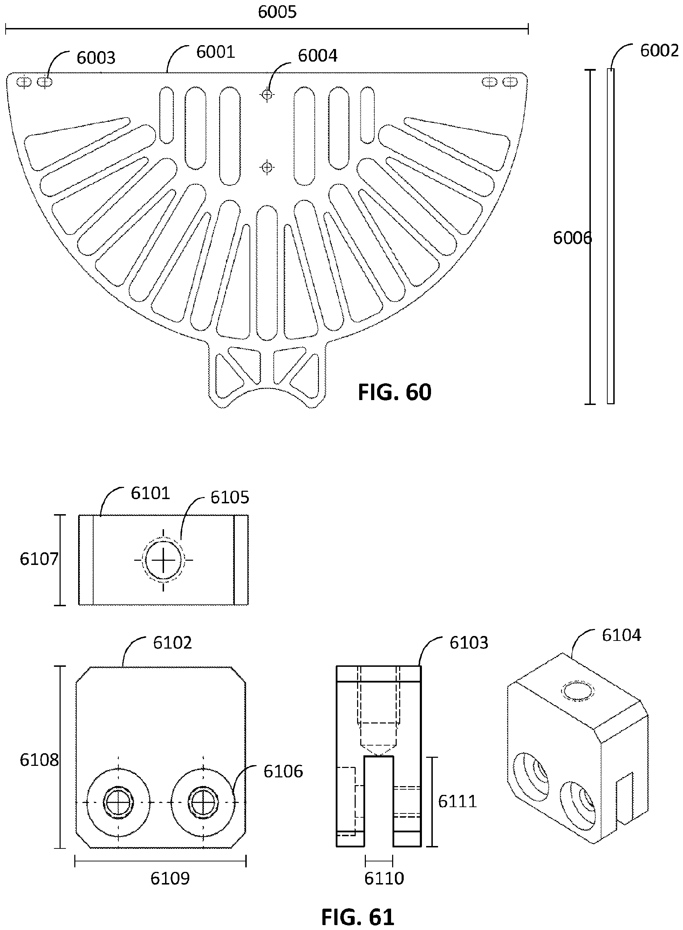

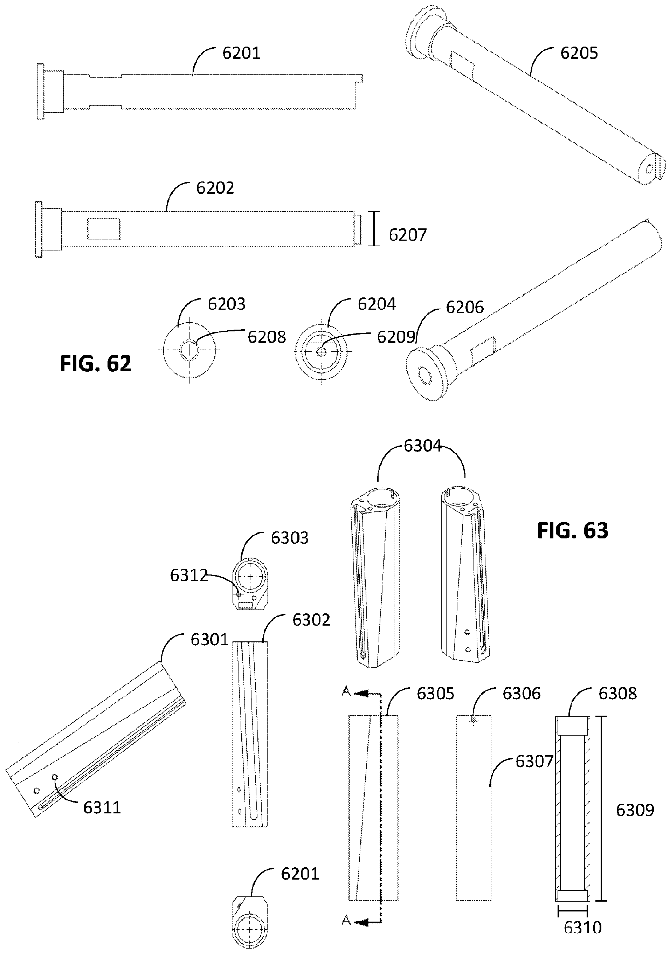

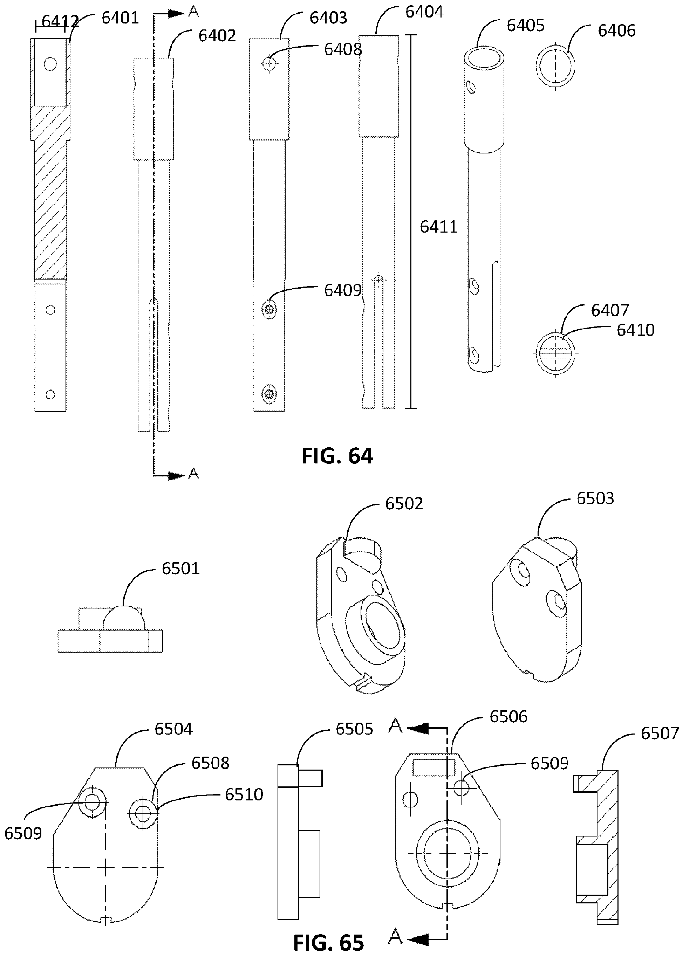

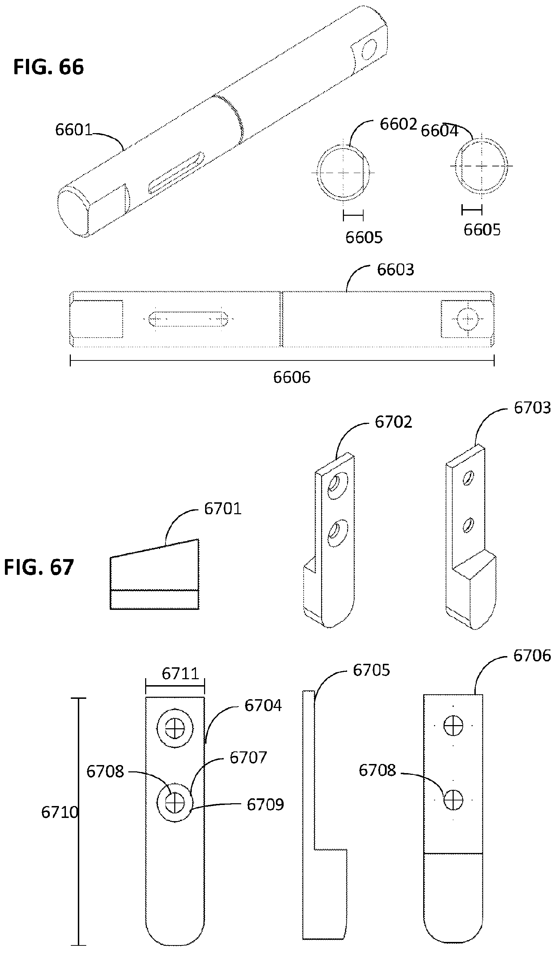

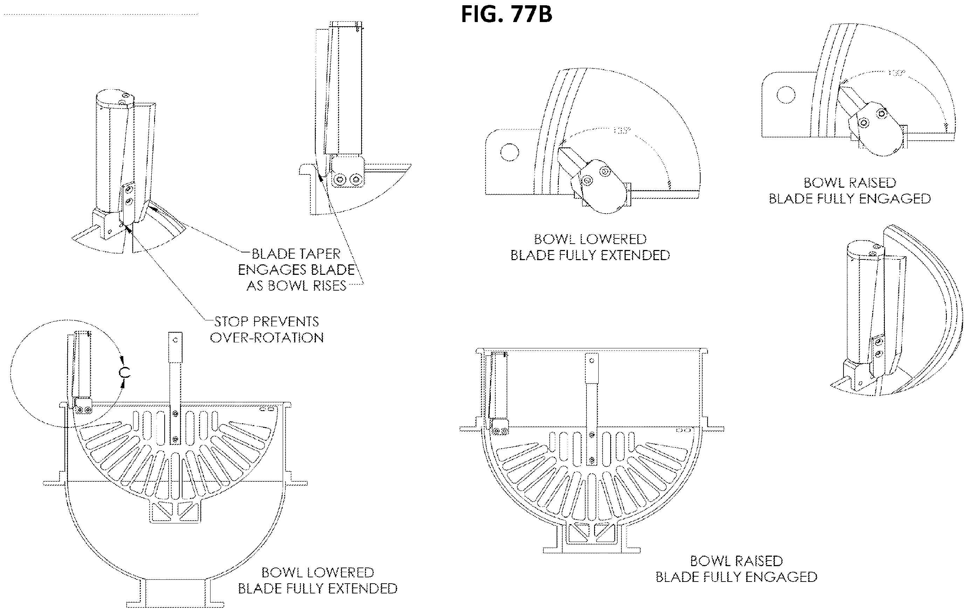

In certain embodiments, a first reaction paddle assembly comprises one or more elements of a first reaction mixer blade **7711** (see, e.g., **FIG. 60****),** a first reaction scraper blade mount **7710** (see, e.g., **FIG. 61****),** a first reaction scraper blade shaft **7709** (see, e.g., **FIG. 62****),** a first reaction scraper blade holder **7706** (see, e.g., **FIG. 63****),** a first reaction paddle shaft **7713** (see, e.g., **FIG. 64****),** a first reaction paddle cap **7703 (****FIG. 65****),** a first reaction mixer drive shaft (see, e.g., **FIG. 66****),** a first reaction scraper blade **7702,** a reaction bowl (e.g., a reaction vessel) **7712,** and a first reaction paddle stop **7707** (see, e.g., **FIG. 67****).** In certain embodiments, additional components include a cap screw **7704,** a torsion spring **7701,** and HDPE bushing **(7705, 7708).** **FIG. 77A** shows an exploded view of the paddle assembly, illustrating the relationship of its various components. In certain embodiments, the paddle assembly is configured to allow the reaction bowl to be raised and/or lowered. In certain embodiments, paddle assembly is configured to raise and/or lower the reaction bowl. In certain embodiments, paddle assembly is configured to allow the reaction mixer blade to be raised and/or lowered. In certain embodiments, paddle assembly is configured to raise and/or lower the reaction mixer blade. In certain embodiments, reaction mixer blade is lowered into the reaction bowl or raised out of the reaction bowl. In certain embodiments, reaction bowl is lowered away from the reaction mixer blade or raised towards the reaction mixer blade. In certain embodiments, reaction mixer blade **7711** is mechanically coupled to a scraper blade **7702.** In certain embodiments, scraper blade is configured to engage with the side of the reaction bowl **7712.** In certain embodiments, scraper blade is configured to engage with the reaction bowl as the bowl is raised towards the reaction mixer blade (e.g., as shown in **FIG. 77B****).** In certain embodiments, scraper blade holder **7706** is configured to hold the scraper blade at an angle relative to the surface of the bowl with which the scraper blade is engaged. In certain embodiments, the scraper blade is held at an angle relative to the surface of the bowl such that operation of the agitator allows the scraper blade to scrape off materials stuck to the bowl while also pushing the materials down the bowl. In certain embodiments, scraper blade comprises a taper that engages with the bowl as the mixer bowl rises (see **FIG. 77B****).** In certain embodiments, when the first reaction paddle assembly is in operation, the reaction mixer blade rotates about the drive shaft. In certain embodiments, rotating reaction mixer blade mixes a carbonaceous composition (e.g., for a first or second reaction). In certain embodiments, as the carbonaceous composition is mixed, debris and other ingredients stick to the sides of the reaction bowl. Accordingly, in certain embodiments, the paddle assembly comprises a scraper blade configured to scrape off materials that end up too high on the side of the reaction bowl. In certain embodiments, first reaction paddle assembly comprises elements made of stainless steel. Examples of sizes, dimensions and/or installation of such elements of the first reaction paddle assembly are shown in **FIGS. 77A-77B****.** In certain embodiments, other suitable elements and/or materials of different sizes and/or dimensions are used.

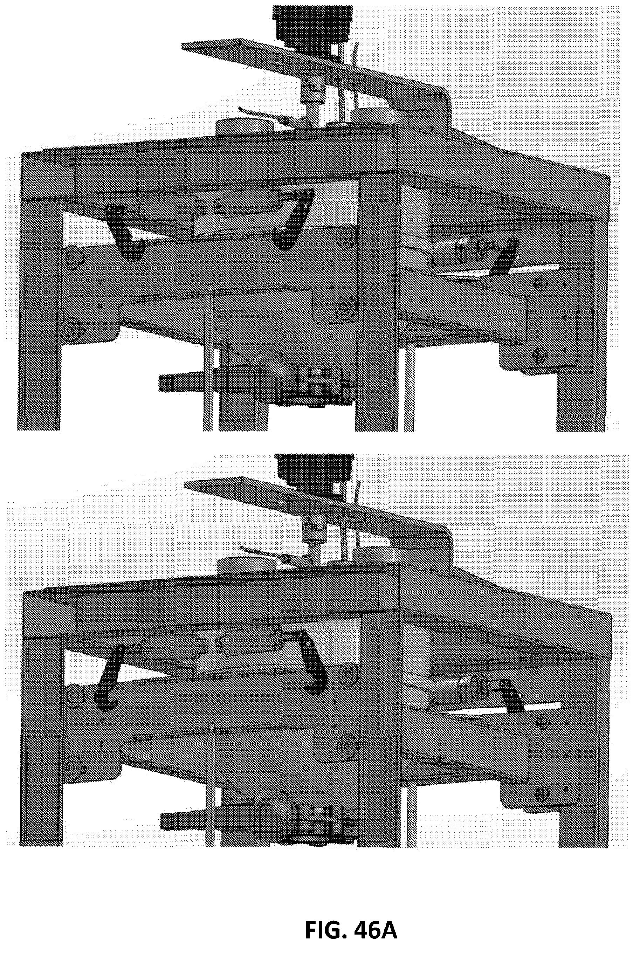

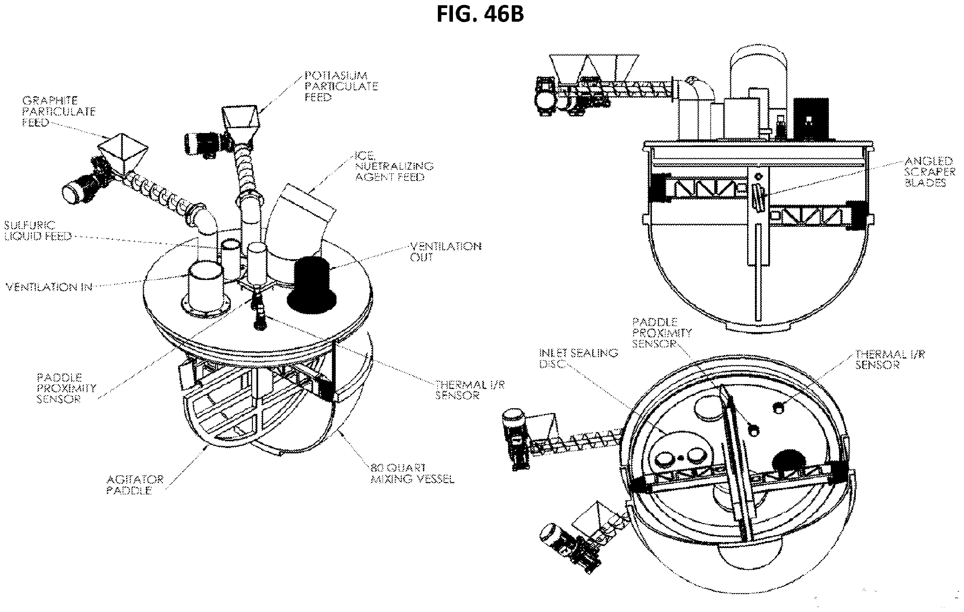

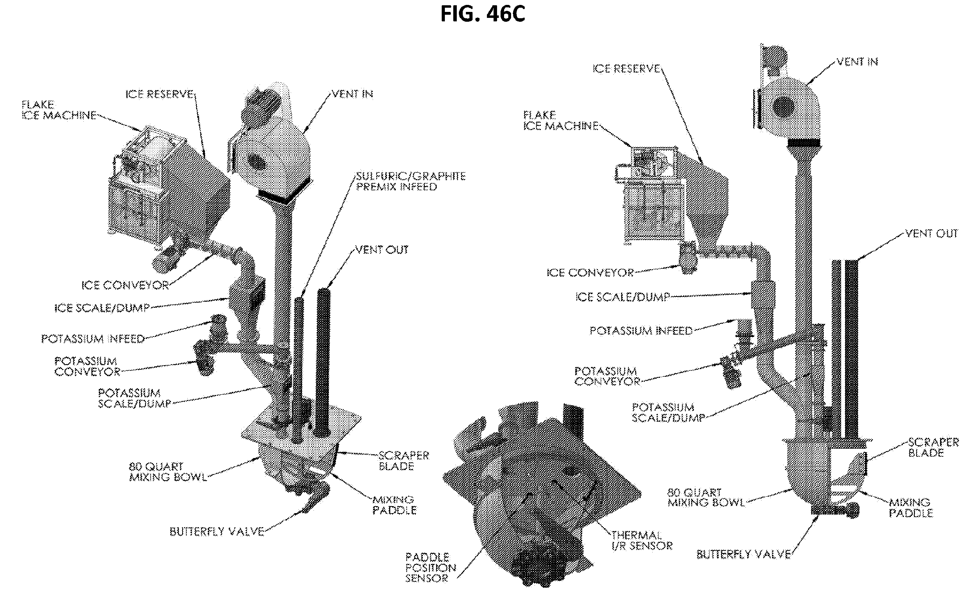

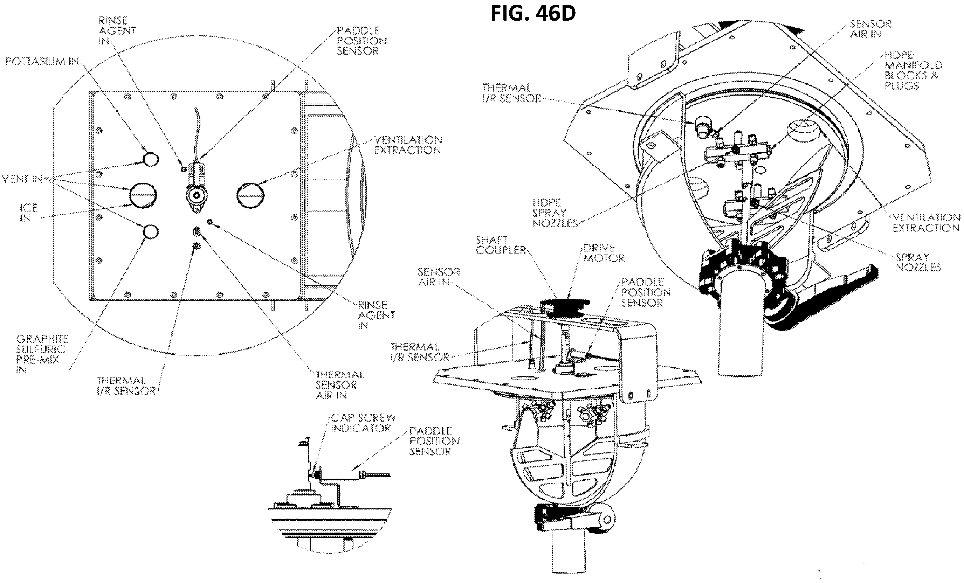

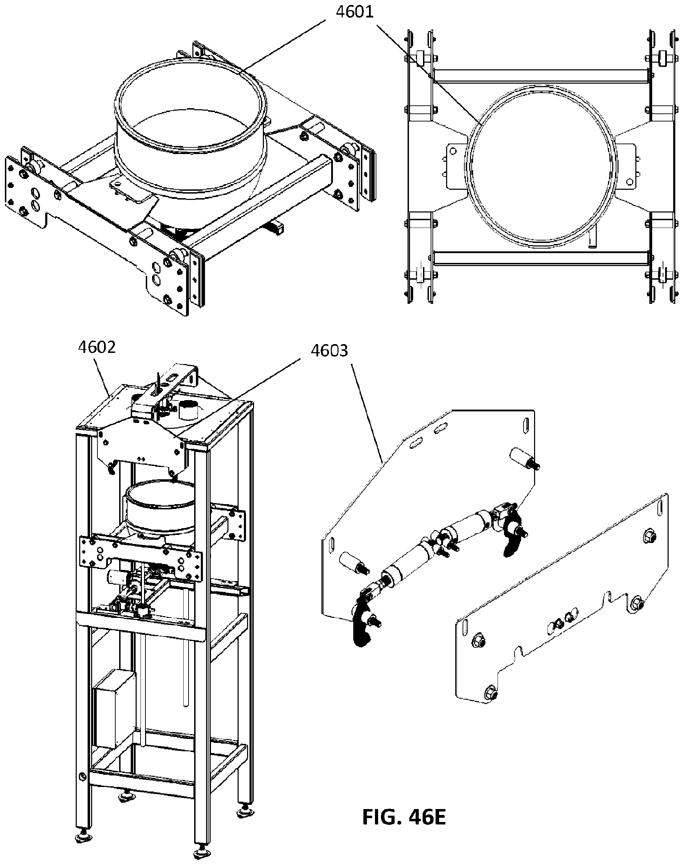

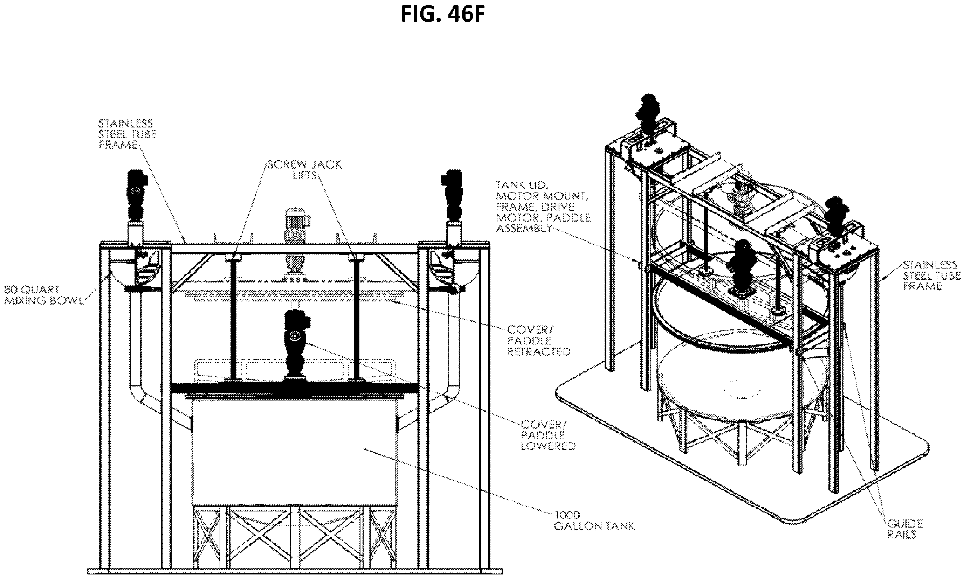

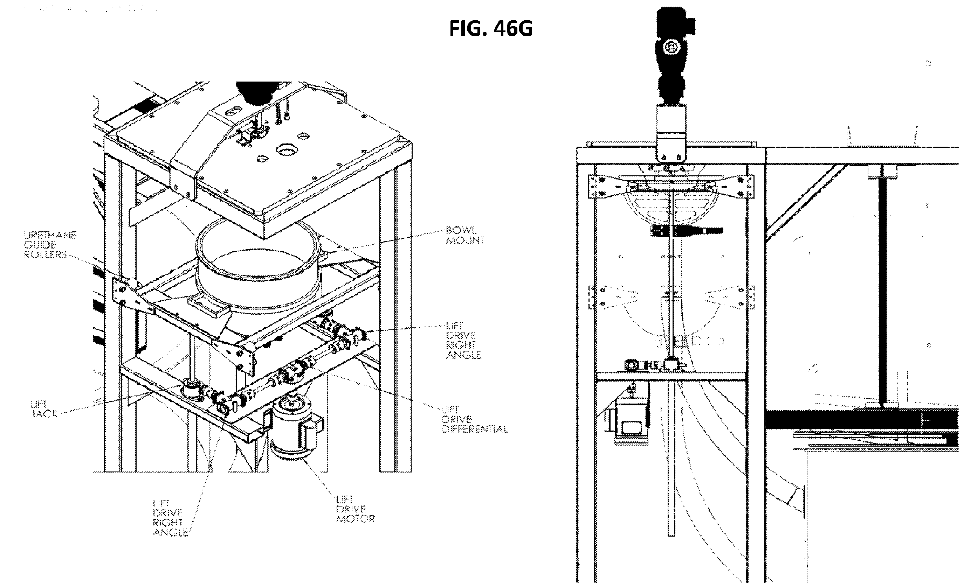

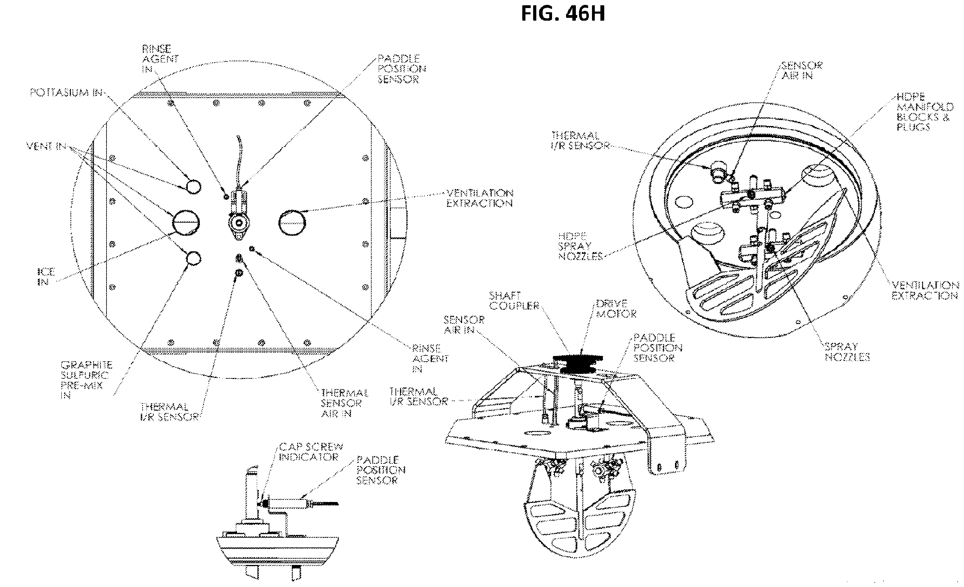

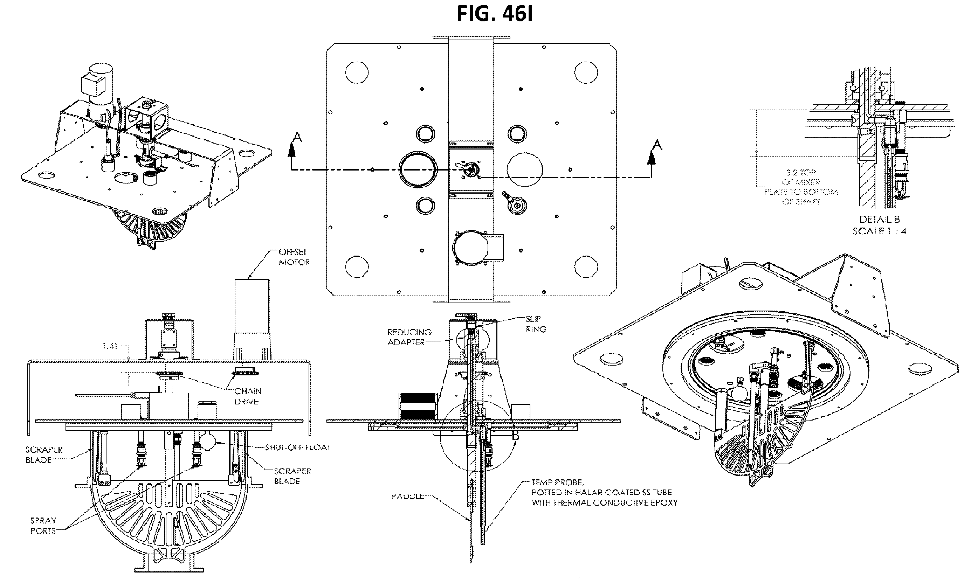

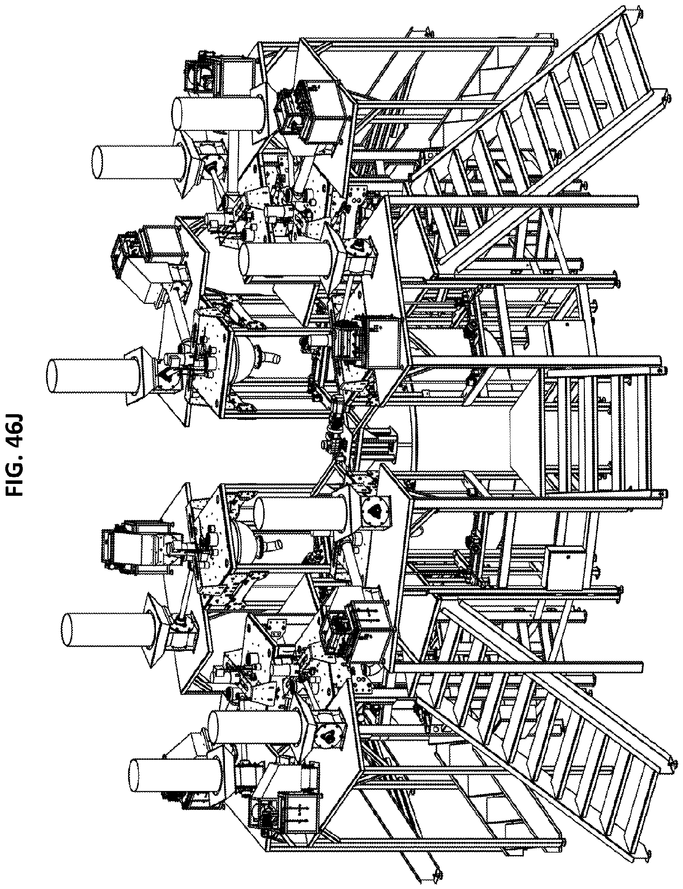

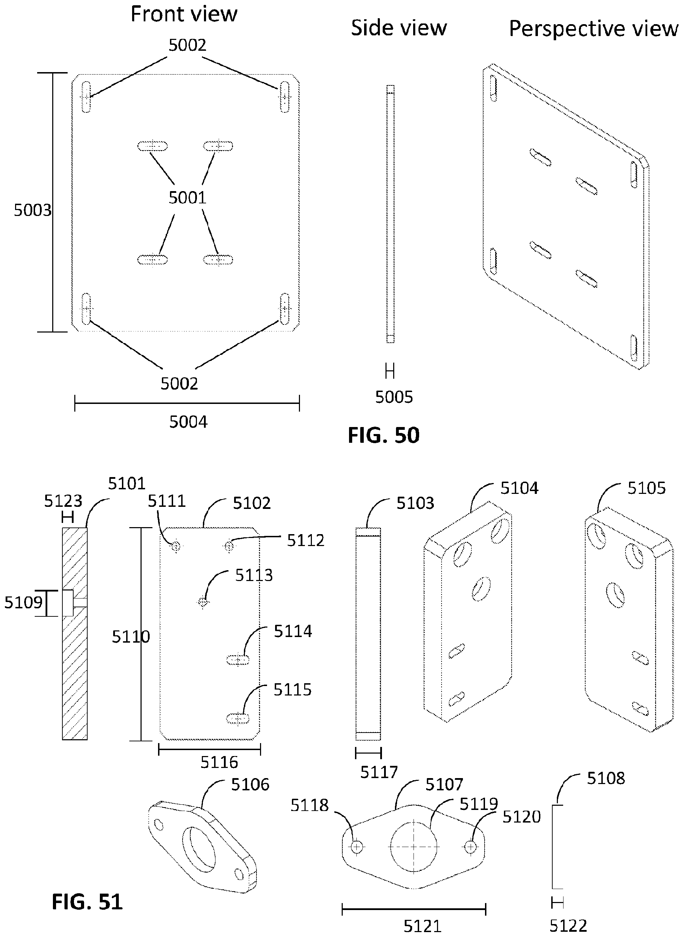

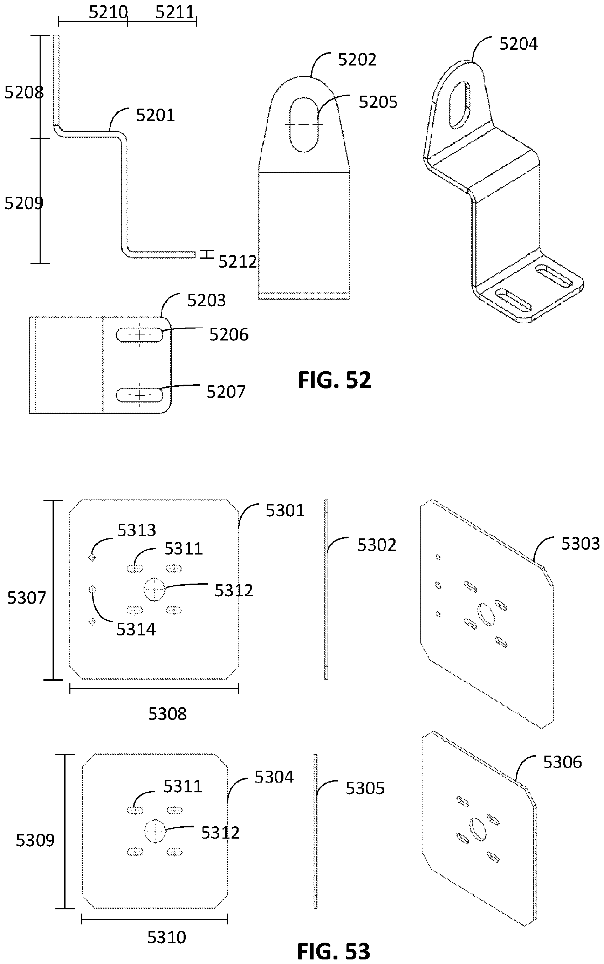

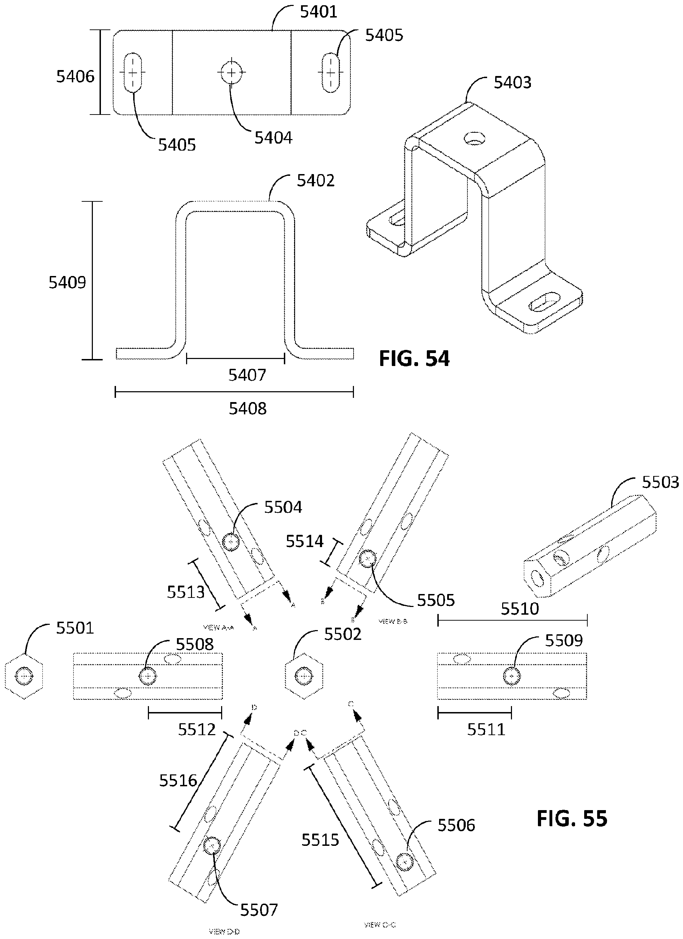

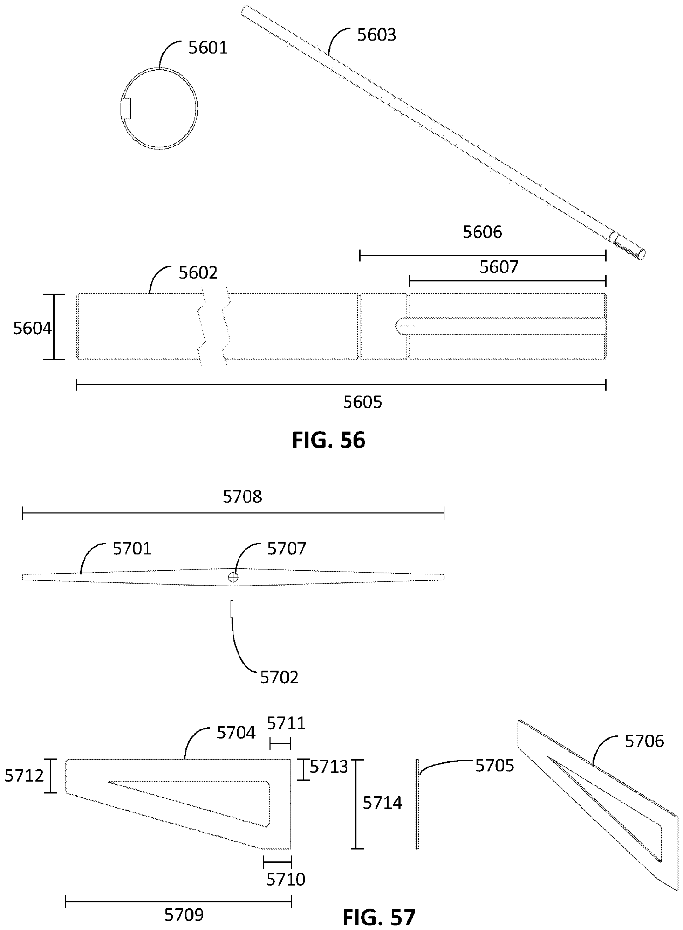

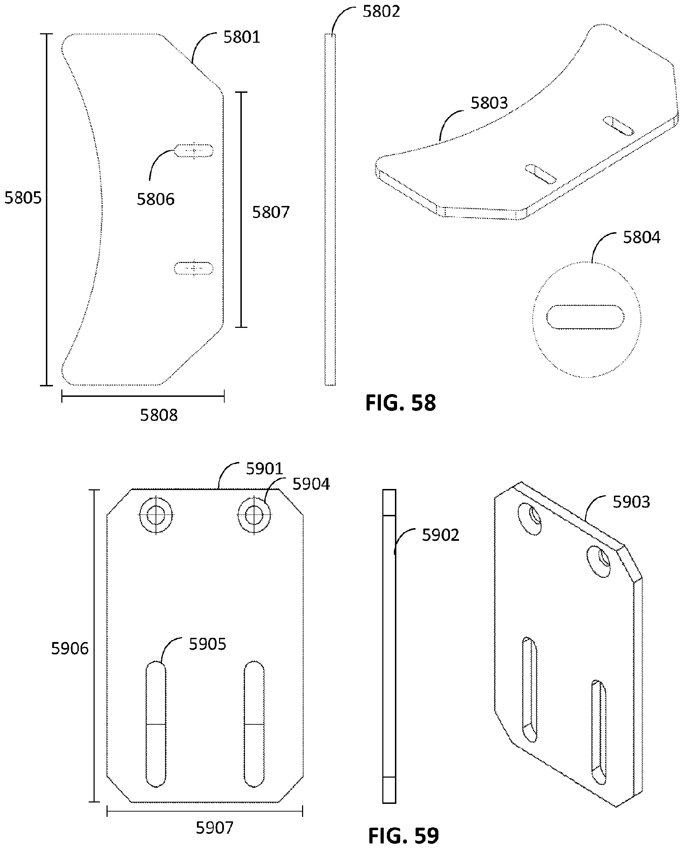

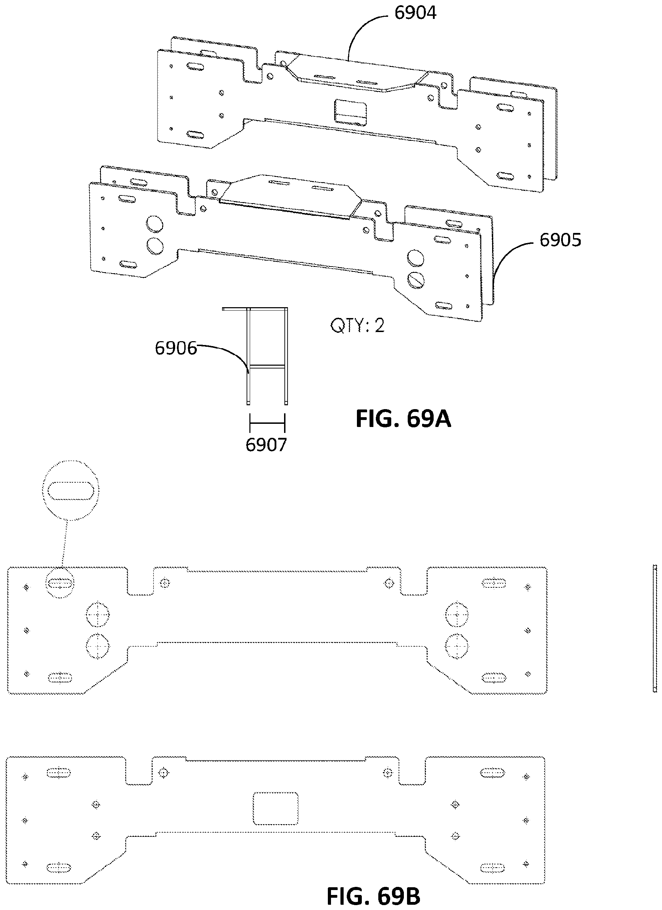

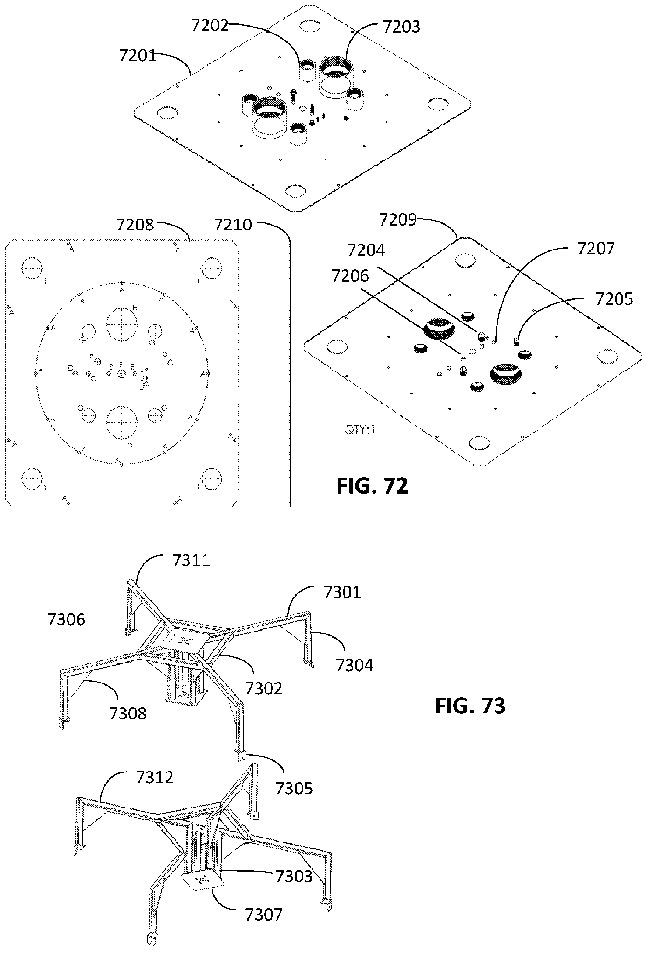

In certain embodiments, a first reaction system comprises one or more elements of a bowl lift lock **(****FIG. 46****),** a lift carriage skid plate **(****FIG. 48****),** a bowl lift lock spacer **(****FIG. 49****),** a lift motor mount plate **(****FIG. 50****),** a lift elbow spacer plate **(****FIG. 51****),** a mixer sensor bracket **(****FIG. 52****),** a tank motor mount **(****FIG. 53****),** a mixer torque bracket **(****FIG. 54****),** a mixer spray bar **(****FIG. 55****),** a tank mixer shaft **(****FIG. 56****),** a tank mixer blade **(****FIG. 57****),** a bowl mount plate **(****FIG. 58****),** a carriage switch mount plate **(****FIG. 59****),** a first reaction mixer **(****FIG. 60****),** a first reaction scraper blade mount **(****FIG. 61****),** a first reaction scraper blade shaft **(****FIGS. 62-63****),** a first reaction paddle shaft **(****FIG. 64****),** a first reaction paddle cap **(****FIG. 65****),** a first reaction mixer drive shaft **(****FIG. 66****),** and a first reaction paddle stop **(****FIG. 67****).** In certain embodiments, a reaction system comprises one or more elements of a lift carriage weldment **(****FIGS. 69A-69B****),** a lift carriage brace **(****FIG. 70****),** a lift carriage **(****FIG. 71****),** a first reaction top plate **(****FIG. 72****),** a mixer motor mount **(****FIG. 73****),** a tank mixer paddle **(****FIGS. 74-75****),** a first reaction frame shelf **(****FIGS. 76A, 76B****, and** **76C****),** and a first reaction paddle assembly **(****FIGS. 77A-77B****).**

In certain embodiments, the first reaction system comprises a bowl lift lock such as shown in **FIG. 46A****.** The top diagram shows the clamp or locking mechanism in a closed or locked configuration. The bottom diagram shows the clamp or locking mechanism in an open or unlocked configuration.

In certain embodiments, the first reaction system comprises a first reaction mixer assembly (e.g., a first reactor) such as shown on **FIG. 46B****.** In some embodiments, the first reaction mixer assembly comprises at least one of the following: a graphite particulate feed, a potassium particulate feed, an ice and/or neutralizing agent feed, ventilation out, thermal I/R sensor, 80 quart mixing vessel, agitator paddle, paddle proximity sensor, ventilation in, or sulfuric liquid feed. In some embodiments, the first reaction mixer assembly comprises an inlet sealing disc and/or angled scraper blades.

In certain embodiments, the first reaction system comprises a first reaction mixer assembly such as shown in **FIG. 46C****.** In certain embodiments, the first reaction system comprises at least one of the following: a flake ice machine, ice reserve, ice conveyor, ice scale/dump, potassium infeed, potassium scale/dump, 80 quart mixing bowl, butterfly valve, mixing paddle, scraper blade, vent out, vent in, or sulfuric/graphite premix infeed.

In certain embodiments, the first reaction system comprises a lid or cover of a first reaction mixer assembly such as shown in **FIG. 46D****.** In some embodiments, the lid or cover comprises at least one of the following: a paddle position sensor, vent in, ice in, ventilation extraction, graphite-sulfuric acid pre-mix in, thermal I/R sensor, potassium in, or rinse agent in. In some embodiments, the lid or cover comprises at least one of the following: sensor air in, HDPE manifold blocks & plugs, or HDPE spray nozzles. In some embodiments, the lid or cover comprises at least one of the following: cap screw indicator, paddle position sensor, thermal I/R sensor, sensor air in, shaft coupler, drive motor, or paddle position sensor.

In certain embodiments, the first reaction system comprises a first reaction mixer assembly such as shown in **FIG. 46E** In some embodiments, the first reaction mixer assembly comprises any of the following: a mixing bowl **4601,** a first reaction frame weldment **4602,** or a mechanism for locking or clamping the mixing bowl when it is raised to the lid.

In certain embodiments, the first reaction system comprises a first reaction mixer assembly and a first reaction tank such as shown in **FIG. 46F**. In some embodiments, the first reaction system comprises at least one of the following: 1000 gallon tank (first reaction tank), cover/paddle, screw jack lifts, 80 quart mixing bowl (first reaction mixer assembly), guide rails, stainless steel tube frame, tank lid, motor mount, frame, drive motor, or paddle assembly. In some embodiments, the first reaction system comprises a retractable cover which is optionally coupled to a mixer mechanism or assembly. In some embodiments, the one or more reaction mixer assemblies are in fluid communication with the tank. In some embodiments, a valve can be manually or automatically opened (e.g., via a control unit) to allow the contents of the reaction mixer assembly to flow into the tank. **FIG. 46G** shows a perspective view of one embodiment of the mixing bowl positioned on the bowl mount on the first reaction frame weldment while in a lowered configuration (left diagram), and a side view with the mixing bowl in a raised configuration (right diagram). **FIG. 46H** shows views of one embodiment of the lid for the mixing bowl in the first reaction mixer assembly. In some embodiments, the lid comprises any of the following: rinse agent in, potassium in, vent in, ice in (or cold/ice water in), graphite sulfuric pre-mix in, thermal I/R sensor, thermal sensor air in, rinse agent in, ventilation extraction, or paddle position sensor. In some embodiments, the lid comprises on its internal surface (e.g., facing the interior of the mixing bowl) comprises any of the following: sensor air in, thermal I/R sensor, (HDPE) spray nozzles, ventilation extraction, or (HDPE) manifold blocks & plug. In some embodiments, the lid comprises on an exterior surface (e.g., not facing the interior of the mixing bowl) any of the following: sensor air in, thermal I/R sensor, shaft coupler, drive motor, cap screw indicator, or paddle position sensor. **FIG. 46I** shows additional views of the lid. In some embodiments, the lid comprises an offset motor, a chain drive, reducing adapter, slip ring, paddle, temperature probe (optionally potted in halar coated stainless steel tube with thermal conductive epoxy), or any combination thereof. In some embodiments, the lid comprises a mixer or paddle having one or more scraper blades attached. In some embodiments, the paddle comprises two scraper blades positioned on opposite ends of the paddle. In some embodiments, each scraper blade is configured to be flush with the interior surface of the reaction vessel (or alternatively or in combination, the tank). In some embodiments, the lid comprises one or more spray ports. In some embodiments, the spray ports are coupled to a source such as a tank and dispense reactants (e.g., for generating GO and/or quenching the GO reaction such as bay adding hydrogen peroxide and ice or cold/chilled/ice water). In some embodiments, the spray ports are configured to dispense a fluid (e.g., ddH₂O) to clean the reaction vessel. In some embodiments, the lid comprises a shut-off float, for example, to detect when the contents of the reaction vessel are too high and to stop adding more reactants or other materials into the reaction vessel. In some embodiments, the lid comprises a temperature sensor (e.g., temperature probe). In some embodiments, the temperature sensor is attached to the mixer. In some embodiments, the temperature sensor is configured to remain in the reaction vessel during operation of the reaction mixer. For example, the temperature sensor can be attached to the mixer so that the sensor moves with the mixer when it is rotating and can remain in the vessel during reaction between graphite and other reactants to form graphene oxide.

In certain embodiments, disclosed herein is a first reaction system such as shown in **FIG. 46J****,** which has a perspective view of a reaction system comprising eight first reaction mixer assemblies and one tank. In some embodiments, the first reaction mixer assemblies are positioned above the tank such that a valve at or near the bottom of the reaction vessel can be opened to allow the contents to flow into the tank.

In certain embodiments, a variety of bowl lift lock spacers are shown in **FIG. 49****.** In certain embodiments, a first spacer **4901** has a length of about 0.700 inches. In certain embodiments, a second spacer **4902** has a length of about 2.063 inches. In certain embodiments, a third spacer **4903** has a length of about 0.900 inches. In certain embodiments, a fourth spacer **4904** has a length of about 3.031 inches. In certain embodiments, each spacer has an inner diameter **4905** and an outer diameter **4906.** In certain embodiments, a first spacer **4901** has an inner diameter of about 0.38 inches and an outer diameter of about 0.75 inches. In certain embodiments, a second spacer **4902** has an inner diameter of about 0.53 inches and an outer diameter of about 1.00 inches. In certain embodiments, a third spacer **4903** has an inner diameter of about 0.53 inches and an outer diameter of about 1.00 inches. In certain embodiments, a fourth spacer **4904** has an inner diameter of about 0.53 inches and an outer diameter of about 1.00 inches.

A lift motor mount plate is shown in **FIG. 50****.** In certain embodiments, a lift motor mount plate has a height **5003,** a width **5004,** and a depth **5005.** In certain embodiments, a lift motor mount plate has a height **5003** of about 8.50 inches, a width **5004** of about 8.00 inches, and a depth **5005** of about 0.25 inches. In certain embodiments, a lift motor mount plate comprises one or more inner apertures **5001** and one or more outer apertures **5002.** In certain embodiments, a lift motor mount plate comprises four inner apertures **5001** and four outer apertures **5002.** In certain embodiments, an inner aperture 5001 is positioned with its center located about 2.38 inches from the top or bottom side and about 6.13 inches from the opposite side of a lift motor mount plate having a height **5003** of about 8.50 inches. In certain embodiments, an inner aperture **5001** is positioned with its center located about 2.84 inches from the left or right side and about 5.16 inches from the opposite side of a lift motor mount plate having a width **5004** of about 8.00 inches. In certain embodiments, an outer aperture **5002** is positioned with its center located about 0.75 inches from the top or bottom side and about 7.75 inches from the opposite side of a lift motor mount plate having a height **5003** of about 8.50 inches. In certain embodiments, an outer aperture **5002** is positioned with its center located about 0.50 inches from the left or right side and about 7.50 inches from the opposite side of a lift motor mount plate having a width **5004** of about 8.00 inches. In certain embodiments, an aperture **(5001** and/or **5002)** has a length (longer side) of about 0.75 inches and a width (shorter side) of about 0.28 inches.

A variety of lift elbow spacer plates are shown in **FIG. 51****.** In certain embodiments, a reaction system comprises a first lift elbow spacer plate **5104,** a second lift elbow spacer plate **5105,** and a third lift elbow spacer plate **5106.** In certain embodiments, a first lift elbow spacer plate **5104** and a second lift elbow spacer plate **5105** are mirror images of one another. A cross-section side view **5101** of the first and/or second lift elbow spacer plates **5104** and **5105** illustrates a radius **5109** and a depth **5123** of one or more circular apertures **(5111, 5112, 5113).** In certain embodiments, front and side views of a first or second lift elbow spacer plate, **5102** and **5103,** shows a height **5110,** a width **5116,** and a depth **5117.** In certain embodiments, a first or second lift elbow spacer plate **5102** has a height **5110** of 7.00 about inches, a width **5116** of about 3.50 inches, and a depth **5117** (in side view **5103)** of about 0.88 inches. In certain embodiments, a first or second lift elbow spacer plate **5102** comprises a first circular aperture **5111,** a second circular aperture **5112,** and a third circular aperture **5113.** In certain embodiments, a first or second lift elbow spacer plate comprises one or more rounded rectangular apertures. In certain embodiments, a first or second lift elbow spacer plate comprises a first rounded rectangular aperture **5114** and a second rounded rectangular aperture **5115.** A third lift elbow spacer plate is shown in **FIG. 51** as a perspective view **5106,** a front view **5107,** and a side view **5108.** The third lift elbow spacer plate has a width **5121** and a depth **5122.** In certain embodiments, the third lift elbow spacer plate has a width **5121** of about 5.00 inches and a depth **5122** of about 0.38 inches. In certain embodiments, third lift elbow spacer plate comprises a left aperture **5118,** a middle aperture **5119,** and a right aperture **5120.**

A mixer sensor bracket is shown in **FIG. 52** with a side view **5201,** a front view **5202,** a top down view **5203,** and a perspective view **5204.** In certain embodiments, the mixer sensor bracket has a first height **5208** and a second height **5209.** In certain embodiments, the first height **5208** is 2.13 about inches. In certain embodiments, the second height **5209** is about 2.50 inches. In certain embodiments, the mixer sensor bracket has a first depth **5210** and a second depth **5211.** In certain embodiments, the first depth **5210** is about 1.50 inches. In certain embodiments, the second depth **5211** is about 1.50 inches. In certain embodiments, the mixer sensor bracket has a thickness **5212.** In certain embodiments, the thickness **5212** is about 0.125 inches. In certain embodiments, the mixer sensor bracket comprises one or more apertures. In certain embodiments, the mixer sensor bracket comprises a first aperture **5205,** a second aperture **5206,** and a third aperture **5207.** In certain embodiments, the first aperture has a width (shorter side) of about 0.63 inches and a height (longer side) of about 1.13 inches. In certain embodiments, the first aperture is positioned with its center located about 3.63 inches above the bottom side of the front view mixer sensor bracket **5202.**

A tank motor mount is shown in **FIG. 53****.** In certain embodiments, the tank motor mount comprises a motor mount plate and a bearing plate. **FIG. 53** shows a front view **5301,** a side view **5302,** and a perspective view **5303** of a motor mount plate. **FIG. 53** shows a front view **5304,** a side view **5305,** and a perspective view **5306** of a bearing plate. In certain embodiments, the motor mount plate has a height **5307** of 14.00 about inches, a width **5308** of about 14.00 inches, and a depth **5302** of about 0.25 inches. In certain embodiments, the motor mount plate comprises a central aperture **5312.** In certain embodiments, the central aperture **5312** is positioned with its center located about 7.00 inches from every side of a motor mount plate having a height **5307** and width **5308** of about 14.00 inches. In certain embodiments, the motor mount plate comprises one or more rounded rectangular apertures **5311.** In certain embodiments, the motor mount plate comprises four rounded rectangular apertures **5311.** In certain embodiments, the motor mount comprises one or more circular apertures **5313** and **5314.** **FIG. 53** shows a front view **5304,** a side view **5305,** and a perspective view **5306** of a bearing plate. In certain embodiments, the bearing plate has a width **5310** of about 12.00 inches, a height **5309** of about 12.00 inches, and a depth **5305** of about 0.25 inches. In certain embodiments, the bearing plate comprises one or more rounded rectangular apertures **5311.** In certain embodiments, the bearing plate comprises four rounded rectangular apertures **5311.** In certain embodiments, the rounded rectangular aperture **5311** has a width (longer side) of about 0.75 inches and a height (shorter side) of about 0.50 inches.

A mixer torque bracket is shown in **FIG. 54** with a top-down view **5401,** a side view **5402,** and a perspective view **5403.** In certain embodiments, the mixer torque bracket comprises apertures **5404** and **5405.** In certain embodiments, the mixer torque bracket has a first width **5407** and a second width **5408,** a depth **5406,** and a height **5409.** In certain embodiments, the mixer torque bracket has a first width **5407** of about 2.50 inches, a second width **5408** of about 6.00 inches, a depth **5406** of about 2.00 inches, and a height **5409** of about 3.75 inches.

A mixer spray bar is shown in **FIG. 55****.** The mixer spray bar is shown with a perspective view **5503,** a first end view **5502,** a second end view **5501,** a side view showing a first aperture **5504,** a side view showing a second aperture **5505,** a side view showing a third aperture **5506,** a side view showing a fourth **5507,** a side view showing a fifth aperture **5508,** and a side view showing a sixth aperture **5509.** In certain embodiments, the mixer spray bar has a length **5510.** In certain embodiments, the mixer spray bar has a length **5510** of about 6.00 inches. Each of the side views shows an aperture, the aperture's position along the length of one side of the mixer spray bar, and the aperture's position relative to the surrounding apertures. In certain embodiments, the mixer spray bar comprises six apertures **5504, 5505, 5506, 5507, 5508,** and **5509** with each aperture positioned on one of six sides of the mixer spray bar. In certain embodiments, an aperture has a diameter of about 0.56 inches. In certain embodiments, the aperture **5504** is positioned with its center located a length **5513** of about 2.00 inches from a first end of the mixer spray bar. In certain embodiments, the aperture **5505** is positioned with its center located a length **5514** of about 1.00 inches from a first end of the mixer spray bar. In certain embodiments, the aperture **5506** is positioned with its center located a length **5515** of about 5.00 inches from a first end of the mixer spray bar. In certain embodiments, the aperture **5507** is positioned with its center located a length **5516** of about 4.00 inches from a first end of the mixer spray bar. In certain embodiments, the aperture **5508** is positioned with its center located a length **5512** of about 3.00 inches from a first end of the mixer spray bar. In certain embodiments, the aperture **5509** is positioned with its center located a length **5511** of about 3.00 inches from a first end of the mixer spray bar.

A tank mixer shaft is shown in **FIG. 56****.** The tank mixer shaft is shown with an end view **5601,** a side view **5602,** and a perspective view **5603.** In certain embodiments, the tank mixer shaft has a diameter **5604,** a first length **5605,** a second length **5606,** and a third length **5607.** In certain embodiments, the tank mixer shaft has a diameter **5604** of about 1.250 inches, a first length **5605** of about 68.50 inches, a second length **5606** of about 5.00 inches, and a third length **5607** of about 4.00 inches.

A tank mixer stiffener is shown in **FIG. 57****.** In certain embodiments, the tank mixer stiffener has a first component as shown by a front view **5701** and a side view **5702.** In certain embodiments, the first component has a length **5708** of about 60.00 inches. In certain embodiments, the first component comprises an aperture **5707** having a diameter of about 1.31 inches. In certain embodiments, the first component is about 0.25 inches thick. In certain embodiments, the tank mixer stiffener has a second component as shown by a front view **5704,** a side view **5705,** and a perspective view **5706.** In certain embodiments, the second component has a width **5709** of about 32.00 inches, a width **5710** of about 4.0 inches, a width **5711** of 3.00 inches, a height **5714** of about 12.00 inches, a height **5712** of about 4.4 inches, and a height **5713** of about 3.00 inches. In certain embodiments, the second component is about 0.25 inches thick.

A bowl mount plate is shown in **FIG. 58** with a front view **5801,** a side view **5802,** and a perspective view **5803.** In certain embodiments, the bowl mount plate comprises one or more apertures **5806.** In certain embodiments, the bowl mount plate comprises two apertures **5806.** In certain embodiments, the two apertures are about 4.00 inches apart (as measured from the center of each aperture). In certain embodiments, an aperture **5806** has a width (longer side) of about 1.40 inches and a height (shorter side) of about 0.40 inches (as shown in the close-up view **5804** of the aperture). In certain embodiments, the bowl mount plate has a first height **5805** of about 12.0 inches, a second height **5807** of about 8.0 inches, and a width **5808** of about 5.84 inches. In certain embodiments, the bowl mount plate is about 0.38 inches thick.

A carriage switch mount plate is shown in **FIG. 59** with a front view **5901,** a side view **5902,** and a perspective view **5903.** In certain embodiments, the carriage switch mount plate comprises one or more circular apertures **5904,** and one or more rounded rectangular apertures **5905.** In certain embodiments, a circular aperture **5904** has a diameter of about 0.33 inches. In certain embodiments, a rounded rectangular aperture **5905** has a width (shorter side) of about 0.201 inches and a height (longer side) of about 1.20 inches. In certain embodiments, the carriage switch mount plate has a height **5906** of about 3.00 inches and a width **5907** of about 2.00 inches.

A first reaction mixer blade is shown in **FIG. 60** with a front view **6001** and a side view **6002.** In certain embodiments, the mixer blade comprises one or more rounded rectangular apertures **6003** and one or more circular apertures **6004.** In certain embodiments, a rounded rectangular aperture **6003** has a width (longer side) of about 0.53 inches and a height (shorter side) of about 0.31 inches. In certain embodiments, a circular aperture **6004** has a diameter of about 0.332 inches. In certain embodiments, the mixer blade has a height **6006** of about 11.50 inches and a width **6005** of about 19.00 inches.

A first reaction scraper blade mount is shown in **FIG. 61** with a top-down view **6101,** a front view **6102,** a side view **6103,** and a perspective view **6104.** In certain embodiments, the scraper blade mount comprises an aperture **6105.** In certain embodiments, the aperture **6105** has a diameter of about 0.313 inches. In certain embodiments, the scraper blade mount comprises one or more apertures **6106.** In certain embodiments, the one or more apertures **6106** have an inner diameter of about 0.201 inches and an outer diameter of about 0.266 inches. In certain embodiments, the scraper blade mount has a height **6108** of about 1.50 inches, a width **6109** of about 1.50 inches, and a depth **6107** of about 0.75 inches. In certain embodiments, the scraper blade mount comprises an open space with a height **6111** of about 0.75 inches, a width **6109** of about 1.50 inches, and a depth **6110** of about 0.26 inches.

A first reaction scraper blade shaft is shown in **FIG. 62** with a front view **6202,** a back view **6201,** a first perspective view **6205,** a second perspective view **6206,** a top view **6203,** and a bottom view **6204.** In certain embodiments, the scraper blade shaft comprises an opening **6208.** In certain embodiments, the opening **6208** has a diameter of about 0.313 inches and a depth of about 0.97 inches. In certain embodiments, the scraper blade shaft comprises an opening **6209.** In certain embodiments, the opening **6209** has a diameter of about 0.159 inches and a depth of about 0.47 inches. In certain embodiments, the scraper blade shaft has a diameter **6207** of about 0.63 inches.

A first reaction scraper blade holder is shown in **FIG. 63** with a top-down view **6303,** side views **(6301, 6305),** a front view **6302,** perspective views **6304,** a rear view **6307** showing a notch **6306** on the scraper blade holder, and a side view showing the interior space of the scraper blade holder **6308.** In certain embodiments, the scraper blade holder has a height **6309** of about 6.25 inches and a diameter **6310** of about 1.075 inches. In certain embodiments, the scraper blade holder comprises one or more openings **6312** at one end of the shaft. In certain embodiments, an opening **6312** has a diameter of about 0.136 inches. In certain embodiments, the scraper blade holder comprises one or more openings **6311** along its length. In certain embodiments, an opening **6311** has a diameter of about 0.159 inches.

A first reaction paddle shaft is shown in **FIG. 64** with a cross-section front view **6401,** a front view **6403,** side views **(6404, 6402),** a perspective view **6405,** a top-down view **6406** and a bottom view **6407.** In certain embodiments, the reaction paddle shaft comprises an aperture **6408** along its side having a diameter of about 0.39 inches. In certain embodiments, the reaction paddle shaft comprises one or more apertures **6409** along its side having an outer diameter of about 0.266 inches and an inner diameter of about 0.201 inches. In certain embodiments, the reaction paddle shaft has a height **6411** of about 11.00 inches and a width **6412** of about 0.980 inches. In certain embodiments, the reaction paddle shaft has a diameter at the top (see top-down view **6406)** of about 1.23 inches. In certain embodiments, the reaction paddle shaft has a diameter at the bottom **6410** (see bottom view **6407)** of about 1.00 inches.

A first reaction paddle cap is shown in **FIG. 65** with a top-down view **6501,** a front perspective view **6502,** a rear perspective view **6503,** a rear view **6504,** a side view **6505,** a front view **6506,** and a cross-section side view **6507.** In certain embodiments, the paddle cap comprises one or more openings **6508** having a first diameter **6509** of about 0.177 inches and a second diameter **6510** of about 0.33 inches.

A first reaction mixer drive shaft is shown in **FIG. 66** with a perspective view **6601,** a first end view **6602,** a second end view **6604,** and a front view **6603.** In certain embodiments, the mixer drive shaft has a diameter of about 1.000 inches. In certain embodiments, the mixer drive shaft has a length **6606** of about 8.06 inches. In certain embodiments, the center of the mixer drive shaft has a distance **6605** of about 0.38 inches from a flat section of the shaft.

A first reaction paddle stop is shown in **FIG. 67** with a top-down view **6701,** a front perspective view **6702,** a rear perspective view **6703,** a front view **6704,** a side view **6705,** and a rear view **6706.** In certain embodiments, the paddle stop comprises one or more apertures **6707.** In certain embodiments, an aperture **6707** has an inner diameter **6708** and an outer diameter **6709.** In certain embodiments, the inner diameter **6708** is about 0.201 inches, and the outer diameter **6709** is about 0.39 inches. In certain embodiments, the paddle stop has a height **6710** of about 2.50 inches and a width **6711** of about 0.63 inches.

A first reaction frame weldment is shown in **FIG. 68A** with multiple perspective views. In certain embodiments, the frame weldment comprises various components as detailed in **FIG. 68A-68B****.**

A lift carriage weldment is shown in **FIGS. 69A-69B** with a front perspective view **6904,** a rear perspective view **6905,** and a side view **6906.** In certain embodiments, the front and back plates of the lift carriage weldment are separated by a distance **6907** of about 3.03 inches.

A lift carriage brace is shown in **FIG. 70** with a perspective view **7001,** a front view **7004,** and side views **7003** and **7005.** In certain embodiments, the lift carriage brace comprises one or more openings **7006.** In certain embodiments, an opening **7006** has a diameter of about 0.31 inches. In certain embodiments, the lift carriage brace has a length **7009** of about 30.47 inches and a height **7007** of about 3.81 inches. In certain embodiments, the lift carriage brace comprises a nut plate **7002** with a height **7007** of about 3.81 inches. In certain embodiments, the nut plate has one or more openings **7008.** In certain embodiments, an opening **7008** has a diameter of about 0.31 inches.

A lift carriage is shown in **FIG. 71** with a perspective view. In certain embodiments, the lift carriage comprises components as shown in **FIG. 71****.**

A first reaction top plate is shown in **FIG. 72** with a top-down view **7208,** a side view **7210,** a top perspective view **7201,** and a bottom perspective view **7209.** In certain embodiments, the top plate comprises components as shown in **FIG. 72** and TABLE 1.

A mixer motor mount is shown in **FIG. 73** with a top perspective view **7311** and a bottom perspective view **7312.** In certain embodiments, the mixer motor mount comprises components as shown in TABLE 1. In certain embodiments, the mixer motor mount comprises one or more of the following components: mild steel tube **(7301, 7302, 7304, 7305),** CNC cut **(7306, 7307),** and mild steel plate **7308.**

A tank mixer paddle is shown in **FIG. 74** with two perspective views **7406** and **7407.** In certain embodiments, the tank mixer paddle comprises a mixer shaft **7401,** a tank mixer stiffener **7402,** and a tank mixer blade **7403.** In certain embodiments, the tank mixer stiffener provides support, strength, and/or durability for the tank mixer blade.

A tank mixer paddle is shown in **FIG. 75** with a top-down view **7501,** front views **7502** and **7503,** and a front perspective view **7504.** In certain embodiments, the tank mixer paddle comprises a mixing blade. In certain embodiments, the tank mixer paddle comprises a mixing shaft.

The methods, devices, and systems herein offer significant advantages with respect to existing options for manufacturing, synthesis, or processing of materials. In certain embodiments, the methods, devices, and systems herein enable scalable, high volume manufacturing, synthesis, or processing of materials. For example, in certain embodiments, the devices and systems described herein include an apparatus comprising a tank, a mixer, and a tank agitator. In certain embodiments, the tank comprises a carbonaceous composition (e.g., graphite). In certain embodiments, the mixer is mounted to the tank. In certain embodiments, the mixer is in fluid communication with the tank. In certain embodiments, the tank agitator is mechanically coupled to the mixer. In certain embodiments, the tank agitator is configured to agitate the carbonaceous composition in the tank, thereby forming an oxidized form of the carbonaceous composition (e.g., graphite oxide) at a rate of greater than about, for example, 1 tonne (metric ton) per year (tpy). In some embodiments, the apparatus form the oxidized form of the carbonaceous composition at a rate of greater than or equal to about 100 grams (g) per year, 200 g per year, 500 g per year, 750 g per year, 1 kilogram (kg) per year, 10 kg per year, 25 kg per year, 50 kg per year, 75 kg per year, 0.1 tpy, 0.2 tpy, 0.3 tpy, 0.4 tpy, 0.5 tpy, 0.6 tpy, 0.7 tpy, 0.8 tpy, 0.9 tpy, 1 tpy, 2 tpy, 3 tpy, 4 tpy, 5 tpy, 10 tpy, 25 tpy, 50 tpy, 75 tpy, 100 tpy, 200 tpy, 500 tpy, 750 tpy, 1,000 tpy (1 ktpy), 2,000 tpy, 3,000 tpy, 4,000 tpy, 5,000 tpy, 6,000 tpy, 7,000 tpy, 8,000 tpy, 9,000 tpy, 10,000 tpy, or more. In certain embodiments, the apparatus (e.g., the system 100) is used for batch manufacturing, synthesis, or processing (i.e., run as a batch process). In certain embodiments, as described in greater detail elsewhere herein, the methods, devices, and systems herein are scalable. In some embodiments, the apparatus forms the oxidized form of the carbonaceous composition at a rate of greater than or equal to about 1 g, 2 g, 4 g, 6 g, 8 g, 10 g, 25 g, 50 g, 75 g, 100 g, 250 g, 500 g, 750 g, 1 kg, 2 kg, 4 kg, 6 kg, 8 kg, 10 kg, 15 kg, 25 kg, 50 kg, 75 kg, 100 kg, 250 kg, 500 kg, 750 kg, 1 tonne (t), 2 t, 4 t, 6 t, 8 t, 10 t, 15 t, 25 t, 50 t, 75 t, 100 t, 250 t, 500 t, 750 t, or 1,000 t per batch. As used herein, a "batch" refers to an amount of material (e.g., carbonaceous composition, oxidized form of a carbonaceous composition, reduced form of a carbonaceous composition, GO, rGO, etc.) formed, produced, processed, filtered, and/or generated together as a group using the methods, apparatuses, or systems described herein. In an example, a batch of GO is produced using a process comprising a first reaction in a reaction vessel, wherein the batch comprises an amount of GO that is oxidized in the first reaction. In another example, a batch of GO is produced using a process comprising a first reaction and a first filtration, wherein the batch of GO comprises an amount of GO that is oxidized in the first reaction and subsequently filtered by the first filtration. In another example, a batch of rGO is produced using a process comprising a first reaction, a first filtration, a second reaction, and a second filtration, wherein the batch of rGO comprises an amount that is oxidized in the first reaction, filtered in the first filtration, reduced in the second reaction, and filtered in the second filtration. In an example, the apparatus forms in one day an amount of the oxidized form of the carbonaceous composition corresponding to 6 months' production using an apparatus capable of only producing 1 gram at a time.

Another aspect of the invention provides a method for the manufacture (or synthesis) or processing of materials. In certain embodiments, the method is used to manufacture oxidized forms of carbonaceous compositions. In certain embodiments, the devices and systems herein (e.g., the devices and systems of **FIGS. 1-5**) are used for such manufacture (e.g., manufacture of oxidized forms of carbonaceous compositions). In certain embodiments, graphite oxide is synthesized from graphite. In certain embodiments, the graphite oxide includes graphite oxide in solution. In certain embodiments, graphite oxide, as used herein, includes graphene oxide (and vice versa). Graphite oxide and graphene oxide are collectively referred to herein as GO. In certain embodiments, aspects of the disclosure described in relation to graphite oxide equally apply to graphene oxide at least in some configurations.

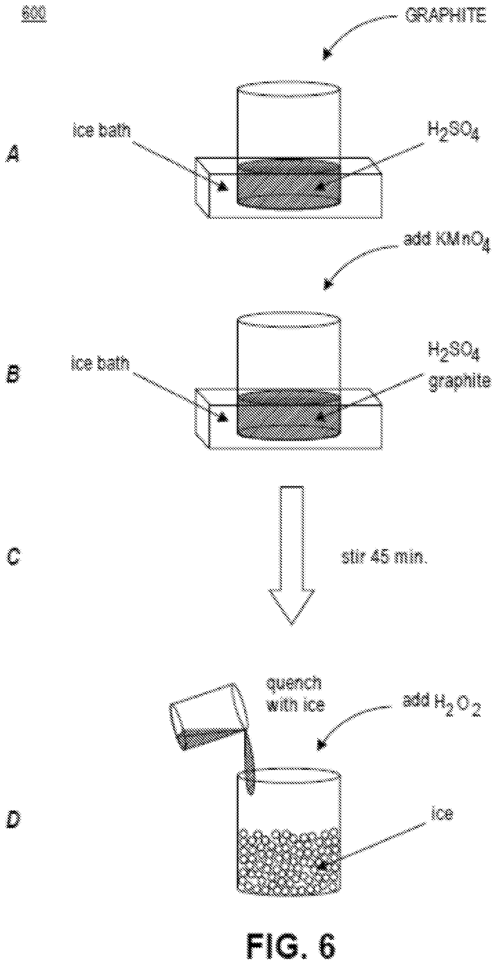

**FIG. 6** schematically shows an example of a method or procedure 600 for manufacturing (or synthesizing) graphite oxide from graphite. In certain embodiments, the method in **FIG. 6** is implemented using the systems and methods herein (e.g., the devices and systems of **FIGS. 1-5**). With reference to **FIG. 6**, a batch (e.g., 1*x grams (g) or *y*x* g, where *y* is a factor greater than or less than 1) of graphite oxide is produced by, in a first step ***A***, adding about 15**x* g of graphite to about 750**x* milliliters (ml) of concentrated sulfuric acid (H₂SO₄) at a first temperature of about 0°C. The sulfuric acid is contained in a mixer (e.g., in a mixer bowl), and the graphite is added to the sulfuric acid in the mixer. The first temperature is maintained using an ice bath (e.g., the mixer bowl is immersed in the ice bath), cooling coils/tubes, or a combination thereof. In a second step ***B***, the synthesis includes adding about 90**x* g potassium permanganate (KMnO₄) to the mixer while maintaining a second temperature of less than about 15°C. The addition of the potassium permanganate to the mixture comprising graphite and concentrated sulfuric acid at a temperature of about 0°C initiates an exothermic (e.g., self-heated) reaction. In certain embodiments, the second temperature is maintained, for example, by the cooling coils/tubes. For example, by adding chilled water to the cooling coils/tubes (also "chiller" herein) around the mixer bowl (e.g., reaction bowl), the temperature is decreased. In certain embodiments, the second temperature is controlled or maintained by the pace at which the potassium permanganate is added (e.g., thereby controlling the heating). For example, if more heat (increased temperature) is desired, the potassium permanganate is added at a faster pace. In certain embodiments, if a cooler temperature is desired, the chiller is set to a lower temperature and/or the flow or rate of addition of the potassium permanganate is decreased. In certain embodiments, the method further comprises, in a third step C, stirring the reaction mixture (e.g., at the second temperature) in the mixer for about 45 minutes. In certain embodiments, in a fourth step ***D***, quenching is achieved by combining the mixture with about 2.6**x* kilograms (kg) ice and then adding about 75**x* ml of 30% hydrogen peroxide (H₂O₂). In certain embodiments, the fourth step includes transferring (e.g., via the butterfly valve 113 or 213) the contents of the mixer bowl to the tank and then adding the hydrogen peroxide. In certain embodiments, the ice bath stops the reaction and/or cools the reaction. In certain embodiments, the hydrogen peroxide is added to stop the reaction. In certain embodiments, the butterfly valve allows the GO to be transferred into the water/ice tank for cooling. In certain embodiments, a fifth step (not shown) includes purifying by 5 H₂O washes, followed by about 1 week of continuous-flow dialysis. In certain embodiments, *x* is a scaling factor of greater than or equal to about 1, 2, 4, 6, 8, 10, 12, 14, 16, 18, 20, 22, 24, 26, 28, 30, 35, 40, 45, 50, 55, 60, 65, 70, 75, 80, 85, 90, 95, 100, 200, 300, 400, 500, 600, 700, 800, 900, 1000, or more. For example, in certain embodiments, in a system comprising a tank with at least about 150 pounds of ice, *x* is at least about 26.

In certain embodiments, the methods, devices, and systems herein are scalable. In an example, the graphite oxide synthesis method herein is performed using a tank with a volume of at least about 100 gallons. In certain embodiments, the mixer has a volume of at least about 20 quarts (5 gallons). In certain embodiments, the tank holds or contains a liquid (e.g., water and/or the reaction mixture from the mixer bowl) and at least about 150 pounds of ice. For example, in certain embodiments, raw materials other than ice are added to the reaction chamber/mixing bowl, and ice is directly added to a 100 gallon tank. In certain embodiments, final products come out at the bottom of the 100 gallon tank. In another example, the volume of the mixer is at least about 320 quarts (80 gallons) and the volume of the tank (e.g., ice tank) is at least about 1,600 gallons (e.g., the volume of the mixer and tank are each scaled by a factor of 16). In yet another example, the volume of the tank (e.g., ice tank) is at least about 3,000 gallons, 3,500 gallons, or 4,000 gallons (e.g., as high as about 4,000 gallons). In certain embodiments, the tank is used with, for example, the mixer having a volume of at least about 320 quarts (80 gallons), or with a mixer having a different volume. For example, in certain embodiments, several (e.g., at least 2, 3, 4, 5, 6, 7, 8, 9, 10, 12, 14, 16, 18, 20, 25, 50, 75 or 100) mixers are used with a single large tank (e.g., see **FIG. 44**). In certain embodiments, the number and size/volume of mixers scale with the size/volume of the tank. For example, a tank with a volume *Vₜ* is used with one or more mixers having a volume less than or equal to *Vₘ*, where *Vₘ* is a maximum suitable mixer volume for a given *Vₜ.* Further, in certain embodiments, when multiple mixers are used with a single tank, the mixers have the same size/volume. In certain embodiments, when multiple mixers are used with a single tank, the mixers do not have the same size/volume. Thus, in certain embodiments, different mixer combinations are used. For example, in certain embodiments, a mixer with a volume of at least about 5 gallons or 80 gallons is used with a tank with a volume between about 100 gallons and about 4,000 gallons (e.g., alone or in combination with one or more other mixers). In some cases, one or more portions of the mixers (e.g., a motor) are shared to increase efficiency.

In certain embodiments, the devices and systems described herein are scaled up (e.g., more ice in a bigger system). In some embodiments, the scaling is the same (e.g., the scaling factor *x* is the same for all components). In some embodiments, different components (e.g., tank and mixer bowl) have at least about 1%, 2%, 5%, 10%, 15%, 20%, 25%, 30%, 35%, 40%, 45%, or 50% different scaling factors. In certain embodiments, different components in the first reaction system, first reaction filter, second reaction system, and/or second reaction filter are scaled up at least 5%, 10%, 20%, 30%, 40%, 50%, 60%, 70%, 80%, 90%, or 100% of sizes and/or dimensions provided herein. In certain embodiments, different components in the first reaction system, first reaction filter, second reaction system, and/or second reaction filter are scaled up at least 1, 2, 3, 4, 5, 6, 7, 8, 9, 10, 15, 20, 25, 30, 35, 40, 45, 50, 60, 70, 80, 90, 100, 150, 200, 250, 300, 350, 400, 450, 500, 600, 700, 800, 900, or 1000 times the sizes and/or dimensions provided herein. In certain embodiments, at least a portion of the components (e.g., mixer bowl) are scaled such that given dimensions and proportions stay consistent. For example, in certain embodiments, the mixer bowl or the tank has a given shape configured to achieve efficient agitation and/or mixing. In certain embodiments, such dimensions are kept consistent when scaling up such components (e.g., location and/or clearance of tank agitator blades are such that their relative position and size with respect to the tank remain approximately the same upon scaling up, or the mixing bowl shape is increased or decreased in volume without changing relative dimensions, etc.).

In certain embodiments, graphite oxide or graphene oxide (GO) comprises one or more functional groups. For example, in certain embodiments, GO comprises one or more epoxy bridges, one or more hydroxyl groups, one or more carbonyl groups, or any combination thereof. In certain embodiments, the GO comprises a level of oxidation. For example, in certain embodiments, GO comprises a Carbon to Oxygen ratio (C:O ratio) between 2.1 and 2.9.

In certain embodiments, reduced graphite oxide or reduced graphene oxide, collectively referred to herein as rGO, comprises graphene.

In certain embodiments, a carbonaceous composition comprises a given type or quality. For example, in certain embodiments, a carbonaceous composition comprises a graphite feedstock. In certain embodiments, the graphite feedstock includes various grades or purities (e.g., carbon content measured as, for example, weight-% graphitic carbon (C_{g})), types (e.g., amorphous graphite (e.g., 60-85% carbon), flake graphite (e.g., greater than 85% carbon) or vein graphite (e.g., greater than 90% carbon)), sizes (e.g., mesh size), shapes (e.g., large flake, medium, flake, powder or spherical graphite), and origin (e.g., synthetic or natural, such as, for example, natural flake graphite). In certain embodiments, such characteristic(s) (e.g., physical and chemical properties) affect the type or quality of the oxidized form of the carbonaceous composition. For example, in certain embodiments, the mesh size of the graphite affects the resulting GO. In certain embodiments, the graphite has a grade or carbon content of greater than or equal to about 1%, 2%, 5%, 10%, 15%, 20%, 30%, 40%, 50%, 60%, 70%, 80%, 90%, 91%, 92%, 93%, 94%, 95%, 96%, 97%, 98%, 99%, or 100% (e.g., by weight). In certain embodiments, the graphite has a grade or carbon content of less than about 100%, 99%, 98%, 97%, 96%, 95%, 94%, 93%, 92%, 91%, 90%, 85%, 80%, 70%, 60%, 50%, 40%, 30%, 20%, 15%, 10%, 5%, 2%, or 1% (e.g., by weight). In certain embodiments, the graphite has such grades or carbon contents at a mesh size of greater than or equal to about -200, -150, -100, -80, -50, -48, +48, +80, +100, +150, or +200 mesh size.

In certain embodiments, a carbonaceous composition is processed into one or more types of oxidized form(s) of the carbonaceous composition. For example, in certain embodiments, different oxidized forms or different types of the same oxidized form are generated depending on reaction conditions and/or configuration/operation of the devices and systems herein (e.g., as a result of how the machine in **FIG. 1** works). In some embodiments, such factors influence the resulting synthesis product alone or in combination with the feedstock type or quality (e.g., graphite input specifications). In an example, graphite feedstock is transformed to single-layer GO or multi-layer GO. In certain embodiments, the two types of GO have different properties and/or end products/uses. In certain embodiments, the properties include, for example, physicochemical properties and/or performance characteristics (e.g., conductivity or purity). For example, in certain embodiments, single-layer GO and multi-layer GO have different conductive properties.

In certain embodiments, end products/uses for single-layer GO and multi-layer GO, or materials derived therefrom (e.g., ICCN, graphene, etc.) include, for example, energy conversion/storage (e.g., (super)capacitors, batteries, fuel cells, photovoltaics, or thermoelectrics), catalysis, sensing (e.g., chemical and biological sensing), scaffolds/support, nanofillers, lightweighting and structural materials (e.g., graphene chassis/parts or turbine blades), optical electronics (e.g., touchscreens), semiconductors (e.g., graphene combined with molybdenite (MoS₂)), information storage, transparent materials, superconductors (e.g., graphene interspersed with magnesium diboride (MgB₂)), medical treatment and/or biochemical assays (e.g., DNA analysis), nonlinear optical materials, filtration and/or water purification, coatings, paper (e.g., graphene oxide paper), lenses, and so on. In an example, in certain embodiments, end products/uses for single-layer GO include hybrid supercapacitors and/or lithium-ion batteries, and end products/uses for multi-layer GO includes high density supercapacitors. In certain embodiments, the GO is further transformed or processed prior to such uses. In certain embodiments, when a given GO feedstock is further processed, the resulting material(s) have certain physicochemical and/or performance characteristics. For example, in certain embodiments, GO is used as a feedstock for manufacture of graphene, interconnected corrugated carbon-based networks (ICCNs) (each comprising a plurality of expanded and interconnected carbon layers), or other materials derived from GO (e.g., graphene in conjunction with other two-dimensional crystals (e.g., boron nitride, niobium diselenide or tantalum (IV) sulphide), graphene or ICCN composite materials, etc.). In certain embodiments, the resulting material has different properties (e.g., capacitance during end use in a capacitor, characteristics during end use in a battery, etc.) that depend on the type of GO feedstock. In certain embodiments, the end products/uses herein include, for example, end products/uses of graphene oxide and/or various rGOs (e.g., graphene).

In certain embodiments, the method for synthesis (e.g., the method of **FIG. 6**) comprises providing a carbonaceous composition and producing a first oxidized form of the carbonaceous composition by a first transformation of the carbonaceous composition over a first time period. In certain embodiments, the first time period is equal to or less than about 5, 10, 15, 20, 25, 30, 35, 40, 45, 50, 55, 60, 65, 70, 75, 80, 85, 90, 95, 100, 110, 120, 130, 140, 150, 160, 170, 180, 190, 200, 250, 300, 350, 400, 450, or 500 minutes. In certain embodiments, a first time period is about 10 minutes to about 20 minutes, about 10 minutes to about 30 minutes, about 10 minutes to about 40 minutes, about 10 minutes to about 50 minutes, about 10 minutes to about 60 minutes, about 10 minutes to about 70 minutes, about 10 minutes to about 80 minutes, about 10 minutes to about 90 minutes, about 10 minutes to about 100 minutes, about 20 minutes to about 30 minutes, about 20 minutes to about 40 minutes, about 20 minutes to about 50 minutes, about 20 minutes to about 60 minutes, about 20 minutes to about 70 minutes, about 20 minutes to about 80 minutes, about 20 minutes to about 90 minutes, about 20 minutes to about 100 minutes, about 30 minutes to about 40 minutes, about 30 minutes to about 50 minutes, about 30 minutes to about 60 minutes, about 30 minutes to about 70 minutes, about 30 minutes to about 80 minutes, about 30 minutes to about 90 minutes, about 30 minutes to about 100 minutes, about 40 minutes to about 50 minutes, about 40 minutes to about 60 minutes, about 40 minutes to about 70 minutes, about 40 minutes to about 80 minutes, about 40 minutes to about 90 minutes, about 40 minutes to about 100 minutes, about 50 minutes to about 60 minutes, about 50 minutes to about 70 minutes, about 50 minutes to about 80 minutes, about 50 minutes to about 90 minutes, about 50 minutes to about 100 minutes, about 60 minutes to about 70 minutes, about 60 minutes to about 80 minutes, about 60 minutes to about 90 minutes, about 60 minutes to about 100 minutes, about 70 minutes to about 80 minutes, about 70 minutes to about 90 minutes, about 70 minutes to about 100 minutes, about 80 minutes to about 90 minutes, about 80 minutes to about 100 minutes, about 90 minutes to about 100 minutes, about 100 minutes to about 150 minutes, about 100 minutes to about 200 minutes, about 100 minutes to about 250 minutes, about 100 minutes to about 300 minutes, about 100 minutes to about 350 minutes, about 100 minutes to about 400 minutes, about 100 minutes to about 450 minutes, about 100 minutes to about 500 minutes, about 150 minutes to about 200 minutes, about 150 minutes to about 250 minutes, about 150 minutes to about 300 minutes, about 150 minutes to about 350 minutes, about 150 minutes to about 400 minutes, about 150 minutes to about 450 minutes, about 150 minutes to about 500 minutes, about 200 minutes to about 250 minutes, about 200 minutes to about 300 minutes, about 200 minutes to about 350 minutes, about 200 minutes to about 400 minutes, about 200 minutes to about 450 minutes, about 200 minutes to about 500 minutes, about 250 minutes to about 300 minutes, about 250 minutes to about 350 minutes, about 250 minutes to about 400 minutes, about 250 minutes to about 450 minutes, about 250 minutes to about 500 minutes, about 300 minutes to about 350 minutes, about 300 minutes to about 400 minutes, about 300 minutes to about 450 minutes, about 300 minutes to about 500 minutes, about 350 minutes to about 400 minutes, about 350 minutes to about 450 minutes, about 350 minutes to about 500 minutes, about 400 minutes to about 450 minutes, about 400 minutes to about 500 minutes, or about 450 minutes to about 500 minutes. In certain embodiments, a method for synthesis comprises providing a carbonaceous composition and producing a second oxidized form of the carbonaceous composition by a second transformation of the carbonaceous composition over a second time period. In certain embodiments, a difference between a method for producing a first oxidized form and a method for producing a second oxidized form comprises a difference in the duration of the time period (e.g. duration difference between the first and second time periods). In certain embodiments, a capacitor comprising the first oxidized form of the carbonaceous composition has at least about 2, 3, 4, 5, 6, 7, 8, 9, 10, 11, 12, 13, 14, 15, 16, 17, 18, 19, 20, 25, 30, 35, 40, 45, 50, 55, 60, 65, 70, 75, 80, 85, 90, 95, 100, 120, 140, 160, 180, or 200 times greater capacitance than when comprising a second oxidized form of the carbonaceous composition produced by a second transformation of the carbonaceous composition over a second time period that is at least about 2, 3, 4, 5, 6, 7, 8, 9, 10, 11, 12, 13, 14, 15, 16, 17, 18, 19, 20, 25, 30, 35, 40, 45, or 50 times longer than the first time period. In certain embodiments, a capacitor comprising the first oxidized form of the carbonaceous composition has a greater capacitance than when comprising a second oxidized form of the carbonaceous composition produced by a second transformation of the carbonaceous composition over a second time period that is longer than the first time period over a range of reaction conditions. In certain embodiments, a capacitor comprising the first oxidized form of the carbonaceous composition has at least about 2 times greater capacitance than when comprising a second oxidized form of the carbonaceous composition produced by a second transformation of the carbonaceous composition over a second time period that is at least about 5 times longer than the first time period. In certain embodiments, a capacitor comprising the first oxidized form of the carbonaceous composition has at least about 10 times greater capacitance than when comprising the second oxidized form of the carbonaceous composition. In certain embodiments, a capacitor comprising the first oxidized form of the carbonaceous composition has at least about 50 times greater capacitance than when comprising the second oxidized form of the carbonaceous composition. In certain embodiments, the second time period is at least about 8 times longer than the first time period. In certain embodiments, the capacitance is at least about 10 times greater over a range of reaction conditions. In certain embodiments, the method further comprises tuning the reaction conditions to further increase the capacitance. In certain embodiments, a time period (e.g., a first or second time period) for a transformation (e.g., a reaction) ends when the reaction is quenched (e.g., when ice and hydrogen peroxide are added to an oxidation reaction comprising a carbonaceous composition, sulfuric acid, and potassium permanganate).

In certain embodiments, aspects of the disclosure described in relation to an oxidized form of the carbonaceous composition equally apply to a material derived from the oxidized form of the carbonaceous composition at least in some configurations, and vice versa. In an example, in certain embodiments, a capacitor (e.g., a double layer capacitor/supercapacitor) comprising the first oxidized form of the carbonaceous composition or a material derived therefrom (e.g., a reduced form of the first oxidized carbonaceous composition) has at least about 2, 5, 10, 15, 20, 25, 30, 35, 40, 45, 50, 55, 60, 65, 70, 75, 80, 85, 90, 95, 100, 120, 140, 160, 180, or 200 times greater capacitance than when comprising the second oxidized form of the carbonaceous composition or a material derived therefrom (e.g., a reduced form of the second oxidized carbonaceous composition). In another example, in certain embodiments, an apparatus of the disclosure forms an oxidized form of a carbonaceous composition and/or a material derived therefrom (e.g., a reduced form of the oxidized carbonaceous composition) at a rate of greater than or equal to about 100 grams (g) per year, 200 g per year, 500 g per year, 750 g per year, 1 kilogram (kg) per year, 10 kg per year, 25 kg per year, 50 kg per year, 75 kg per year, 0.1 tpy, 0.2 tpy, 0.3 tpy, 0.4 tpy, 0.5 tpy, 0.6 tpy, 0.7 tpy, 0.8 tpy, 0.9 tpy, 1 tpy, 2 tpy, 3 tpy, 4 tpy, 5 tpy, 10 tpy, 25 tpy, 50 tpy, 75 tpy, 100 tpy, 200 tpy, 500 tpy, 750 tpy, 1,000 tpy (1 ktpy), 2,000 tpy, 3,000 tpy, 4,000 tpy, 5,000 tpy, 6,000 tpy, 7,000 tpy, 8,000 tpy, 9,000 tpy, 10,000 tpy. or more.

In certain embodiments, a capacitor comprising electrodes comprising a graphite oxide, graphene oxide, or a material derived therefrom synthesized according to the systems and methods described herein provides a peak capacitance of at least about 10, 20, 30, 40, 50, 60, 70, 80, 90, 100, 110, 120, 130, 140, 150, 160, 170, 180, 190, 200, 250, 300, 350, 400, 450, 500, 550, 600, 650, 700, 750, 800, 850, 900, 950, or 1000 mF/cm² at a scan rate of about 1, 2, 3, 4, 5, 6, 7, 8, 9, 10, 11, 12, 13, 14, 15, 16, 17, 18, 19, 20, 25, 30, 35, 40, 45, or 50 mV/s. In certain embodiments, a capacitor comprising electrodes comprising a reduced graphene oxide or reduced graphite oxide synthesized according to the systems and methods described herein provides a peak capacitance of at least about 10, 20, 30, 40, 50, 60, 70, 80, 90, 100, 110, 120, 130, 140, 150, 160, 170, 180, 190, 200, 250, 300, 350, 400, 450, 500, 550, 600, 650, 700, 750, 800, 850, 900, 950, or 1000 mF/cm² at a scan rate of about 1, 2, 3, 4, 5, 6, 7, 8, 9, 10, 11, 12, 13, 14, 15, 16, 17, 18, 19, 20, 25, 30, 35, 40, 45, or 50 mV/s. In certain embodiments, a capacitor comprising electrodes comprising a graphite oxide, graphene oxide, or a material derived therefrom synthesized according to the systems and methods described herein provides a peak capacitance of at least about 200 mF/cm² at a scan rate of about 10 mV/s. In certain embodiments, a capacitor comprising electrodes comprising the reduced graphite oxide or reduced graphene oxide synthesized according to the systems and methods described herein provides a peak capacitance of at least about 200 mF/cm² at a scan rate of about 10 mV/s. In certain embodiments, a device comprising an electrode comprising the graphite oxide, graphene oxide, or a material derived therefrom synthesized according to the systems and methods described herein provides at least about 56 times greater capacitance than a device comprising graphite oxide, graphene oxide, or a material derived therefrom synthesized using a different system or method. In certain embodiments, a device comprising an electrode comprising the reduced graphite oxide or reduced graphene oxide synthesized according to the systems and methods described herein provides at least about 56 times greater capacitance than a device comprising reduced graphite oxide or reduced graphene oxide synthesized using a different system or method. In certain embodiments, the device is a capacitor (e.g., a supercapacitor).

In certain embodiments, the carbonaceous composition comprises graphite. In certain embodiments, the first oxidized form of the carbonaceous composition comprises graphite oxide or graphene oxide. In certain embodiments, the second oxidized form of the carbonaceous composition comprises graphite oxide or graphene oxide. In certain embodiments, the method further comprises reducing the first oxidized form of the carbonaceous composition back to the carbonaceous composition or to another de-oxidized carbonaceous composition substantially similar to or different from the carbonaceous composition (e.g., rGO).

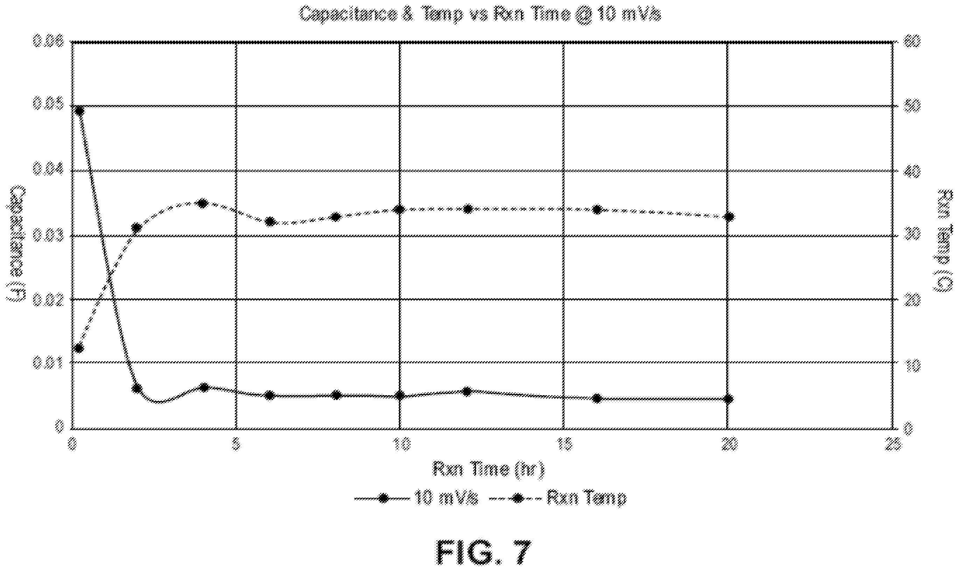

**FIG. 7** shows an example of a measurement of capacitance versus reaction time. Reaction conditions included: 6x mass ratio Ox:Gr, self-heated (exothermic), 0-20 hours. Peak capacitance at 10 mV/s was 49 mF/cm² at 20 minutes. In this example, allowing the reaction to self-heat and proceed for an extended period of time produces devices with lower capacitances over that time. In some embodiments, during the first transformation, increasing a time during which a self-heated reaction is allowed to proceed decreases maximum capacitance over that time.

In some embodiments, the self-heated reaction is initiated by adding potassium permanganate (KMnO₄) to a mixture comprising graphite and concentrated sulfuric acid at a temperature of about 0 °C.

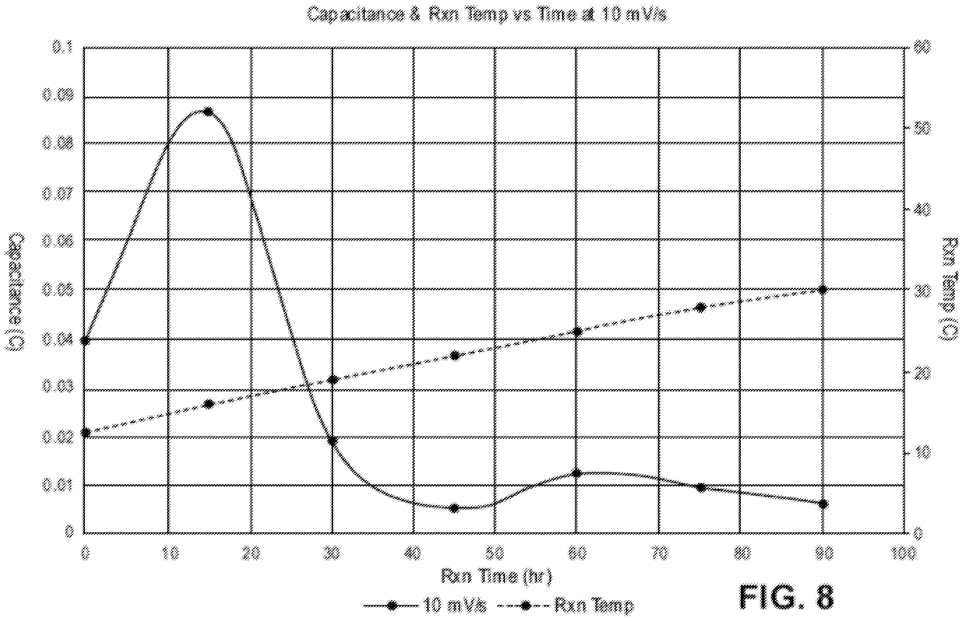

**FIG. 8** shows another example of a measurement of capacitance versus reaction time. Reaction conditions included: 6x mass ratio Ox:Gr, self-heated (exothermic), 0-2 hours. Peak capacitance at 10 mV/s was 87 mF/cm² at 15 minutes. In this example, shorter reaction times lead to higher capacitances by retaining a more pristine sp2 structure of graphene with less oxidative damage. In some embodiments, during the first transformation, decreasing a reaction time of an at least partially self-heated reaction increases maximum capacitance by retaining a more suitable structure of the carbonaceous composition with less oxidative damage.

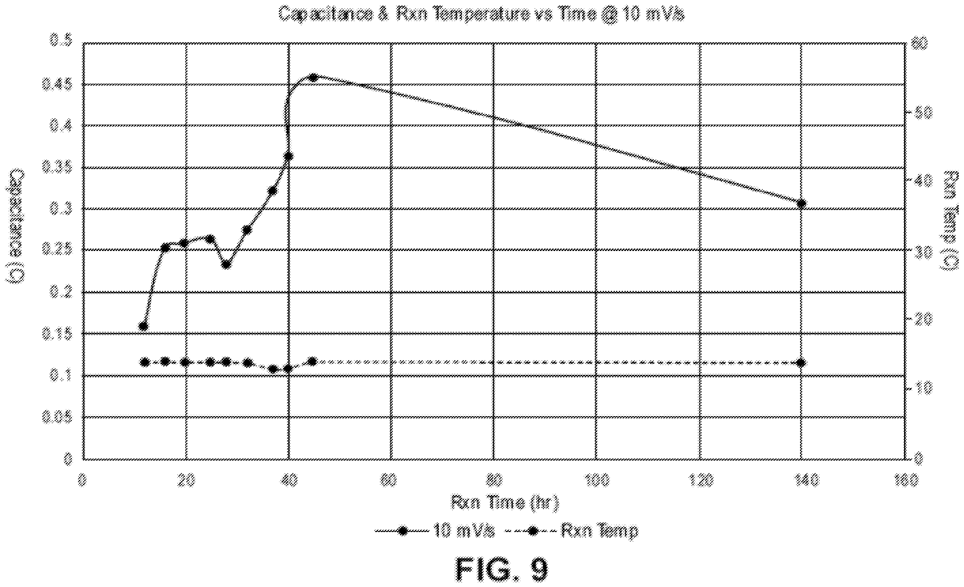

**FIG. 9** shows yet another example of a measurement of capacitance versus reaction time. Reaction conditions included: 6x mass ratio Ox:Gr, cooled by ice bath, 0-2 hours. Peak capacitance at 10 mV/s was 459 mF/cm² at 45 minutes. In this example, colder reaction temperatures lead to a greater window of opportunity to quench the reaction at the right time. In some embodiments, during the first transformation, decreasing a reaction temperature leads to a greater window of opportunity to quench the reaction at a suitable time. In certain embodiments, the method further comprises decreasing the reaction temperature through cooling by an ice bath. In certain embodiments, a reaction run below ambient reaction temperature (i) shows improved capacitance over a short period of time, (ii) leads to a safer, more controlled reaction, or (iii) a combination thereof. In certain embodiments, the ambient reaction temperature is the reaction temperature at ambient conditions.

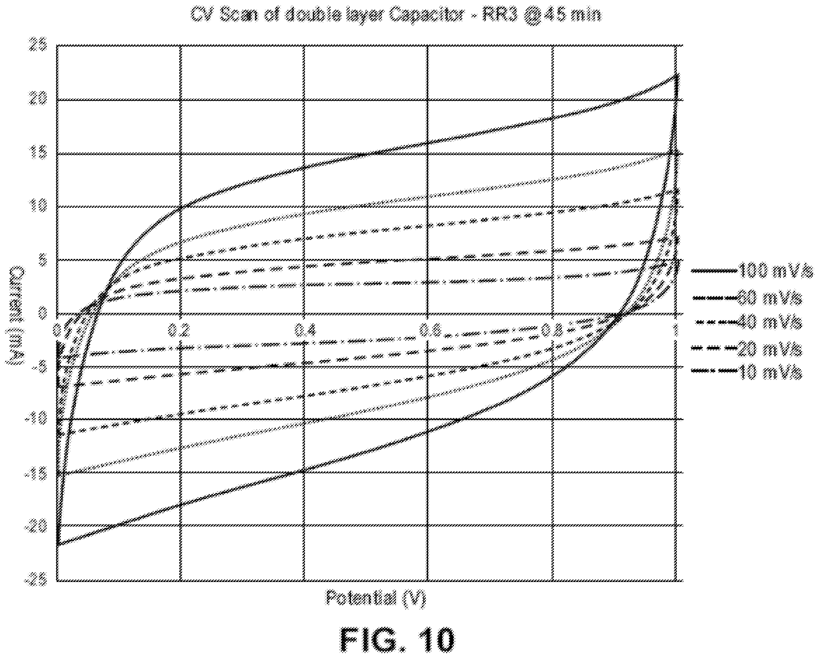

**FIG. 10** shows cyclic voltammetry (CV) scans of a double layer device (double layer capacitor) constructed from the sample in **FIG. 9**. Exemplary measurement values at various scan rates are listed in TABLE 2.

**TABLE 2**

| Scan Rate (mV/s) | Capacitance (mF) | Specific Capacitance (F/g) |
|---|---|---|
| 10 | 229 | 265 |
| 20 | 192 | 223 |
| 40 | 159 | 185 |
| 60 | 140 | 164 |
| 100 | 118 | 137 |

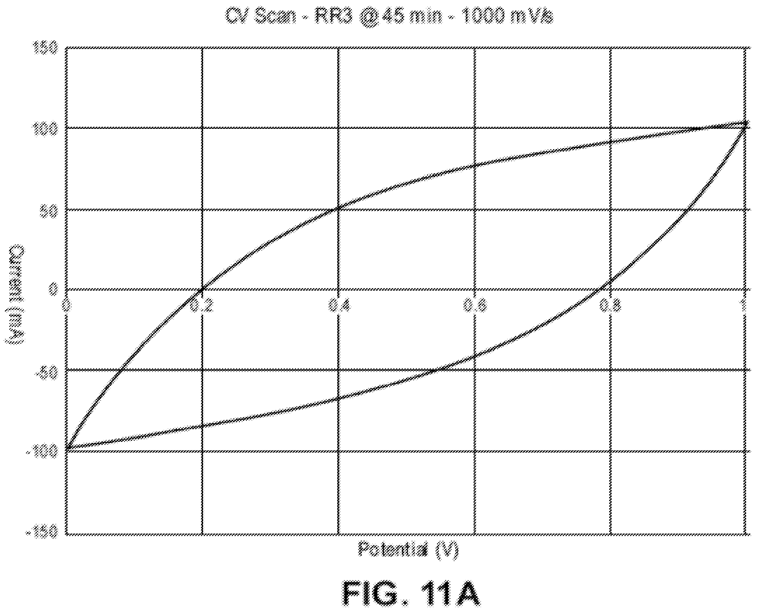

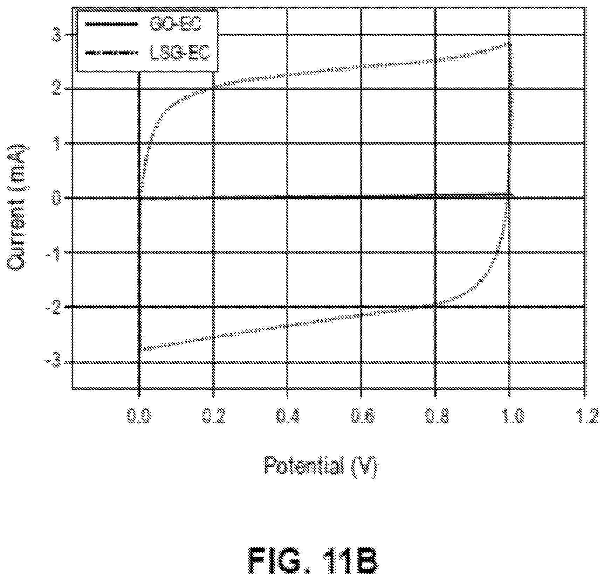

**FIGS. 11A-11B** provide a comparison of a cyclic voltammetry (CV) scan of a double layer device (double layer capacitor) constructed from the sample in **FIG. 9** at a scan rate of 1000 mV/s (**FIG. 11A**) with results of El-Kady M. F., et al., "Laser scribing of high-performance and flexible graphene-based electrochemical capacitors," Science, 335(6074), 1326 (2012), incorporated by reference herein with respect to the relevant portions therein (**FIG. 11B**). The device in **FIG. 11A** comprises one or more electrodes comprising a material derived from GO manufactured as described herein (e.g., in accordance with the method in **FIG. 6**). In certain embodiments, the device in **FIG. 11A** has a capacitance (e.g., peak capacitance at 1000 mV/s) that is at least about 35 times greater than a capacitance (e.g., peak capacitance at 1000 mV/s) of the device in **FIG. 11B****.** Other examples of enhanced capacitances using materials manufactured in accordance with the present disclosure are provided elsewhere herein.

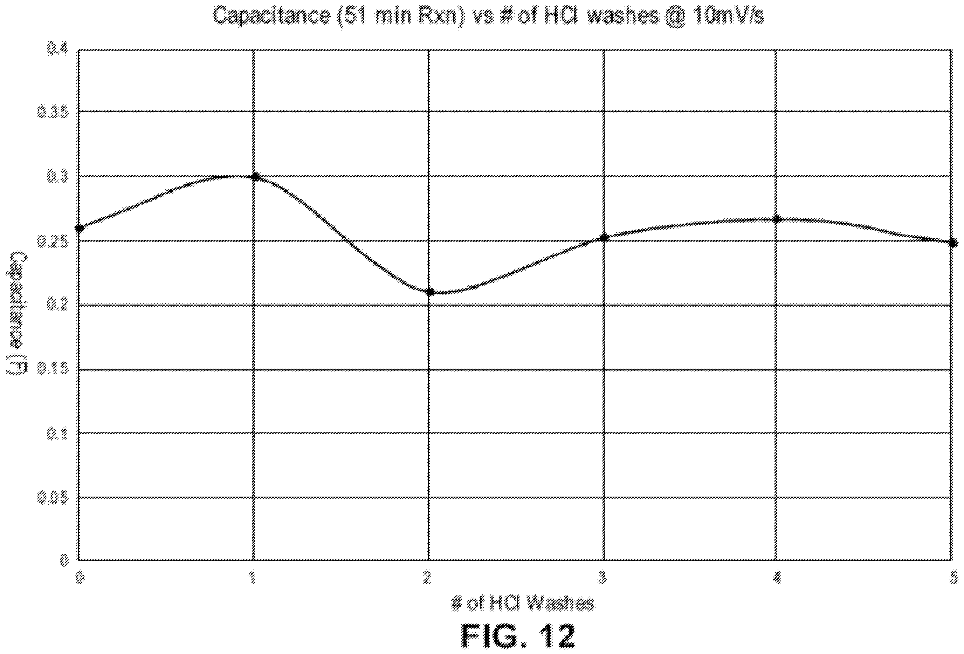

**FIG. 12** shows capacitance as a function of number of hydrochloric acid (HCl) washes. In this example, comparing the effects of washing the product (e.g., of the method of **FIG. 6**) with between 0-5 HCl washes shows that HCl washes are unnecessary. Reaction conditions included: 6x mass ratio Ox:Gr, cooled by ice bath, 0-1 hour, variable HCl washes. Peak capacitance at 10 mV/s was 261 mF/cm² at 31 minutes. An 11% variation in capacitance between all numbers of washes with no visible trend was observed.

In certain embodiments, a method for synthesis (e.g., the method of **FIG. 6**) comprises providing graphite, and transforming the graphite to graphite oxide without the aid of hydrochloric acid at least about 1, 2, 3, 4, 5, 6, 7, 8, 9, or 10 times faster than with the aid of hydrochloric acid. In certain embodiments, a method for synthesis comprises providing graphite, and transforming the graphite to graphite oxide without the aid of hydrochloric acid at least about 2 times faster than with the aid of hydrochloric acid. In some embodiments, the method comprises transforming the graphite to graphite oxide without the aid of hydrochloric acid at least about 5 times faster than with the aid of hydrochloric acid. In some embodiments, the method comprises transforming the graphite to graphite oxide without the aid of hydrochloric acid at least about 8 times faster than with the aid of hydrochloric acid.

In certain embodiments, the method comprises synthesizing graphite oxide at least about 1, 2, 3, 4, 5, 6, 7, or 8 times faster than modified Hummers method. In certain embodiments, the method comprises synthesizing graphite oxide at least about 8 times faster than modified Hummers method. In certain embodiments, the graphite oxide is synthesized in less or equal to about 1 week. In certain embodiments, the method produces less waste per mass graphite oxide produced than modified Hummers method. In certain embodiments, the method produces repeatable results. In certain embodiments, the graphite oxide is synthesized without air drying.

In some embodiments, hydrochloric acid is not consumed in the synthesis of the graphite oxide herein. In certain embodiments, hydrochloric acid washes used for purification by modified Hummers method are eliminated, thereby leading to faster purification compared to the modified Hummers method. In certain embodiments, subjecting the graphite oxide to one or more hydrochloric acid washes has substantially no effect on capacitance. In certain embodiments, removal of hydrochloric acid from purification steps shows no loss of capacitance, significantly reduce cost of the graphite oxide, expedite purification procedure, or any combination thereof. In certain embodiments, the method comprises synthesizing graphite oxide at a cost per mass of graphite oxide of at least about 1, 2, 3, 4, 5, 6, 7, 8, 9, or 10 times less than modified Hummers method. In one example, the method comprises synthesizing graphite oxide at a cost per mass of graphite oxide of at least about 4 times less than modified Hummers method.

In certain embodiments, the method comprises a set of exact steps that lead to acceptable and reproducible synthesis product each time the synthesis is performed. In certain embodiments, the method allows human error and/or reliance on human judgement to be reduced by eliminating one or more synthesis steps associated therewith. In certain embodiments, the human error and/or reliance on human judgement is associated with controlling a rate of addition of water and/or ice over time.

In certain embodiments, the method comprises synthesizing graphite oxide at an average or maximum temperature of (i) less than about 45 °C or (ii) at least about 30°C less than an average or maximum temperature used in modified Hummers method. In certain embodiments, the reduced average or maximum temperature reduces a risk of explosion, thereby increasing safety.

In certain embodiments, a batch of graphite oxide (e.g., 1 g of graphite oxide) is produced by: (a) adding 15g graphite to 750 ml concentrated sulfuric acid at a first temperature of about 0 °C, wherein the first temperature is maintained using an ice bath; (b) adding 90g potassium permanganate (KMnO₄) while maintaining a second temperature of less than about 15°C; (c) stirring the mixture in (b) for about 45 minutes; (d) quenching by adding the mixture in (c) to 2.6 kg ice and then adding 75 ml of 30% H₂O₂; and (e) purifying by 5 H₂O washes, followed by about 1 week of continuous-flow dialysis. In certain embodiments, the addition in (b) leads to an exothermic reaction.

In certain embodiments, the methods herein includes procedures of making oxidized forms of carbonaceous compositions, procedures of making materials derived from the oxidized forms of carbonaceous compositions, or both. For example, in certain embodiments, the methods herein include procedure(s) of making both GO and graphene/reduced graphite oxide. In certain embodiments, GO is formed from graphite in a first reaction. In certain embodiments, the first reaction includes an oxidation (e.g. oxidation reaction). In certain embodiments, the GO is treated (e.g., filtered/purified, concentrated if end product, etc.). In certain embodiments, the GO is reduced (e.g., to graphene, ICCN, or any other materials derived through reduction of GO) in a second reaction In certain embodiments, the second reaction includes a reduction. For example, in certain embodiments, the GO is reduced to form graphene and/or other reduced forms of GO, collectively referred to herein as reduced graphite oxide (rGO). In certain embodiments, rGO includes reduced forms graphite oxide and/or graphene oxide. In certain embodiments, any aspects of the disclosure described in relation to graphene equally apply to rGO at least in some configurations, and vice versa. In certain embodiments, the rGO (e.g., graphene) is treated.

In some embodiments, single-layer GO is manufactured. In certain embodiments, the manufacture or method (e.g., first reaction) uses about 32 liters (L) 98% sulfuric acid per kg graphite. In certain embodiments, about 4.8 kg potassium permanganate powder per kg graphite is used. In certain embodiments, the method includes include cooking time. In certain embodiments, the method does not include cooking time. In certain embodiments, the method includes given temperatures and process(es). In certain embodiments, the method includes, from the beginning of the reaction, about 1.5 hour of addition of potassium permanganate (reaction temperature less than about 15°C), about 2 hours of reaction time (reaction temperature range of about 20-30°C), about 1 hour of addition of about 32 kg ice (reaction temperature of about 50°C), and about 1 hour reaction time (reaction temperature of about 50°C). In certain embodiments, about 72 kg ice per kg graphite is used to quench reaction and/or for ice for reaction cooling. In certain embodiments, about 2 L 30% hydrogen peroxide per kg of graphite is used to quench reaction and/or for neutralizing. In certain embodiments, the graphite is a given type. In certain embodiments, the graphite comprises 325sh natural flake graphite. In certain embodiments, mixing speed (e.g., during one or more reaction processes) is about 100 rpm. In certain embodiments, the method includes timing the mixing of ingredients. In certain embodiments, sulfuric acid and graphite are premixed to minimize graphite dust and then added to the reactor rapidly. In certain embodiments, the addition of potassium permanganate results in an exothermic reaction. In certain embodiments, the potassium permanganate is added at a rate slow enough to keep the reaction temperature below about 15°C (e.g., the potassium permanganate is added over approximately 1.5 hours). In certain embodiments, the potassium permanganate is added at a rate slow enough in combination with a cooling mechanism (e.g. cooling pipes and/or addition of ice) to keep the reaction temperature below about 15°C.

In some embodiments, multi-layer GO is manufactured. In certain embodiments, manufacture or method (e.g., first reaction) uses about 25 L 98% sulfuric acid per kg graphite. In certain embodiments, about 2 kg potassium permanganate per kg graphite oxide is used. In certain embodiments, the method includes cooking time. In certain embodiments, the method does not include cooking time. In certain embodiments, method includes given temperatures and process(es). In certain embodiments, method includes addition of potassium permanganate over 45 minutes (reaction temperature less than about 15°C) and a 30 minute reaction time (reaction temperature of about 15°C). In certain embodiments, about 125 kg ice per kg graphite is used to quench reaction and/or for ice for reaction cooling. In certain embodiments, about 1 L 30% hydrogen peroxide per kg of graphite is used to quench reaction and/or for neutralizing. In certain embodiments, graphite is a given type. In certain embodiments, graphite is highly exfoliated and milled, small flake, large surface area graphite, 9 micron flakes, or any combination thereof. In certain embodiments, mixing speed (e.g., during one or more reaction processes) is about 100 rpm. In certain embodiments, the method includes timing the mixing of ingredients. In certain embodiments, sulfuric acid and graphite are premixed to minimize graphite dust and then added to the reactor rapidly. In certain embodiments, addition of potassium permanganate results in an exothermic reaction. In certain embodiments, the potassium permanganate is added at a rate slow enough to keep the reaction temperature below about 15°C (e.g., the potassium permanganate is added over approximately 1.5 hours).

In certain embodiments, a first filtration is performed after the first reaction. In certain embodiments, the first filtration includes post-oxidation purification. In certain embodiments, the purpose or goal of the first filtration (e.g., regardless it how it is done) is to remove impurities from the crude product and bring the pH up to at least about 5. In certain embodiments, the after oxidation (reaction 1), the crude product contains GO as well as one or more (e.g., several) impurities such as, for example, sulfuric acid, manganese oxides, and manganese sulfate. In certain embodiments, after purification is complete, the GO is then concentrated to, for example, a solution of about 1% by weight. In certain embodiments, water and/or acid from first reaction is removed during filtration. In certain embodiments, after the first reaction, the acid concentration is about 30% (single-layer) or about 16% (multi-layer) sulfuric acid, corresponding to a pH of approximately 0. In certain embodiments, filtration is complete when the pH reaches about 5, corresponding to an acid concentration of about 0.00005%. In certain embodiments, a given amount or degree of concentration is needed for GO sales and/or straight graphene use (e.g., if used as feedstock for second reaction). In certain embodiments, the GO (e.g., most GO) is sold or used in dry powder form and/or an aqueous solution of about 2% (by weight). In some embodiments, the oxidized form of the carbonaceous composition is filtered via a first filtration at a rate of greater than or equal to about 100 grams (g) per year, 200 g per year, 500 g per year, 750 g per year, 1 kilogram (kg) per year, 10 kg per year, 25 kg per year, 50 kg per year, 75 kg per year, 0.1 tpy, 0.2 tpy, 0.3 tpy, 0.4 tpy, 0.5 tpy, 0.6 tpy, 0.7 tpy, 0.8 tpy, 0.9 tpy, 1 tpy, 2 tpy, 3 tpy, 4 tpy, 5 tpy, 10 tpy, 25 tpy, 50 tpy, 75 tpy, 100 tpy, 200 tpy, 500 tpy, 750 tpy, 1,000 tpy (1 ktpy), 2,000 tpy, 3,000 tpy, 4,000 tpy, 5,000 tpy, 6,000 tpy, 7,000 tpy, 8,000 tpy, 9,000 tpy, 10,000 tpy, or more. In certain embodiments, the oxidized form of the carbonaceous composition is filtered using a first reaction filter as a batch process. In certain embodiments, as described in greater detail elsewhere herein, the methods, devices, and systems herein are scalable. In some embodiments, the first reaction filter is used to filter the oxidized form of the carbonaceous composition at a rate of greater than or equal to about 1 g, 2 g, 4 g, 6 g, 8 g, 10 g, 25 g, 50 g, 75 g, 100 g, 250 g, 500 g, 750 g, 1 kg, 2 kg, 4 kg, 6 kg, 8 kg, 10 kg, 15 kg, 25 kg, 50 kg, 75 kg, 100 kg, 250 kg, 500 kg, 750 kg, 1 tonne (t), 2 t, 4 t, 6 t, 8 t, 10 t, 15 t, 25 t, 50 t, 75 t, 100 t, 250 t, 500 t, 750 t, or 1,000 t per batch.

In certain embodiments, a second reaction includes reduction of GO to form graphene (reduced graphite oxide). For example, in certain embodiments, after the first purification, the sulfuric acid concentration of the product is about 0.00005 % with a pH of about 5. In certain embodiments, the concentration of GO in the solution is about 1 % by mass (1 kg GO in 100 L of aqueous solution). In certain embodiments, the manufacture or method (e.g., second reaction) uses about 20 L of 30% hydrogen peroxide per kg of GO (in 100 liters of solution) and about 4.95 kg of sodium ascorbate (sodium salt of ascorbic acid) per kg GO (in 100 liters of solution). In certain embodiments, the method includes cooking time. In certain embodiments, the method does not include cooking time. In certain embodiments, the method includes given temperatures and process(es). In certain embodiments, the method includes heating the reaction to about 90°C and adding hydrogen peroxide over the course of an hour. In certain embodiments, the reaction continues to heat at about 90°C for about 3 more hours. In certain embodiments, sodium ascorbate is added over the course of about 30 minutes. In certain embodiments, the reaction continues to heat at about 90°C for approximately an additional 1.5 hours. In certain embodiments, the total time at 90°C is about 6 hours. In certain embodiments, the mixing speed (e.g., during one or more reaction processes) is about 200 rpm. In some embodiments, the apparatus form the reduced form of the carbonaceous composition at a rate of greater than or equal to about 100 grams (g) per year, 200 g per year, 500 g per year, 750 g per year, 1 kilogram (kg) per year, 10 kg per year, 25 kg per year, 50 kg per year, 75 kg per year, 0.1 tpy, 0.2 tpy, 0.3 tpy, 0.4 tpy, 0.5 tpy, 0.6 tpy, 0.7 tpy, 0.8 tpy, 0.9 tpy, 1 tpy, 2 tpy, 3 tpy, 4 tpy, 5 tpy, 10 tpy, 25 tpy, 50 tpy, 75 tpy, 100 tpy, 200 tpy, 500 tpy, 750 tpy, 1,000 tpy (1 ktpy), 2,000 tpy, 3,000 tpy, 4,000 tpy, 5,000 tpy, 6,000 tpy, 7,000 tpy, 8,000 tpy, 9,000 tpy, 10,000 tpy, or more. In certain embodiments, the second reaction system is used for batch manufacturing, synthesis, or processing (i.e., run as a batch process). In certain embodiments, as described in greater detail elsewhere herein, the methods, devices, and systems herein are scalable. In some embodiments, the second reaction system forms the oxidized form of the carbonaceous composition at a rate of greater than or equal to about 1 g, 2 g, 4 g, 6 g, 8 g, 10 g, 25 g, 50 g, 75 g, 100 g, 250 g, 500 g, 750 g, 1 kg, 2 kg, 4 kg, 6 kg, 8 kg, 10 kg, 15 kg, 25 kg, 50 kg, 75 kg, 100 kg, 250 kg, 500 kg, 750 kg, 1 tonne (t), 2 t, 4 t, 6 t, 8 t, 10 t, 15 t, 25 t, 50 t, 75 t, 100 t, 250 t, 500 t, 750 t, or 1,000 t per batch.

In certain embodiments, a second filtration is performed after the second reaction. In certain embodiments, after the second reaction, there are several impurities such as, for example, sodium ascorbate, plus small amounts of sulfuric acid, manganese oxides and manganese salts. In certain embodiments, the purpose or goal of the first filtration (e.g., regardless it how it is done) is to remove the impurities (e.g., those salts) from the solution. In certain embodiments, the water, acid, and/or salts is left over from the second reaction. For example, in certain embodiments, there are about 4.95 kg of sodium ascorbate per kg of GO left over in solution from the second reaction, plus the remaining small amounts of sulfuric acid, manganese oxides, and manganese salts from the initial oxidation (e.g., first reaction). In certain embodiments, the conductivity of the solution after reduction is greater than about 50, 60, 70, 80, 90, 100, 110, 120, 130, 140, 150, 160, 170, 180, 190, 200, 250, 300, 350, 400, 450, or 500 mS/cm. In certain embodiments, the conductivity of the solution after reduction is greater than about 200 mS/cm. In certain embodiments, the rGO solution is washed with de-ionized (DI) water (e.g., with copious amounts of DI water) until the conductivity of the rGO solution reaches about 50 µS/cm or less. In certain embodiments, the rGO solution is washed using a second reaction filter or second reaction filtration process. In certain embodiments, a given amount or degree of concentration is needed for straight rGO (e.g., graphene) use. For example, in certain embodiments, a concentration of about 2% by weight or greater is needed. In some embodiments, the reduced form of the carbonaceous composition is filtered using a second reaction filter at a rate of greater than or equal to about 100 grams (g) per year, 200 g per year, 500 g per year, 750 g per year, 1 kilogram (kg) per year, 10 kg per year, 25 kg per year, 50 kg per year, 75 kg per year, 0.1 tpy, 0.2 tpy, 0.3 tpy, 0.4 tpy, 0.5 tpy, 0.6 tpy, 0.7 tpy, 0.8 tpy, 0.9 tpy, 1 tpy, 2 tpy, 3 tpy, 4 tpy, 5 tpy, 10 tpy, 25 tpy, 50 tpy, 75 tpy, 100 tpy, 200 tpy, 500 tpy, 750 tpy, 1,000 tpy (1 ktpy), 2,000 tpy, 3,000 tpy, 4,000 tpy, 5,000 tpy, 6,000 tpy, 7,000 tpy, 8,000 tpy, 9,000 tpy, 10,000 tpy, or more. In certain embodiments, the second reaction filter is used for batch filtration and/or purification (i.e., run as a batch process). In certain embodiments, as described in greater detail elsewhere herein, the methods, devices, and systems herein are scalable. In some embodiments, the second reaction filter is used to filter the reduced form of the carbonaceous composition at a rate of greater than or equal to about 1 g, 2 g, 4 g, 6 g, 8 g, 10 g, 25 g, 50 g, 75 g, 100 g, 250 g, 500 g, 750 g, 1 kg, 2 kg, 4 kg, 6 kg, 8 kg, 10 kg, 15 kg, 25 kg, 50 kg, 75 kg, 100 kg, 250 kg, 500 kg, 750 kg, 1 tonne (t), 2 t, 4 t, 6 t, 8 t, 10 t, 15 t, 25 t, 50 t, 75 t, 100 t, 250 t, 500 t, 750 t, or 1,000 t per batch.

In some embodiments, the second reaction is performed separately from the first reaction. For example, in certain embodiments, the second reaction, in some cases followed by the second filtration, is performed using any graphite oxide feedstock with suitable specifications.

In certain embodiments, one or more of the first reaction, first filtration, second reaction, and second filtration (or oxidation, purification, reduction and final purification) is performed using the devices and systems herein. In certain embodiments, the devices and systems herein are suitably configured for any given processing step or procedure (e.g., temperature, reaction cooling, rate of addition of reagents, etc., is adjusted). For example, in certain embodiments, the mixing bowl and the tank contents (e.g., mass and/or type of substance(s)) and/or size are adjusted to perform the second reaction (e.g., instead of the first reaction). In certain embodiments, the first reaction is performed in a first system. In certain embodiments, the first filtration is performed in the first system or separately from the first system. In certain embodiments, the second reaction is performed in a second system. In certain embodiments, the second filtration is performed in the second system or separately from the second system. In some embodiments, the first and second systems are coupled (e.g., first system feeds into the second system). In certain embodiments, a plurality of devices and systems herein are coupled (e.g., in a tank house). In some embodiments, the first system is the same as the second system (e.g., the system is configured to be used for the first reaction first, cleaned or emptied, and then used for the second reaction). In certain embodiments, the first and second filtrations are performed in separate systems or in a single filter system. In certain embodiments, the first reaction, first filtration, second reaction, and second filtration are performed sequentially in a single overall process. In certain embodiments, the first reaction products are filtered in a first filtration without proceeding to the second reaction and/or second filtration. In certain embodiments, any combination of the first reaction, first filtration, second reaction, and second filtration processes are automated or semi-automated. Automation enables continuous production of GO/rGO to maximize the production rate while keeping labor costs down.

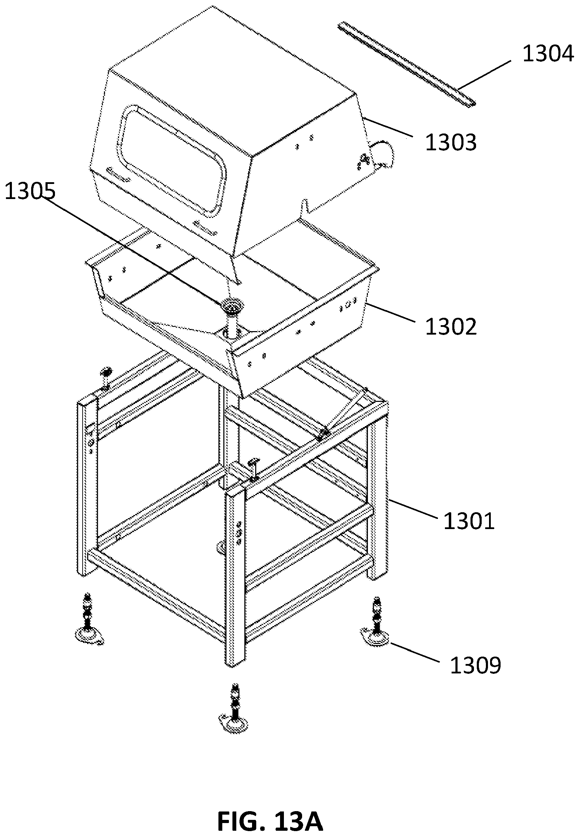

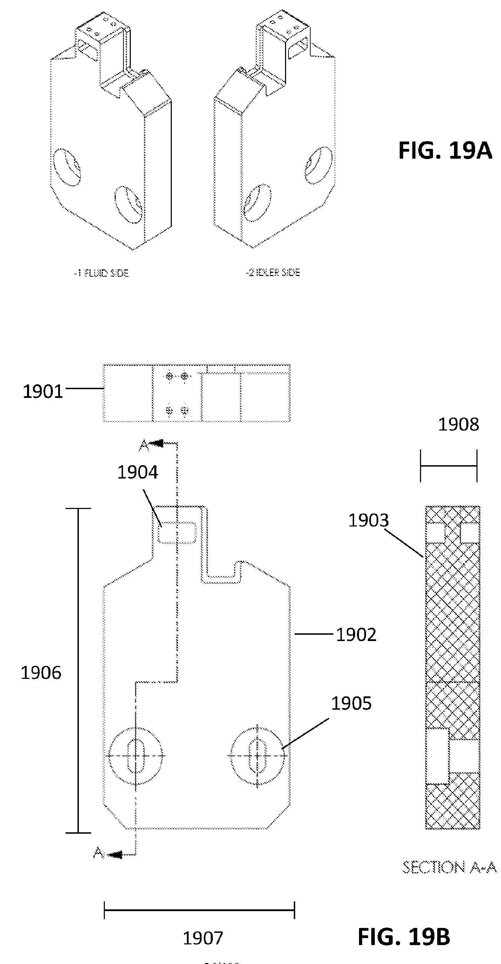

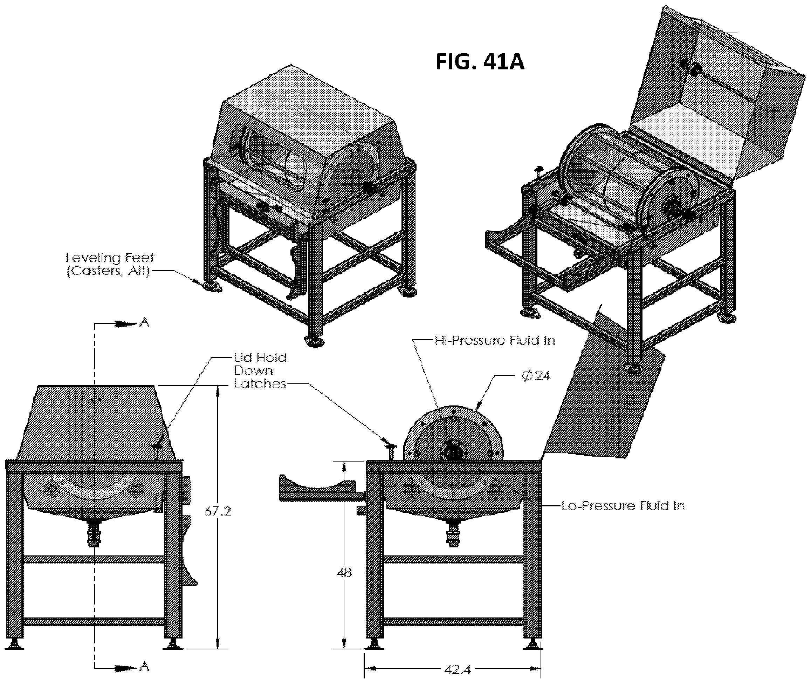

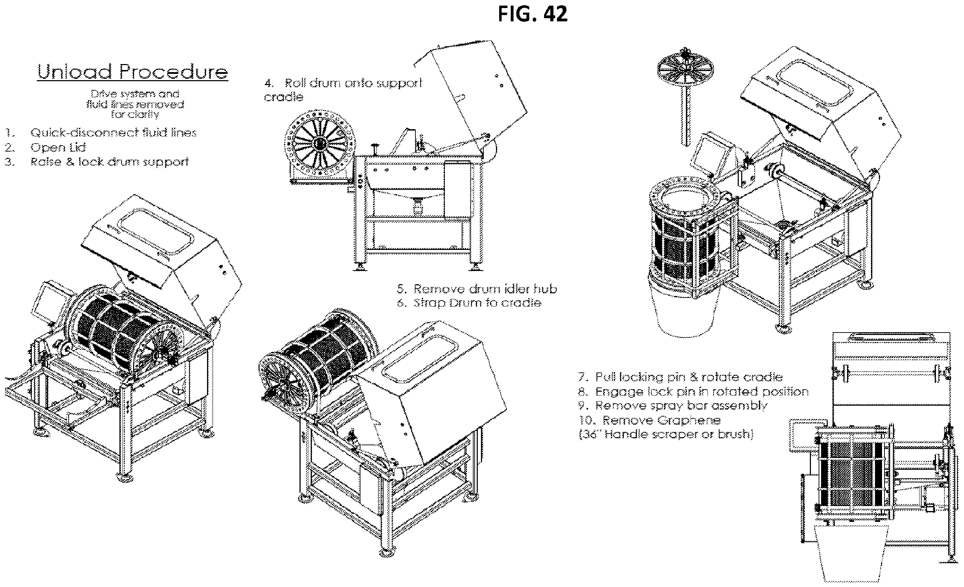

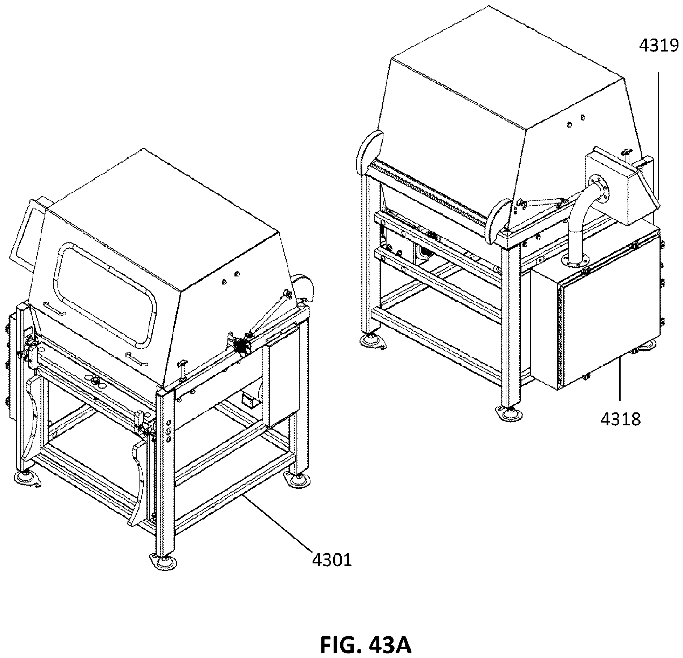

**FIGS. 41A-41B** provides an embodiment of a filtration system. In certain embodiments, the filtration system comprises a second reaction filter (e.g., used to implement the second filtration following the second reaction). In certain embodiments, the second reaction filter is an rGO/graphene second reaction filter. **FIG. 42** provides an example of operation of the systems in **FIGS. 41A-41B** and **FIGS. 43A-43F****.** In some embodiments, the rGO/graphene second reaction filter in **FIGS. 43A-43F** comprises or is at least in part formed from HDPE sheet **304** stainless steel. Further examples and detailed embodiments of filtration systems (e.g., of a second reaction filter) and methods are provided in **FIGS. 13A-13C****,** **FIGS. 14A-14B****,** **FIG. 15****,** **FIGS. 16A-16B****,** **FIG. 17****, FIGS. 18A-18B,** **FIGS. 19A-19B****,** **FIG. 20****,** **FIGS. 21A-21C****,** **FIG. 22****,** **FIG. 23****,** **FIG. 24****,** **FIGS. 25A-25B****,** **FIGS. 26A-26B****,** **FIG. 27****,** **FIGS. 28A-28C****,** **FIGS. 29A-****29B,** **FIGS. 30A-30D****,** **FIGS. 31-35****, FIG. 36A,** **FIG. 37**, and **FIGS. 38****-40.** In certain embodiments, the second reaction filter comprises one or more of the following: a frame assembly **4301**, a cradle pivot assembly **4302**, a drum cradle assembly **4303**, a drum assembly **4304**, a drive shaft **4305**, an idler shaft **4306**, a drive shroud **4307**, a drum shaft support **4308**, a drum shaft support idler side **4309** (not shown; see **FIG. 19A**), a motor mount plate **4310**, a machine key stock **4311**, a clamp collar **4312**, a flange bearing **4313**, a drive wheel **4314**, an idler wheel **4315**, a baldor motor **4316**, a clamp collar **4317**, an enclosure **4318**, a control enclosure **4319**, a drive shaft pulley **4320**, a drive shaft pulley **4321**, a drive belt **4322**, a hold down clamp **4323** (not shown), a sealing washer **4324**, a nut **4325**, hex bolts (**4326**, **4327**), flat washers (**4328**, **4329**), a nut **4330**, a socket head cap screw **4331**, and a hex bolt **4332** as shown in **FIGS. 43A-****43F**). In certain embodiments, the units for various spatial sizes or dimensions are in inches or centimeters. In certain embodiments, the units for angles are degrees. In some embodiments, unless otherwise specified, dimensions are in inches. In some embodiments, unless otherwise specified, tolerances are X = ±. 1, .XX = ±.01 and .XXX = ±.005 (decimals) and ±1° (angles). Scaling may or may not be as indicated.

In certain embodiments, a filtration system (e.g., a second reaction filter) comprises one or more subsystems or portions. In some embodiments, a filtration system (e.g., a second reaction filter such as, for example, an rGO/graphene second reaction filter) comprises a top assembly, a frame assembly, a lid assembly, a cradle pivot assembly, a drum cradle assembly, a drum assembly, a spray bar assembly, a drum end cap assembly, or any combination thereof. In certain embodiments, each such subsystem or portion in turn comprises one or more components. In certain embodiments, a filtration system comprises any component(s) of such subsystems or portions. In certain embodiments, such component(s) are organized in the aforementioned subsystems or portions. In certain embodiments, any components of a given subsystem or portion are provided as part of a different subsystem or portion (e.g., the components of the aforementioned subsystems or portions are reorganized in different subsystems or portions), substituted or omitted. Examples of subsystems/portions, components and quantities of components are provided in TABLE 3. It is understood that the subsystems/portions, components, and quantities of components as well as the dimensions and/or sizes shown in TABLE 3 (and elsewhere in the disclosure herein) are scalable (e.g. to increase or decrease the rate and/or output for processing/filtering carbonaceous compositions). In certain embodiments, aspects of the disclosure described in relation to a second reaction filter equally apply to a first reaction filter or other filter(s) herein at least in some configurations. In view of the present disclosure, a person of skill in the art will appreciate that certain materials useful for construction and fabrication for the devices and systems described herein can be obtained from commercial sources.

**TABLE 3**

| EXAMPLE QTY | PART NUMBER | DESCRIPTION |
|---|---|---|
| GSRF-1000 TOP ASSEMBLY (e.g., see **FIGS. 43A-43F**) | | |
| 1 | GSRF-0100 | FRAME ASSEMBLY **4301** (e.g., see **FIGS. 13A-13C**) |
| 1 | GSRF-0104 | CRADLE PIVOT ASSEMBLY **4302** (e.g., see **FIGS. 14A-14B**) |
| 1 | GSRF-0106 | DRUM CRADLE ASSEMBLY **4303** (e.g., see **FIG. 15**) |
| 1 | GSRF-0108 | DRUM ASSEMBLY **4304** (e.g., see **FIGS. 16A-16B**) |
| 1 | GSRF-0011-1 | DRIVE SHAFT **4305** (e.g., see **FIG. 17**, bottom) |
| 2 | GSRF-0011-2 | IDLER SHAFT **4306** (e.g., see **FIG. 17**, top) |
| 1 | GSRF-0012 | DRIVE SHROUD **4307** (e.g., see **FIGS.18A-18B**) |
| 1 | GSRF-0013-1 | Drum Shaft Support **4308** (e.g., see **FIGS. 19A-19B**) |
| 1 | GSRF-0013-2 | Drum Shaft Support, Idler Side **4309** (e.g., see **FIGS. 19A-19B**) |
| 1 | GSRF-0014 | Motor Mount Plate **4310** (e.g., see **FIG. 20**) |
| 6 | 3329K150 | Clamp Collar, 2 piece 1 shaft, keyed **4312** |
| 2 | 5126A680 | HOLD DOWN CLAMP **4323** |
| 8 | 5968K750 | Flange Bearing **4313** |
| 1 | 6204K136 | DRIVE SHAFT PULLEY **4321** |
| 1 | 6204K363 | MOTOR DRIVE PULLEY **4320** |
| 13 | 6436K380 | Clamp Collar, 2 piece 1 shaft, no key **4317** |
| 8 | 90107A011 | FLAT WASHER #10 **4329** |
| 12 | 90107A033 | FLAT WASHER 1/2" **4328** |
| 8 | 90715A115 | NUT, #10-32 **4330** |
| 24 | 90715A165 | NUT, 1/2-13 **4325** |
| 8 | 92185A992 | SOCKET HEAD CAP SCREW, #10-32 X 1.0" **4331** |
| 4 | 92186A720 | HEX BOLT, 1/2-13 X 2.0" **4327** |
| 16 | 93190A715 | HEX BOLT 1/2-13 X 1.375" **4326** |
| 4 | 93190A716 | HEX BOLT 1/2-13 X 1.50" **4332** |
| 16 | 94709A518 | SEALING WASHER **4324** |
| 1 | CM3546 | Baldor motor **4316** |
| 2 | D92624A255 | Machine Key Stock 1/4 x 1/4 x 2.25 **4311** |
| 1 | SSN4243008 | ELECTRONICS ENCLOSURE **4318** |
| 1 | WC12C12 | CONTROL ENCLOSURE **4319** |
| 4 | SUNRAY | 6.0"DIA X 1.5" IDLER WHEEL **4315** |
| 2 | SUNRAY | 6.0"DIA x 1.5" DRIVE WHEEL **4314** |
| 1 | | DRIVE BELT **4322** |

| GSRF-0100 FRAME ASSEMBLY | | |
|---|---|---|
| 1 | GSRF-0101 | FRAME WELDMENT **1301** (e.g., see **FIGS. 21A-21C**) |

| EXAMPLE QTY | PART NUMBER | DESCRIPTION |
|---|---|---|
| 1 | GSRF-0102 | LID WELDMENT **1303** (e.g., see **FIG. 22**) |
| 1 | GSRF-0103 | DRAINPAN WELDMENT **1302** (e.g., see **FIG. 23**) |
| 2 | 1344A230 | SPRING LOADED T-HANDLE LATCH **1306** |
| 1 | 1582A397 | PIANO HINGE, SS, .120" THICK, 3" WIDE X 36" LONG **1304** |
| 4 | 2534T610 | Leveling Foot, anchored **1309** |
| 1 | 2672K13 | STAINLESS STEEL DRAIN **1305** |
| 2 | 6626K570 | GAS SPRING **1308** |
| 2 | 6626K950 | GAS SPRING MOUNT CLEVIS **1307** |

| GSRF-0102 LID ASSEMBLY | | |
|---|---|---|
| 1 | GSRF-0102 | LID WELDMENT (e.g., see **FIG. 22**) |
| 2 | GSRF-0015 | LID STOP **2210** (e.g., see **FIG. 24**) |
| 2 | 6626K960 | GAS SPRING MOUNT BRACKET **2211** |
| 2 | 1726A920 | HANDLE **2206** |
| 1 | 3275T15 | Window Trim Gasket **2205** |
| 8 | 90715A135 | NUT SS 5/16-18 **2214** |
| 12 | 93190A583 | HEX BOLT 5/16-18 X 1.0" **2213** |
| 12 | 90107A030 | FLAT WASHER 5/16 SS **2212** |
| 4 | 92185A194 | SOCKET HEAD CAP SCREW, #8-32 X .50" **2208** |
| 4 | 90107A010 | FLAT WASHER, #8 **2207** |

| GSRF-0104 CRADLE PIVOT ASSEMBLY | | |
|---|---|---|
| 1 | GSRF-0105 | CRADLE PIVOT WELDMENT **1401** (e.g., see **FIGS. 25A-25B**) |
| 2 | GSRF-0010-2 | Drum Roll Guide **1403** (e.g., see **FIGS. 26A**) |
| 1 | GSRF-0011 | DRUM CATCH **1402** (e.g., see **FIG. 17**) |
| 1 | 5968K750 | Flange Bearing **1404** |
| 2 | 8480A300 | Spring Pin **1405** |
| 4 | 90107A030 | FLAT WASHER 5/16" **1410** |
| 2 | 90107A033 | FLAT WASHER 1/2" **1411** |
| 4 | 90715A135 | NUT SS 5/16-18 **1412** |
| 2 | 90715A165 | NUT, 1/2-13 **1413** |
| 2 | 91500A585 | FLAT HEAD SCREW 5/16-18 X 1.25" **1408** |
| 2 | 92185A589 | SOCKET HEAD CAP SCREW 5/16-18 X 1.75" **1406** |
| 2 | 92185A601 | SOCKET HEAD CAP SCREW 5/16-18 X 1.50" **1407** |
| 2 | 93190A715 | HEX BOLT 1/2-13 X 1.375" **1409** |
| 2 | 9563K510 | HOLE PLUG 1 1/2" **1415** |
| 4 | 9563K850 | HOLE PLUG 1 1/8" **1414** |
| 2 | 9565K31 | TUBING END CAP, 2.0" SQUARE **1416** |

| GSRF-0106 DRUM CRADLE ASSEMBLY | | |
|---|---|---|
| 1 | GSRF-0107 | DRUM CRADLE WELDMENT **1501** |

| EXAMPLE QTY | PART NUMBER | DESCRIPTION |
|---|---|---|
| | | (e.g., see **FIG. 27**) |
| 2 | GSRF-0010 | DRUM BRACE **1502** (e.g., see **FIG. 26B**) |
| 2 | 8480A200 | Locking Spring Pin **1503** |
| 6 | 90107A030 | FLAT WASHER 5/16 SS **1504** |
| 6 | 90715A135 | NUT SS 5/16-18 **1505** |
| 6 | 92196A318 | SOCKET HEAD CAP SCREW SS 5/16-18 X 1.375 **1506** |
| 6 | 9563K850 | HOLE PLUG 1 1/8" **1507** |

| GSRF-0108 DRUM ASSEMBLY | | |
|---|---|---|
| 1 | GSRF-0109 | SPRAY BAR ASSEMBLY **1606** (e.g., see **FIGS. 28A-28C**) |
| 1 | GSRF-0110 | DRUM END CAP ASSEMBLY **1607** (e.g., see **FIGS. 29A-29B**) |
| 2 | GSRF-0001 | DRUM FRAME **1601** (e.g., see **FIGS. 30A-30D**) |
| 8 | GSRF-0002 | DRUM STIFFENER **1602** (e.g., see **FIG. 31**) |
| 2 | GSRF-0003 | DRUM STIFFENER RING **1603** (e.g., see **FIG. 32**) |
| 1 | GSRF-0004 | DRUM MESH **1604** (e.g., see **FIG. 33**) |
| 1 | GSRF-0009 | DRUM MICRON FILTER **1605** (e.g., see **FIG. 34**) |
| AIR | 7541A77 | EPOXY **1612** (not shown) |
| 8 | 90598A031 | 3/8-16 threaded insert **1609** |
| 16 | 90778A401 | SET SCREW, 1/4-20 X 1/4" LONG **1611** |
| 8 | 91830A719 | Thumb Screw 3/8-16 x 1.0" Long **1610** |
| 16 | 92185A630 | Socket Head Cap Screw, 3/8-16 X 1-3/4" Long **1608** |
| AIR | PAINTERS TAPE | BLUE MASKING, 2.0" WIDE **1613** |

| GSRF-0109 SPRAY BAR ASSEMBLY | | |
|---|---|---|
| 1 | GSRF-0005 | SPRAY BAR **2801** (e.g., see **FIG. 35****)** |
| 1 | GSRF-0006 | DRUM BEARING PLATE **2802** (e.g., see **FIG. 36A**) |
| 1 | GSRF-0007-1 | SPRAY BAR BEARING HUB, FLUID SIDE **2803** (e.g., see **FIG. 37A**) |
| 1 | GSRF-0008-1 | DRUM SHAFT MOUNT **2804** (e.g., see **FIG. 38**) |
| 9 | 3404K37 | SPRAY TIP, 3/8" NPT, 50 DEGREE FAN **2809** |
| 2 | 4830K158 | Nipple 1/2" NPT 6.0" Long **2808** |
| 2 | 53015K108 | QUICK DISCONNECT FITTING, 1/2" NPT **2815** |
| 2 | 53015K508 | Quick Disconnect Fitting, 1/2" NPT **2814** |
| AIR | 7541A77 | EPOXY **2812** (not shown) |
| 3 | 91500A540 | FLAT HEAD SCREW 1/4-20 X .75" **2813** |

| EXAMPLE QTY | PART NUMBER | DESCRIPTION |
|---|---|---|
| 1 | 91580A332 | Internal retaining Ring **2807** |
| 1 | 91590A220 | External Snap Ring **2806** |
| 2 | 92185A542 | Socket Head Cap screw 1/4-20 1.0" Long **2805** |
| 1 | 9563K850 | HOLE PLUG 1 1/8" **2811** |
| 1 | W 61818-2Z | Deep Groove Ball Bearing, Sealed **2810** |

| GSRF-0110 DRUM END CAP ASSEMBLY | | |
|---|---|---|
| 1 | GSRF-0006 | DRUM BEARING PLATE **2901** (e.g., see **FIG. 36A**) |
| 1 | GSRF-0007-2 | SPRAY BAR BEARING HUB **2902** (e.g., see **FIG. 39**) |
| 1 | GSRF-0008-2 | DRUM SHAFT MOUNT **2903** (e.g., see **FIG. 40**) |
| AIR | 7541A77 | EPOXY **2909** (not shown) |
| 3 | 91500A540 | FLAT HEAD SCREW 1/4-20 X .75" **2906** |
| 1 | 91580A332 | Internal retaining Ring **2905** |
| 1 | 91590A220 | External Snap Ring **2904** |
| 1 | 9563K850 | HOLE PLUG 1 1/8" **2907** |
| 1 | W 61818-2Z | Deep Groove Ball Bearing, Sealed **2908** |

| GSRF-0111 COVER ASSEMBLY | | |
|---|---|---|
| 1 | GSRF-0112-1 | LID WELDMENT REAR **4501** (e.g., see **FIG. 45**) |
| 1 | GSRF-0112-2 | LID WELDMENT FRONT **4502** (e.g., see **FIG. 45**) |
| 2 | GSRF-0020 | HOOD PIVOT PLATE **4503** (e.g., see **FIG. 45E**) |
| 2 | GSRF-0021 | HOOD PIVOT SHAFT **4504** (e.g., see **FIG. 45E)** |
| 2 | 1726A920 | HANDLE **4505** |
| 2 | 6494K420 | 2 BOLT FLANGE BEARING, Ø.75 **4506** |
| 4 | 90715A135 | NUT, 5/16-24 **4507** |
| 4 | 90107A030 | FLAT WASHER, 5/16 **4508** |
| 6 | 90107A029 | FLAT WASHER, ¼ **4509** |
| 6 | 90715A125 | NUT, 1/4-20 **4510** |
| 2 | 93085A539 | FLAT HEAD SCREW, 5/16-24 **4511** |
| 1 | GSRF-0113 | SPLASH GUARD |

| ADDITIONAL PARTS | | |
|---|---|---|
| 1 | 4464K563 | NPT PLUG 3/8-16 |
| 1 | 002X002WT0630W48T | Drum mesh |
| 1 | 7398K550 | Drive shaft |
| 1 | 8364T360 | Idler shaft |
| 1 | 92624A255 | Drive Key |

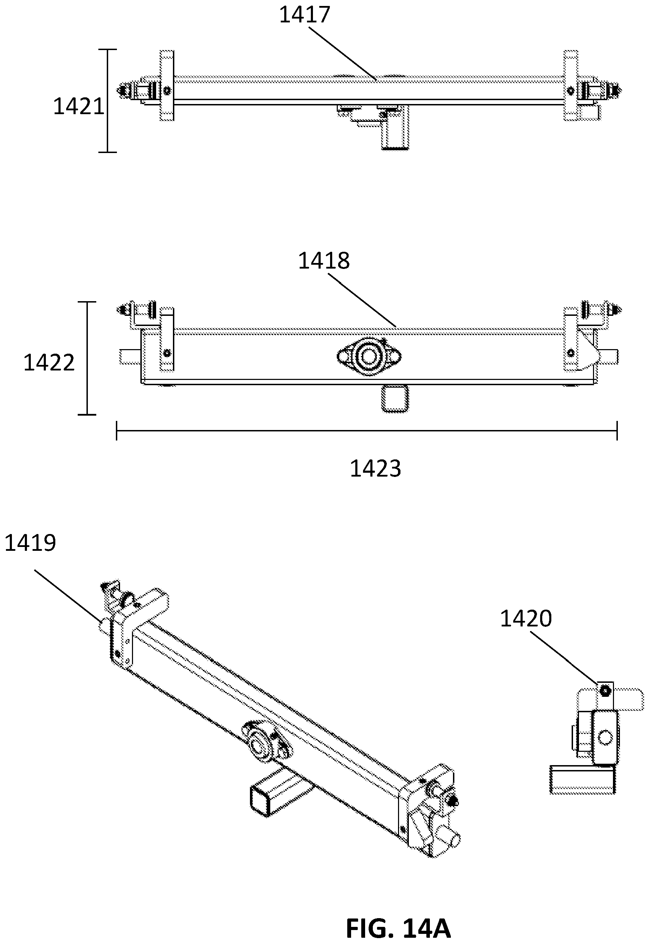

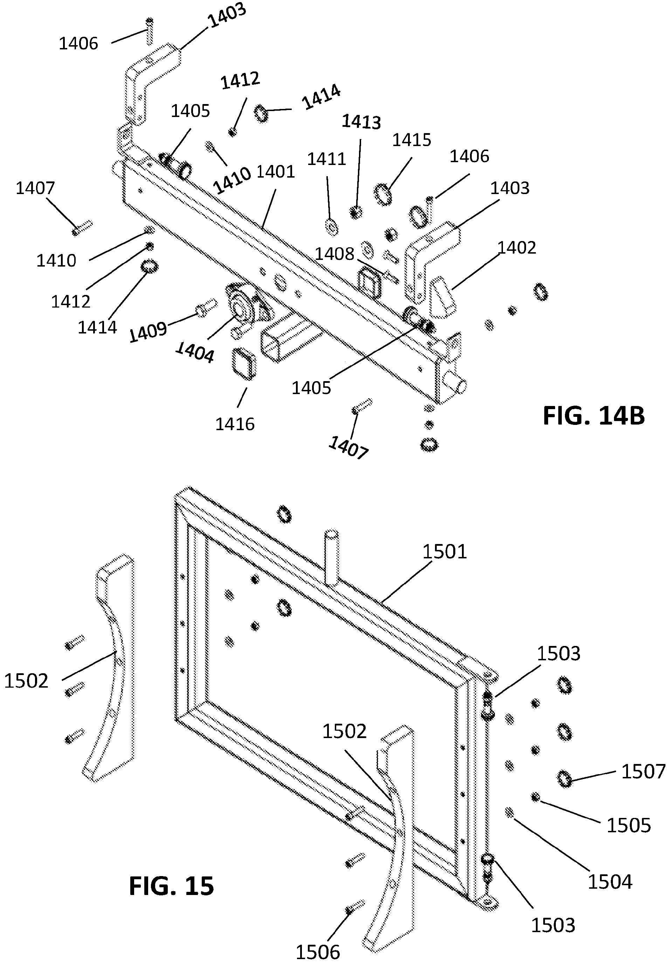

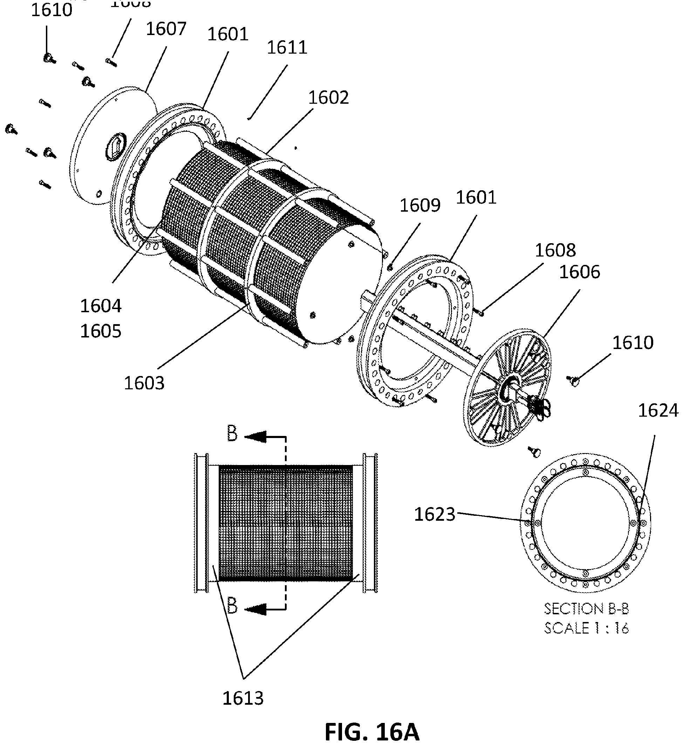

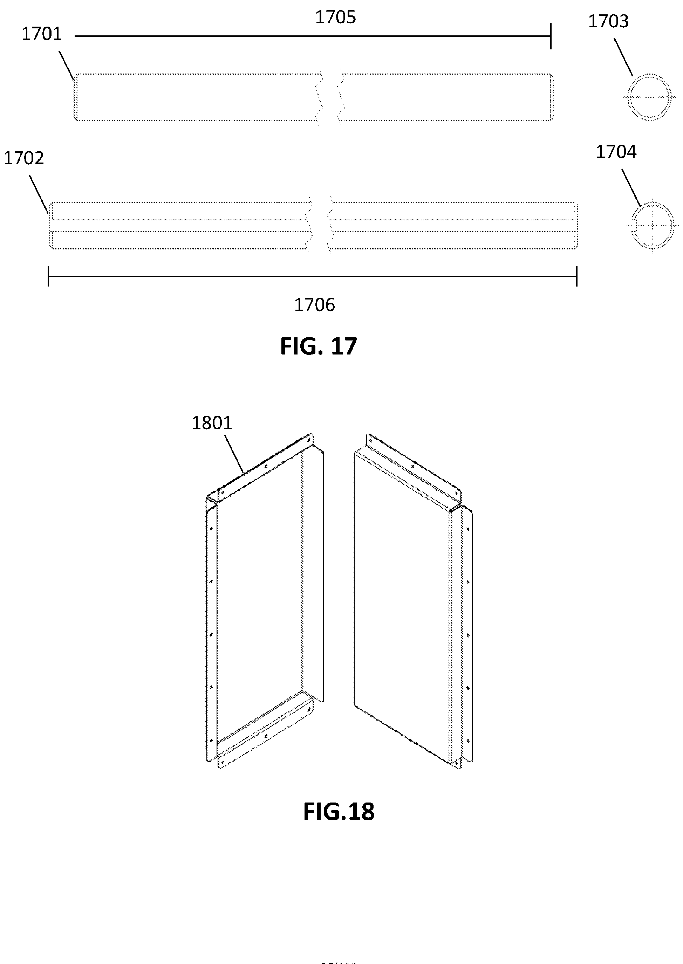

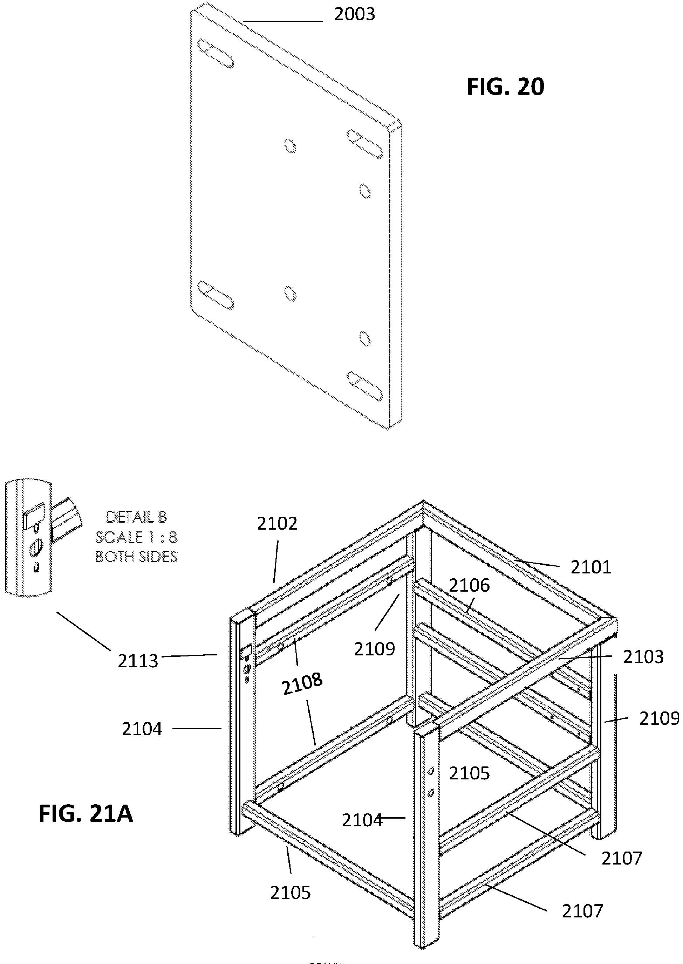

In certain embodiments, the filtration system (e.g., second reaction filtration system) shown in **FIGS. 41A-41B** includes one or more elements of a drum assembly (e.g., drum assembly GSRF-0108 in TABLE 3), optionally including one or more elements shown in **FIGS. 16A-16B****,** **FIGS. 28A-28C****,** **FIGS. 29A-29B****,** **FIGS. 30A-30D** and/or **FIGS. 31-34** (e.g., see TABLE 3). In certain embodiments, the filtration system shown in **FIGS. 41A-41B** includes one or more elements of a frame assembly (e.g., frame assembly GSRF-0100 in TABLE 3), optionally including one or more elements shown in **FIGS. 13A-13C****,** **FIGS. 21A-21C****,** **FIG. 22** and/or **FIG. 23** (e.g., see TABLE 3). In certain embodiments, the filtration system includes one or more elements of a cradle pivot assembly (e.g., see **FIGS. 14A-14B**), a drum cradle assembly (e.g., see **FIG. 15**), a drive shaft (e.g., see **FIG. 17**, bottom), an idler shaft (e.g., see **FIG. 17**, top), a drive shroud (e.g., see **FIG. 18**), a drum shaft support (e.g., see **FIGS. 19A-19B**), a motor mount plate (e.g., see **FIG. 20**) and/or other suitable elements.

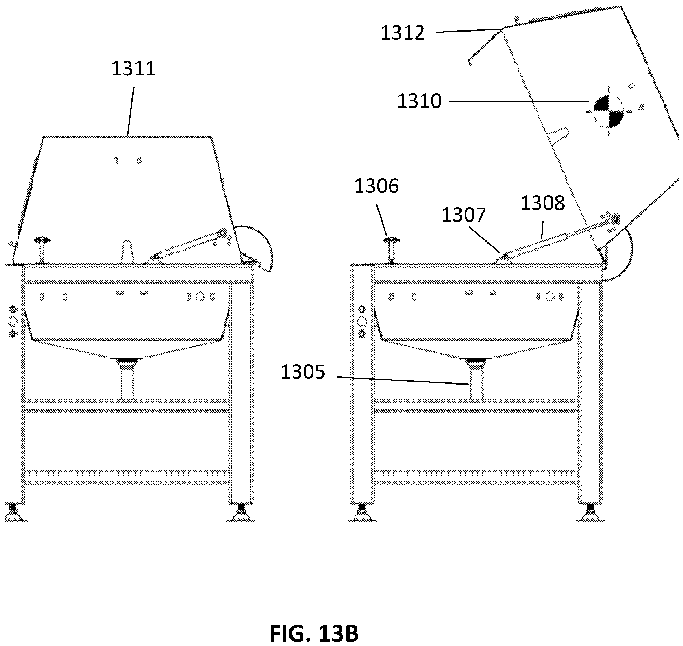

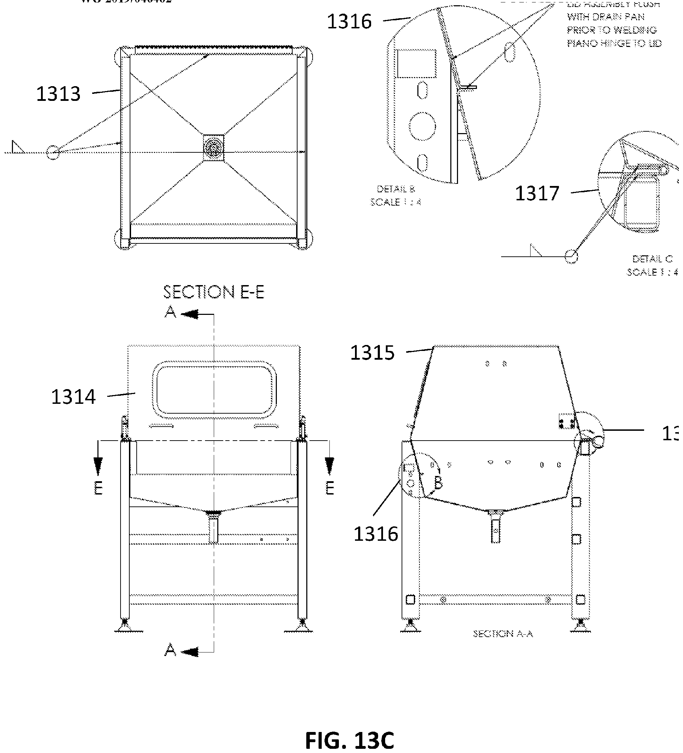

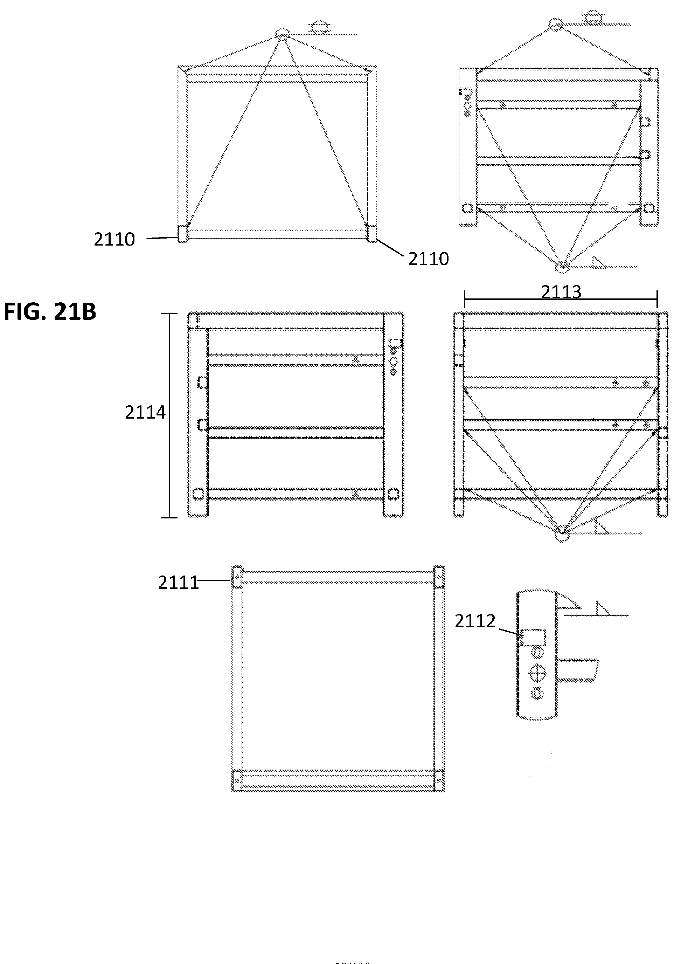

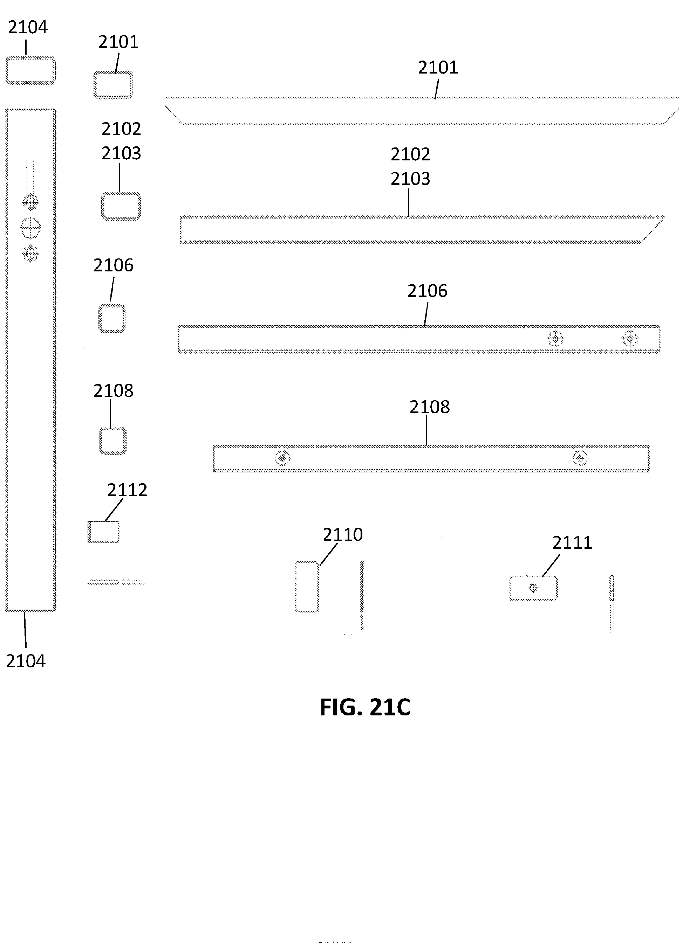

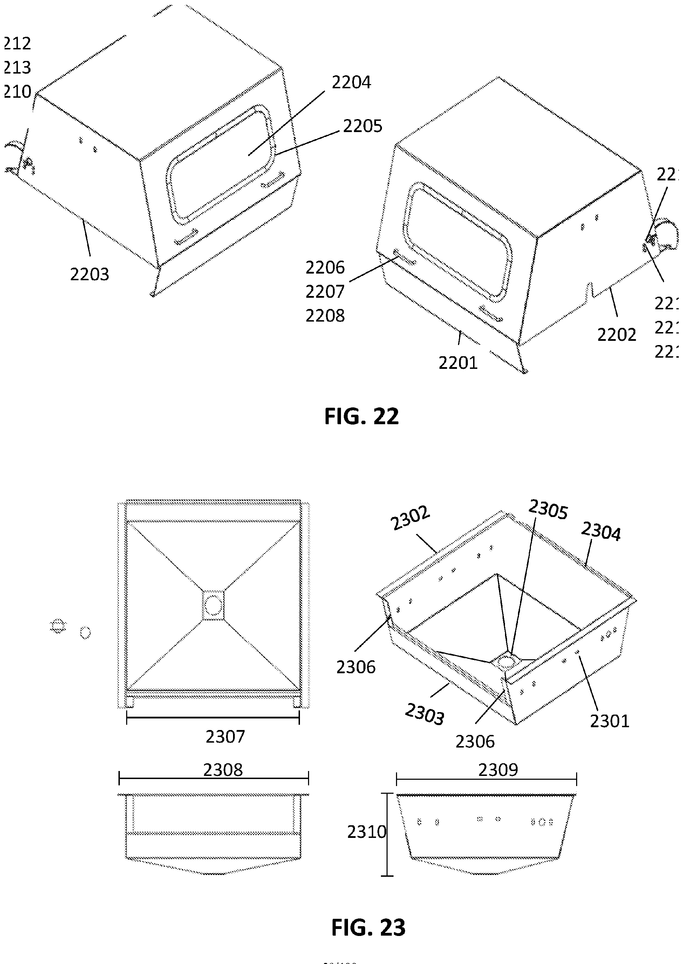

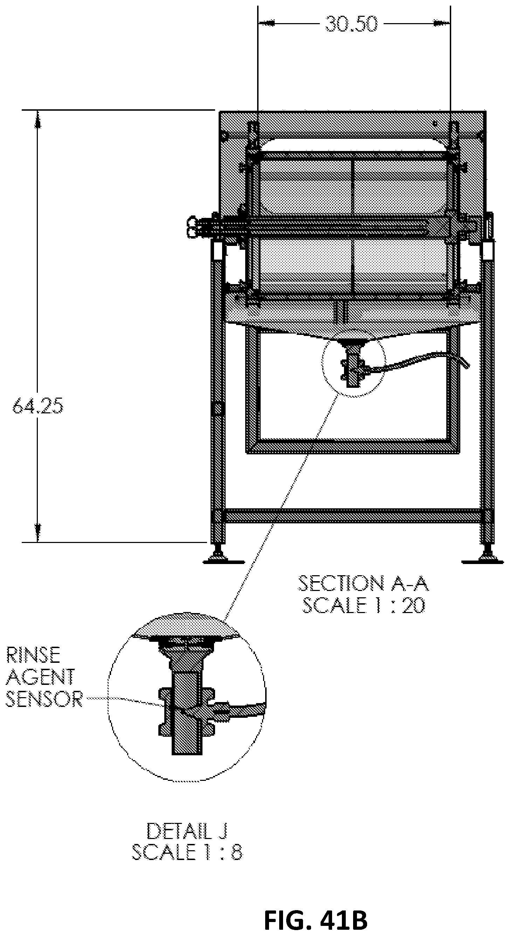

In certain embodiments, a frame assembly is part of a top assembly (e.g., see embodiments shown in **FIGS. 41A-41B****,** **FIGS. 43A-43F** and/or **FIGS. 41-43**) of an rGO/graphene second reaction filter. In certain embodiments, as shown in **FIGS. 13A-13C** or in **FIGS. 43A-43F** (e.g., see 4301), the frame assembly includes one or more structural elements selected from, for example: a frame weldment **1301** (e.g., as shown in **FIGS. 21A-21C**), a drainpan weldment **1302** (e.g., as shown in **FIG. 23**), a lid weldment **1303** (e.g., as shown in **FIG. 22**), a piano hinge **1304**, a drain **1305**, a spring loaded T-handle latch **1306**, a gas spring mount clevis 1307, a gas spring **1308**, and a leveling and/or anchored foot **1309.** **FIG. 13A** shows a perspective view of an embodiment of the frame assembly. **FIG. 13B** shows a side view of the frame assembly when the lid is closed **1311** and a side view when the lid is opened **1312.** In some embodiments, the frame assembly is configured to have a center of gravity **1310** when the lid is opened. In certain embodiments, the piano hinge is made of stainless steel. In certain embodiments, the piano hinge has dimension(s) of, for example, about 0.120 inches in thickness, about 3 inches in width, and about 36 inches in length. **FIG. 13C** shows a bottom view **1313** of the drainpan weldment, a front view **1314** of the frame assembly with the lid closed, and a side view **1315** of the frame assembly with the lid closed. **FIG. 13C** also shows a side view **1316** of the lid assembly flush with the drain pan and a side view **1317** of the piano hinge. In certain embodiments, the drain is made of stainless steel. In certain embodiments, the frame weldment mechanically supports the drainpan weldment and the lid weldment. In further embodiments, the frame weldment supports elements and/or sub-assemblies that are directly or indirectly attached to the drainpan or the lid. In certain embodiments, such elements and/or sub-assemblies include the drum assembly **4303.** In certain embodiments, the drainpan and the lid weldment are mechanically coupled to each other and enable opening and closing the lid manually, automatically, or a combination thereof. In certain embodiments, the lid closed on top of the drainpan weldment is water-sealable. In certain embodiments, the center of gravity of the lid assembly is as shown in the right panel of **FIG. 13B****.** In certain embodiments, the drain is located at the bottom of the drainpan. In certain embodiments, the drain is used for draining waste(s) produced in the rGO/graphene second reaction filter (e.g., in the top assembly).

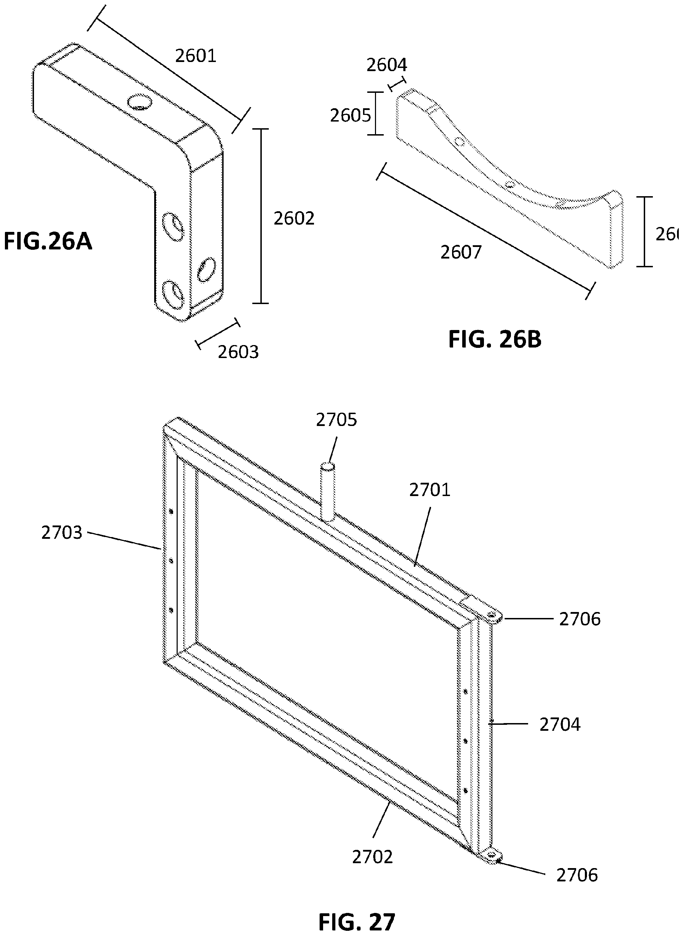

In certain embodiments, a cradle pivot assembly is part of a top assembly of an rGO/graphene second reaction filter. **FIG. 14A** shows a top view **1417**, a front view **1418**, a side view **1420**, and a perspective view **1419** of an embodiment of a cradle pivot assembly. In certain embodiments, the cradle pivot assembly has a width **1423** of 38.25 about inches, a height **1422** of about 8.00 inches, and/or a depth **1421** of about 7.13 inches. In certain embodiments, the cradle pivot assembly, as shown in **FIGS. 14A-14B** or as **4302** in **FIGS. 43A-43E**, includes one or more structural elements selected from, for example: a cradle pivot weldment **1401**, a drum catch **1402** (e.g., as shown in **FIG. 17**), a drum roll guide **1403** (e.g., as shown in **FIG. 26A**), a flange bearing **1404**, a spring pin 5, a socket head cap screws **1406** and **1407**, a flat head screw **1408**, a hex bolt **1409**, flat washers **1410** and **1411**, nuts **1412** and **1413**, hole plugs **1414** and **1415**, and a tubing end cap **1416.** In certain embodiments, the screw **1406** is 5/16-18 x 1.75 inches. In certain embodiments, the screw **1407** is 5/16-18 x 1.50 inches. In certain embodiments, the screw **1408** is 5/16-18 x 1.25 inches. In certain embodiments, the bolt **1409** is 1/2-13 x 1.375 inches. In certain embodiments, the flat washer **1410** is 5/16 inches. In certain embodiments, the flat washer **1411** is 1/2 inches. In certain embodiments, the nut **1412** is made of stainless steel, and has a size of 5/16-18. In certain embodiments, the nut **1413** is made of stainless steel, and has a size of 1/2-13. In certain embodiments, the hole plug is 1 and 1/8 inches or 1 and ½ inches. In certain embodiments, the end cap is 2.0 inches in its width, length, or diagonal. In certain embodiments, the end cap has a substantially square shape or any other suitable shapes.

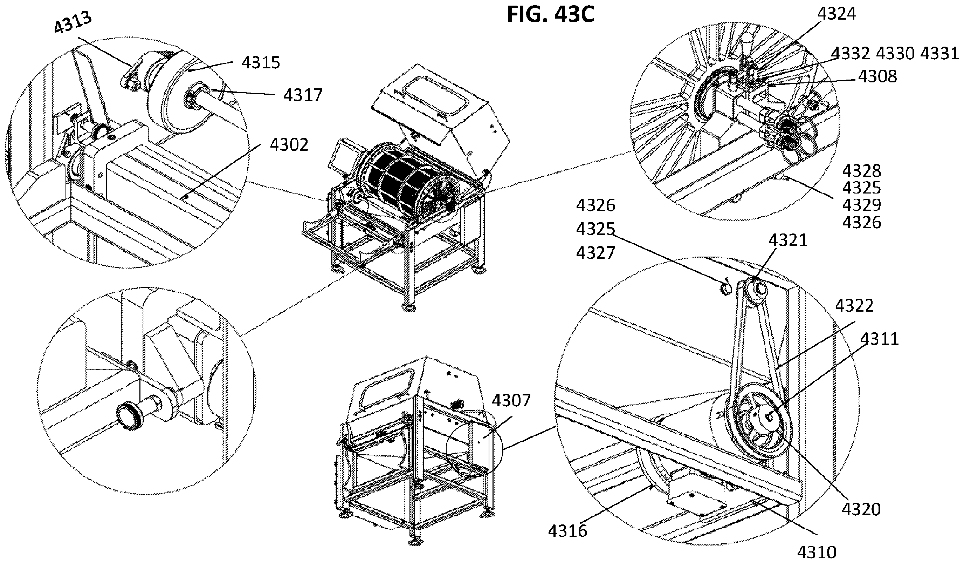

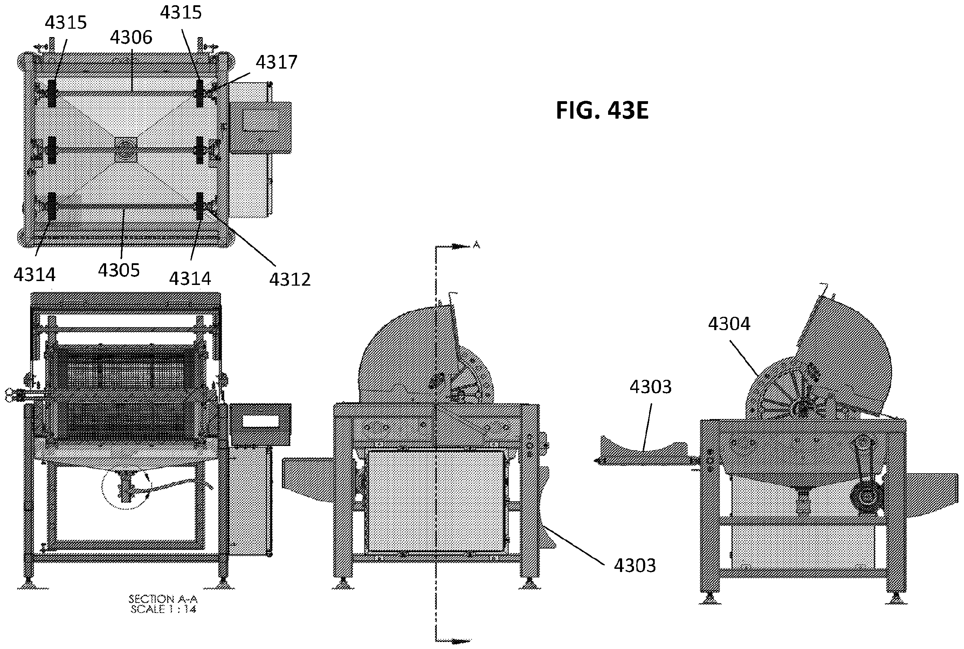

In certain embodiments, the cradle pivot assembly is used to enable pivoting of a drum cradle assembly that is mechanically coupled thereon, as shown, for example, in **FIG. 15** or as **4303** in **FIGS. 43A-43F****.** In certain embodiments, the drum cradle assembly pivots from its initial position (e.g., as shown in the middle panel in **FIG. 43C**) to a rolling position (e.g., as shown in the right panel of **FIG. 43C**)**.** In certain embodiments, the cradle pivot assembly enables rotating of the drum cradle assembly from the rolling position (e.g., as shown in the right panel of **FIG. 43C**) to an unloading position (e.g., as shown in right panels of **FIG. 43E**). In certain embodiments, the cradle pivot assembly is attached to the drum cradle assembly, wherein the cradle pivot assembly is locked to the frame assembly by a locking pin **1405.** In certain embodiments, removal of the locking pin **1405** enables the drum cradle assembly to pivot about a shaft relative to the frame assembly, thus enabling rotation of the drum assembly strapped to the drum cradle assembly (see, e.g., **FIG. 43E**). In certain embodiments, one or more of such positions of the drum cradle assembly is used in the process of unloading rGO/graphene from the top assembly of the rGO/graphene second reaction filter.

In certain embodiments, a drum cradle assembly is part of a top assembly of an rGO/graphene second reaction filter. In certain embodiments, the drum cradle assembly is as shown in **FIG. 15** or as **4303** in **FIGS. 43A-43F****.** **FIG. 15** shows an embodiment of a drum cradle assembly. In certain embodiments, the drum cradle assembly has a length of about 24.75 inches and a width between drum braces of about 32.00 inches. In certain embodiments, the drum cradle assembly includes one or more structural elements selected from, for example: a drum cradle weldment **1501,** a drum brace **1502** (e.g., as shown in **FIG. 26B**), a locking spring pin **1503,** a flat washer **1504,** a nut **1505,** a socket head cap screw **1506,** and a hole plug **1507.** In certain embodiments, the flat washer **1504** is 5/16 inches and made of stainless steel. In certain embodiments, the nut **1505** is made of stainless steel, and has a size of 5/16-18. In certain embodiments, the hole plug **1507** is 1 and 1/8 inches. In certain embodiments, the socket head cap screw **1506** is 5/16-18 x 1.375 inches. In certain embodiments, the screw **1506** is made of stainless steel.

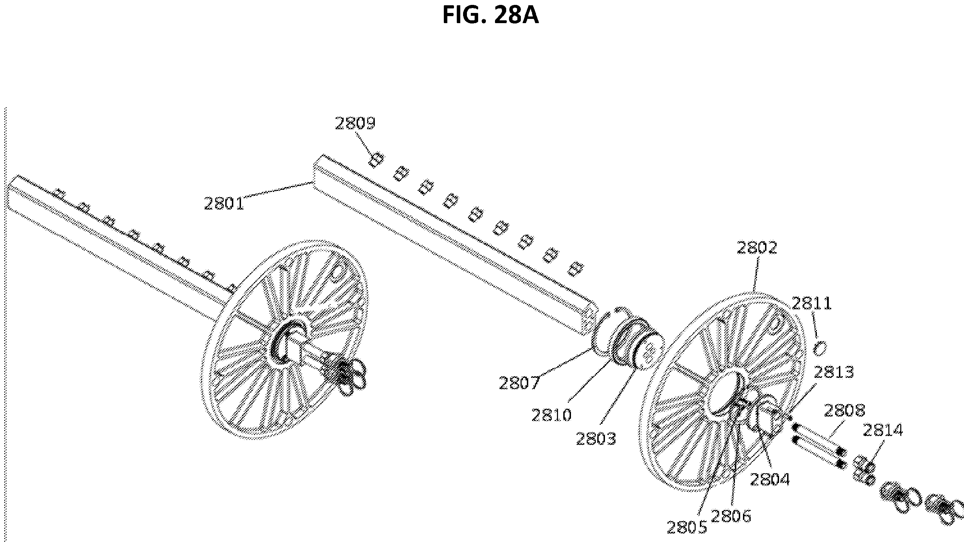

In certain embodiments, the drum cradle assembly has one or more different secured positions to facilitate functioning and/or unloading of the drum assembly. In certain embodiments, the drum cradle assembly is configured to pivot from its initial position (e.g., as shown in the middle panel of **FIG. 43C**) to a pivoted rolling position (e.g., as shown in the left panel of **FIG.43E**) so that the drum assembly can be unlocked and rolled onto the drum cradle assembly. In certain embodiments, after the drum assembly is secured to the cradle assembly, the drum cradle assembly is further rotated to an unloading position (e.g., as shown in right panels in **FIG. 43E**) to enable removal of the spray bar assembly (e.g., as shown in **FIG. 28A-28C** and/or as **1606** in **FIGS. 16A-16B**) and rGO/graphene from the drum assembly. In certain embodiments, the drum assembly is fastened to the cradle assembly via any suitable fastening elements (e.g., straps, latches, hooks and the like).

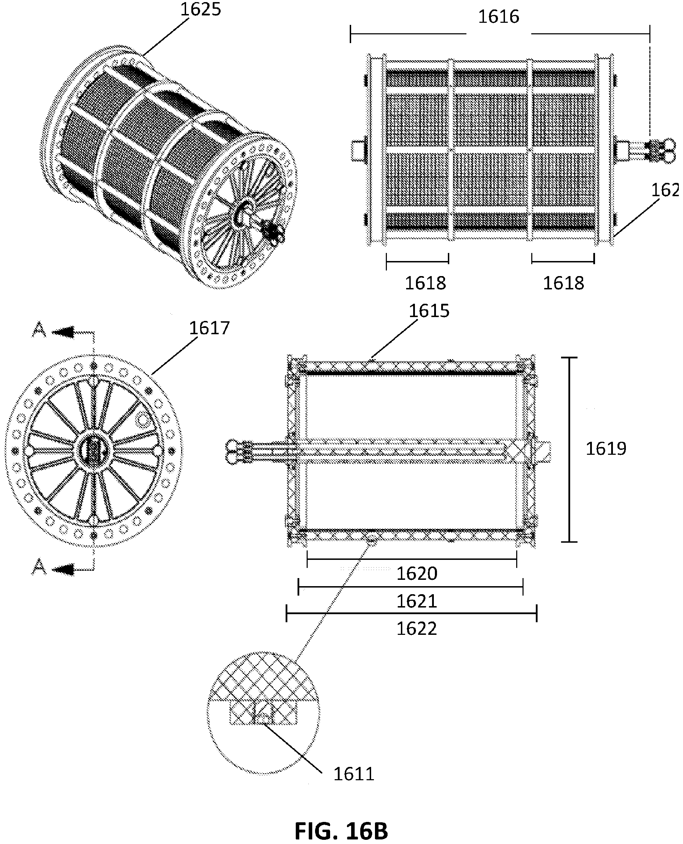

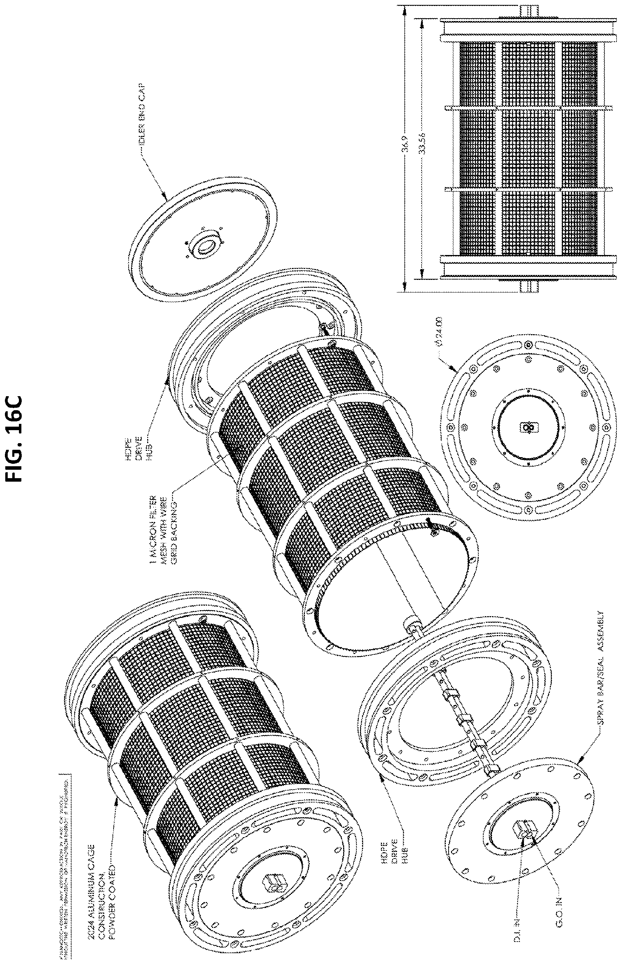

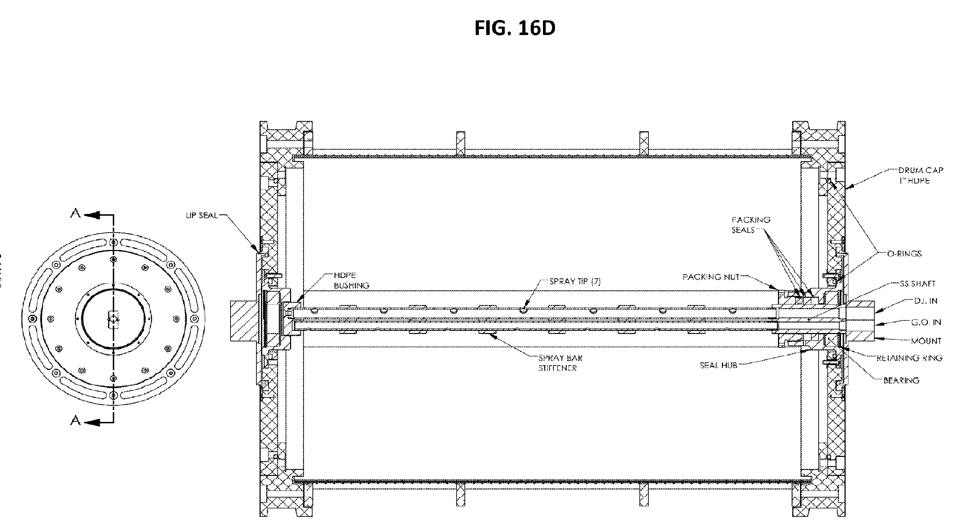

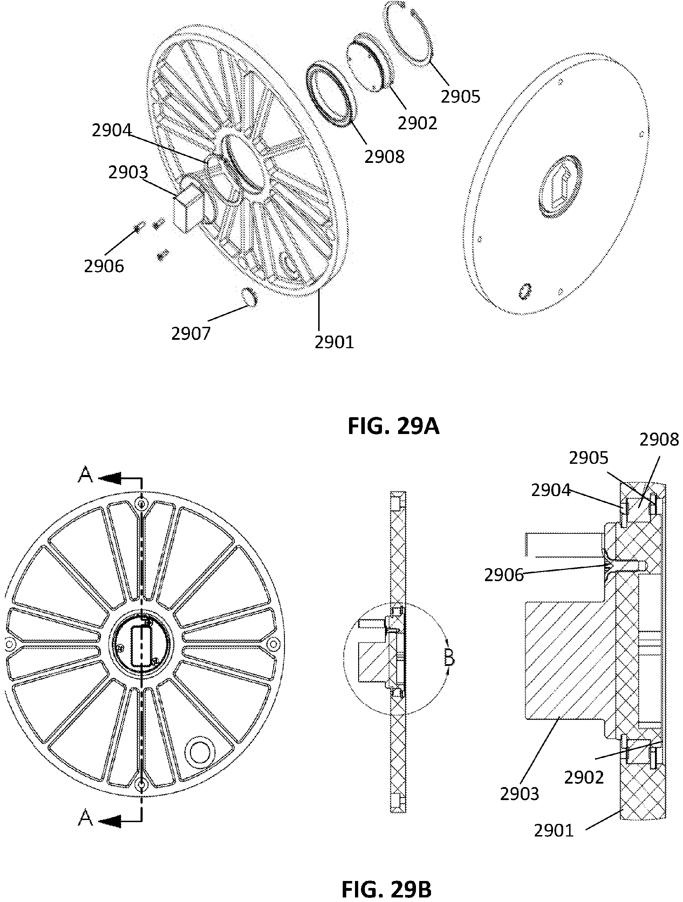

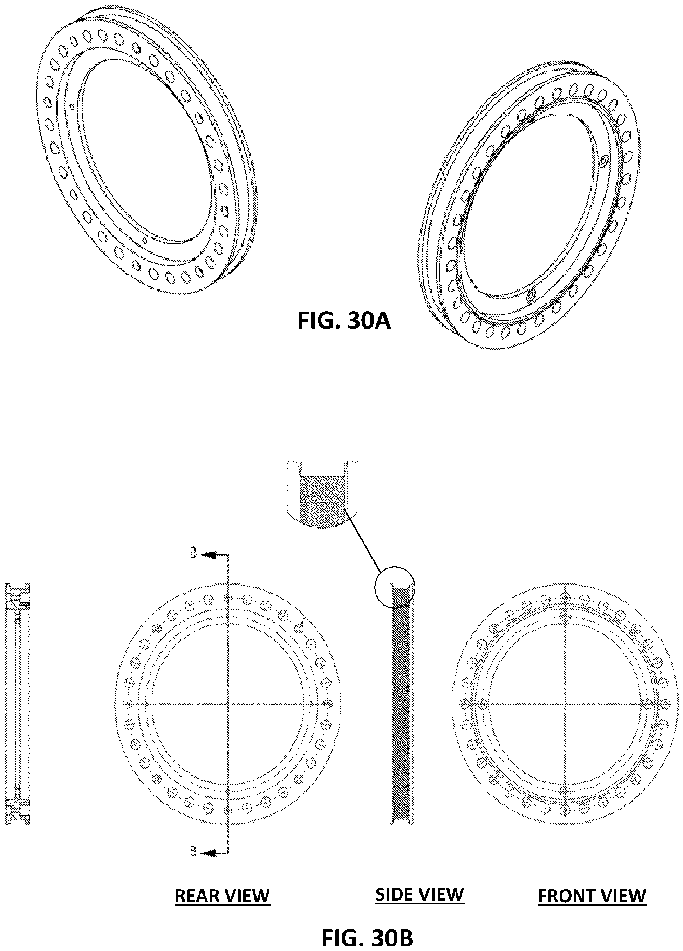

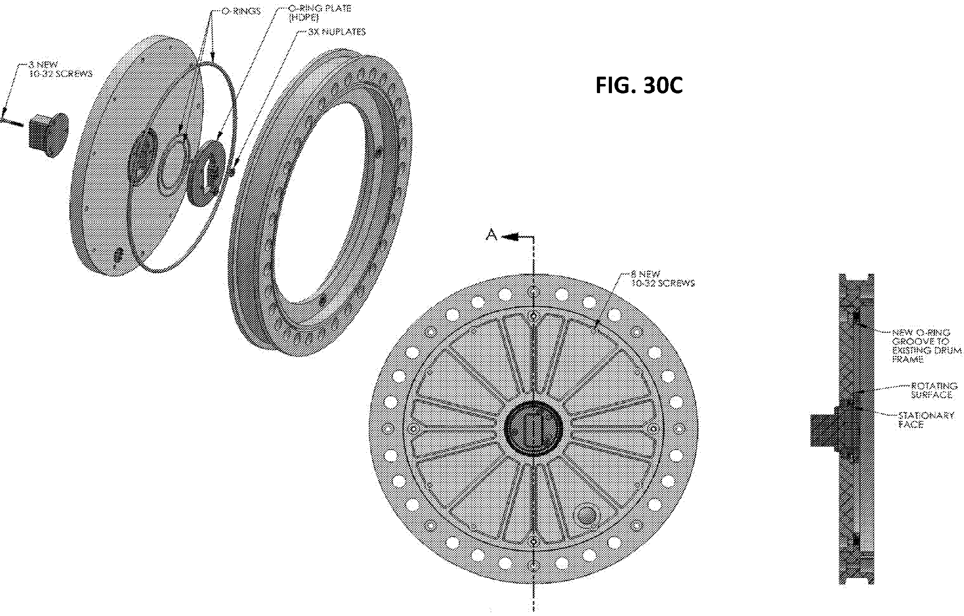

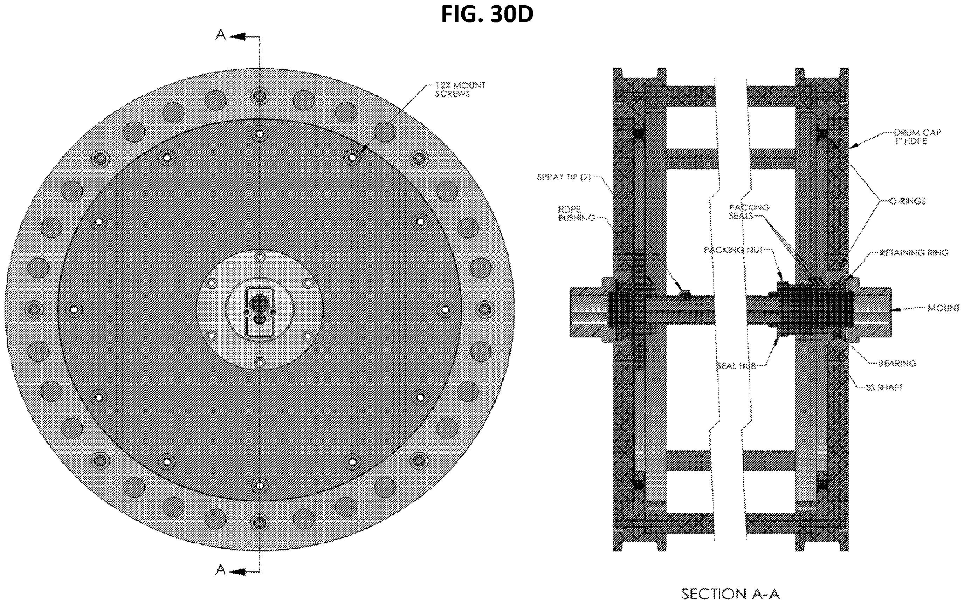

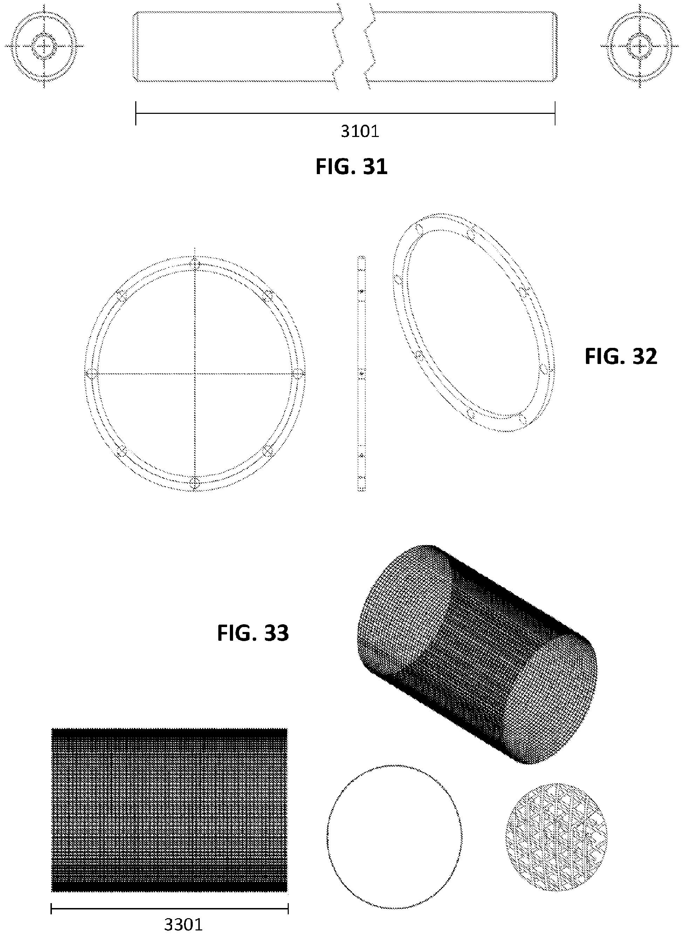

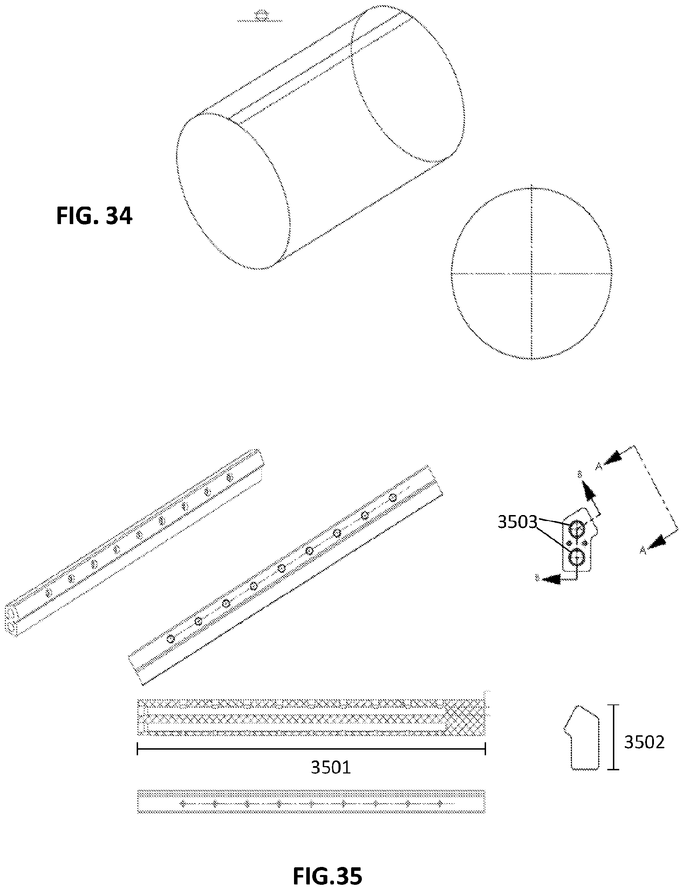

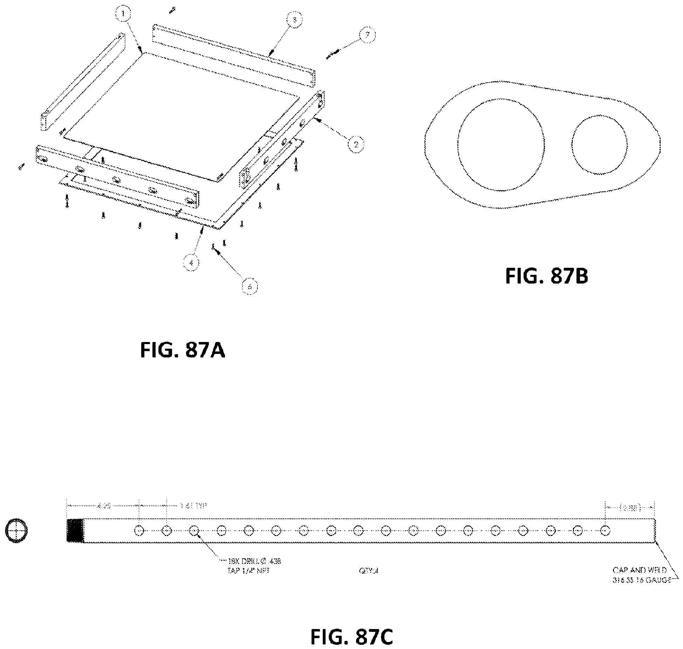

In certain embodiments, a drum assembly is part of a top assembly of an rGO/graphene second reaction filter for facilitating filtration and collection of rGO/graphene obtained from the rGO/graphene second reaction. In certain embodiments, the drum assembly is as shown in **FIGS. 16A-16B** or as **4301** in **FIGS. 43A-43F****.** In certain embodiments, the drum assembly includes one or more structural elements selected from, for example: a drum frame **1601** (e.g., as shown in **FIGS. 30A-30D**), a drum stiffener **1602** (e.g., as shown in **FIG. 31**), a drum stiffener ring **1603** (e.g., as shown in **FIG. 32**), a drum mesh **1604** (e.g., as shown in **FIG. 33**), a drum micron filter **1605** (e.g., as shown in **FIG. 34**), a spray bar assembly **1606** (e.g., as shown in **FIGS. 28A-28C**), a drum end cap assembly **1607** (e.g., as shown in **FIGS. 29A-29B**), a socket head cap screw **1608,** a threaded insert **160**9**,** a thumb screw **1610**, a set screw **1611**, epoxy **1612** (not shown), and mask or masking (e.g., blue masking) **1613.** In certain embodiments, epoxy is applied to rod ends and/or threads of a drum stiffener **1602.** In certain embodiments, the epoxy is applied prior to installation of a socket head cap screw **1608,** and/or a set crew **1611.** In certain embodiments, epoxy is applied to fill mesh and/or micron material groove(s) prior to final assembly. In certain embodiments, prior to assembly of the drum assembly, one or more elements (e.g., a subset or a number of elements) of the assembly are dry fit. In certain embodiments, such elements include a drum frame **1601,** mesh material **1604,** micron material **1605** and/or opposing seams. In certain embodiments, the seams of the mesh material overlap at a given location of the drum frame. In certain embodiments, the seams of the micron material overlap at a given location of the drum frame. In certain embodiments, the locations of overlapping seams are different for the mesh **1623** and the micron material **1624** (e.g., see **FIG. 16A**, bottom right). In certain embodiments, the mask **1613** is used at inside and outside surfaces (e.g., that is flush with drum frames **1601**). In certain embodiments, one or more of the socket head cap screw **1608**, threaded insert **1609**, thumb screw **1610**, and set screw **1611** comprise or are made of any suitable material, for example, stainless steel. In certain embodiments, one or more of the drum frame **1601**, drum stiffener **1602**, and drum stiffener ring **1603** comprise or are made of any suitable material, for example, HDPE. **FIG. 16B** shows a perspective view **1625,** a front view **1626,** a side view **1617,** and a cross-section side view **1615** of an embodiment of a drum assembly. In certain embodiments, the drum assembly has dimensions including one or more of the following: a drum frame outer diameter of about 24.00 inches, a drum frame inner diameter **1619** of about 23.00 inches, a first length **1620** of about 28.50 inches, a second length **1621** of about 31.00 inches, a third length **1622** of about 33.50 inches, a fourth length **1616** of about 40.42 inches, and a distance **1618** between a drum stiffener ring and a drum frame of about 8.50 inches. **FIG. 16C** and **FIG. 16D** show another embodiment of a drum assembly. In some embodiments, the drum assembly comprises a spray bar assembly having one or more spray tips. In some embodiments, the spray bar assembly comprises one or more spray bar stiffeners (see **FIG. 87B**). In some embodiments, the drum assembly comprises a 2024 Aluminum cage that is optionally powder coated (e.g., Halar coated). In some embodiments, the drum assembly comprises a packing material having a 7/16" braid. In some embodiments, the drum assembly comprises a lip seal at the outer drum caps to seal the radial bearing cavity.

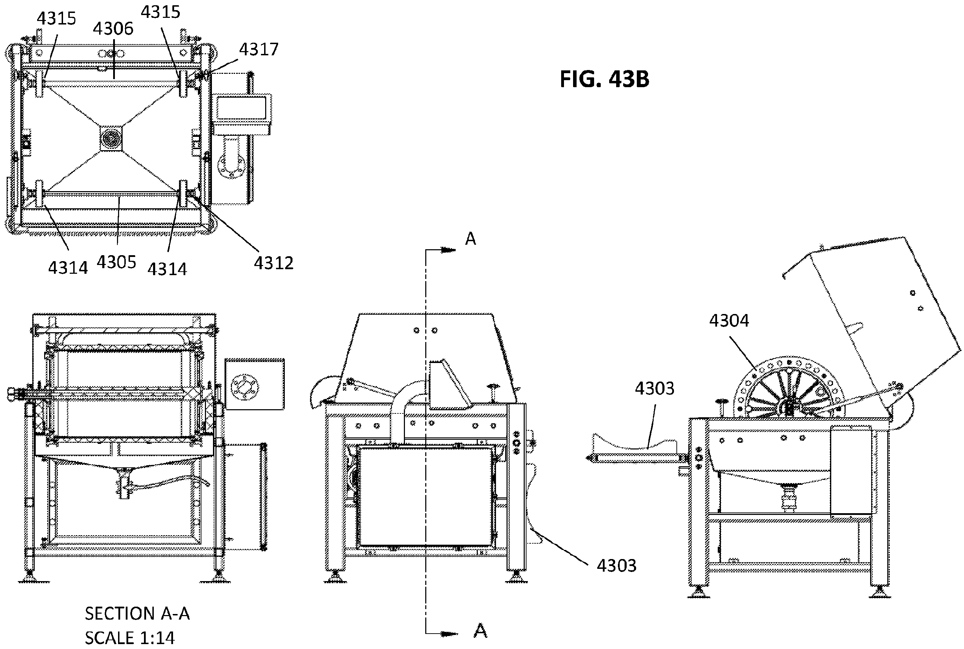

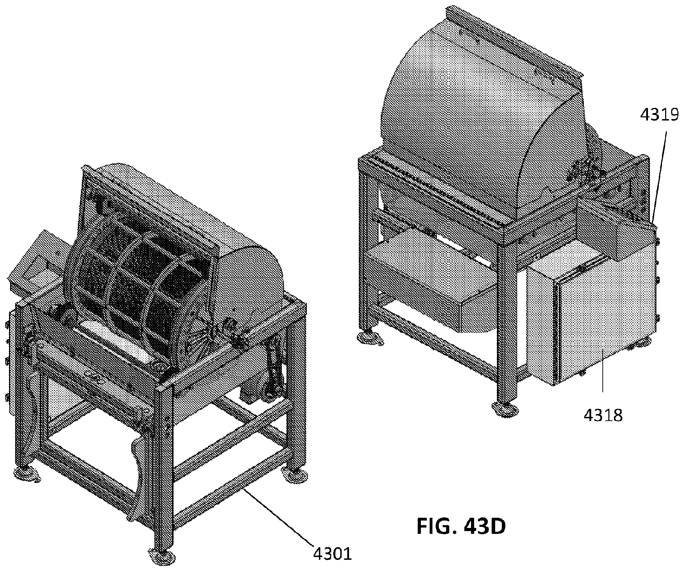

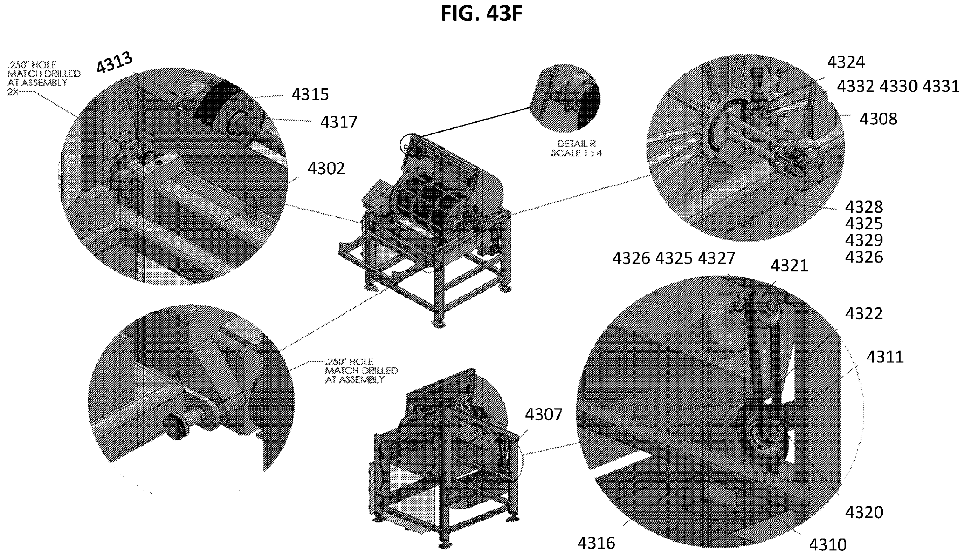

In certain embodiments, the components of the drum assembly are configured to minimize its weight. As an example, in certain embodiments, the distance between drum stiffener rings and/or between a drum stiffener ring and a drum frame is at least 8, 10, 12, 14, 16, 18, 20, 22, 24, 26, 28, 30, 35, 40, 45, 50, or more inches, wherein a longer distance allows fewer drum stiffener rings to be used (thereby reducing weight), wherein a shorter distance results in more drum stiffener rings (thereby promoting durability). In one embodiment, a distance between a drum stiffener ring and a drum frame of about 8.50 inches provides durability while reducing weight by not requiring more stiffener rings to be used. As another example, in certain embodiments, the distance between drum stiffeners is at least 8, 10, 12, 14, 16, 18, 20, 22, 24, 26, 28, 30, 35, 40, 45, 50, or more inches. In certain embodiments, the components of the drum assembly comprise materials selected to minimize weight while maintaining durability. For example, in some embodiments, the drum stiffener rings and/or drum comprise a lightweight and durable material (e.g. HDPE). In a preferred embodiment, the drum mesh and/or the drum micron filter is used to facilitating filtration and collection of rGO/graphene obtained from the rGO/graphene second reaction. In certain embodiments, the drum mesh provides structural support for the drum micron filter. Providing structural support for the drum micron filter is important for preventing the micron filter from sagging or ripping due to the force caused by the weight of the carbonaceous material and wash liquid in combination with the centrifugal force of the rotating drum and the high pressure spray of the wash liquid from the spray bar assembly). In some embodiments, the drum mesh is a stainless steel mesh. In certain embodiments, the pore shape of the drum mesh includes a square, a circle, an oval, a rectangle, a diamond or other geometrical shape (e.g., when the mesh is flat and unrolled). In some embodiments, the pore shape of the drum mesh is a square. In certain embodiments, the pore size of the drum mesh describes a diameter of the pores. In some embodiments, the drum mesh comprises pores having a pore size less than or equal to 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, or 2.0 inches. In some embodiments, the drum mesh comprises pores having a pore size equal to or greater than 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, or 2.0 inches. In some embodiments, the drum mesh comprises pores having a pore size of about 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, or 2.0 inches. In some embodiments, the drum mesh comprises a pore size of about 0.1 inches to about 1 inch. In some embodiments, the drum mesh comprises a pore size of at least about 0.1 inches. In some embodiments, the drum mesh comprises a pore size of at most about 1 inch. In some embodiments, the drum mesh comprises a pore size of about 0.1 inches to about 0.2 inches, about 0.1 inches to about 0.3 inches, about 0.1 inches to about 0.4 inches, about 0.1 inches to about 0.5 inches, about 0.1 inches to about 0.6 inches, about 0.1 inches to about 0.7 inches, about 0.1 inches to about 0.8 inches, about 0.1 inches to about 0.9 inches, about 0.1 inches to about 1 inch, about 0.2 inches to about 0.3 inches, about 0.2 inches to about 0.4 inches, about 0.2 inches to about 0.5 inches, about 0.2 inches to about 0.6 inches, about 0.2 inches to about 0.7 inches, about 0.2 inches to about 0.8 inches, about 0.2 inches to about 0.9 inches, about 0.2 inches to about 1 inch, about 0.3 inches to about 0.4 inches, about 0.3 inches to about 0.5 inches, about 0.3 inches to about 0.6 inches, about 0.3 inches to about 0.7 inches, about 0.3 inches to about 0.8 inches, about 0.3 inches to about 0.9 inches, about 0.3 inches to about 1 inch, about 0.4 inches to about 0.5 inches, about 0.4 inches to about 0.6 inches, about 0.4 inches to about 0.7 inches, about 0.4 inches to about 0.8 inches, about 0.4 inches to about 0.9 inches, about 0.4 inches to about 1 inch, about 0.5 inches to about 0.6 inches, about 0.5 inches to about 0.7 inches, about 0.5 inches to about 0.8 inches, about 0.5 inches to about 0.9 inches, about 0.5 inches to about 1 inch, about 0.6 inches to about 0.7 inches, about 0.6 inches to about 0.8 inches, about 0.6 inches to about 0.9 inches, about 0.6 inches to about 1 inch, about 0.7 inches to about 0.8 inches, about 0.7 inches to about 0.9 inches, about 0.7 inches to about 1 inch, about 0.8 inches to about 0.9 inches, about 0.8 inches to about 1 inch, or about 0.9 inches to about 1 inch. In some embodiments, the drum mesh itself is further supported by drum rings and/or drum stiffeners to prevent sagging or deformation. In certain embodiments, the drum micron filter is positioned just within the internal surface of the drum mesh inside the drum assembly. In certain embodiments, the drum micron filter is flush with the drum mesh. In certain embodiments, the drum micron filter comprises one or more layers. In some embodiments, the drum micron filter comprises about 1 layer to about 10 layers. In some embodiments, the drum micron filter comprises at least about 1 layer (e.g. of a micron filter sheet). In some embodiments, the drum micron filter comprises at most about 10 layers. In some embodiments, the drum micron filter comprises about 1 layer to about 2 layers, about 1 layer to about 3 layers, about 1 layer to about 4 layers, about 1 layer to about 5 layers, about 1 layer to about 6 layers, about 1 layer to about 7 layers, about 1 layer to about 8 layers, about 1 layer to about 9 layers, about 1 layer to about 10 layers, about 2 layers to about 3 layers, about 2 layers to about 4 layers, about 2 layers to about 5 layers, about 2 layers to about 6 layers, about 2 layers to about 7 layers, about 2 layers to about 8 layers, about 2 layers to about 9 layers, about 2 layers to about 10 layers, about 3 layers to about 4 layers, about 3 layers to about 5 layers, about 3 layers to about 6 layers, about 3 layers to about 7 layers, about 3 layers to about 8 layers, about 3 layers to about 9 layers, about 3 layers to about 10 layers, about 4 layers to about 5 layers, about 4 layers to about 6 layers, about 4 layers to about 7 layers, about 4 layers to about 8 layers, about 4 layers to about 9 layers, about 4 layers to about 10 layers, about 5 layers to about 6 layers, about 5 layers to about 7 layers, about 5 layers to about 8 layers, about 5 layers to about 9 layers, about 5 layers to about 10 layers, about 6 layers to about 7 layers, about 6 layers to about 8 layers, about 6 layers to about 9 layers, about 6 layers to about 10 layers, about 7 layers to about 8 layers, about 7 layers to about 9 layers, about 7 layers to about 10 layers, about 8 layers to about 9 layers, about 8 layers to about 10 layers, or about 9 layers to about 10 layers. In certain embodiments, the drum micron filter comprises a pore size suitable for retaining rGO/graphene while allowing undesirable reaction products or impurities to pass. In certain embodiments, a carbonaceous composition (e.g. GO and/or rGO) dispensed within the interior of the drum assembly is trapped by the drum mesh and/or drum micron filter. In certain embodiments, the pore size of a drum micron filter describes a diameter of the pores. In certain embodiments, the drum micron filter comprises a pore size suitable for retaining at least about 10%, 20%, 30%, 40%, 50%, 60%, 70%, 80%, 90%, 95%, 96%, 97%, 98%, or 99% of rGO/graphene. In certain embodiments, the drum micron filter comprises a pore size of about 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 5.0, or 10.0 microns. In certain embodiments, the drum micron filter comprises a pore size of greater than or equal to about 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 5.0, or 10.0 microns. In certain embodiments, the drum micron filter has a pore size of less than or equal to (e.g. no more than) about 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 5.0, or 10.0 microns. In some embodiments, the drum micron filter comprises a pore size of about 0.1 microns to about 3 microns. In some embodiments, the drum micron filter comprises a pore size of at least about 0.1 microns. In some embodiments, the drum micron filter comprises a pore size of at most about 3 microns. In some embodiments, the drum micron filter comprises a pore size of about 0.1 microns to about 0.5 microns, about 0.1 microns to about 0.8 microns, about 0.1 microns to about 0.9 microns, about 0.1 microns to about 1 micron, about 0.1 microns to about 1.1 microns, about 0.1 microns to about 1.2 microns, about 0.1 microns to about 1.5 microns, about 0.1 microns to about 2 microns, about 0.1 microns to about 2.5 microns, about 0.1 microns to about 3 microns, about 0.5 microns to about 0.8 microns, about 0.5 microns to about 0.9 microns, about 0.5 microns to about 1 micron, about 0.5 microns to about 1.1 microns, about 0.5 microns to about 1.2 microns, about 0.5 microns to about 1.5 microns, about 0.5 microns to about 2 microns, about 0.5 microns to about 2.5 microns, about 0.5 microns to about 3 microns, about 0.8 microns to about 0.9 microns, about 0.8 microns to about 1 micron, about 0.8 microns to about 1.1 microns, about 0.8 microns to about 1.2 microns, about 0.8 microns to about 1.5 microns, about 0.8 microns to about 2 microns, about 0.8 microns to about 2.5 microns, about 0.8 microns to about 3 microns, about 0.9 microns to about 1 micron, about 0.9 microns to about 1.1 microns, about 0.9 microns to about 1.2 microns, about 0.9 microns to about 1.5 microns, about 0.9 microns to about 2 microns, about 0.9 microns to about 2.5 microns, about 0.9 microns to about 3 microns, about 1 micron to about 1.1 microns, about 1 micron to about 1.2 microns, about 1 micron to about 1.5 microns, about 1 micron to about 2 microns, about 1 micron to about 2.5 microns, about 1 micron to about 3 microns, about 1.1 microns to about 1.2 microns, about 1.1 microns to about 1.5 microns, about 1.1 microns to about 2 microns, about 1.1 microns to about 2.5 microns, about 1.1 microns to about 3 microns, about 1.2 microns to about 1.5 microns, about 1.2 microns to about 2 microns, about 1.2 microns to about 2.5 microns, about 1.2 microns to about 3 microns, about 1.5 microns to about 2 microns, about 1.5 microns to about 2.5 microns, about 1.5 microns to about 3 microns, about 2 microns to about 2.5 microns, about 2 microns to about 3 microns, or about 2.5 microns to about 3 microns. In certain embodiments, the drum micron filter has a pore size of about 1, 2, 3, 5, or 10 microns. In one embodiment, the drum micron filter has a pore size of about 1 micron. In certain embodiments, the drum micron filter with a pore size of about 1 micron retains at least about 80%, 85%, 90%, 95%, 96%, 97%, 98%, or 99% of rGO/graphene dispensed within the interior of the drum assembly. One benefit of using the micron filter is the ability to effectively filter rGO/graphene with high retention of the rGO/graphene while separating and/or removing a filtrate comprising leftover reactants, reaction byproducts, impurities, and other undesirable compounds. For example, the use of the drum micron filter that traps rGO/graphene in combination with a spray bar assembly that washes the trapped rGO/graphene with high pressure deionized water (or other liquid suitable for cleaning/purifying rGO/graphene) enables the efficient filtration and/or purification of rGO/graphene for use in downstream applications (e.g. for use in building batteries or capacitors). In certain embodiments, the drum assembly has an initial position (e.g., as shown in bottom left panel of **FIG. 43**). In certain embodiments, the drum assembly has a rolling position when it is positioned on a pivoted drum cradle assembly (e.g., as shown in middle panels of **FIG. 43**). In certain embodiments, the drum assembly has an unloading position when it is fastened on a rotated drum cradle assembly (e.g., as shown in right panels of **FIG. 43**). In certain embodiments, one or more of such positions of the drum assembly are used in the process of unloading rGO/graphene from the top assembly of the rGO/graphene second reaction filter. In certain embodiments, at one or more of such positions (e.g., at the initial position), the drum assembly is rotated via the drum shaft when actuated by a motor. In certain embodiments, the drum assembly has a rotational speed of about 600 rpm (revolutions per minute). In certain embodiments, the drum assembly has a rotational speed from about 0 to about 50, about 0 to about 100, about 0 to about 150, about 0 to about 200, about 0 to about 250, about 0 to about 300, about 0 to about 350, about 0 to about 400, about 0 to about 450, about 0 to about 500, about 50 to about 100, about 50 to about 150, about 50 to about 200, about 50 to about 250, about 50 to about 300, about 50 to about 350, about 50 to about 400, about 50 to about 450, about 50 to about 500, about 100 to about 150, about 100 to about 200, about 100 to about 250, about 100 to about 300, about 100 to about 350, about 100 to about 400, about 100 to about 450, about 100 to about 500, about 150 to about 200, about 150 to about 250, about 150 to about 300, about 150 to about 350, about 150 to about 400, about 150 to about 450, about 150 to about 500, about 200 to about 250, about 200 to about 300, about 200 to about 350, about 200 to about 400, about 200 to about 450, about 200 to about 500, about 250 to about 300, about 250 to about 350, about 250 to about 400, about 250 to about 450, about 250 to about 500, about 300 to about 350, about 300 to about 400, about 300 to about 450, about 300 to about 500, about 350 to about 400, about 350 to about 450, about 350 to about 500, about 400 to about 450, about 400 to about 500, or about 450 to about 500, about 500 to about 600, about 500 to about 700, about 500 to about 800, about 500 to about 900, about 500 to about 1,000, about 600 to about 700, about 600 to about 800, about 600 to about 900, about 600 to about 1,000, about 700 to about 800, about 700 to about 900, about 700 to about 1,000, about 800 to about 900, about 800 to about 1,000, or about 900 to about 1,000 rpm (revolutions per minute).

In certain embodiments, a drive shaft 4305 and an idler shaft 4306 (e.g., as shown in **FIG. 17** and **FIGS. 43A****-43F**) form part of a top assembly of an rGO/graphene second reaction filter for mechanically supporting elements and/or sub-assemblies of the top assembly. **FIG. 17** shows an embodiment of a drive shaft **1702** and an idler shaft **1701** with front views (**1702** and **1701** respectively) and side views (**1704** and **1703** respectively). In certain embodiments, a drive shaft **1702** has a length **1706** of about 40.69 inches. In certain embodiments, an idler shaft **1701** has a length **1705** of about 38.06 inches. In certain embodiments, the drive shaft is actuated by a drive motor **4316.** In certain embodiments, the drive motor **4316** is engaged with a pulley system. In certain embodiments, the pulley system comprises drive shaft pulleys **4320** and **4321.** In certain embodiments, the drive shaft pulleys **4320** and **4321** are mechanically linked via a drive belt **4322.** In certain embodiments, the drive motor causes the drive shaft pulley **4320** to rotate or turn the drive belt **4322,** which in turn rotates or turns the drive shaft pulley **4321.** In certain embodiments, the drive shaft pulley **4321** is engaged with the drive shaft **4305.** In certain embodiments, a drive shaft **4305** is configured to actuate the rotation of a drum assembly. In certain embodiments, a drive shaft **4305** is engaged with one or more drive wheels **4314.** In certain embodiments, a drive shaft is engaged with two drive wheels. In certain embodiments, the centers of the two drive wheels are about 31.00 inches apart. In certain embodiments, one or more drive wheels **4314** are engaged with a drum assembly. In certain embodiments, one or more drive wheels are engaged with the one or more drum frame **1601** of a drum assembly. In certain embodiments, a drum bearing plate **2801** is attached to a drum frame **1601.** In certain embodiments, a drive wheel is engaged with a drum frame **1601** of a drum assembly. In certain embodiments, a drive wheel **4314** is engaged with a drum frame **1601** of a drum assembly to transmit rotation from the drive shaft **4305** to the drum assembly. In certain embodiments, one or more drive wheels transmit rotation of the drive shaft to the drum assembly (see **FIGS. 43C-****43D**). In certain embodiments, the drive shaft **4305** and drive wheels **4314** are engaged with one side of the drum assembly. In certain embodiments, the idler shaft **4306** and idler wheels **4315** are engaged with an opposite side of the drum assembly. In certain embodiments, the idler shaft **4306** does not actuate the drum assembly. In certain embodiments, the idler shaft **4306** provides passive support to the drum assembly as it rotates. In certain embodiments, the idler shaft **4306** also provides support to the drum assembly when the assembly is rolled onto the support cradle during an unloading procedure (see, e.g., **FIG. 43E**). In some embodiments, as shown in **FIGS. 43A-43F****,** the drive motor 4316 actuates the drive shaft pulley **4320,** which is coupled to a drive belt **4322** that transmits the rotation to another drive shaft pulley **4321** that is engaged with the drive shaft **4305.** As the drive shaft **4305** rotates, so do the two drive wheels **4314** that are attached to the drive shaft **4305.** Since the drive wheels **4314** are engaged with the drum bearing plate **2802** of the drum assembly, the rotation of the drive wheels **4314** causes the drum bearing plate **2802,** and consequently, the drum assembly to rotate or turn about its axis (e.g., the drum shaft). As the drum assembly rotates, the idler wheels **4315** attached to the idler shaft **4306** engaged with the drum assembly on the opposite side of the drive shaft **4305** rotate with the drum assembly to provide support. Examples of the drive shaft and the idler shaft are as shown in **FIG. 17**, or as **4305** and/or **4306** in **FIGS. 43A-43F****.** In certain embodiments, the drive shaft and/or the idler shaft comprise or are made of any suitable material, for example, stainless steel. In certain embodiments, the diameter of a longitudinal cross-section of the drive shaft and/or the idler shaft is about 1 inch. In certain embodiments, the longitudinal length of an idler shaft is about 38.06 inches. In certain embodiments, a longitudinal length of a drive shaft is about 40.69 inches. In certain embodiments, the material of the drive shaft includes, for example, stainless steel. In certain embodiments, the drive shaft and/or the idler shaft is keyed, cut to length and/or have chamfer ends.

In certain embodiments, a drive shroud is as shown in **FIG. 18** or as **4307** in **FIGS. 43A-43F****.** In certain embodiments, the drive shroud is included in a top assembly of an rGO/graphene second reaction filter for shrouding elements including the motor that actuates the drum assembly. **FIG. 18** shows a perspective view **1801** of an embodiment of a drive shroud from two angles. In certain embodiments, a drive shroud has dimensions including one or more of the following: a width of about 8.75 inches, a width of about 9.94 inches, a length of about 19.00 inches, a length of about 21.13 inches, a height of about 1.13 inches, and a height of about 2.00 inches. In certain embodiments, drive shroud comprises or is made of a material that includes, for example, stainless steel sheet. In certain embodiments, thickness of the sheet is about 0.063 inches. In certain embodiments, drive shroud has welded corner seams and is ground smooth.

An embodiment of a drum shaft support is shown in **FIGS. 19A-19B****,** or as **4308** and **4309** in **FIG. 43D****.** In certain embodiments, the drum shaft support is included in a top assembly of an rGO/graphene second reaction filter. In certain embodiments, the drum shaft support is a part of a drum assembly and provides support to the drum assembly (e.g. drum). In certain embodiments, the drum shaft support provides support to a drum shaft mount (**2804** in **FIG. 28A**). In certain embodiments, the drum shaft does not actuate the drum or drum assembly that rotates thereon. In certain embodiments, a drum assembly is actively rotated by a drive shaft (directly or indirectly) that is actuated by a drive motor. In certain embodiments, the drum shaft provides support for a drum assembly that passively rotates. In certain embodiments, the drum shaft actuates the drum assembly that rotates thereon. As shown in **FIG. 19A**, in certain embodiments, the drum shaft support has a fluid facing side (facing toward the inside of the drain pan and/or the interior of the drum) and an idler facing side (facing toward outside of the drainpan and/or the exterior of the drum). In certain embodiments, the drum shaft support is used to support the drum shaft. In certain embodiments, the drum shaft support is configured to allow the drum shaft to be lifted up off the drum shaft support (e.g. so the drum assembly can be rolled onto the drum cradle assembly). In certain embodiments, drive shroud comprises or is made of a material that includes high density polyethylene (e.g., about 1.75 inches in thickness). **FIG. 19B** shows a top-down view **1901,** a front view **1902,** and a cross-section side view **1903** of an embodiment of a drum shaft support. In certain embodiments, a drum shaft support comprises one or more apertures **1905.** In certain embodiments, the one or more apertures **1905** comprise a diameter of about 1.75 inches. In certain embodiments, a drum shaft support comprises an opening **1904.** In certain embodiments, a drum shaft support has dimensions including one or more of the following: a height **1906** of about 10.00 inches, a width **1907** of about 6.11 inches, and a depth **1908** of about 1.75 inches.

In certain embodiments, a motor mount plate is as shown in **FIG. 20** or as **4310** in **FIGS. 43A-43F****.** In certain embodiments, motor mount plate is included in a top assembly of an rGO/graphene second reaction filter for enabling mounting of motor(s) that actuate the drum assembly and/or other elements of the top assembly. **FIG. 20** shows an embodiment of a motor mount plate with a perspective view **2003.** In certain embodiments, a motor mount plate has dimensions including one or more of the following: a width of about 8.00 inches, a height of about 10.00 inches, and a thickness of about 0.50 inches. In certain embodiments, motor mount plate comprises or be made of a material that includes stainless steel sheet (e.g., about 0.5 inches in thickness).

In certain embodiments, a frame weldment **1301** is as shown in **FIGS. 21A-21C****.** In certain embodiments, frame weldment includes stainless steel plates **2110, 2111,** and **2112,** and stainless steel tubes **2101, 2102, 2103, 2104, 2105, 2106, 2107, 2108** and **2109.** In certain embodiments, a stainless steel tube has dimensions including one or more of the following: a length of about 35.00 inches, about 38.75 inches, about 39.00 inches, or about 42.75 inches, a width of about 3.00 inches, about 2.00 inches, or about 2.38 inches, and a height of about 2.00 inches or about 0.50 inches. In certain embodiments, a frame weldment has dimensions including one or more of the following: a width **2113** of about 38.75 inches and a height **2114** of about 38.38 inches. In certain embodiments, other suitable elements and/or materials of different sizes and/or dimensions are used.

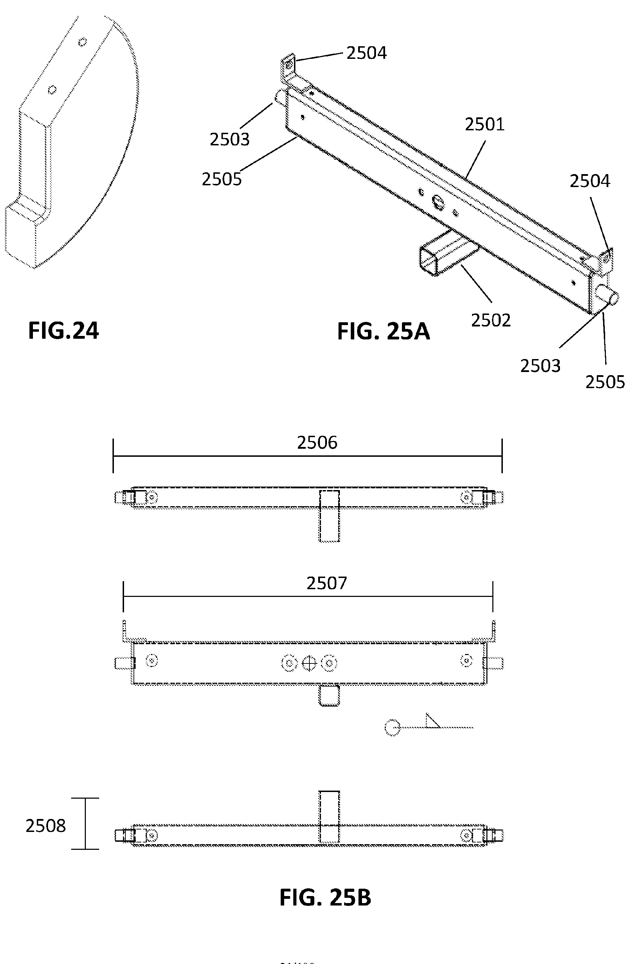

In certain embodiments, a lid weldment **1303** is as shown in **FIG. 22****.** In certain embodiments, lid weldment includes a top cover **2201.** In certain embodiments, top cover comprises or is made of one or more materials, such as, for example, stainless steel sheet. In certain embodiments, the lid weldment comprises a fluid side panel **2202** and an idler side panel **2203.** In certain embodiments, the fluid side panel **2202** and the idler side panel **2203** comprise or are made of, for example, stainless steel sheet. In certain embodiments, stainless steel sheet is about 0.125 inches in thickness. In certain embodiments, lid includes a window **2204** and a window trim gasket **2205** at the front side of the lid. In certain embodiments, on the same side, the lid includes a handle **2206,** a flat washer **2207,** and a socket head cap screw **2208.** In certain embodiments, lid weldment includes a lid stop **2210** for positioning the lid in an open or in a closed position. Examples of shapes, sizes and/or dimensions of the lid stop are shown in **FIG. 24****.** In certain embodiments, lid stop comprises or is made of one or more materials, such as, for example, high density polyethylene (HDPE). In certain embodiments, window comprises or is made of materials including, for example, Plexiglas. In certain embodiments, thickness of the Plexiglas is about 3/16 inches. In certain embodiments, lid weldment includes a gas spring mount bracket **2211,** a hex bolt **2213,** a nut **2214** or suitable elements of similar functions. In certain embodiments, the flat washer, the screw, the bolt and the nut comprise or are made of one or more materials, such as, for example, stainless steel. In certain embodiments, a lid weldment has dimensions including one or more of the following: a length of about 44.4 inches, a width of about 38.1 inches, and a height of about 27.5 inches. In certain embodiments, the fluid side panel has dimensions including one or more of the following: a first width of about 28.5 inches, a second width of about 39.0 inches, a height of about 20.2 inches, and a thickness of about 0.125 inches. Examples of shapes, sizes and/or dimensions of the lid weldment and its elements are shown in **FIG. 22****.**

In certain embodiments, drainpan weldment **1302** is as shown in **FIG. 23****.** In certain embodiments, drainpan weldment includes a front panel **2303,** a rear panel **2304,** a drain plate **2305,** a front panel gusset **2306,** a side panel facing/connecting the drive shaft **2301,** and a side panel facing/connecting the idler shaft **2302.** In certain embodiments, a drain plate **2305** has dimensions including one or more of the following: an aperture diameter of about 3.63 inches, a width of about 4.56 inches, a length of about 5.44 inches, and a thickness of about 0.125 inches. In certain embodiments, a front panel gusset **2306** has dimensions including one or more of the following: a length of about 7.38 inches, a width of about 1.50 inches, and a thickness of about 0.125 inches. In certain embodiments, one or more elements of the drainpan weldment comprise or are made of materials including, for example, stainless steel sheet. In certain embodiments, stainless steel sheet has a thickness of about 0.125 inches. In certain embodiments, drainpan weldment is water-tight at all seams. In certain embodiments, one or more (e.g., all) joints and/or mating surfaces are seam welded, and are ground smooth. In certain embodiments, a drainpan weldment has dimensions including one or more of the following: a width 2307 of about 38.38 inches, a width **2308** of about 42.1 inches, a length **2309** of about 39.6 inches, and a height **2310** of about 15.3 inches. Examples of shapes, sizes and/or dimensions of the drainpan weldment and its elements are shown in **FIG. 23****.**

In certain embodiments, a cradle pivot weldment **1401** is as shown in **FIGS. 25A-****25B.** In certain embodiments, the cradle pivot weldment includes one or more tube structures **2501** and **2502.** In an example, one or more of such tube structures have a tube size of about 2.00 inches x 4.00 inches x 0.13 inches, or about 2.00 inches x 2.00 inches x 0.13 inches. In certain embodiments, the cradle pivot weldment includes a pivot shaft **2503.** In certain embodiments, the pivot shaft has a rod shape with a diameter of about 1 inch. In certain embodiments, the cradle pivot weldment includes a pivot lock **2504** for receiving a locking pin (e.g. for locking the cradle pivot assembly in place to prevent rotation) and a pivot plate **2505.** In certain embodiments, one or more of such elements comprise or are made of one or more materials, such as, for example, stainless steel. In certain embodiments, the pivot plate has a thickness of about 0.25 inches. In certain embodiments, the pivot lock has a size of about 2.00 inches x 3.00 inches x 0.25 inches. In certain embodiments, the pivot plate includes or is made of a material such as, for example, stainless steel. In certain embodiments, the pivot plate and the pivot shaft are cut to length and have chamfered ends. In certain embodiments, one or more joints are welded and ground smooth. In certain embodiments, the shaft uses drop material of an idler shaft (e.g., as shown in **FIG.17**). In certain embodiments, a cradle pivot weldment has dimensions including one or more of the following: a width **2506** of about 38.25 inches, a width **2507** of about 36.63 inches, and a depth **2508** of about 5.13 inches. In certain embodiments, the cradle pivot weldment comprises a tube **2501** having dimensions including one or more of the following: a width of about 34.50 inches, a depth of about 2.00 inches, and a height of about 4.00 inches. In certain embodiments, the tube has dimensions including one or more of the following: a length of about 4.75 inches, a width of about 2.00 inches, and a height of about 2.00 inches. In certain embodiments, the pivot shaft **2503** has dimensions including one or more of the following: a length of about 2.00 inches and a diameter of about 1.00 inches. In certain embodiments, the pivot lock **2504** has dimensions including one or more of the following: an aperture with a diameter of about 0.656 inches, a width of 1.25 inches, a height of about 2.00 inches, and a depth of about 2.25 inches. In certain embodiments, the pivot plate **2505** has dimensions including one or more of the following: an aperture having a diameter of about 1.031 inches, a width of about 1.81 inches, a height of about 3.81 inches, and a thickness of about 0.25 inches. Examples of shapes, sizes and/or dimensions of the cradle pivot weldment and its elements are shown in **FIG. 25B****.**

In certain embodiments, the drum roll guide **1403** is as shown in **FIG. 26A****.** In certain embodiments, the drum roll guide is included in a cradle pivot assembly. In certain embodiments, the drum roll guide comprises one or more apertures. In certain embodiments, the drum roll guide has dimensions including one or more of the following: a width **2601** of about 5.00 inches, a height **2602** of about 4.50 inches, and a depth **2603** of about 1.00 inches.

In certain embodiments, the cradle pivot assembly includes a drum brace. In certain embodiments, the drum brace is as shown in **FIG. 26B****.** In certain embodiments, the drum brace comprises or is made of one or more materials, such as, for example, HDPE. In certain embodiments, the drum brace has dimensions including one or more of the following: a width **2607** of 18.00 inches, a height **2605** of about 3.00 inches, a height **2606** of about 4.53 inches, and a thickness **2604** of about 1.00 inches.

In certain embodiments, the drum cradle weldment **1501** is as shown in **FIG. 27****.** In certain embodiments, the drum cradle weldment has dimensions including one or more of the following: a width of about 33.00 inches, a length of about 20.38 inches, and a thickness of about 2.00 inches. In certain embodiments, the drum cradle weldment includes one or more tube structures. In an example, one or more of such tube structures have a tube size of about 2.00 inches x 2.00 inches x 0.13 inches. In certain embodiments, the drum cradle weldment includes a shaft **2705.** In certain embodiments, the shaft has a rod shape with a diameter of about 1 inch and a length of about 6.5 inches. In certain embodiments, the drum cradle weldment includes a catch plate **2706.** In certain embodiments, a locking spring pin (shown in **FIG. 15B**) goes through the catch plate into the drum catch (shown on **FIG. 14B**) to hold the drum cradle assembly in place and prevent it from pivoting about the cradle pivot. This keeps the drum cradle assembly stable to receive the drum assembly during unloading (see, e.g., **FIG. 43E**). In certain embodiments, once the drum assembly (e.g. drum) has been rolled onto the drum cradle assembly, the drum idler hub is removed, and the drum is strapped to the cradle. Next, the locking pin is pulled to enable the drum cradle assembly to rotate along with the strapped on drum. The rotated drum is now in a position for the batch of filtered carbonaceous composition (e.g., rGO) to be transferred into a vessel or container. In certain embodiments, one or more elements of the drum cradle weldment comprise or are made of one or more materials, such as, for example, stainless steel. In certain embodiments, the pivot plate has a size of about 1.25 inches x 3.25 inches x 0.25 inches. In certain embodiments, the pivot lock has a size of about 2.00 inches x 3.00 inches x 0.25 inches. In certain embodiments, the shaft includes or is made of a material such as, for example, stainless steel. In certain embodiments, the pivot plate and the pivot shaft are cut to length and have chamfered ends. In certain embodiments, one or more joints are welded and ground smooth. In certain embodiments, the shaft uses drop material of an idler shaft (e.g., as shown in **FIG. 17**). Examples of shapes, sizes and/or dimensions of the drainpan weldment and its elements are shown in **FIG. 27****.**

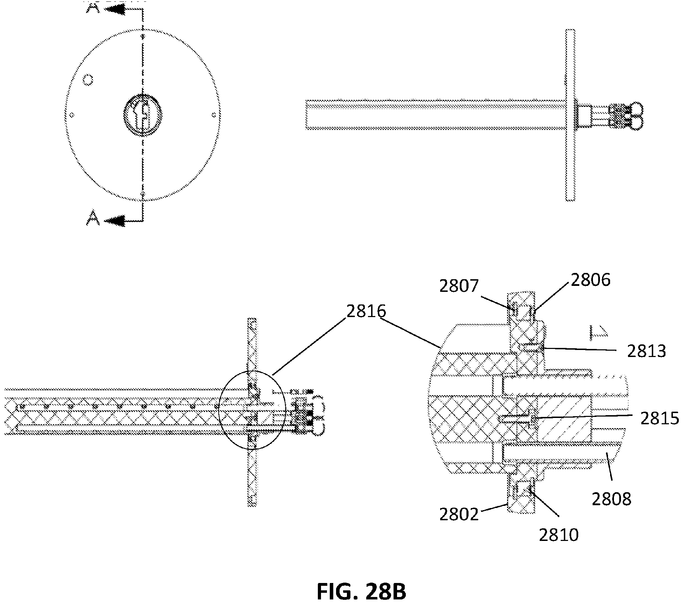

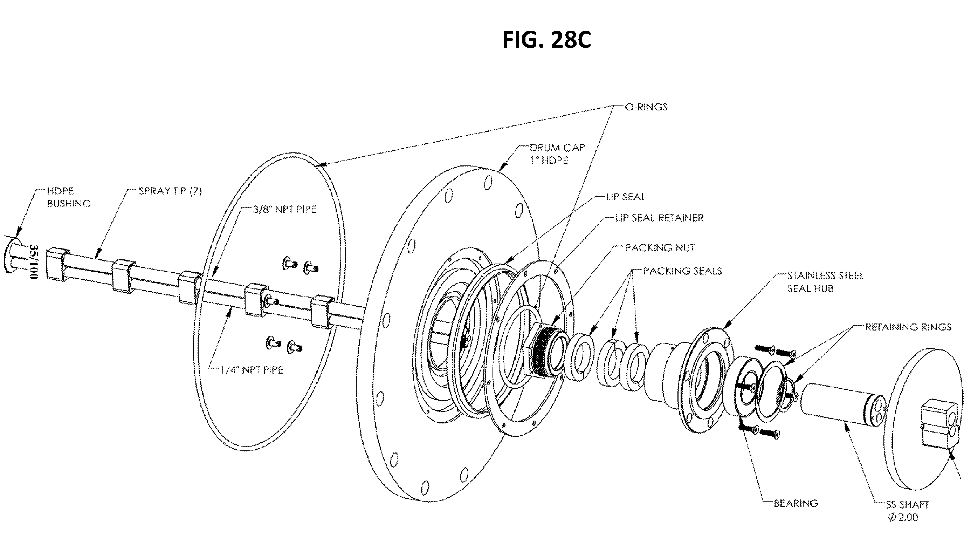

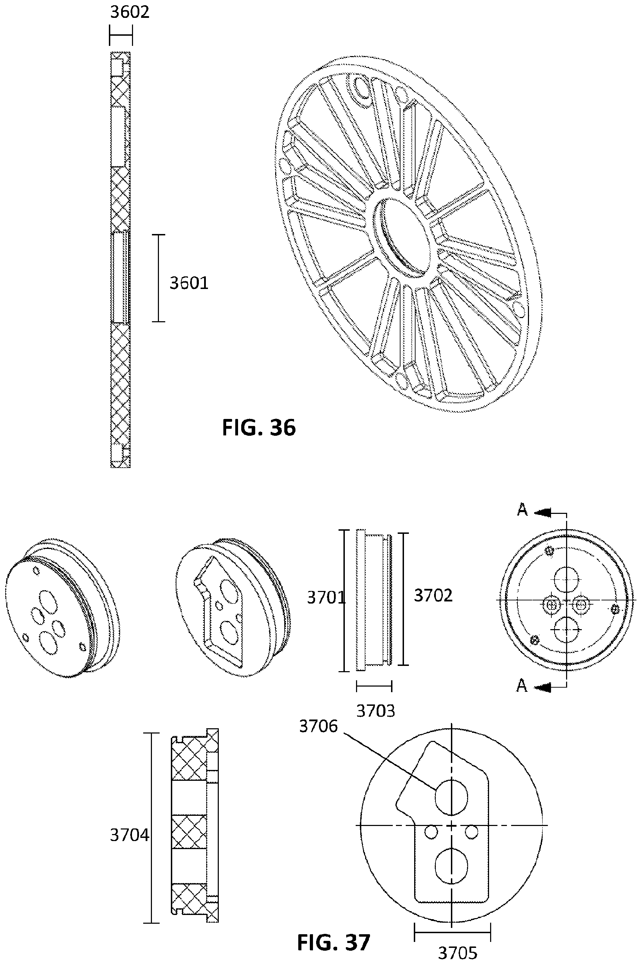

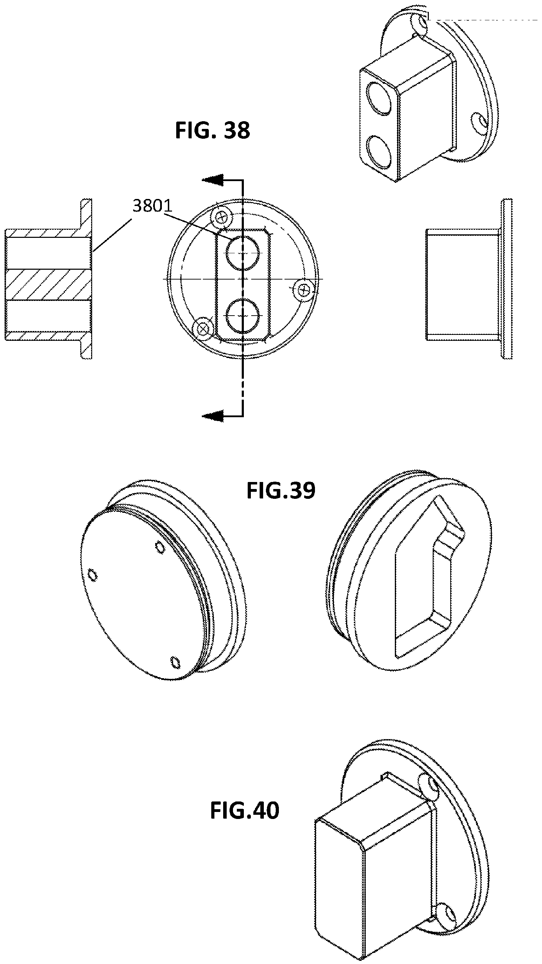

In certain embodiments, the drum assembly (e.g., drum assembly shown in **FIGS. 16A-16B**) includes a spray bar assembly. In certain embodiments, the spray bar assembly is as shown in **FIGS. 28A-28C****.** In certain embodiments, the spray bar assembly is used, for example, for dispensing a carbonaceous composition such as reaction products from the second reaction (e.g., rGO). In certain embodiments, the spray bar assembly dispenses a carbonaceous composition into the interior space of the drum assembly In certain embodiments, the spray bar assembly dispenses a carbonaceous composition into the interior space of the drum assembly while the drum assembly is rotating. In certain embodiments, the spray bar assembly dispenses a carbonaceous composition into the interior space of the drum assembly while the drum assembly is not rotating. In certain embodiments, the spray bar assembly dispenses the carbonaceous composition at a low pressure. In certain embodiments, a low pressure is equal to or less than about 5, 10, 15, 20, 25, 30, 35, 40, 45, 50, 55, 60, 65, 70, 75, 80, 85, 90, 95, 100, 110, 120, 130, 140, 150, 160, 170, 180, 190, or 200 PSI. In certain embodiments, a low pressure is equal to or greater than about 5, 10, 15, 20, 25, 30, 35, 40, 45, 50, 55, 60, 65, 70, 75, 80, 85, 90, 95, 100, 110, 120, 130, 140, 150, 160, 170, 180, 190, or 200 PSI. In certain embodiments, the spray bar assembly is fluidly coupled (e.g. via a conduit and aperture of a drum shaft mount) to a second reaction tank or vessel. In certain embodiments, the spray bar assembly is fluidly coupled to a tank or vessel holding the product of the second reaction (e.g., rGO). In certain embodiments, the spray bar assembly actively pumps a carbonaceous composition from the tank or vessel into the drum assembly. In certain embodiments, operation of the spray bar assembly is automated or semi-automated. In certain embodiments, the spray bar assembly includes a spray bar **2801**(e.g., as shown in **FIG. 35**), a drum bearing plate **2802** (e.g., as shown in **FIG. 36A**), a spray bar bearing hub **2803** (e.g., as shown in **FIG. 37**), and a drum shaft mount **2804** (e.g., as shown in **FIG. 38**). In certain embodiments, the spray bar assembly includes one or more elements selected from, for example: a socket head cap screw **2805,** an external snap ring **2806,** an internal retaining ring **2807,** a nipple **2808,** a spray tip **2809,** a ball bearing **2810,** a hole plug **2811,** epoxy **2812** (not shown), a flat head screw **2813,** and quick disconnect fittings **2814** and **2815.** A close-up view **2816** of the spray bar assembly is also shown in **FIG. 28B****.** In certain embodiments, one or more elements of the spray bar assembly comprise or are made of one or more materials, such as, for example, stainless steel, nickel plated steel and/or HDPE. In certain embodiments, the nipple is 1/2 inch national pipe thread taper (NPT) in diameter and about 6.0 inches in length. In certain embodiments, the spray tip is 3/8 inches NPT with 50 degree fan. In certain embodiments, a spray tip is configured to dispense a material (e.g., a wash liquid or a carbonaceous composition) at a spray angle of at least 10, 20, 30, 40, 50, 60, 70, 80, 90, 100, 110, 120, 130, 140, 150, 160, or 170 degrees. In certain embodiments, epoxy is applied to threads prior to installation (e.g., of a socket head cap screw **2805,** a flat head screw **2813** and/or any other element(s)). In certain embodiments, the spray bar assembly is used, for example, for spraying a liquid (e.g. water, a liquid solution, a cleaning solution, a rinsing solution, etc.) into the interior of the drum assembly. In certain embodiments, the spray bar assembly is used for washing or rinsing a carbonaceous composition held within the drum assembly. In certain embodiments, the spray bar assembly sprays a liquid at a high pressure. In certain embodiments, the high pressure is equal to or less than about 10, 15, 20, 25, 30, 35, 40, 45, 50, 55, 60, 65, 70, 75, 80, 85, 90, 95, 100, 110, 120, 130, 140, 150, 160, 170, 180, 190, 200, 250, 300, 350, 400, 450, or 500 PSI. In certain embodiments, the high pressure is equal to or more than about 10, 15, 20, 25, 30, 35, 40, 45, 50, 55, 60, 65, 70, 75, 80, 85, 90, 95, 100, 110, 120, 130, 140, 150, 160, 170, 180, 190, 200, 250, 300, 350, 400, 450, or 500 PSI. In some embodiments, the spray bar assembly is configured as shown in **FIG. 28C****.** In some embodiments, the drum assembly a spray bar assembly and one or more of: drum cap, packing nut, packing seal(s), seal hub, retaining ring, bearing, shaft, or mount (see **FIG. 28C**).

In certain embodiments, the drum assembly comprises a drum mesh and/or micron filter having a pore size that is small enough to prevent passage of the carbonaceous composition (e.g., rGO), thereby retaining the carbonaceous composition within the interior of the drum assembly after it is dispensed by the spray bar while allowing a filtrate comprising waste products, unreacted reaction components, impurities, and other undesirable compounds to drain through the drum assembly (e.g., drain into a drain pan positioned underneath the drum assembly). In certain embodiments, the carbonaceous composition retained within the drum assembly is washed at high pressure by a liquid sprayed from the spray bar assembly. In certain embodiments, the spray bar assembly is removable from the drum assembly for unloading. Advantages of a removable spray bar assembly include, for example, ease of cleaning, unclogging, or replacement. Another advantage is that a high throughput process designed to maximize production of purified product (e.g. GO or rGO of sufficient purity and properties for use in a battery and/or capacitor) is enhanced by the use of a removable spray bar assembly that enables removal, repair, and/or replacement of the spray bar to minimize down time in case of spray bar assembly malfunction. In certain embodiments, the purified product has a purity (w/w) of at least 50%, 60%, 70%, 80%, 90%, 95%, 96%, 97%, 98%, 99%, or 99.9% after drying.

In certain embodiments, the drum assembly (e.g., drum assembly shown in **FIGS. 16A-16B**) includes a drum end cap assembly. In certain embodiments, the drum end cap assembly is as shown in **FIGS. 29A-28B****.** In certain embodiments, the drum end cap assembly includes a drum bearing plate **2901** (e.g., as shown in **FIG. 36**), a spray bar bearing hub **2902** (e.g., as shown in **FIG. 39**) and/or a drum shaft mount **2903** (e.g., as shown in **FIG. 40**). In certain embodiments, the drum bearing plate, the spray bar bearing hub, the drum shaft mount comprises or are made of one or more materials, such as, for example, HDPE. In certain embodiments, the drum end cap assembly includes one or more elements selected from, for example: an external snap ring **2904,** an internal retaining ring **2905,** a nipple **2808,** a hole plug **2907,** epoxy **2909,** a flat head screw **2906** and a deep groove ball bearing **2908.** In certain embodiments, one or more elements of the drum end cap assembly comprises or are made of one or more materials, such as, for example, stainless steel and/or nickel plated steel. In certain embodiments, the ball bearing is sealed. In certain embodiments, epoxy is applied to threads prior to installation of the flat head screw **2906** and/or any other element(s).

Examples of shapes, sizes and/or dimensions of the drum frame 1601 are shown in **FIGS. 30A-30D****.** In certain embodiments, the drum frame provides structural support for the drum assembly. In certain embodiments, the drum frame is configured to engage with one or more drive wheels. In certain embodiments, the drum frame receives rotational force from the one or more drive wheels (e.g., originating from a drive shaft that is rotated via a drive motor), causing the drum frame to rotate about its axis. In certain embodiments, the drum frame is configured to engage with one or more idler wheels. In certain embodiments, the drum frame comprises a groove on its outside surface for receiving one or more drive wheels. The groove provides a benefit of keeping the drum frame aligned with the one or more drive wheels. In certain embodiments, the drive wheel is configured to maximize friction. In certain embodiments, the drive wheel is configured to produce sufficient friction with the drum frame for the efficient transfer of rotational energy (e.g., minimize slippage as the drive wheels turn). In certain embodiments, the idler wheel is configured to minimize friction with the drum frame. In certain embodiments, the drum frame comprises or is made of one or more materials, such as, for example, HDPE. In certain embodiments, the drum frame has a thickness of about 2.50 inches.

Examples of shapes, sizes and/or dimensions of the drum stiffener **1602** are shown in **FIG. 31****.** In certain embodiments, the drum stiffener comprises or is made of one or more materials, such as, for example, HDPE. In certain embodiments, the drum stiffener has a substantially rod-like shape (e.g., has a rod shape) with a diameter of about 1 inch. In certain embodiments, the drum stiffener has a thickness of about 0.75 inches. In certain embodiments, the drum stiffener has a length **3101** of about 30.50 inches. In certain embodiments, the drum stiffener provides structural support for the drum assembly. In certain embodiments, the drum stiffener provides a structural backing for the drum mesh and/or drum micron filter. In certain embodiments, the drum stiffener provides structural support for the drum mesh and/or drum micron filter to prevent warping, ripping, or other forms of deformation due to high velocity and/or high pressure materials dispensed inside the drum assembly (e.g., high pressure deionized water sprayed from a spray bar to wash a carbonaceous composition inside the drum assembly). In certain embodiments, one or more drum stiffeners are configured to provide structural support in combination with one or more drum stiffener rings.

Examples of shapes, sizes and/or dimensions of the drum stiffener ring **1603** are shown in **FIG. 32****.** In certain embodiments, the drum stiffener ring has a diameter of about 22.75 inches and a thickness of about 0.75 inches. In certain embodiments, the drum stiffener ring comprises or is made of one or more materials, such as, for example, HDPE. In certain embodiments, the drum stiffener ring provides structural support for the drum assembly. In certain embodiments, the drum stiffener ring provides a structural backing for the drum mesh and/or drum micron filter. In certain embodiments, the drum stiffener ring provides structural support for the drum mesh and/or drum micron filter to prevent warping, ripping, or other forms of deformation due to high velocity and/or high pressure materials dispensed inside the drum assembly (e.g., high pressure deionized water sprayed from a spray bar to wash a carbonaceous composition inside the drum assembly). In certain embodiments, one or more drum stiffener rings are configured to provide structural support in combination with one or more drum stiffeners.

An example of the drum mesh **1604** is shown in **FIG. 33****.** In certain embodiments, the drum mesh comprises or is made of, for example, a welded stainless steel mesh. In certain embodiments, the mesh is cut to a given size before rolling (e.g., before rolling into a cylindrical shape). In certain embodiments, the mesh is, for example, a ½ inch mesh T316 welded 0.063 inch wire by 4.0 inch wide roll (e.g., part # 002X002WT0630W48T from TWP INC.). In certain embodiments, the size of the mesh before rolling is, for example, about a width **3301** of about 30.50 inches by a length of about 65.00 inches. In certain embodiments, the rolled mesh has a diameter of about 19.88 inches and a length of about 30.50 inches. In certain embodiments, the mesh has wrapped and crimped ends (e.g., see **FIG. 33****,** bottom right). In certain embodiments, the mesh has wrapped and crimped ends for fastening the rolled shape and connecting the ends of the flat mesh into a cylindrical shape. In certain embodiments, the ends are wrapped and crimp along the length (orthogonal to the circular cross-section) of the rolled mesh. In certain embodiments, the drum mesh comprises one or more pore shapes and/or sizes. In certain embodiments, the drum mesh has any suitable pore shape and/or pore size. In certain embodiments, the pore size is variable or consistent throughout the mesh. In certain embodiments, the pore shape has a geometrical shape. In certain embodiments, the pore shape is variable or consistent throughout the mesh. In certain embodiments, the pore shape includes a square, a circle, an oval, a rectangle, a diamond or other geometrical shape (e.g., when the mesh is flat and unrolled).

In certain embodiments, a drum micron filter (e.g., as shown in **FIG. 34**) comprises or is made of, for example, stainless steel weave. In certain embodiments, the cut size of the steel weave before rolling into the cylindrical shape is a length of about 30.50 inches by about 65.00 inches. In certain embodiments, the filter has about a 2.0 inch overlap at a seam along the length (orthogonal to the circular cross-section) of the rolled mesh. In certain embodiments, the rolled filter has a diameter of about 19.81 inches and a length of about 30.50 inches. In certain embodiments, the thickness of the micron filter is, for example, about 0.30 inches. In certain embodiments, the micron filter comprises one or more pore shapes and/or sizes. In certain embodiments, the pore shape(s) and/or size(s) of the micron filter are any suitable shape(s) and/or size(s). In certain embodiments, the pore size is variable or consistent throughout the mesh. In certain embodiments, the pore size includes a width, length, diameter, and/or diagonal from about 1 micron to about 3 microns. In certain embodiments, the pore shape is any geometrical shape. In certain embodiments, the pore shape is variable or consistent throughout the mesh. In certain embodiments, the pore shape includes, for example, a square, a circle, an oval, a rectangle, a diamond, or other geometrical shape (e.g., when the mesh is flat and unrolled).

Examples of shapes, sizes, and/or dimensions of the spray bar **2801** are shown in **FIG. 35****.** In certain embodiments, the spray bar comprises or is made of one or more materials including, for example, HDPE. In certain embodiments, the spray bar comprises one or more openings 2809 (e.g., a spray tip) for dispensing a material (e.g., a liquid, a wash liquid, a carbonaceous composition). In certain embodiments, the spray bar comprises at least 1, 2, 3, 4, 5, 6, 7, 8, 9, 10, 11, 12, 13, 14, 15, 16, 17, 18, 19, or 20 openings for dispensing a material. In certain embodiments, the spray bar comprises one or more internal channels **3503** for transporting a liquid and/or a carbonaceous composition. In certain embodiments, the spray bar has dimensions including one or more of the following: a length **3501** of about 32.38 inches and a height **3502** of about 3.12 inches.

Examples of shapes, sizes and/or dimensions of the drum bearing plate **2802** are shown in **FIG. 36A.** In certain embodiments, the drum bearing plate comprises or is made of one or more materials including, for example, HDPE. In certain embodiments, the drum bearing plate has dimensions including one or more of the following: a diameter of about 19.00 inches, a thickness 3602 of about 1 inch, and an internal diameter 3601 of about 4.319 inches.

Examples of shapes, sizes and/or dimensions of the spray bar bearing hub **2803** are shown in **FIG. 37****.** In certain embodiments, the spray bar bearing hub comprises or is made of one or more materials including, for example, HDPE. In certain embodiments, the spray bar bearing hub has dimensions including one or more of the following: a diameter **3701** of about 3.86 inches, a diameter **3702** of about 3.543 inches, a diameter **3704** of about 3.316 inches, a width **3705** of about 1.563 inches, and a thickness **3703** of about 1.00 inch. In certain embodiments, the spray bar bearing hub has one or more openings **3706.**

Examples of shapes, sizes and/or dimensions of the drum shaft mount **2804** are shown in **FIG. 38****.** In certain embodiments, the drum shaft mount sits on a drum shaft support. In certain embodiments, the drum shaft mount comprises an aperture **3801** for receiving a conduit, tube, or input (**2808** in **FIG. 28A**) at an idler side of the drum shaft mount (facing away from the drain pan and/or interior of drum). In certain embodiments, a conduit, tube, or input is a nipple. In certain embodiments, the conduit is configured to receive a flow of material (e.g., a liquid) that travels through the aperture of the drum shaft mount to a spray bar assembly (e.g., into a spray bar **2801** of a spray bar assembly). In certain embodiments, the conduit receives a low pressure flow (e.g., of a carbonaceous composition such as, for example, rGO) into the drum assembly. In certain embodiments, the conduit receives a high pressure flow (e.g., of deionized water or some other wash liquid) into the drum assembly. In some embodiments, the drum shaft mount comprises two apertures, each aperture receiving a conduit receiving a flow of material. In certain embodiments, the two apertures receive a high pressure conduit and a low pressure conduit. In certain embodiments, a conduit is configured to couple with a source of material (e.g., a tank holding a wash liquid or a tank holding a carbonaceous composition). In certain embodiments, the material is transferred from a source to the spray bar assembly or spray bar using a pump, by gravity, or any other methods. In certain embodiments, the drum shaft mount is engaged with one or more spray bars **2801.** In certain embodiments, a conduit **2808** is configured to couple with a quick disconnect fitting **2814.** An advantage of a conduit configured to couple with a quick disconnect fitting is it allows the conduit to be sealed off when no source of material is coupled to the conduit. For example, a reaction filter that is not in operation does not need to be coupled to a source of material. As another example, in certain embodiments, when a batch of a carbonaceous composition has already been introduced into the drum assembly and is undergoing a wash cycle, a conduit configured to receive a carbonaceous composition does not need to be coupled to a source of the carbonaceous composition. In certain embodiments, a single conduit is configured to receive both a carbonaceous composition and a wash liquid (e.g., deionized water). For example, in one embodiment, a single conduit receives a material from a source of a carbonaceous composition that is dispensed inside the drum assembly via a spray bar of a spray bar assembly, and then the conduit is coupled to a source of deionized water that is dispensed inside the drum during the subsequent cleaning cycle(s). In certain embodiments, the drum shaft mount is engaged with a spray bar **2801** via an external snap ring **2806,** a spray bar bearing hub **2803,** a ball bearing **2810** (e.g., deep groove ball bearing), and an internal retaining ring **2807** (e.g., as shown in **FIG. 28A** and **28C**). In certain embodiments, the drum shaft mount comprises or is made of one or more materials including, for example, HDPE. In certain embodiments, the drum shaft mount is about 2 inches in thickness.

Examples of shapes, sizes and/or dimensions of the spray bar bearing hub **2902** are shown in **FIG. 39****.** In certain embodiments, the spray bar bearing hub comprises or is made of one or more materials including, for example, HDPE. In certain embodiments, the spray bar bearing hub is about 1 inch in thickness. **FIG. 39** shows the idler side of the hub. In certain embodiments, the fluid side of the hub is a mirrored shape and/or size of the idler side.

Examples of shapes, sizes and/or dimensions of the drum shaft mount **2903** are shown in **FIG. 40****.** In certain embodiments, the drum shaft mount **2903** does not comprise one or more apertures for receiving a conduit and/or a source of material (e.g., wash liquid and/or carbonaceous composition). In certain embodiments, the drum shaft mount **2903** is located on the opposite side of the drum assembly as the other drum shaft mount **2804** (which does comprise one or more apertures). In certain embodiments, the drum shaft mount comprises or is made of one or more materials including, for example, HDPE. In certain embodiments, the drum shaft mount is about 2 inches in thickness. **FIG. 39** shows the idler side of the mount. In certain embodiments, the fluid side of the mount is a mirrored shape and/or size of the idler side. The details of structural elements and their inter-relations in the rGO/graphene second reaction filter in some cases are described in **FIGS. 43A-43F** and/or TABLE 3. In some cases, the exemplary procedures of operating an rGO/graphene second reaction filter (shown in **FIGS. 43A-43F**) are shown in **FIG. 42****.** As shown in **FIG. 42****,** an unloading procedure can include any of the following steps: quick-disconnect the fluid lines, open lid, raise & lock drum support, roll drum onto support cradle, remove drum idler hub, strap drum to cradle, pull locking pin & rotate cradle, engage lock pin in rotated position, remove spray bar assembly, and remove graphene. In certain embodiments, operation and unloading of the second reaction filter is automated or semi-automated.

In some embodiments, an rGO/graphene second reaction filter (alternatively herein as the top assembly) (e.g., as shown in **FIGS. 43A-43F**) includes an enclosure **4318** and/or a control enclosure **4319.** In certain embodiments, the enclosure **4318** and/or control enclosure **4319** houses or encloses a control unit therein. In certain embodiments, the control unit and/or its enclosure are physically attached to one or more elements of the top assembly. Alternatively, in other embodiments, the control unit and/or its enclosure are remotely located from the top assembly. In certain embodiments, the control unit is electrically or electronically connected to one or more elements of the top assembly to control operation (e.g., mechanical operation). In certain embodiments, the control unit controls, for example, the filtering steps and/or reactions, and/or unloading of the top assembly. In certain embodiments, the unloading of the top assembly is automated. In certain embodiments, the control unit and the top assembly are in communication and/or connected via a wired or a wireless connection. In certain embodiments, the control unit includes a user interface that allows a user to enter input at the interface. In certain embodiments, the control unit includes a digital processing device comprising a processor to control the top assembly. In certain embodiments, the control unit includes one or more software modules embedded and executable by the digital processing device (e.g., for controlling one or more elements of the top assembly). In certain embodiments, the control unit includes an electronic interface to receive data from non-transitory computer readable media, the Internet, a cloud, a mobile application and the like. In certain embodiments, the control unit includes a digital display. In certain embodiments, the digital display displays information related to the functioning of the second reaction filter and/or to the control of the second reaction filter. In certain embodiments, the control unit includes an on/off switch for turning the second reaction filter on and/or off. In certain embodiments, the control unit includes pre-programmed protocols for controlling one or more elements of the second reaction filter. In certain embodiments, the control unit operates the second reaction filter to carry out a cleaning protocol (e.g., user defined protocol or a predefined protocol). In certain embodiments, the cleaning protocol comprises a number of wash cycles. In certain embodiments, the cleaning protocol comprises at least 1, 2, 3, 4, 5, 6, 7, 8, 9, 10, 11, 12, 13, 14, 15, 16, 17, 18, 19, or 20 wash cycles. In certain embodiments, a wash cycle begins with the dispensing of a wash liquid into the drum assembly and ends when at least 10%, 20%, 30%, 40%, 50%, 60%, 70%, 80%, 90%, 95%, or 99% of the wash liquid has been drained from the interior of the drum assembly. In certain embodiments, a wash cycle comprises a spin cycle (e.g. spin dry cycle), wherein the drum assembly rotates without dispensing a wash liquid in order to drain the wash liquid from the interior of the drum assembly using centrifugal force. In certain embodiments, each wash cycle is configured according to certain properties, such as, for example, amount of the wash liquid (e.g., deionized water) used, length of each wash cycle, number of wash cycles, rotation speed of the drum, the pressure at which the wash liquid is dispensed, and the direction at which the spray bar assembly dispenses the wash liquid (e.g., twelve o'clock, three o'clock, six o'clock, nine o'clock, etc). In certain embodiments, such elements include, but are not limited to, a motor, a driver, a drum shaft, an idler shaft, a drive shaft, an idler wheel, a drive wheel, a spray bar assembly, a cradle pivot assembly, a drum cradle assembly, a lid, a frame assembly, a drive belt, or any combination thereof.

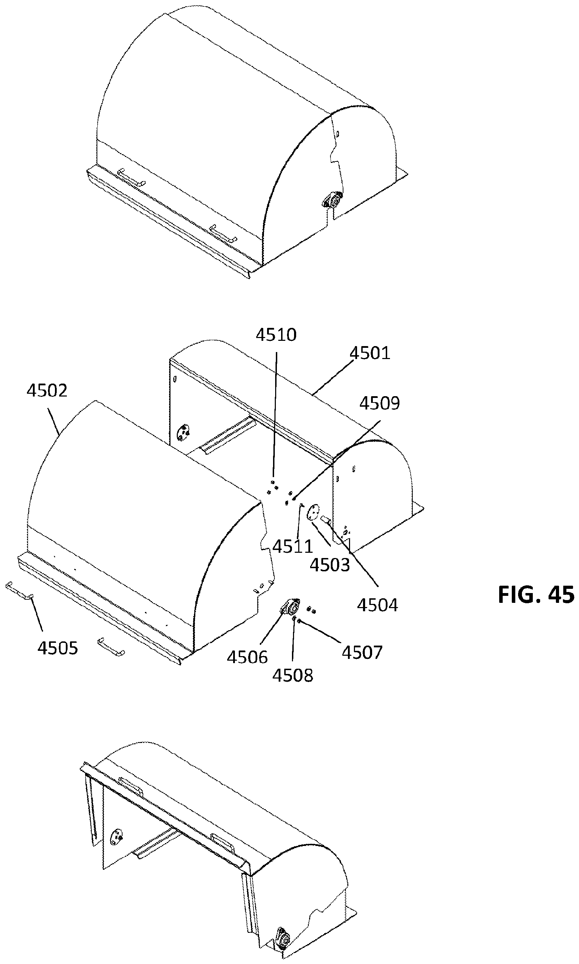

In some embodiments, an rGO/graphene second reaction filter (e.g., as shown in **FIGS. 43A-43F****)** includes a cover assembly as shown in **FIG. 45****.** In certain embodiments, the cover assembly includes one or more structural elements listed in TABLE 3 such as, for example, handles **4505,** 2 bolt flange bearings **4506,** nuts (**4507, 4510**), flat washers (**4508, 4509**), and flat screws **4511.** In certain embodiments, the cover assembly comprises a front lid weldment **4502** and a rear lid weldment **4501** (e.g., as shown in **FIG. 45**). In certain embodiments, the cover assembly comprises a hood pivot shaft **4504** and a hood pivot plate **4503** that help enable the front lid weldment to rotate about the rear lid weldment. In certain embodiments, the hood pivot shaft **4504** has a length of about 1.75 inches. In certain embodiments, the hood pivot plate **4503** has a diameter of about 2.75 inches and a thickness of about 0.125 inches.

In some embodiments, an rGO/graphene second reaction filter comprises a splash guard. In certain embodiments, the splash guard has dimensions including one or more of the following: a width of about 37.75 inches and a height of about 7.30 inches.

In some embodiments, a scalable reactor **4400** is used for making GO and/or rGO as shown in **FIG. 44****.** In certain embodiments, the reactor is a first reaction reactor (e.g., used to implement the first reaction). In certain embodiments, the reactor is automated or semi-automated (e.g., for making GO and/or rGO). In certain embodiments, the reactor and its components are scaled from micro-scale size(s) up to massive scale size(s) for making GO and/or rGO (e.g., as described elsewhere herein). In certain embodiments, the scalable reactor includes two or more (e.g., a plurality of) units (e.g., comprising reaction pots or reaction vessels) **4401.** In certain embodiments, the reactor includes from 1 to 18 vessels. In certain embodiments, the reactor comprises 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30 units. In certain embodiments, the reactor comprises at least 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30 units. In certain embodiments, the reactor is configured to produce GO and/or rGO at a capacity, speed or throughput of, for example, at least about 16 times greater than conventional reactor(s). In certain embodiments, each unit **4401** comprises a mixer **4403** comprising an agitator and a mixer bowl (e.g., with a size/volume from about 20 quart to about 320 quart). In certain embodiments, the reactor includes a tank **4402** (e.g., with a size/volume from about 100 gallons to about 3000 gallons) that is connected (e.g., couple and/or in fluid communication with) each of the units **4401.** In certain embodiments, the reactor comprises one or more ventilation ports (e.g. ventilation in and ventilation out). In certain embodiments, the reactor comprises a mixer or mixer system, wherein the mixer system comprises a motor and an agitator. In certain embodiments, the agitator and/or mixer is configured to be raised and/or lowered from the reactor. In certain embodiments, the reactor comprises a port at a bottom end of the reactor that is in fluid communication with the tank **4402.** In certain embodiments, the port directly empties into the tank. In certain embodiments, the port is coupled to a conduit that transports the contents of the reactor into the tank. In certain embodiments, the conduit comprises or is made of stainless steel. In certain embodiments, the reactor and/or its components are self-cleaning (e.g., such that cleaning is automatically performed with minimal manual intervention and/or without the need for manual intervention).

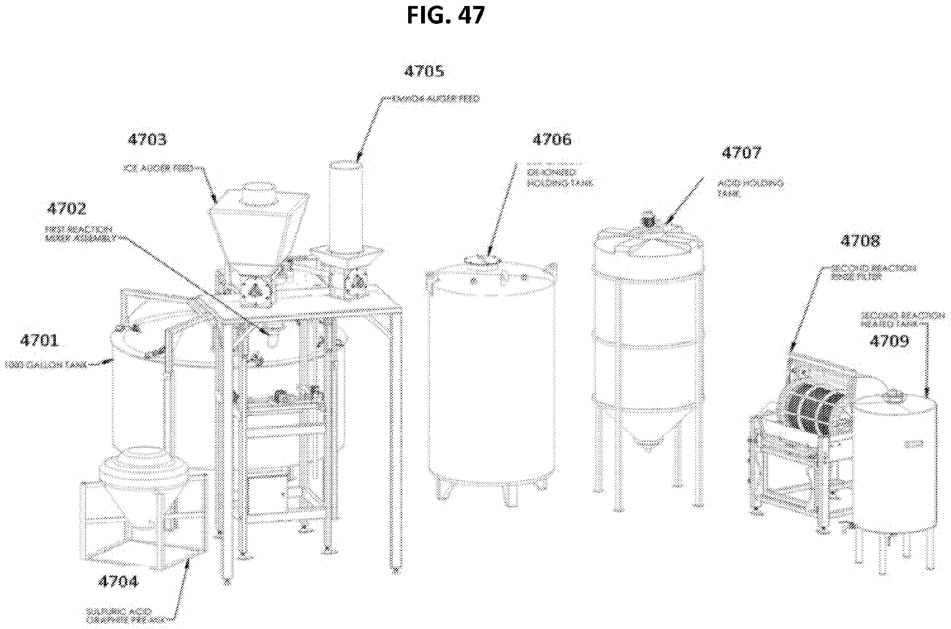

In some embodiments, a system is used for processing a carbonaceous composition as shown in **FIG. 47****.** In certain embodiments, the system comprises a first reaction system or apparatus for carrying out a first reaction to make an oxidized form of a carbonaceous composition, a first reaction filter for filtering an oxidized form of a carbonaceous composition, a second reaction system or apparatus for carrying out a second reaction to make a reduced form of a carbonaceous composition, a second reaction filter for filtering a reduced form of a carbonaceous composition, or any combination thereof. In certain embodiments, the system comprises a first reaction system or apparatus. In certain embodiments, a first reaction system or apparatus comprises a reaction vessel for holding a carbonaceous composition. In certain embodiments, the reaction vessel comprises one or more sensors for measuring the conditions inside the tank. In certain embodiments, the reaction vessel comprises a thermometer or temperature sensor. In certain embodiments, the thermometer or temperature sensor allows a determination of the reaction temperature and/or temperature rate of change inside the reaction vessel. As another example, in certain embodiments, the reaction vessel comprises a pH sensor. As another example, in certain embodiments, the reaction vessel comprises a salt concentration sensor. In certain embodiments, the first reaction system or apparatus comprises a first reaction mixer assembly **4702.** In certain embodiments, the first reaction mixer assembly **4702** agitates or mixes the carbonaceous composition before, during, and/or after the first reaction. In certain embodiments, the first reaction system or apparatus comprises a tank **4701.** In certain embodiments, the carbonaceous composition inside the first reaction vessel is transferred to the tank **4701.**

In certain embodiments, an auger feed (or any other source of a material fed into a reaction vessel and/or a tank) dispenses a material into an intake of a reaction vessel and/or tank. In further embodiments, the intake receives the material, which is then dispensed into the interior of the reaction vessel and/or tank. In some embodiments, a reaction system comprises one or more reaction vessels and/or a tank comprising one or more intakes for receiving materials (e.g. reactants, ingredients, quenching reagents, etc). In certain embodiments, the first reaction vessel is in fluid communication with the tank **4701.** In certain embodiments, the first reaction system or apparatus comprises an ice auger feed **4703.** In certain embodiments, the ice auger feed **4703** dispenses ice (e.g. via the intake) into the tank **4701** before, during, and/or after the first reaction. In certain embodiments, the ice auger feed **4703** dispenses ice into the tank to quench the first reaction. In certain embodiments, the ice auger feed **4703** dispenses ice into the tank to cool the reaction temperature down to a certain temperature or temperature range. In certain embodiments, the ice auger feed **4703** dispenses ice into the tank to cool the reaction temperature down to a temperature less than or equal to about 0°C, 1°C, 2°C, 3°C, 4°C, 6°C, 8°C, 10°C, 15°C, 20°C, 25°C, 30°C, 35°C, 40°C, 45°C, 50°C, 55°C, 60°C, 65°C, 70°C, 75°C, 80°C, 85°C, 90°C, 95°C, or 100°C. In certain embodiments, the ice auger feed **4703** feeds ice into the tank to cool the reaction temperature down to about 0°C, 1°C, 2°C, 3°C, 4°C, 6°C, 8°C, 10°C, 15°C, 20°C, 25°C, 30°C, 35°C, 40°C, 45°C, 50°C, 55°C, 60°C, 65°C, 70°C, 75°C, 80°C, 85°C, 90°C, 95°C, or 100°C. In certain embodiments, the ice auger feed **4703** dispenses ice into the tank to maintain the reaction temperature at a certain temperature or temperature range. In certain embodiments, the ice auger feed **4703** dispenses ice into the tank to maintain the reaction temperature at about 0°C, 1°C, 2°C, 3°C, 4°C, 6°C, 8°C, 10°C, 15°C, 20°C, 25°C, 30°C, 35°C, 40°C, 45°C, 50°C, 55°C, 60°C, 65°C, 70°C, 75°C, 80°C, 85°C, 90°C, 95°C or about 100°C. In certain embodiments, the ice auger feed **4703** dispenses ice into the tank to prevent, reduce, or neutralize a temperature increase caused by an exothermic reaction taking place within the tank. In certain embodiments, the ice auger feed **4703** is automated or semi-automated. In some embodiments, a material (e.g., ice, potassium permanganate, sodium ascorbate, hydrogen peroxide, or other reactants or materials) is dispensed using a feed other than an auger feed. As an example, a tube chain conveyor is used in lieu of an auger feed.

In some embodiments, a water cooling unit (also referred to as a water dispensing unit) is provided for controlling or modulating the temperature of a liquid stored in the unit such as, for example, water. In some embodiments, the unit is configured to cool or reduce the temperature of the liquid. In some embodiments, the unit is configured to maintain the temperature of the liquid at or below a target threshold such as, for example, 0°C, 1°C, 2°C, 3°C, 4°C, 6°C, 8°C, 10°C, 15°C, 20°C, 25°C, 30°C, 35°C, 40°C, 45°C, 50°C, 55°C, 60°C, 65°C, 70°C, 75°C, 80°C, 85°C, 90°C, 95°C, or 100°C. In some embodiments, the threshold is about 0°C, 1°C, 2°C, 3°C, 4°C, 6°C, 8°C, 10°C, 15°C, 20°C, 25°C, 30°C, 35°C, 40°C, 45°C, 50°C. In some embodiments, the water cooling unit comprises an internal space for storing the liquid, e.g., water. In some embodiments, the water cooling unit is fluidly coupled to the reaction vessel and/or the tank. In some embodiments, the water cooling unit is insulated to reduce heat gain and/or heat loss from the interior of the water cooling unit. In some embodiments, the water cooling unit is configured to receive ice (solid ice such as ice cubes and/or shaved ice or ice flakes). In some embodiments, the water cooling unit comprises one or more openings and/or entries (which can be closed and/or covered) allowing ice to be dispensed into the interior of the unit. In some embodiments, the water cooling unit comprises chilled water, ice and/or ice water. In some embodiments, the water cooling unit is configured to store water and maintain the water at or below a target temperature. In some embodiments, the water cooling unit is refrigerated or coupled to a refrigeration unit. In some embodiments, the water cooling unit comprises cooling coils for cooling the unit and/or the interior of the unit. In some embodiments, the water cooling unit comprises at least one sensor such as a temperature sensor. In some embodiments, the water cooling unit is configured to dispense water into the tank, e.g., to aid in quenching the reaction. In some embodiments, the water cooling unit is coupled to a control unit that integrates sensor signals from the reaction system (e.g., temperature readings from sensors in the tank and the water cooling unit) to control the rate of addition of water from the water cooling unit into the tank. In some embodiments, the control unit is configured to instruct the water cooling unit to dispense water into the tank at a target rate of addition for maintaining a target temperature within the tank and/or the reaction mixture/carbonaceous composition in the tank (or keeping the temperature at or below the target temperature). In some embodiments, the control unit is configured to instruct the water cooling unit to add water into the tank and to instruct the reaction vessel to add the reaction components/products (e.g., carbonaceous composition comprising graphene oxide) into the tank simultaneously. In some embodiments, the control unit controls the rate of addition of both the water and the reaction components/products into the tank to achieve a temperature that is at or below a target temperature threshold. In some embodiments, the water cooling unit is configured to dispense water into the reaction mixer.

In certain embodiments, one or more apparatuses or systems for moving and/or dispensing materials into a tank, reactor, vessel, or unit are used such as, for example, a conveyor (e.g. flexible screw conveyor, solid core screw conveyor, an auger conveyor, belt conveyor, etc). In some embodiments, the apparatus or system for moving and/or dispensing materials into a tank comprises a conveyor for transporting said materials from a storage unit (e.g., a deionized water holding tank **4706,** an acid holding tank **4707,** an ice storage unit, a potassium permanganate storage unit, etc) to a first reaction vessel, a first reaction tank (e.g., for quenching a first reaction), a first reaction filter, a second reaction system, or a second reaction filter. In one example, ice is transported from a storage unit to an ice feed (e.g., ice auger feed **4703**) of a tank of a first reaction system or apparatus. In some embodiments, a container comprises a carbonaceous composition **4704.** In certain embodiments, the reaction vessel comprises an intake for receiving potassium permanganate. In certain embodiments, the reaction vessel comprises an intake for receiving sulfuric acid. In certain embodiments, the reaction vessel comprises an intake for receiving a carbonaceous composition (e.g., graphite feedstock). In certain embodiments, the container comprises a carbonaceous composition **4704** comprising pre-mixed graphite and sulfuric acid. In certain embodiments, graphite and sulfuric acid are pre-mixed prior to being introduced into the tank **4701.** One advantage of pre-mixing the carbonaceous composition (e.g. graphite and sulfuric acid) is to reduce variations in reaction temperature and/or reaction rate. Unmixed or unevenly mixed components can result in variations in reaction temperature and/or reaction rate throughout the composition when the reaction initiates. For example, in certain embodiments, adding the catalyst potassium permanganate to a first reaction vessel comprising unmixed graphite and sulfuric acid results in high reaction temperatures and/or reaction rates in some locations with lower reaction activity in other locations. In certain embodiments, a carbonaceous composition comprising graphite and sulfuric acid is pre-mixed within the reaction vessel, or alternatively, in another container **4704.** In certain embodiments, a catalyst such as, for example, potassium permanganate is added to the pre-mixed graphite and sulfuric acid to catalyze the reaction inside the reaction vessel. In certain embodiments, pre-mixing reduces variations in reaction temperature and/or reaction speed during the reaction (e.g., a first reaction) for a given batch. In certain embodiments, pre-mixing reduces variations in reaction temperature and/or reaction rate between separate batches. In some embodiments, another catalyst is substituted for potassium permanganate (e.g., potassium ferrate K₂FeO₄). In certain embodiments, another catalyst is substituted for potassium permanganate in any of the systems, apparatus, and methods described herein. In certain embodiments, apparatus comprises a catalyst auger feed (e.g., a potassium permanganate auger feed **4705**). In certain embodiments, potassium permanganate auger feed **4705** feeds or dispenses potassium permanganate into the reaction vessel (e.g., if the first reaction takes place in the reaction vessel and is quenched in the tank) or into the tank **4701** (e.g., if first reaction and quenching both take place in the tank) before, during, and/or after the first reaction. In certain embodiments, the potassium permanganate auger feed **4705** allows variations in the amount of potassium permanganate being dispensed. In certain embodiments, potassium permanganate auger feed **4705** is automated or semi-automated. In certain embodiments, potassium permanganate auger feed **4705** is manually and/or automatically controlled by a central control unit. In certain embodiments, potassium permanganate auger feed **4705** is configured (e.g. manually or automated) to feed potassium permanganate into the reaction vessel or into the tank **4701** at a rate suitable for maintaining a certain reaction temperature (e.g., temperature inside the reaction vessel for a first reaction) or reaction rate. In certain embodiments, potassium permanganate auger feed **4705** is configured to feed potassium permanganate at a rate suitable for keeping the reaction temperature below a certain temperature. In certain embodiments, a potassium permanganate auger feed **4705** is configured to increase the rate at which potassium permanganate is dispensed when the reaction temperature is below a temperature threshold. In certain embodiments, a potassium permanganate auger feed **4705** is configured to decrease the rate at which potassium permanganate is dispensed when the reaction temperature is above a temperature threshold. In certain embodiments, temperature threshold is about 0°C, 1°C, 2°C, 3°C, 4°C, 6°C, 8°C, 10°C, 15°C, 20°C, 25°C, 30°C, 35°C, 40°C, 45°C, 50°C, 55°C, 60°C, 65°C, 70°C, 75°C, 80°C, 85°C, 90°C, 95°C or 100°C. In certain embodiments, a potassium permanganate auger feed **4705** is configured to increase the rate at which potassium permanganate is dispensed into the tank **4701** when the reaction temperature is increasing below a threshold rate of change. In certain embodiments, the potassium permanganate auger feed **4705** is configured to decrease the rate at which potassium permanganate is dispensed into the tank **4701** when the reaction temperature is increasing above a threshold rate of change. In certain embodiments, the threshold temperature rate of change is about 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 6.5, 7.0, 7.5, 8.0, 8.5, 9.0, 9.5, 10.0, 11, 12, 13, 14, 15, 16, 17, 18, 19, or 20°C per minute (°C/min).

In some embodiments, a system as shown in **FIG. 47** comprises a first reaction filter (e.g., first reaction filter system or first reaction filtration system or apparatus) for filtering an oxidized form of a carbonaceous composition (e.g., graphene oxide). In certain embodiments, first reaction filter filters the products of a first reaction (e.g., oxidation reaction generating GO). In certain embodiments, first reaction filter comprises a filtering membrane.

In some embodiments, a system as shown in **FIG. 47** comprises a second reaction system or apparatus for carrying out a second reaction to generate a reduced form of a carbonaceous composition (e.g. rGO). In certain embodiments, second reaction system or apparatus comprises a second reaction tank, a mixer or mixer system, a heating component, a hydrogen peroxide feed, a sodium ascorbate feed, or any combination thereof. In certain embodiments, the second reaction tank comprise a carbonaceous composition. In certain embodiments, the second reaction system or apparatus comprises a heated tank **4709** (e.g., heat is provided by the heating component). In certain embodiments, the mixer or mixer system agitates and/or mixes the contents of the tank (e.g., carbonaceous composition and any other reactants or reaction components) in the same manner as any other mixer or mixer system described elsewhere herein in the specification. In certain embodiments, the heating component heats the tank to increase the second reaction temperature. In certain embodiments, the heating component is configured to heat the tank to at least about 30°C, 35°C, 40°C, 45°C, 50°C, 55°C, 60°C, 65°C, 70°C, 75°C, 80°C, 85°C, 90°C, 95°C or 100°C. In certain embodiments, the heating component is configured to heat the tank to maintain a temperature of about 30°C, 35°C, 40°C, 45°C, 50°C, 55°C, 60°C, 65°C, 70°C, 75°C, 80°C, 85°C, 90°C, 95°C or 100°C. In certain embodiments, the hydrogen peroxide feed is configured to dispense hydrogen peroxide at a certain rate or amount. In certain embodiments, the sodium ascorbate feed is configured to dispense hydrogen peroxide at a certain rate or amount. In certain embodiments, the hydrogen peroxide feed and sodium ascorbate feed are configured to dispense about 20 L of 30% hydrogen peroxide per kg of GO (in 100 liters of solution) and about 4.95 kg of sodium ascorbate (sodium salt of ascorbic acid) per kg GO (in 100 liters of solution).

In some embodiments, a system as shown in **FIG. 47** comprises a second reaction filter **4708** (e.g., a second reaction filter system or second reaction filtration system) for carrying out a filtration of a reduced form of a carbonaceous composition (e.g. rGO). In certain embodiments, the second reaction filter **4708** comprises a variety of components as described elsewhere herein. In some embodiments, the second reaction filter **4708** comprises one or more of a drum assembly and a spray bar assembly. In certain embodiments, the spray bar assembly comprises a spray bar comprising one or more openings (e.g., nozzles or spray tips) for dispensing one or more materials (e.g., a liquid, a solid, a suspension, a mixture, etc) within the drum assembly. In certain embodiments, the spray bar is substantially positioned within the interior of the drum assembly. In certain embodiments, the spray bar is positioned to dispense a material within the interior of the drum assembly. In certain embodiments, the spray bar assembly is configured to dispense a carbonaceous composition (e.g., rGO) within the drum assembly. In certain embodiments, the spray bar assembly is configured to dispense the carbonaceous composition at a low pressure. In certain embodiments, the spray bar assembly is configured to dispense a liquid (e.g., deionized water from a deionized water holding tank **4706**) within the drum assembly for washing and/or purifying the carbonaceous composition. In certain embodiments, the spray bar assembly is configured to dispense the liquid by spraying it at high pressure (e.g., to rinse the carbonaceous composition). In certain embodiments, the high pressure is a pressure that is higher than the low pressure, wherein the carbonaceous composition is dispensed at a lower pressure compared to the liquid that is dispensed at a higher pressure. In certain embodiments, the spray bar assembly comprises one or more spray bars (e.g., **FIG. 28A** spray bar **2801**). In certain embodiments, the spray bar assembly comprises at least two, three, four, five, six, seven, eight, nine, or ten spray bars. In certain embodiments, a spray bar comprises one or more openings (e.g., nozzle, spray tip **2809,** etc) for dispensing one or more materials. In certain embodiments, a spray bar comprises a set of openings for dispensing a carbonaceous composition. In certain embodiments, a spray bar comprises a set of openings for dispensing a liquid. In certain embodiments, a spray bar comprises a first set of openings for dispensing a carbonaceous composition (e.g., at low pressure) and a second set of openings for dispensing a liquid (e.g., at high pressure). In certain embodiments, the interior of the drum assembly is substantially enclosed to prevent solid and/or liquid particles from exiting the interior of the drum assembly. For example, in certain embodiments, the interior of the drum assembly is substantially enclosed, wherein the assembly comprises a drum mesh and/or drum micron filter comprising a pore size suitable for retaining a reduced form of a carbonaceous composition within the drum assembly while allowing impurities, reaction byproducts, and/or waste to pass through. In some embodiments, a second reaction filter comprises a spray bar assembly configured to dispense a liquid from the exterior of the drum assembly. In some embodiments, the second reaction filter **4708** comprises a drum assembly that is partially or completely submerged in a liquid (e.g., deionized water) in the drainpan (**FIG**. **23**). In certain embodiments, the drum assembly is rotated to enhance rinsing of a carbonaceous composition inside the drum assembly. In certain embodiments, the drainpan comprises a drain. In certain embodiments, the drain is configured to open or close. In certain embodiments, the second reaction filter comprises one or more sensors (e.g., a temperature, pH, and/or salt concentration sensor). In certain embodiments, the one or more sensors is positioned inside the drainpan. In certain embodiments, the one or more sensors are positioned at the drain. In certain embodiments, the second reaction filter undergoes multiple washes or wash cycles for a carbonaceous composition (e.g., one batch of rGO). In certain embodiments, each wash uses a volume of liquid (e.g., deionized water). In certain embodiments, a wash or wash cycle uses at least 5, 10, 15, 20, 25, 30, 35, 40, 45, 50, 60, 70, 80, 90, or 100 gallons of a liquid. In certain embodiments, the drum assembly comprising a carbonaceous composition undergoes one or more rinse or wash cycles. In certain embodiments, a rinse or wash cycle comprises filling up the drainpan with a volume of liquid (e.g., drain is closed), rotating the drum assembly to rinse the carbonaceous composition, and opening the drain to drain out the liquid. In certain embodiments, a rinse or wash cycle comprises spraying a volume of liquid from a spray bar assembly to rinse or wash the carbonaceous composition, and allowing the liquid to drain. In certain embodiments, operation of one or more components of the second reaction filter is automated or semi-automated. For example, in certain embodiments, operation of the second reaction filter comprises a set of instructions or steps suitable for filtering and/or purifying a carbonaceous composition (e.g., rGO). In certain embodiments, operation of the second reaction filter comprises control of one or more components of a drum assembly (e.g., a motor that actuates the drum assembly, a drum shaft, a drive shaft, an idler shaft, etc), a spray bar assembly (e.g., low pressure input, high pressure input), and a drainpan drain (e.g., open or close).

In some embodiments, a central control unit controls a first reaction system or apparatus, a first reaction filter, a second reaction system or apparatus, and a second reaction filter. In certain embodiments, the central control unit provides control that is manual, automated, or semi-automated. In certain embodiments, the central control unit controls any combination of the systems, apparatuses, filters, or processes described herein. In certain embodiments, the central control unit controls the temperature of the first reaction. In certain embodiments, the central control unit controls a one or more components of a first reaction system or apparatus (e.g., for carrying out oxidation of a carbonaceous composition). As an example, in certain embodiments, the central control unit controls one or more of a mixer, an ice auger feed, and a catalyst auger feed (e.g., a potassium permanganate auger feed). In certain embodiments, the central control unit controls the timing, amount, and/or rate of addition of one or more reactants or ingredients into a system for carrying out a first reaction (e.g., first reaction system, apparatus, or assembly). In certain embodiments, the central control unit controls the timing, amount, and/or rate of addition of potassium permanganate and/or ice into a vessel, reaction chamber, or unit of the first reaction system. In certain embodiments, the central control unit controls a first reaction filter or first reaction filtration process. In certain embodiments, the central control unit controls a second reaction system or apparatus. In certain embodiments, the central control unit controls the timing, amount, and/or rate of addition of one or more reactants or ingredients into a system for carrying out a second reaction (e.g., second reaction system, apparatus, or assembly). In certain embodiments, the central control unit controls the timing, amount, and/or rate of addition of hydrogen peroxide and/or sodium ascorbate into a vessel, reaction chamber, or unit of the second reaction system. In certain embodiments, the central control unit controls one or more components of a second reaction filter or second reaction filtration process. In certain embodiments, the central control unit controls one or more of rotation of a drum assembly (e.g., on or off rotation, speed of rotation, rate of increase or decrease in rotation), a spray bar assembly (e.g., rate, quantity, and/or pressure of rGO dispensed; rate, quantity, and/or pressure of deionized water dispensed), and a drainpan drain (e.g., opening or closing the drain). In certain embodiments, the central control unit utilizes sensor data from one or more of a first reaction system or apparatus, a first reaction filter, a second reaction system or apparatus, and a second reaction filter. In certain embodiments, the central control unit coordinates the operation of one or more of a first reaction system or apparatus, a first reaction filter, a second reaction system or apparatus, and a second reaction filter. In certain embodiments, the central control unit controls the components, subsystems, and/or systems for processing a carbonaceous composition. In certain embodiments, the central control unit coordinates the operation of components, subsystems, and/or systems for processing a carbonaceous composition to optimize the production rate of graphene oxide and/or reduced graphene oxide (e.g., single layer or multi-layer GO or rGO).

In certain embodiments, a central control unit and/or its enclosure is physically attached to one or more components of the systems or apparatuses described herein. Alternatively, in other embodiments, the central control unit and/or its enclosure is remotely located from one or more components of the systems and assemblies described herein. For example, in certain embodiments, the central control unit is geographically separated from a space containing systems for processing carbonaceous compositions (e.g., first reaction system, first reaction filter, second reaction system, second reaction filter, etc). In certain embodiments, the central control unit is electrically or electronically connected to one or more components of a system for processing carbonaceous compositions to control operation (e.g., mechanical operation). In certain embodiments, the central control unit controls one or more systems for carrying out, for example, a first reaction, a first filtration, a second reaction, a second filtration, or any combination thereof. In certain embodiments, the central control unit and the system are in communication and/or connected via a wired or a wireless connection. In certain embodiments, the central control unit includes a user interface that allows a user to enter input at the interface. In certain embodiments, the central control unit includes a digital processing device comprising a processor to control the system or any of its components or subsystems. In certain embodiments, the central control unit includes one or more software modules embedded and executable by the digital processing device (e.g., for controlling one or more elements of the top assembly). In certain embodiments, the central control unit includes an electronic interface to receive data from non-transitory computer readable media, the Internet, a cloud, a mobile application and the like. In certain embodiments, the central control unit includes a digital display. In certain embodiments, the digital display displays information related to the control and/or functioning of the first reaction system, the first reaction filter, the second reaction system, the second reaction filter, or any combination thereof. In certain embodiments, the central control unit includes an on/off switch for turning the first reaction system, the first reaction filter, the second reaction system, the second reaction filter, or any combination thereof on and/or off. In certain embodiments, the central control unit includes pre-programmed protocols for controlling one or more elements of the first reaction system, the first reaction filter, the second reaction system, the second reaction filter, or any combination thereof. In certain embodiments, such elements include one or more of a motor, an agitator, a mixer or mixer system, an ice auger feed, a potassium permanganate auger feed, a sodium ascorbate feed, a hydrogen peroxide feed, a lid, a cover, a hood assembly, a driver, a drum shaft, an idler shaft, a drive shaft, an idler wheel, a drive wheel, a spray bar assembly, a cradle pivot assembly, a drum cradle assembly, a lid, a frame assembly, a drive belt, or any combination thereof.

In certain embodiments, a process for making graphite oxide (GO) and graphene (rGO) includes oxidation, filtration (e.g. purification), reduction and second filtration (e.g. final purification). In certain embodiments, the process of making graphite oxide (GO) includes oxidation and filtration. In certain embodiments, GO generated from a first reaction is processed to an appropriate pH for one or more downstream applications. In certain embodiments, the GO generated from a first reaction is processed to a pH between about 4.5 and 5.0, 5.0 and 5.5, 5.5 and 6.0, 6.0 and 6.5, or 6.5 and 7.0. In certain embodiments, the process of making graphite oxide (GO) and/or graphene (rGO) generates waste materials, such as, for example, sulfuric acid. In certain embodiments, the process for making GO/rGO includes an independent waste processing step, for example, such as adding lime (e.g. CaO) to reaction byproducts of reaction one. In certain embodiments, the waste processing step neutralizes sulfuric acid waste with lime to generate gypsum. In certain embodiments, the gypsum is processed, for example, by being filter pressed. For example, any number of industrial filter presses can be used to filter press the mixture to obtain gypsum while removing liquid and/or filtrate. In certain embodiments, the gypsum is then dried. In certain embodiments, a waste processing apparatus comprising a tank and a mixer is configured to generate gypsum by mixing lime with a waste liquid from reaction one, wherein the waste liquid comprises sulfuric acid. Processed gypsum is useful for downstream applications, such as, for example, as a fertilizer. The high calcium and sulfur content of gypsum and its high solubility makes it an ideal fertilizer. Gypsum also does not acidify the soil and may act to reduce aluminum toxicity in the soil. Therefore, in certain embodiments, a process of making GO and/or rGO comprises a waste processing step that converts sulfuric acid waste into gypsum.

In certain embodiments, during oxidation to single-layer GO, graphite (about 1 kg) is mixed with 98% sulfuric acid (about 32 L) and chilled to about -10°C. In certain embodiments, the GO reactor cooling coils is chilled to -2°C. In certain embodiments, the graphite/sulfuric acid mixture is then poured carefully into the reactor. In certain embodiments, potassium permanganate (about 4.8 kg) powder is added to the reactor slowly over the course of about 1.5 hours, carefully keeping the reaction temperature below about 15°C. In certain embodiments, after addition of potassium permanganate is complete, the reactor cooling coil temperature is raised to about 12°C and the reaction heats up to about 30°C over about 1.5 hours. In certain embodiments, the reactor cooling coils are then cooled to about -2°C, and the reaction temperature stays at about 30°C for approximately an additional 30 minutes. In certain embodiments, crushed ice (about 32 kg) is then added over the course of about 1 hour. In certain embodiments, the reaction temperature climbs to about 50°C over this time. After ice addition, in certain embodiments, the reaction is allowed to stir for about 1 hour. In certain embodiments, the reaction is finally quenched with crushed ice (about 72 kg). In certain embodiments, the ice melts during this quench, and then 30% hydrogen peroxide (about 2 L) is added to stop the reaction. In some embodiments, the reaction is quenched within the GO reactor (e.g., reactor or reaction vessel). In some embodiments, the reaction is transferred to a tank where it is quenched. In some embodiments, the cooling mechanisms described herein are applied to the reactor and/or the tank. For example, cooling coils, crushed ice, chilled water, and other mechanisms can be utilized for cooling the reaction and/or quenching the reaction in the reactor and/or the tank.

In certain embodiments, during oxidation to multi-layer GO, graphite (about 1 kg) is mixed with 98% sulfuric acid (about 32 L) and chilled to about -10°C. In certain embodiments, the GO reactor cooling coils are chilled to about -2°C. In certain embodiments, the graphite/sulfuric acid mixture are then poured carefully into the reactor. In certain embodiments, potassium permanganate (about 2 kg) powder is added to the reactor slowly over the course of about 45 minutes, carefully keeping the reaction temperature below about 15°C. In certain embodiments, the reaction is then allowed to stir for about 30 minutes at a reaction temperature of about 15°C. In certain embodiments, the reaction is finally quenched with crushed ice (about 125 kg). In certain embodiments, the ice melts during this quench, and then 30% hydrogen peroxide (about 1 L) is added to stop the reaction.

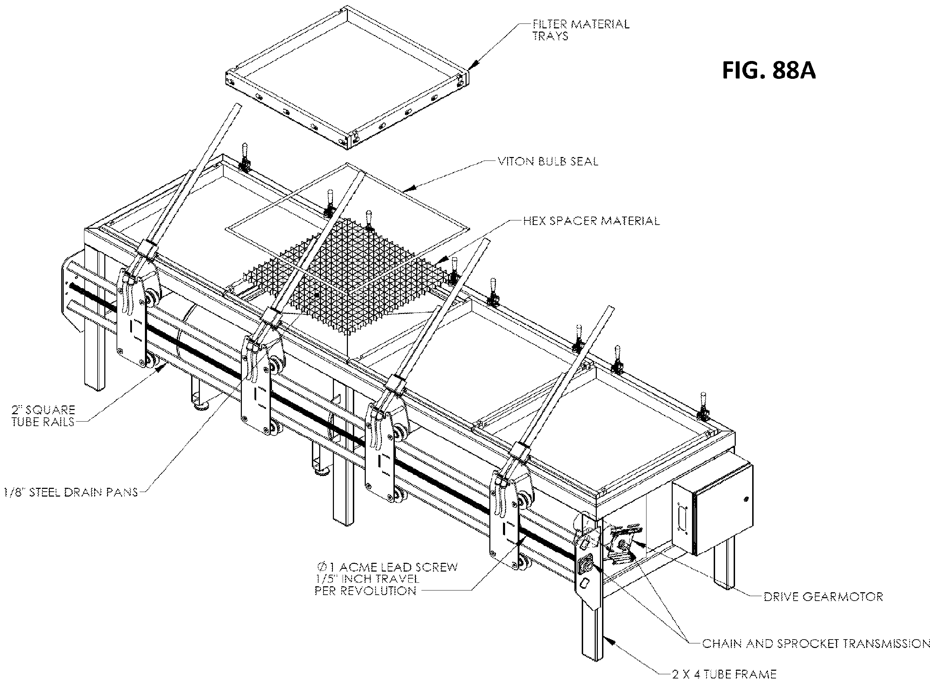

In certain embodiments, purification is performed using a tangential flow filtration process. In certain embodiments, the filter type is a modified polyether sulfone hollow filter membrane with about 0.02 micron pore size. In certain embodiments, the purification is complete when the pH of the product reaches about 5. In certain embodiments, the purified GO is then concentrated to a solution of about 1% by weight. In some embodiments, GO is purified using a vacuum filtration system or table such as shown in **FIGS. 88A-88B****.**

In certain embodiments, the reduction is performed by heating the purified 1% by weight GO (about 1 kg) solution to about 90°C and adding 30% H₂O₂ (about 1 L) for about 1 hour. After about 1 hour, 30% H₂O₂ (about 1 L) is added to the reaction and heated at about 90°C for approximately an additional 3 hours. Then, sodium ascorbate (about 4.95 kg) is added to the reaction over the course of about 30 minutes. In certain embodiments, the reaction continues to heat under stirring for approximately an additional 1.5 hours to form reduced graphite oxide (rGO).

In certain embodiments, the final purification includes purifying rGO via vacuum filtration through, for example, a 2 micron 316 stainless steel mesh filter (e.g., via a second reaction filter). In certain embodiments, water is flushed through the rGO to remove all salts. In certain embodiments, purification is complete when the rGO solution has a conductivity of about 50 µS/cm or less. In certain embodiments, the filtration is accomplished using the second reaction filter as described herein (e.g. as shown in **FIGS. 41-43**). As an example, in certain embodiments, the slurry of rGO second reaction products is pumped into the interior space of the drum assembly (e.g., drum) at low pressure by the spray bar (e.g., "Lo-Pressure Fluid In" in **FIG. 41A**) as the drum is rotating (e.g. 600 rpm). In certain embodiments, the centrifugal force from the rotation of the drum forces the slurry against the interior surface of the drum mesh and/or drum micron filter. Water and dissolved solutes are able to pass through the mesh/filter pores, while the rGO product is retained. In certain embodiments, a liquid (e.g. deionized water) is sprayed at high pressure (e.g., "Hi-Pressure Fluid In" in **FIG. 41A**) from openings in the spray bar (e.g. spray tip **2809**) against the rGO product stuck on the interior surface of the mesh/filter. In certain embodiments, the high pressure liquid forces the rGO product off the surface of the mesh/filter and into the bottom of the drum. In certain embodiments, the drum is rotating during this washing process. In certain embodiments, the drum rotates continuously at the same speed, change speeds, stop and go, reverse rotation, or any combination thereof to facilitate washing and/or drying of the rGO. In certain embodiments, the bottom of the drum (e.g. bottom ½, bottom 1/3, bottom ¼, or bottom 1/5, etc.) is positioned within the drainpan weldment (e.g. below the top edge of the drainpan weldment). In some embodiments, a portion of the bottom of the drum is submerged under a liquid being used to wash the rGO second reaction product. This allows rGO that is forced off the surface of the mesh/filter to be further washed by submersion in a volume of liquid in the drainpan weldment. In certain embodiments, once the rGO product has been sufficiently washed, the liquid is drained from the drainpan, and the spray bar ceases ejecting high pressure liquid. In certain embodiments, the drum rotates at a high rpm to help dry the rGO product. In certain embodiments, a vacuum is applied to enhance the filtration and/or draining process at any point during this procedure. In some embodiments, the rGO product undergoes multiple rounds of washing. In certain embodiments, each wash or round of washing ends when at least a majority of the liquid in the drainpan is drained. In certain embodiments, the drum provides at least 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30 washes for a batch of a carbonaceous composition (e.g., rGO).

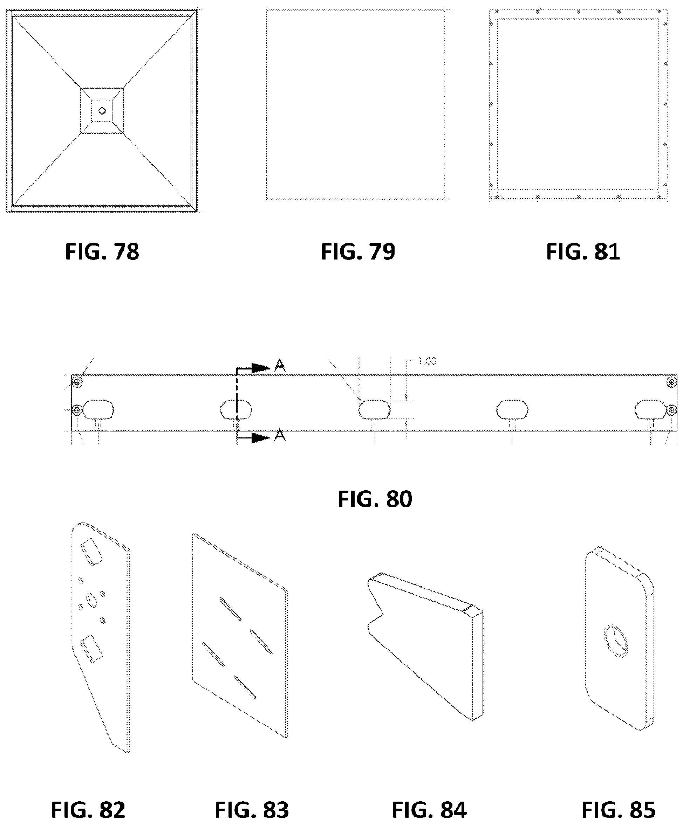

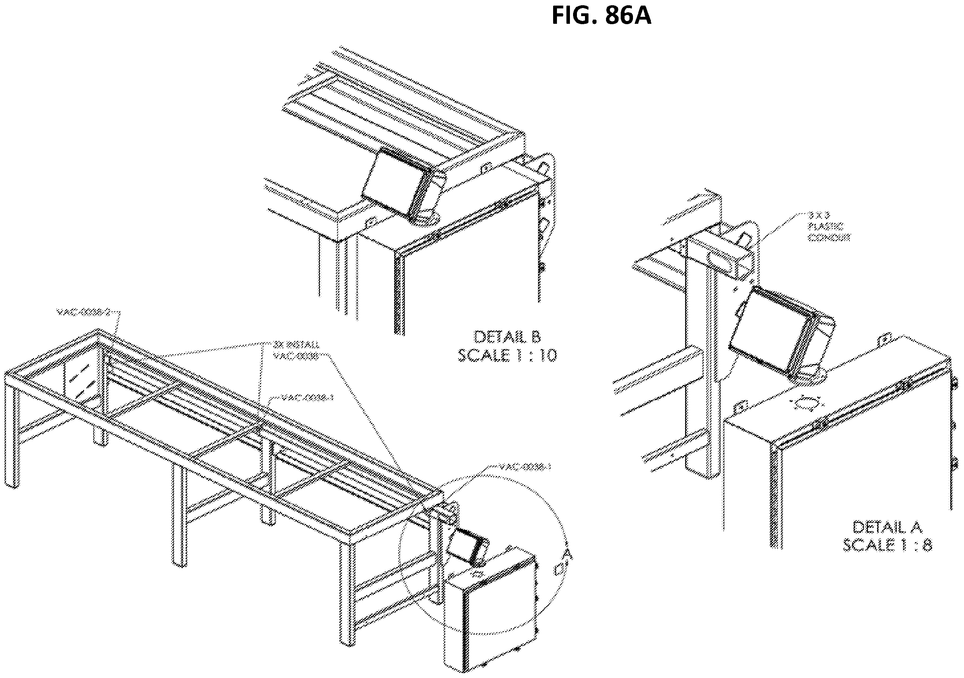

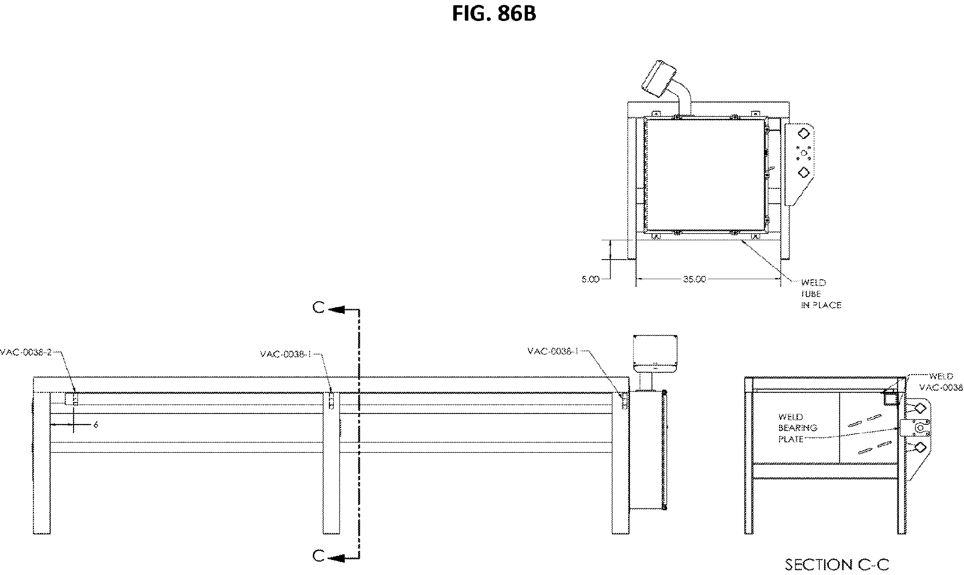

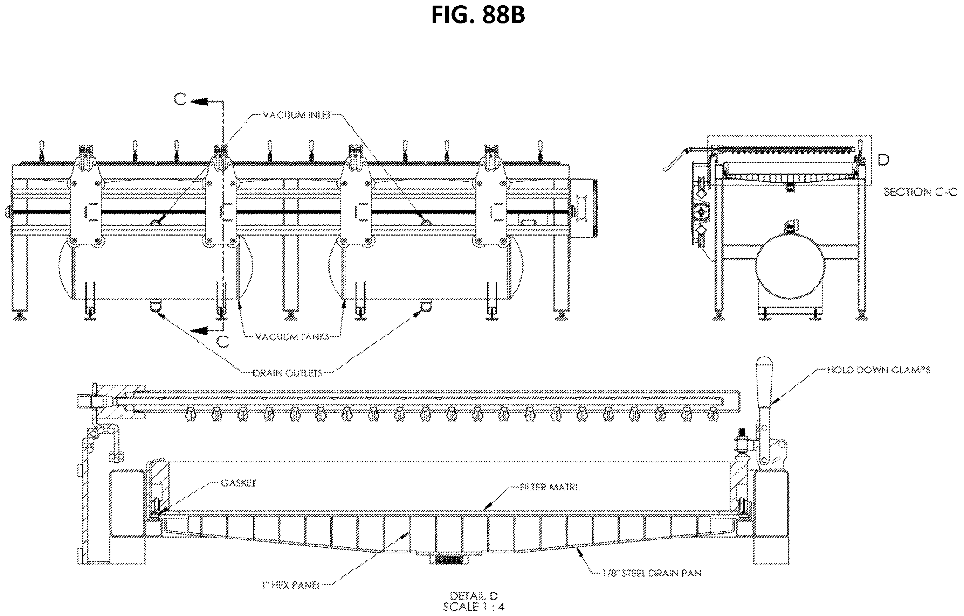

Disclosed herein are vacuum filtration devices and systems for filtering carbonaceous compositions such as GO, rGO, graphene, or any combination thereof. An embodiment of a vacuum filtration system is shown in **FIGS. 88A-88C****.** In some embodiments, the vacuum filtration system is a first reaction filter (e.g., filters reaction products and/or waste of the first reaction system for making GO). In certain embodiments, the vacuum filtration system comprises a variety of components as described elsewhere herein. In some embodiments, the vacuum filtration system comprises at least one drain pan (e.g., as shown in **FIG. 78** and **FIG. 88B**). In some embodiments, the vacuum filtration system comprises at least one tray (e.g., as shown in **FIG. 87A**). In some embodiments, the vacuum filtration system comprises a frame such as a vacuum table frame and optionally an electrical system such as a control unit (e.g., as shown in **FIG. 86A** and **86B**). In some embodiments, the control unit comprises a user interface for displaying information about the purification process (e.g., monitoring information such as the step of the cleaning cycle, estimated time to completion, etc.) and/or receiving user input or instruction. In some embodiments, the control unit comprises a display screen. In some embodiments, the display screen is a touchscreen. In some embodiments, the control unit is attached to the vacuum table frame. In some embodiments, the vacuum filtration system comprises at least one vacuum table tray mesh. In some embodiments, a filtering material (e.g., one or more filter layers) is positioned on the vacuum tablet tray mesh. In some embodiments, the vacuum filtration system comprises at least one spray bar assembly. In some embodiments, the vacuum filtration system comprises a surface for receiving a carbonaceous composition and at least one spray bar assembly. In certain embodiments, the spray bar assembly comprises a spray bar comprising one or more openings (e.g., nozzles or spray tips) for dispensing one or more materials (e.g., a liquid, a solid, a suspension, a mixture, etc) within the drum assembly. In some embodiments, the vacuum filtration system comprises a vacuum table frame.

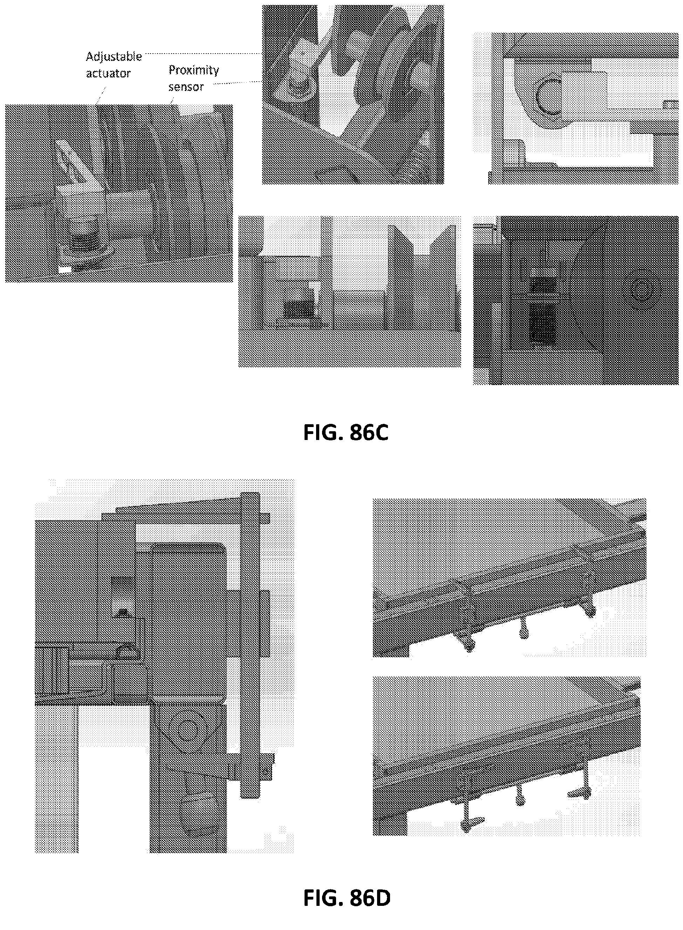

In some embodiments, the vacuum filtration system comprises a mechanism for moving one or more spray bar assemblies along the vacuum filtration table. For example, **FIG. 86C** shows an adjustable actuator and a proximity sensor of the vacuum filtration apparatus. In some embodiments, the actuator allows movement of one or more spray bar assemblies. In some embodiments, the proximity sensor is configured to detect movement and/or position of a spray bar assembly, for example, when the spray bar assembly is approaching the end of its allowable or maximum position or range.

In some embodiments, the vacuum filtration system comprises an adjustable mechanism (e.g,. a clamp) for clamping a vacuum table tray in place (see **FIG. 86D**). In some embodiments, the mechanism is configured to adjustably apply pressure onto the vacuum table tray and hold it in place on the vacuum table over the drain pan. In some embodiments, the mechanism provides a pressure on the vacuum table tray such that leaks are mitigated and the filtrate is forced to pass through the filtering material.

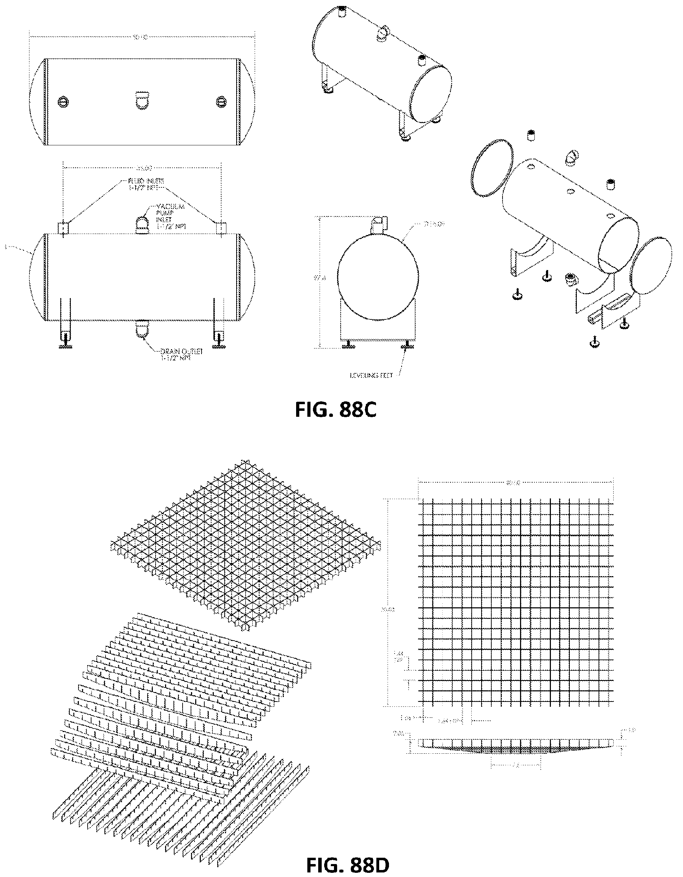

In some embodiments, the vacuum filtration system comprises at least one vacuum tank, for example, as shown in **FIG. 88B** and **88C****.** In some embodiments, a vacuum tank comprises at least one drain outlet positioned at or around the bottom of the tank. In some embodiments, a vacuum tank comprises at least one vacuum inlet, optionally positioned at or around the top of the tank. In some embodiments, the vacuum tank comprises one or more fluid intakes or inlets, optionally positioned at or around the top of the tank. In some embodiments, a vacuum tank is configured to receive a waste material or filtrate drained through a filtering material (e.g., through the fluid intakes). In some embodiments, draining of the waste material or filtrate is enhanced by the application of a vacuum or suction. For example, in some embodiments, the one or more fluid intakes are in fluid communication or coupled to a bottom valve of a drain pan (see **FIG. 88B**) to receive the waste material or filtrate. In some cases, a suction or vacuum is applied to the vacuum tank through the vacuum inlet, which can enhance the suction or intake of the waste material or filtrate from the drain pan. In some embodiments, the vacuum filtration system comprises a support such as shown in **FIG. 88D** configured to support a filtering material while allowing drainage of filtrate. In some embodiments the support is positioned within the drain pan and under the filtering material.

In certain embodiments, the vacuum table tray mesh (also referred to herein as filter tray mesh) provides structural support for the filtering material. In some embodiments, providing structural support for the filtering material is important for preventing the filtering material from sagging or ripping due to the force caused by the weight of the carbonaceous material and wash liquid in combination with the vacuum/suction force being applied by the vacuum source. In some embodiments, the filter tray mesh is a stainless steel mesh. In certain embodiments, the filter tray mesh has a plurality of pores. In certain embodiments, the pore shape of the filter tray mesh includes a square, a circle, an oval, a rectangle, a diamond or other geometrical shape (e.g., when the mesh is flat and unrolled). In some embodiments, the pore shape of the filter tray mesh is a square. In certain embodiments, the pore size of the filter tray mesh describes a diameter of the pores. In some embodiments, the filter tray mesh comprises pores having a pore size less than or equal to 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, or 2.0 inches. In some embodiments, the filter tray mesh comprises pores having a pore size equal to or greater than 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, or 2.0 inches. In some embodiments, the filter tray mesh comprises pores having a pore size of about 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, or 2.0 inches. In some embodiments, the filter tray mesh comprises a pore size of about 0.1 inches to about 1 inch. In some embodiments, the filter tray mesh is a filtering material used to filter a carbonaceous composition. For example, in certain embodiments, the filter tray mesh comprises a pore size of about 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 5.0, or 10.0 microns. In certain embodiments, the filter tray mesh comprises a pore size of greater than or equal to about 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 5.0, or 10.0 microns. In certain embodiments, the filter tray mesh has a pore size of less than or equal to (e.g. no more than) about 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 5.0, or 10.0 microns. In some embodiments, the filter tray mesh comprises a pore size of about 1 micron.

In one embodiment, the vacuum filtration system comprises at least one vacuum table tray and at least one spray bar assembly positioned to dispense a wash fluid onto the at least one vacuum table tray (as shown in **FIG. 88A-88B**). In this embodiment, the at least one vacuum table tray comprises a filtering material and is positioned on top of a grid such as a hex spacer material and/or a mesh (e.g., a mesh as described for the second reaction filter). The grid can be made of various materials such as stainless steel. The vacuum table tray and the hex spacer material are the vacuum table frame. A Viton bulb seal provides a seal to prevent leakage outside of the space delineated by the vacuum table tray, thus directing drainage through the filtering material and the hex spacer material. Underneath the vacuum table tray is a drain pan for collecting the drainage. The hex spacer material is positioned within and/or on the drain pan. The vacuum table tray is positioned on top of the hex spacer material, and clamps are used to press the filter try tightly against the hex spacer material and drain pan to create a seal (e.g., via a gasket positioned between the vacuum table tray and the drain pan). The bottom of the drain pan is coupled to a vacuum tank and a vacuum source such that the application of vacuum from the vacuum source creates suction to enhance the drainage of a filtrate through the filtering material and hex spacer material into the drain pan and then the vacuum tank. During operation of the vacuum filtration system, a carbonaceous composition comprising graphene oxide is dispensed on the filtering material along with first reaction waste products including potassium permanganate, sulfuric acid, hydrogen peroxide, water, and any impurities. A vacuum or negative pressure is applied by the vacuum source to enhance drainage or flow-through of the first reaction waste products through the filtering material on the vacuum table tray. Next, the spray bar assembly dispenses a wash fluid evenly over the carbonaceous composition on the vacuum table tray to dilute the waste products, which are removed by drainage. In some embodiments, the wash fluid is allowed to fill up a portion of the vacuum table tray before vacuum is periodically applied to enhance the rate of drainage. In some embodiments, vacuum is applied continuously to enhance the rate of drainage. Meanwhile, the graphene oxide is retained by the filtering material. The resulting purified graphene oxide is ready for various downstream applications such as production of graphene/reduced GO using a second reaction system, which graphene/rGO can be used to for manufacturing batteries and/or capacitors as described herein.

In some embodiments, the vacuum filtration system comprises a spray bar assembly. In some embodiments, the vacuum filtration system comprises 1, 2, 3, 4, 5, 6, 7, 8, 9, 10, 11, 12, 13, 14, 15, 16, 17, 18, 19, or 20 spray bar assemblies. In some embodiments, the vacuum filtration system comprises at least 1, 2, 3, 4, 5, 6, 7, 8, 9, 10, 11, 12, 13, 14, 15, 16, 17, 18, 19, or 20 spray bar assemblies. In some embodiments, the spray bar assembly is attached to a rail assembly alongside the length of the frame of the vacuum filtration system. In some embodiments, the spray bar assembly is configured to slide or move horizontally along the rail assembly (see **FIG. 88A**). One advantage of this setup is that the spray bar assembly can be positioned and/or re-positioned for dispensing the carbonaceous composition and/or wash liquid onto the vacuum table surface or tray. In some embodiments, the spray bar assembly is configured for automated movement along the rail assembly (e.g., via instructions from a control unit according to a purification protocol). In some embodiments, the spray bar assembly is configured to move along the rail assembly according to a purification protocol. In some embodiments, the purification protocol directs the spray bar assembly to move along the rail assembly while dispensing the carbonaceous composition to ensure the composition is evenly dispensed onto the surface of the vacuum table or tray surface. In some embodiments, the purification protocol directs the spray bar assembly to move along the rail assembly while dispensing the wash fluid to ensure even washing or purification of the carbonaceous composition on the surface of the vacuum table or tray surface. In some embodiments, the vacuum filtration system comprises a drive gear motor and a chain and sprocket transmission for moving one or more spray bar assemblies along the rail assembly. In some embodiments, the vacuum filtration system is configured to enable movement of the rail assembly to enable movement of one or more spray bar assemblies.

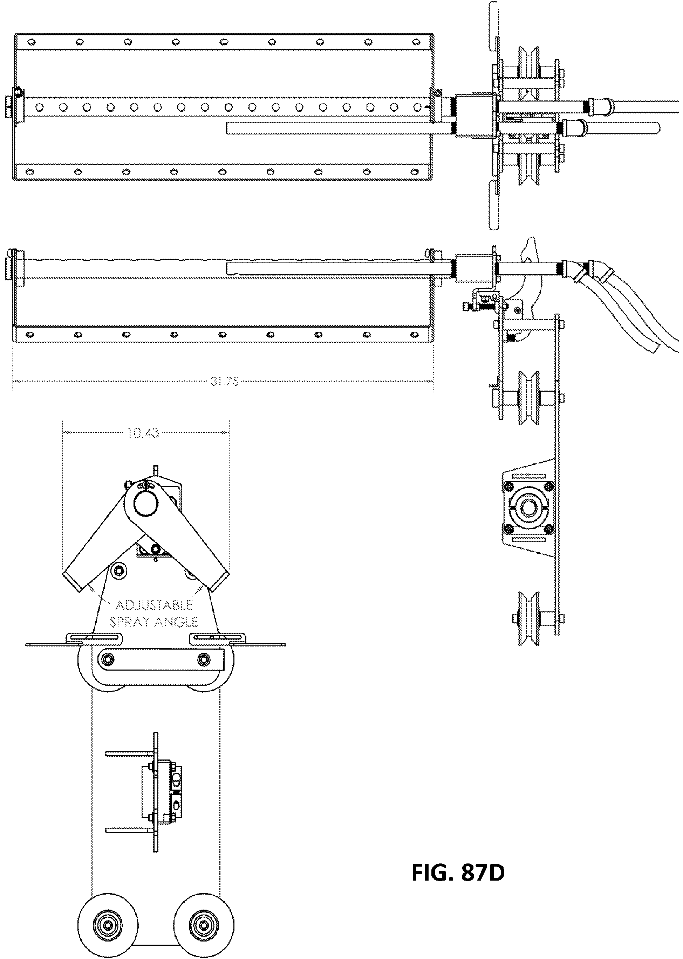

In some embodiments, a spray bar assembly comprises a tube within a tube for improving dispersal of a wash fluid. A single tube design often has problems with generating an even dispersal of the wash fluid (e.g., some openings/nozzles dispense more wash fluid than others). In some embodiments, a spray bar assembly comprises an inner tube disposed within an outer tube. In some embodiments, the inner tube comprises one or more openings facing upwards (e.g., upwards referring to the upper half of the circumference of the inner tube, while downwards refers to the bottom half of the circumference of the inner tube). Accordingly, in some embodiments, a wash fluid flows through the inner tube first until the volume of wash fluid fills up the inner tube until the wash fluid rises to a level high enough to exit from the one or more upward facing openings and flow into the outer tube. In some embodiments, the one or more openings in the inner tube are horizontally aligned with the one or more openings in the outer tube (as shown in **FIG. 88B** cross-section view of a spray bar assembly). In some embodiments, the inner tube comprises a plurality of openings evenly distributed throughout at least a portion of the inner tube. The wash fluid then exits the outer tube through one or more openings (e.g., downward facing openings). In some embodiments, the outer tube comprises a plurality of openings evenly distributed throughout at least a portion of the outer tube. In some embodiments, the outer tube is positioned to dispense the wash fluid onto the surface of the vacuum filtration system, for example, to wash/clean a carbonaceous composition disposed on the surface. An example of a spray bar is shown in **FIG. 87C**. In some embodiments, the spray bar comprises one or more spray bar stiffeners such as shown in **FIG. 87B**. A spray bar stiffener can provide structural support for a spray bar. In some embodiments, a spray bar assembly comprises one or more handles for rotating or moving one or more spray bars (see **FIG. 87D**). In some embodiments, a spray bar assembly comprises a plurality of spray bars. In some embodiments, rotation of a handle results in rotation of the corresponding spray bar for adjusting a spray angle. In some embodiments, rotation of a spray bar is automated (e.g., controlled via a control unit). In some embodiments, the spray bar assembly comprises a handle for manually repositioning the spray bar assembly alongside the vacuum table (e.g., shifting the spray bar assembly to a new position along the length of the vacuum table). In some embodiments, the spray bar assembly is repositioned using an automated system (e.g., via the control unit). In some embodiments, the spray bar assembly is repositioned during a cleaning cycle or program to improve the filtration or washing process (e.g., increase purity of the filtered graphene oxide).

In some embodiments, a vacuum filtration system has a modular design. Accordingly, in some embodiments, a vacuum filtration system comprises a plurality of vacuum table trays and a plurality of spray bar assemblies. For example, each vacuum table tray and/or component of the vacuum table tray (e.g., the filtering material, spacer material, etc.) may be removable to allow the filtered/washed carbonaceous composition to be transferred off of the vacuum filtration system. This modular design allows for expansion of the vacuum filtration for scaled up filtration of carbonaceous compositions. In some embodiments, a vacuum filtration system comprises at least 2, 3, 4, 5, 6, 7, 8, 9, 10, 11, 12, 13, 14, 15, 16, 17, 18, 19, 20, 25, 30, 35, 40, 45, 50, 60, 70, 80, 90, or 100 or more vacuum table trays and/or spray bar assemblies. In some embodiments, the vacuum filtration system comprises a plurality of vacuum table trays arranged adjacent to each other. In some embodiments, each vacuum table tray comprises a surface such as a spacer material providing structural support for a filtering material (e.g., to keep the filtering material from ripping or being disrupted by the application of vacuum/suction or by the wash fluid dispensed by a spray bar assembly). In some embodiments, a vacuum table tray comprises one or more sides, for example, to prevent fluids from spilling off of the tray. In some embodiments, the vacuum table tray is watertight. In some embodiments, the vacuum filtration system comprises a filtering material. In some embodiments, the filtering material is disposed on a surface of the vacuum filtration system such as, for example, the surface of a vacuum table tray. In some embodiments, the surface of the vacuum table tray comprises a spacer material (e.g., a hex spacer material) having pores, openings, or other gaps that allow for leakage of fluids through the spacer material. In some embodiments, the filtering material is disposed on top of the spacer material such that the spacer material provides structural support. In some embodiments, a vacuum table tray comprises a top surface area (e.g., of the filtering material) of at least about 1, 2, 3, 4, 5, 6, 7, 8, 9, 10, 11, 12, 13, 14, 15, 16, 17, 18, 19, 20, 25, 30, 35, 40, 45, or 50 or more square feet. In some embodiments, the vacuum table tray comprises a top surface area dimension of about 1x1, 2x2, 3x3, 4x4, 5x5, 6x6, 7x7, 8x8, 9x9, or 10x10 feet or more. In some embodiments, the vacuum filtration system has a surface comprising a filtering material (e.g., a filtration membrane), wherein the surface has a surface area of at least about 1, 2, 3, 4, 5, 6, 7, 8, 9, 10, 11, 12, 13, 14, 15, 16, 17, 18, 19, 20, 25, 30, 35, 40, 45, 50, 60, 70, 80, 90, 100, 150, 200, 250, 300, 350, 400, 450, or 500 or more square feet.

In some embodiments, a vacuum filtration system filters a carbonaceous composition obtained from a first reaction system as described herein. In some embodiments, the first reaction system generates graphene oxide from a feedstock such as, for example, graphite. However, various reaction byproducts, leftover reactants, and/or waste are also generated. Accordingly, in some embodiments, the vacuum filtration devices and systems disclosed herein carry out filtration of first reaction products. Alternatively, in some embodiments, the vacuum filtration devices and systems carry out filtration of second reaction products (e.g., reduced GO or graphene). In some embodiments, the first reaction products comprise a carbonaceous composition. In some embodiments, the carbonaceous composition comprises graphene, graphene oxide, reduced graphene oxide, or any combination thereof. In some embodiments, the first reaction products comprise waste products such as sulfuric acid, potassium permanganate, hydrogen peroxide, water, impurities, reaction byproducts, or any combination thereof. In some embodiments, the vacuum filtration system comprises a surface supporting a filtering material for retaining or trapping the carbonaceous composition while allowing waste products to pass through. In some embodiments, the surface provides structural support for the filtering material. In some embodiments, the filtering material comprises at least one filter layer such as a micron filter (e.g., the same material used in the drum micron filter used in the second reaction filter). In some embodiments, the at least one filter layer is porous. In some embodiments, a filter layer comprises pores having an average diameter of at least about 0.5, 1, 2, 3, 4, 5, 6, 7, 8, 9, 10, 11, 12, 13, 14, 15, 16, 17, 18, 19, 20, 25, 30, 35, 40, 45, 50, 60, 70, 80, 90, or 100 microns, and/or an average diameter of no more than about 1, 2, 3, 1, 2, 3, 4, 5, 6, 7, 8, 9, 10, 11, 12, 13, 14, 15, 16, 17, 18, 19, 20, 25, 30, 35, 40, 45, 50, 60, 70, 80, 90, or 100 or more microns. In some embodiments, a filtering material comprises a plurality of filter layers of varying pore sizes.

In certain embodiments, the filtering material comprises a pore size suitable for retaining rGO/graphene while allowing undesirable reaction products or impurities to pass. In certain embodiments, a carbonaceous composition (e.g. GO and/or rGO) dispensed on the surface of the filtering material. In certain embodiments, the pore size of a filtering material describes a diameter of the pores. In certain embodiments, the filtering material comprises a pore size suitable for retaining at least about 10%, 20%, 30%, 40%, 50%, 60%, 70%, 80%, 90%, 95%, 96%, 97%, 98%, 99%, 99.1%, 99.2%, 99.3%, 99.4%, 99.5%, 99.6%, 99.7%, 99.8%, 99.9%, or more of GO/rGO/graphene. In certain embodiments, the filtering material comprises a pore size of about 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 5.0, or 10.0 microns. In certain embodiments, the filtering material comprises a pore size of greater than or equal to about 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 5.0, or 10.0 microns. In certain embodiments, the filtering material has a pore size of less than or equal to (e.g. no more than) about 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 5.0, or 10.0 microns. In some embodiments, the filtering material comprises a pore size of about 0.1 microns to about 3 microns. In some embodiments, the filtering material comprises a pore size of at least about 0.1 microns. In some embodiments, the filtering material comprises a pore size of at most about 3 microns. In some embodiments, the filtering material comprises a pore size of about 1 micron.

Examples of shapes, sizes, and/or dimensions of a drain pan is shown in FIG. 78. In certain embodiments, the drain pan comprises or is made of one or more materials, such as, for example, stainless steel. In some embodiments, the drain pan comprises a drain. In some embodiments, the drain pan is angled to funnel liquids towards a drain. In some embodiments, the drain pan is used in a vacuum filtration apparatus (e.g., VAC-0010) to collect and drain a liquid such as water.

Examples of shapes, sizes, and/or dimensions of a vacuum table tray is shown in **FIG. 87A****.** In some embodiments, the vacuum table tray comprises one or more components. In some embodiments, the vacuum table tray comprises at least one tray side (**FIG. 80**), a tray baseplate (**FIG. 81**), and a filtering material. In some embodiments, the vacuum table tray comprises or rests on top of a vacuum table tray mesh (**FIG. 79**), also referred to as a filter tray mesh.

Examples of shapes, sizes, and/or dimensions of a vacuum table tray mesh is shown in **FIG. 79**. In certain embodiments, the vacuum table tray mesh comprises or is made of one or more materials, such as, for example, stainless steel. In some embodiments, the vacuum table tray mesh provides support for filtering materials on the vacuum table tray. In some embodiments, the vacuum table tray mesh allows liquids such as water to drain. In some embodiments, the vacuum table tray mesh provides some filtering capacity depending on the size of the openings in the mesh. In some embodiments, the vacuum table tray mesh is used in a vacuum filtration apparatus (e.g., VAC-0010) to support filtering materials that trap carbonaceous compositions or materials such as GO/rGO while allowing liquids to drain.

In some embodiments, the vacuum filtration system comprises a bearing plate (as shown in **FIG. 82**). In some embodiments, the vacuum filtration system comprises a motor mount plate (as shown in **FIG. 83**). In some embodiments, the vacuum filtration system comprises a rail gusset (as shown in **FIG. 84**). In some embodiments, the vacuum filtration system comprises a foot plate (as shown in **FIG. 85**).

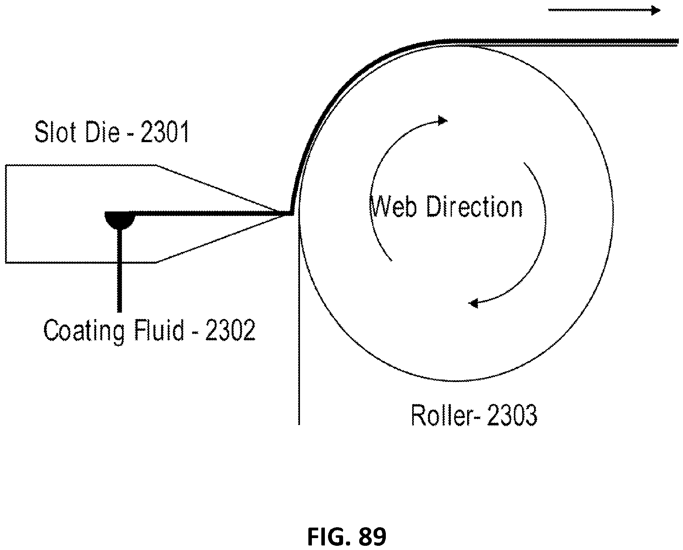

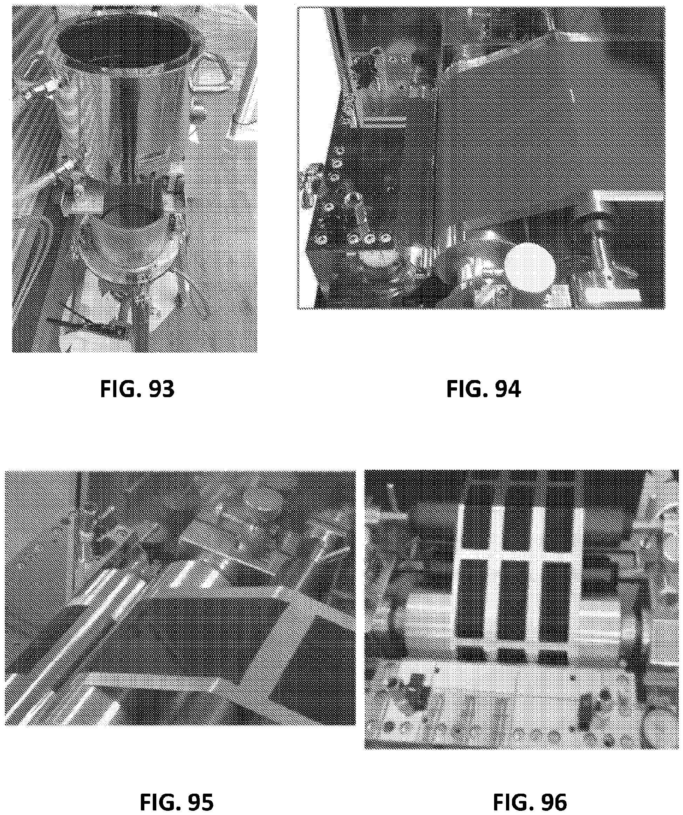

Disclosed herein are systems and devices for producing energy storage devices such as batteries and/or capacitors or components thereof. In some embodiments, the energy storage devices are produced using various carbonaceous compositions such as GO, rGO, and graphene. **FIG. 89** shows a method for coating a substrate (e.g., a paper or film) with a carbonaceous composition. In some embodiments, a carbonaceous composition is prepared as a slurry and applied to a substrate, which is then used for manufacturing batteries. In some embodiments, the slurry comprises one or more components such as a lithiated metal compound, the carbonaceous composition (e.g., a carbon-based material such as graphene), a binder, a solvent, or any combination thereof. In some embodiments, disclosed herein is a rolling machine for preparing electrode sheets by coating a slurry onto the substrate/sheet (e.g., as shown in **FIG. 94-99**).

An energy storage device of the present disclosure may comprise electrodes, separator(s), electrolyte and packaging. Such components may be fabricated and assembled in different ways. In certain embodiments, individual components may be fabricated and later assembled. In some embodiments, the components may be assembled through winding or rolling. For example, a method of making a battery cell may comprise providing a first sheet of a separator, placing a positive electrode sheet (e.g., comprising a carbon-based material of the present disclosure) on the first sheet of separator, placing a second sheet of the separator on the positive electrode sheet, placing a negative electrode sheet (e.g., comprising graphite) on the second sheet of the separator, and rolling the sheets to form the battery cell (a rolled cell). In some embodiments, the components may be assembled through stacking.

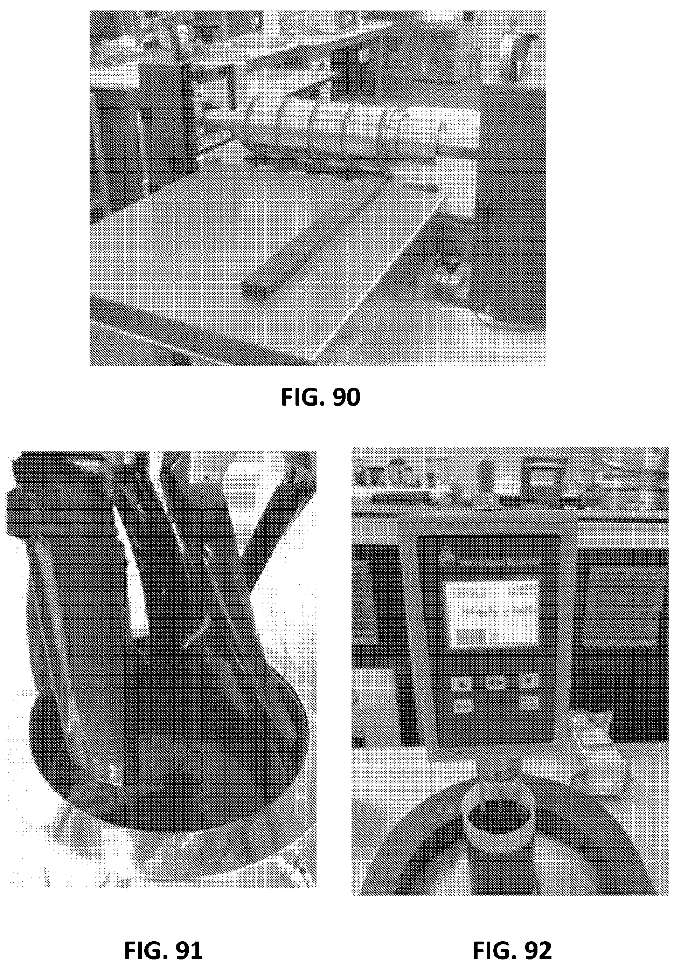

The slurry that is applied to a substrate may be an electrode mixture (e.g., a cathode mixture or anode mixture). An embodiment of a mixer is shown in **FIG. 91****.** In some embodiments, the slurry is mixed (e.g., a cathode or anode slurry) and then filtered by a vacuum filter to remove large particulates before the slurry goes through the roll coating process. An embodiment of the mixer and the vacuum filter are shown in **FIG. 93****.** Properties of the slurry can be measured such as slurry can be measured as shown in **FIG. 92****.** Generation of the slurry may include providing a binder and a solvent. The binder and the solvent may be combined in a reactor. The reactor may be heated to a given temperature (e.g., at least about 90°C). The process may include providing a lithiated metal compound (e.g., lithiated metal oxide or phosphate) and the carbon-based material (e.g., a porous carbon sheet). The slurry may be processed through roll coating and drying, followed by a roll press. Then, the process may comprise slitting and application of metal tabs. The process may further comprise winding, followed by necking. The process may further include electrolyte addition. Finally, the process may include cell crimping.

In some embodiments, the slurry is coated onto a substrate using large scale roll-to-roll processing by a rolling machine as shown in **FIGS. 94-99**. The slurry may be coated on a substrate. The substrate (e.g., if conductive) may serve as an electrode current collector. In some embodiments, the process(ing) may include using an aluminum foil as a substrate. The aluminum foil may form a current collector.

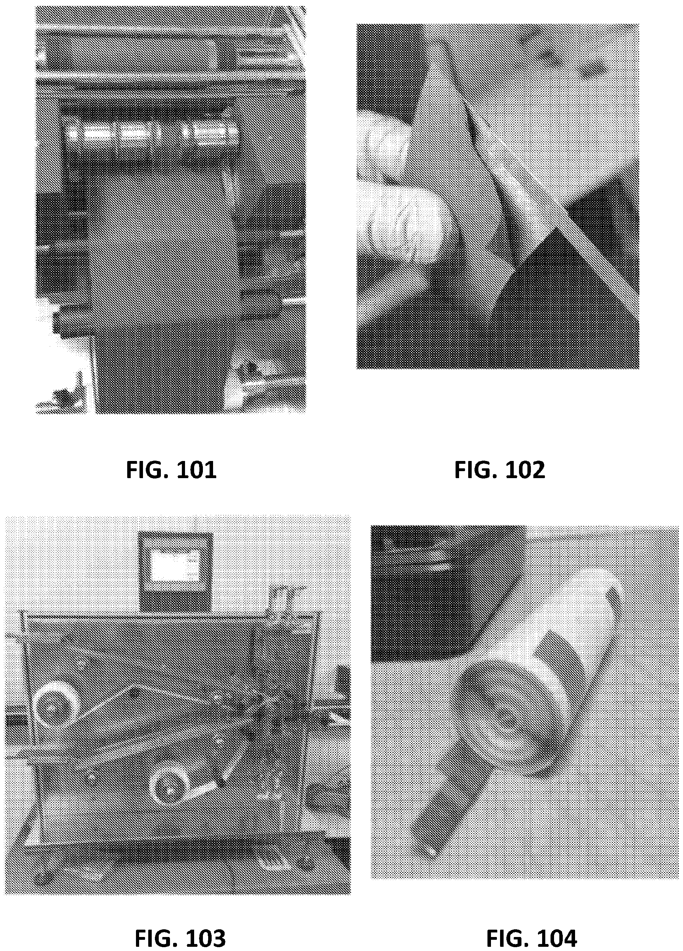

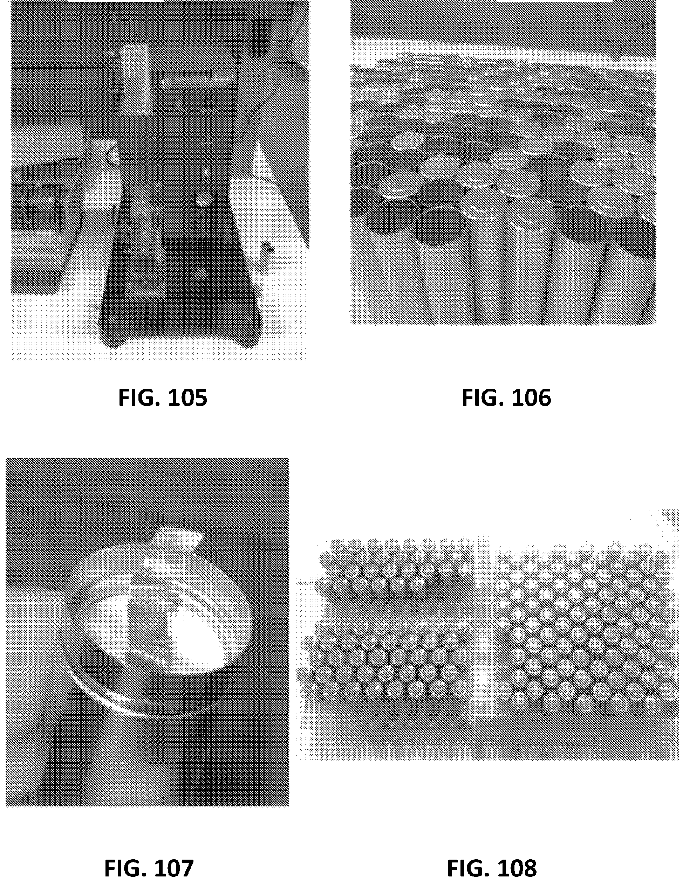

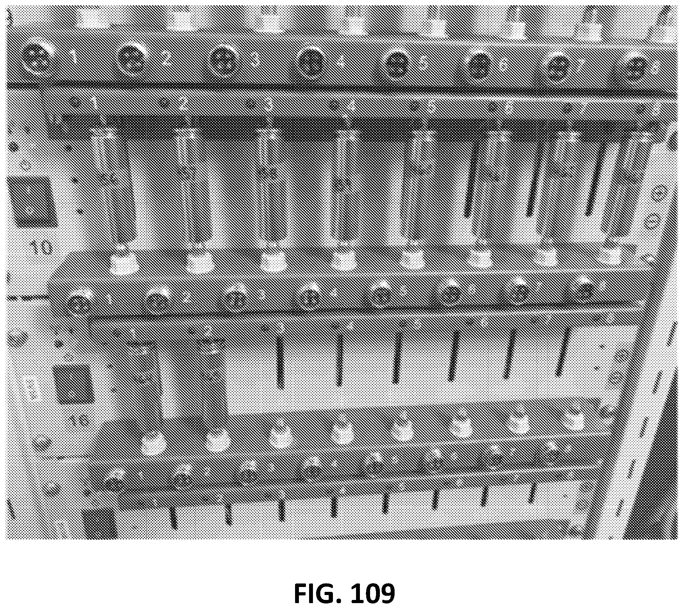

The coated slurry may form a film. The process(ing) may include drying of the coated film. The coated film may be used to produce finished products (batteries) such as, for example, shown in **FIGS. 104****,** **106, 107,** and **108****.** Battery cell jackets are shown in **FIG. 106****.** An exemplary battery cell jacket and tab are shown in **FIG. 107****.** Exemplary batteries produced using the systems and methods described herein are shown in **FIG. 108****.** The batteries can be tested using the apparatus shown in **FIG. 109****.**

In some embodiments, disclosed herein is an apparatus for dispensing a carbonaceous composition onto a solid substrate, comprising: a roller having surface for engaging a solid substrate, wherein rotation of the roller advances the solid substrate along a path; and a print assembly positioned along the path to dispense the carbonaceous composition onto the solid substrate as the roller advances the solid substrate along the path. In some embodiments, the apparatus comprises a heating source providing heat to the solid substrate after receiving the carbonaceous composition so as to dry the carbonaceous composition.

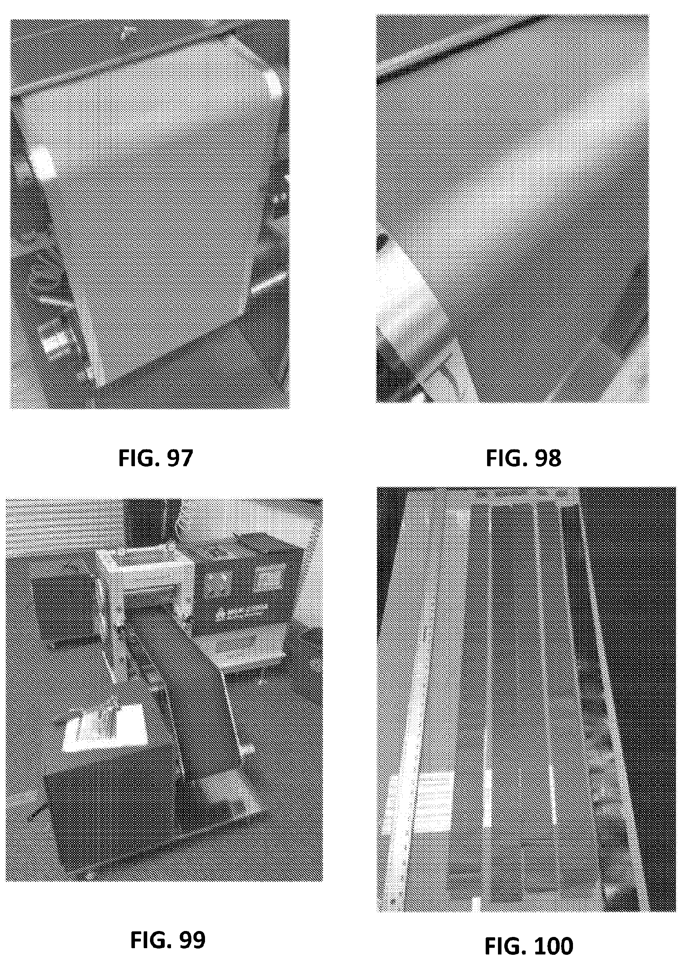

In some embodiments, disclosed herein is an apparatus for cutting a substrate comprising a carbonaceous composition on its surface into a plurality of strips for use in an energy storage device. In some embodiments, the apparatus is a splitter comprising a plurality of cutters positioned on a roller, wherein a substrate that is advanced along the roller is split into a plurality of strips. Examples of the substrate after being split into a plurality of strips is shown in **FIG. 100****.** An embodiment of the splitter apparatus is shown in **FIG. 90****.** Exemplary strips of the slurry coated film is shown on **FIG. 101****.** The carbonaceous composition and the substrate/film is shown in **FIG. 102****.** In some embodiments, an apparatus is used to wind the cathode, anode, and/or separator paper into a cylinder shape (e.g., a winding machine) such as shown in **FIG. 103****.** In some embodiments, the anode is attached to a battery can using an apparatus such as a spot welder as shown in **FIG. 105****.**

In certain embodiments, the methods herein (e.g., the methods of making graphite oxide) are tunable in terms of control of oxidation characteristics and amount of exfoliation. In certain embodiments, the methods herein are safer than other methods because of procedural and engineered temperature controls. In certain embodiments, the methods herein are efficient in minimizing the use of reagents for carrying out the reactions and filtrations described herein. In certain embodiments, the methods herein are configured to be fully scalable.

## Claims

1. A vacuum filtration system comprising:
a) a vacuum filtration table comprising a filter support comprising at least one vacuum table tray providing a surface comprising a spacer material providing support for a filtering material and configured to allow drainage;
b) the filtering material disposed on the spacer material, the filtering material comprising pores with a median pore size of no more than about 5 microns for filtering a carbonaceous composition comprising graphene oxide, wherein the filtering material is configured to retain the graphene oxide while allowing filtrate to drain;
c) at least one spray bar assembly positioned to dispense at least one of the carbonaceous composition comprising the graphene oxide and a wash liquid onto the filtering material, wherein the at least one spray bar assembly is movable horizontally for dispensing the carbonaceous composition over the filtering material; and
d) a vacuum source configured to apply negative pressure to the filter support to enhance filtration of the carbonaceous composition comprising the graphene oxide; wherein the at least one vacuum table tray is configured to be removable to allow transfer of the carbonaceous composition comprising the graphene oxide after filtration.

2. The vacuum filtration system of claim 1, wherein the filtering material is configured to retain at least 70% w/w of the graphene oxide after filtration.

3. The vacuum filtration system of claim 1, wherein the filtering material comprises at least one mesh filter layer, optionally wherein the at least one mesh filter layer is metal.

4. The vacuum filtration system of claim 1, wherein the filtering material comprises a plurality of filter layers.

5. The vacuum filtration system of claim 1, wherein the at least one spray bar assembly comprises a set of one or more openings for dispensing at least one of the carbonaceous composition or the wash liquid, optionally wherein the one or more openings comprises one or more nozzles for dispensing the carbonaceous composition or the wash liquid.

6. The vacuum filtration system of claim 1, wherein the at least one spray bar assembly is adjustable between at least two positions, optionally wherein the at least two positions comprise a raised position and a lowered position.

7. The vacuum filtration system of claim 1, wherein the at least one spray bar assembly is movable horizontally for evenly dispensing the carbonaceous composition over the surface of the filtering material.

8. The vacuum filtration system of claim 1, wherein the filter support is movable horizontally on a conveyor system.

9. The vacuum filtration system of claim 1, wherein the at least one spray bar assembly comprises a first spray bar for dispensing the carbonaceous composition and a second spray bar for dispensing the wash liquid.

10. The vacuum filtration system of claim 1, wherein the at least one spray bar assembly comprises a first tube inside a second tube, optionally wherein the first tube comprises one or more openings facing up for dispensing the wash liquid into the second tube to enable the second tube to evenly dispense the wash liquid onto the filtering material.

11. The vacuum filtration system of claim 1, wherein the at least one spray bar assembly is fluidly coupled to at least one of a source of the carbonaceous composition or a source of the wash fluid.

12. The vacuum filtration system of claim 1, wherein the carbonaceous composition comprises reaction products comprising sulfuric acid, potassium permanganate, hydrogen peroxide, or any combination thereof, and wherein the vacuum filtration system comprises a pH sensor for measuring pH of the carbonaceous composition.

13. The vacuum filtration system of claim 1, further comprising a control unit for controlling operation of the vacuum filtration system, optionally wherein the control unit is configured for autonomous operation of the vacuum filtration system in filtering the carbonaceous composition, optionally wherein the control unit is configured to carry out filtration of the carbonaceous composition until a threshold condition is met, optionally wherein the control unit is configured to carry out a cleaning protocol, optionally wherein the vacuum filtration system is configured to carry out batch purification of the carbonaceous composition, optionally wherein the vacuum filtration system is configured to carry out continuous purification of the carbonaceous composition.

14. The vacuum filtration system of claim 1, further comprising a drain pan disposed below the filter support for receiving liquid flow-through from the filter support, optionally wherein the drain pan is fluidically coupled to a vacuum tank in which the vacuum source is coupled to the vacuum tank and applies negative pressure to the filter support through the vacuum tank and the drain pan, optionally wherein the vacuum source applies negative pressure to the filter support through the drain pan.

## Patentansprüche

1. Vakuum-Filtersystem, umfassend:
a) einen Vakuum-Filtertisch, der eine Filterstütze umfasst, die zumindest eine Vakuumtischschale umfasst, die eine Oberfläche bereitstellt, die ein Abstandsmaterial umfasst, das Stütze für ein Filtermaterial bereitstellt und konfiguriert ist, um Ablauf zu ermöglichen;
b) das Filtermaterial, das auf dem Abstandsmaterial angeordnet ist, wobei das Filtermaterial Poren mit einer mittleren Porengröße von nicht mehr als etwa 5 Mikrometern zum Filtern einer kohlenstoffhaltigen Zusammensetzung umfasst, die Graphenoxid umfasst, wobei das Filtermaterial konfiguriert ist, um das Graphenoxid zurückzuhalten, während ermöglicht wird, dass Filtrat abläuft;
c) zumindest eine Sprühstangenanordnung, die positioniert ist, um zumindest eines von der kohlenstoffhaltigen Zusammensetzung, die das Graphenoxid umfasst, und einer Waschflüssigkeit auf das Filtermaterial abzugeben, wobei die zumindest eine Sprühstangenanordnung horizontal bewegbar ist, um die kohlenstoffhaltige Zusammensetzung über dem Filtermaterial abzugeben; und
d) eine Vakuumquelle, die konfiguriert ist, um Unterdruck auf die Filterstütze auszuüben, um Filtration der kohlenstoffhaltigen Zusammensetzung, die das Graphenoxid umfasst, zu verbessern; wobei die zumindest eine Vakuumtischschale konfiguriert ist, um entfernbar zu sein, um Übertragung der kohlenstoffhaltigen Zusammensetzung, die das Graphenoxid umfasst, nach Filtration zu ermöglichen.

2. Vakuum-Filtersystem nach Anspruch 1, wobei das Filtermaterial konfiguriert ist, um zumindest 70 Gew.-% des Graphenoxids nach Filtration zurückzuhalten.

3. Vakuum-Filtersystem nach Anspruch 1, wobei das Filtermaterial zumindest eine Maschenfilterschicht umfasst, wobei optional die zumindest eine Maschenfilterschicht Metall ist.

4. Vakuum-Filtersystem nach Anspruch 1, wobei das Filtermaterial eine Vielzahl von Filterschichten umfasst.

5. Vakuum-Filtersystem nach Anspruch 1, wobei die zumindest eine Sprühstangenanordnung einen Satz aus einer oder mehreren Öffnungen zum Abgeben von zumindest einer von der kohlenstoffhaltigen Zusammensetzung oder der Waschflüssigkeit umfasst, wobei optional die eine oder mehreren Öffnungen eine oder mehrere Düsen zum Abgeben der kohlenstoffhaltigen Zusammensetzung oder der Waschflüssigkeit umfassen.

6. Vakuum-Filtersystem nach Anspruch 1, wobei die zumindest eine Sprühstangenanordnung zwischen zumindest zwei Positionen verstellbar ist, wobei optional die zumindest zwei Positionen eine angehobene Position und eine abgesenkte Position umfassen.

7. Vakuum-Filtersystem nach Anspruch 1, wobei die zumindest eine Sprühstangenanordnung horizontal bewegbar ist, um die kohlenstoffhaltige Zusammensetzung gleichmäßig über der Oberfläche des Filtermaterials abzugeben.

8. Vakuum-Filtersystem nach Anspruch 1, wobei die Filterstütze horizontal auf einem Fördersystem bewegbar ist.

9. Vakuum-Filtersystem nach Anspruch 1, wobei die zumindest eine Sprühstangenanordnung eine erste Sprühstange zum Abgeben der kohlenstoffhaltigen Zusammensetzung und eine zweite Sprühstange zum Abgeben der Waschflüssigkeit umfasst.

10. Vakuum-Filtersystem nach Anspruch 1, wobei die zumindest eine Sprühstangenanordnung ein erstes Rohr innerhalb eines zweiten Rohres umfasst, wobei optional das erste Rohr eine oder mehrere nach oben gerichtete Öffnungen zum Abgeben der Waschflüssigkeit in das zweite Rohr umfasst, um zu erlauben, dass das zweite Rohr die Waschflüssigkeit gleichmäßig auf das Filtermaterial abgibt.

11. Vakuum-Filtersystem nach Anspruch 1, wobei die zumindest eine Sprühstangenanordnung fluidisch an zumindest eines von einer Quelle der kohlenstoffhaltigen Zusammensetzung oder einer Quelle des Waschfluids gekoppelt ist.

12. Vakuum-Filtersystem nach Anspruch 1, wobei die kohlenstoffhaltige Zusammensetzung Reaktionsprodukte umfasst, die Schwefelsäure, Kaliumpermanganat, Wasserstoffperoxid oder eine beliebige Kombination davon umfassen, und wobei das Vakuum-Filtersystem einen pH-Sensor zum Messen von pH der kohlenstoffhaltigen Zusammensetzung umfasst.

13. Vakuum-Filtersystem nach Anspruch 1, ferner umfassend eine Steuereinheit zum Steuern von Betrieb des Vakuum-Filtersystems, wobei optional die Steuereinheit für autonomen Betrieb des Vakuum-Filtersystems beim Filtern der kohlenstoffhaltigen Zusammensetzung konfiguriert ist, wobei optional die Steuereinheit konfiguriert ist, um Filtration der kohlenstoffhaltigen Zusammensetzung durchzuführen, bis eine Schwellenbedingung erfüllt ist, wobei optional die Steuereinheit konfiguriert ist, um ein Reinigungsprotokoll durchzuführen, wobei optional das Vakuum-Filtersystem konfiguriert ist, um Chargenreinigung der kohlenstoffhaltigen Zusammensetzung durchzuführen, wobei optional das Vakuum-Filtersystem konfiguriert ist, um kontinuierliche Reinigung der kohlenstoffhaltigen Zusammensetzung durchzuführen.

14. Vakuum-Filtersystem nach Anspruch 1, ferner umfassend eine Ablaufwanne, die unter der Filterstütze angeordnet ist, um Flüssigkeitsdurchfluss von der Filterstütze aufzunehmen, wobei optional die Ablaufwanne fluidisch an einen Vakuumtank gekoppelt ist, in dem die Vakuumquelle an den Vakuumtank gekoppelt ist und Unterdruck auf die Filterstütze durch den Vakuumtank und die Ablaufwanne ausübt, wobei optional die Vakuumquelle Unterdruck auf die Filterstütze durch die Ablaufwanne ausübt.

## Revendications

1. Système de filtration sous vide comprenant :
a) une table de filtration sous vide comprenant un support de filtre comprenant au moins un plateau de table sous vide fournissant une surface comprenant un matériau espaceur fournissant un support pour un matériau filtrant et conçu pour permettre un égouttage ;
b) le matériau filtrant disposé sur le matériau espaceur, le matériau filtrant comprenant des pores présentant une taille de pores médiane non supérieure à environ 5 microns pour filtrer une composition carbonée comprenant de l'oxyde de graphène, ledit matériau filtrant étant conçu pour retenir l'oxyde de graphène tout en permettant l'égouttage du filtrat ;
c) au moins un ensemble de barres de pulvérisation positionné pour distribuer au moins un élément parmi la composition carbonée comprenant l'oxyde de graphène et un liquide de lavage sur le matériau filtrant, ledit au moins un ensemble de barres de pulvérisation étant mobile horizontalement pour distribuer la composition carbonée sur le matériau filtrant ; et
d) une source de vide conçue pour appliquer une pression négative sur le support de filtre de manière à améliorer la filtration de la composition carbonée comprenant l'oxyde de graphène ; ledit au moins un plateau de table sous vide étant conçu pour être amovible de manière à permettre le transfert de la composition carbonée comprenant l'oxyde de graphène après filtration.

2. Système de filtration sous vide selon la revendication 1, ledit matériau filtrant étant conçu pour retenir au moins 70 % en p/p de l'oxyde de graphène après filtration.

3. Système de filtration sous vide selon la revendication 1, ledit matériau filtrant comprenant au moins une couche filtrante à mailles, éventuellement ladite au moins une couche filtrante à mailles étant métallique.

4. Système de filtration sous vide selon la revendication 1, ledit matériau filtrant comprenant une pluralité de couches filtrantes.

5. Système de filtration sous vide selon la revendication 1, au moins un ensemble de barres de pulvérisation comprenant une série d'une ou plusieurs ouvertures pour distribuer au moins un élément parmi la composition carbonée ou le liquide de lavage, éventuellement lesdites une ou plusieurs ouvertures comprenant une ou plusieurs buses destinées à distribuer la composition carbonée ou le liquide de lavage.

6. Système de filtration sous vide selon la revendication 1, au moins un ensemble de barres de pulvérisation étant réglable entre au moins deux positions, éventuellement lesdites au moins deux positions comprenant une position relevée et une position abaissée.

7. Système de filtration sous vide selon la revendication 1, au moins un ensemble de barres de pulvérisation étant mobile horizontalement pour distribuer uniformément la composition carbonée sur la surface du matériau filtrant.

8. Système de filtration sous vide selon la revendication 1, ledit support de filtre étant mobile horizontalement sur un système convoyeur.

9. Système de filtration sous vide selon la revendication 1, ledit au moins un ensemble de barres de pulvérisation comprenant une première barre de pulvérisation destinée à distribuer la composition carbonée et une seconde barre de pulvérisation destinée à distribuer le liquide de lavage.

10. Système de filtration sous vide selon la revendication 1, au moins un ensemble de barres de pulvérisation comprenant un premier tube à l'intérieur d'un second tube, éventuellement ledit premier tube comprenant une ou plusieurs ouvertures tournées vers le haut destinés à distribuer le liquide de lavage dans le second tube pour permettre au second tube de distribuer uniformément le liquide de lavage sur le matériau filtrant.

11. Système de filtration sous vide selon la revendication 1, ledit au moins un ensemble de barres de pulvérisation étant couplé fluidiquement à au moins une source de la composition carbonée ou à une source du fluide de lavage.

12. Système de filtration sous vide selon la revendication 1, ladite composition carbonée comprenant des produits de réaction comprenant de l'acide sulfurique, du permanganate de potassium, du peroxyde d'hydrogène ou toute combinaison de ceux-ci, et ledit système de filtration sous vide comprenant une sonde de pH destinée à mesurer le pH de la composition carbonée.

13. Système de filtration sous vide selon la revendication 1, comprenant en outre une unité de commande destinée à commander le fonctionnement du système de filtration sous vide, éventuellement ladite unité de commande étant configurée pour un fonctionnement autonome du système de filtration sous vide lors de la filtration de la composition carbonée, éventuellement ladite unité de commande étant configurée pour effectuer une filtration de la composition carbonée jusqu'à ce qu'une condition seuil soit atteinte, éventuellement ladite unité de commande étant configurée pour exécuter un protocole de nettoyage, éventuellement ledit système de filtration sous vide étant conçu pour effectuer une purification par lots de la composition carbonée, éventuellement ledit système de filtration sous vide étant conçu pour effectuer une purification continue de la composition carbonée.

14. Système de filtration sous vide selon la revendication 1, comprenant en outre un bac d'égouttage disposé en dessous du support de filtre pour recevoir un écoulement de liquide provenant du support de filtre, éventuellement ledit bac d'égouttage étant couplé fluidiquement à une cuve à vide dans lequel la source de vide est couplée à la cuve à vide et applique une pression négative dans le support de filtre à travers la cuve à vide et le bac d'égouttage, éventuellement ladite source de vide appliquant une pression négative dans le support de filtre par l'intermédiaire du bac d'égouttage.
